(19) Europäisches Patentamt
European Patent Office
Office européen des brevets

(11) **EP 4 776 708 A1**

(12) **EUROPEAN PATENT APPLICATION**
published in accordance with Art. 153(4) EPC

(43) Date of publication:
**15.07.2026 Bulletin 2026/29**

(21) Application number: **24870336.5**

(22) Date of filing: **30.08.2024**

(51) International Patent Classification (IPC):
***H04W 56/00*** (2009.01)

(52) Cooperative Patent Classification (CPC):
**H04W 56/00**

(86) International application number:
**PCT/CN2024/116048**

(87) International publication number:
**WO 2025/066790 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311270293**

(71) Applicant: **HUAWEI TECHNOLOGIES CO., LTD.
Shenzhen 518129 (CN)**

(72) Inventors:
• **GONG, Mingxin**
  **Shenzhen, Guangdong 518129 (CN)**
• **ZOU, Tong**
  **Shenzhen, Guangdong 518129 (CN)**
• **QU, Bingyu**
  **Shenzhen, Guangdong 518129 (CN)**

(74) Representative: **Thun, Clemens
Mitscherlich PartmbB
Karlstraße 7
80333 München (DE)**

(54) **SIGNAL TRANSMISSION METHOD AND COMMUNICATION APPARATUS**

(57) This application provides a signal transmission method and a communication apparatus. The method includes: A first apparatus determines a first signal, where the first signal includes a synchronization signal obtained based on a first sequence; and the first apparatus sends the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy: $A_n = 1 - 2x_n$, $A_n = 2x_n - 1$, $A_n = 1 - 2x_{N-n-1}$, or $A_n = x_{N-n-1} - 1$, where the generalized Golay sequence is generated by $M$-level registers, a register depth of an $m^{th}$-level register in the $M$-level registers is determined by an $m^{th}$ element in

a second sequence, and a sum of first $\lceil M/2 \rceil$ elements in the second sequence is greater than or equal to a sum

of last $M - \lceil M/2 \rceil$ elements. This solution can reduce detection complexity in time synchronization implemented by the communication apparatus, thereby reducing power consumption.

200

First apparatus — Second apparatus

S201: Determine a first signal, where the first signal includes a synchronization signal, and the synchronization signal is obtained based on a first sequence

S202: Send the first signal

S203: Process the first signal based on the first sequence, to determine a start location and/or an end location of the synchronization signal in the first signal

FIG. 2

Processed by Luminess, 75001 PARIS (FR)

**Description**

This application claims priority to Chinese Patent Application No. 202311270293.0, filed with the China National Intellectual Property Administration on September 27, 2023 and entitled "SIGNAL TRANSMISSION METHOD AND COMMUNICATION APPARATUS", which is incorporated herein by reference in its entirety.

**TECHNICAL FIELD**

This application relates to the communication field, and more specifically, to a signal transmission method and a communication apparatus.

**BACKGROUND**

Active internet of things (internet of things, IoT), is a low-cost and low-power internet of things solution, with power consumption not exceeding 500 microwatts, and can achieve farther coverage than passive IoT. During downlink, the active IoT supports only a low-power receiver for non-coherent reception. Specifically, a non-coherent reception manner like envelope detection is used. Due to constraints of power consumption and costs, a modulation manner like an on-off keying (on-off keying, OOK) modulation manner is usually used.

In the active IoT, a tag may complete downlink time synchronization by using a downlink synchronization signal (time synchronization signal, TSS) sent by a base station. How to reduce power consumption of the tag in implementing downlink time synchronization is currently a hot topic in active IoT research.

**SUMMARY**

Embodiments of this application provide a signal transmission method and a communication apparatus, to reduce signal detection complexity in time synchronization implemented by the communication apparatus, and reduce power consumption.

According to a first aspect, a signal transmission method is provided. The method includes: A first apparatus determines a first signal, where the first signal includes a synchronization signal, and the synchronization signal is obtained based on a first sequence; and the first apparatus sends the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where
$0 \leq n \leq N$ - 1, $n$ is an integer, the generalized Golay sequence is generated by $M$-level registers, a register depth $2^{P_m}$ of an $m^{th}$-level register in the $M$-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

According to the foregoing solution, using the synchronization signal obtained based on the first sequence can reduce an amount of sequence-related calculation performed by the second apparatus, reduce detection complexity in time synchronization implemented by the second apparatus, and reduce power consumption. Especially when a length of the first sequence is long, an effect of reducing calculation complexity of signal detection is more definite.

According to a second aspect, a signal transmission method is provided. The method includes: A second apparatus receives a first signal from a first apparatus, where the first signal includes a synchronization signal determined based on a first sequence; and the second apparatus processes the first signal based on the first sequence, to determine a start location and/or an end location of the synchronization signal in the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where
$0 \leq n \leq N$ - 1, $n$ is an integer, the generalized Golay sequence is generated by $M$-level registers, a register depth $2^{P_m}$ of an $m^{th}$-level register in the M-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

According to a third aspect, a signal transmission method is provided. The method includes: A first apparatus determines a first signal, where the first signal includes a synchronization signal, and the synchronization signal is obtained based on a first sequence; the first apparatus sends the first signal; a second apparatus receives the first signal; and the second apparatus processes the first signal based on the first sequence, to determine a start location and/or an end location of the synchronization signal in the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where

$0 \le n \le N - 1$, $n$ is an integer, the generalized Golay sequence is generated by $M$-level registers, a register depth $2^{P_m}$ of an $m^{th}$-level register in the M-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

With reference to the first aspect to the third aspect, in some implementations of the first aspect, quantities of 0s and 1s included in the first sequence are equal.

According to the foregoing solution, the quantities of 0s and 1s in the first sequence are equal, so that anti-noise performance of the synchronization signal obtained based on the first sequence can be improved.

With reference to the first aspect to the third aspect, in some implementations of the first aspect, that the synchronization signal is obtained based on the first sequence includes: The synchronization signal is obtained by performing on-off keying OOK modulation on the first sequence.

With reference to the first aspect to the third aspect, in some implementations of the first aspect, when $N$=256, the first sequence is one of sequences shown in Table 1 in a specific implementation, or the first sequence includes an equivalent sequence of one of sequences shown in Table 1 in a specific implementation.

With reference to the first aspect to the third aspect, in some implementations of the first aspect, when $N$=128, the first sequence is one of sequences shown in Table 3 in a specific implementation, or the first sequence includes an equivalent sequence of one of sequences shown in Table 3 in a specific implementation.

With reference to the first aspect to the third aspect, in some implementations of the first aspect, when N=64, the first sequence is one of sequences shown in Table 5 in a specific implementation, or the first sequence includes an equivalent sequence of one of sequences shown in Table 1 in a specific implementation.

With reference to the first aspect to the third aspect, in some implementations of the first aspect, when $N$=32, the first sequence is one of sequences shown in Table 7 in a specific implementation, or the first sequence includes an equivalent sequence of one of sequences shown in Table 7 in a specific implementation.

With reference to the first aspect to the third aspect, in some implementations of the first aspect, when $N$=16, the first sequence is one of sequences shown in Table 9 in a specific implementation, or the first sequence includes an equivalent sequence of one of sequences shown in Table 9 in a specific implementation.

With reference to the first aspect to the third aspect, in some implementations of the first aspect, the $n^{th}$ element $A_n$ in the generalized Golay sequence is equal to $a_{M+1}(n)$, $a_{M+1}(n)$ satisfies the following formula:

$$a_{m+1}(n) = a_m(n) + W_{m,1}b_m(n - 2^{P_m})$$

$$b_{m+1}(n) = a_m(n) - W_{m,2}b_m(n - 2^{P_m}),$$

where

$a_{M+1}(n)$ is $a_{m+1}(n)$ when $m = M$, $1 \le m \le M$, $m$ is an integer, $a_1(n) = \delta(n)$, $b_1(n) = \delta(n)$, when $n = 0$, $\delta(n) = 1$, when $n \ne 0, \delta(n) = 0$, $W_{m,1} \in \{1, -1\}$, $W_{M,2}$ E $\{1, -1\}$, $0 \le n \le N - 1$, and $n$ is an integer.

With reference to the first aspect to the third aspect, in some implementations of the first aspect, $P_m$ is the $m^{th}$ element in the second sequence [P], $W_{m,1}$ is an $m^{th}$ element in a third sequence [$W_1$], and $W_{m,2}$ is an $m^{th}$ element in a fourth sequence [$W_2$].

Optionally, when $N$=256, the second sequence, the third sequence, and the fourth sequence are one of candidate combinations shown in Table 2 in a specific implementation.

Optionally, when $N$=128, the second sequence, the third sequence, and the fourth sequence are one of candidate combinations shown in Table 4 in a specific implementation.

Optionally, when *N*=64, the second sequence, the third sequence, and the fourth sequence are one of candidate combinations shown in Table 6 in a specific implementation.

Optionally, when *N*=32, the second sequence, the third sequence, and the fourth sequence are one of candidate combinations shown in Table 8 in a specific implementation.

Optionally, when *N*=16, the second sequence, the third sequence, and the fourth sequence are one of candidate combinations shown in Table 10 in a specific implementation.

According to a seventh aspect, a communication apparatus is provided. In a design, the apparatus may include modules that are in one-to-one correspondence with and that perform the methods/operations/steps/actions according to any one of the first aspect or the implementations of the first aspect. The module may be implemented by a hardware circuit, software, or a combination of a hardware circuit and software. In a design, the apparatus includes: a processing unit, configured to determine a first signal, where the first signal includes a synchronization signal, and the synchronization signal is obtained based on a first sequence; and a transceiver unit, configured to send the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where
$0 \le n \le N$ - 1, $n$ is an integer, the generalized Golay sequence is generated by $M$-level registers, a register depth $2^{P_m}$ of an $m^{th}$-level register in the $M$-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

According to an eighth aspect, a communication apparatus is provided. In a design, the apparatus may include modules that are in one-to-one correspondence with and that perform the methods/operations/steps/actions according to any one of the second aspect or the implementations of the second aspect. The module may be implemented by a hardware circuit, software, or a combination of a hardware circuit and software. In a design, the apparatus includes: a transceiver unit, configured to receive a first signal from a first apparatus, where the first signal includes a synchronization signal determined based on a first sequence; and a processing unit, configured to process the first signal based on the first sequence, to determine a start location and/or an end location of the synchronization signal in the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where
$0 \le n \le N$ - 1, $n$ is an integer, the generalized Golay sequence is generated by $M$-level registers, a register depth $2^{P_m}$ of an $m^{th}$-level register in the $M$-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

According to a ninth aspect, a communication apparatus is provided, and includes a processor. The processor may implement the method according to any one of the first aspect or the second aspect and the possible implementations of the first aspect or the second aspect. Optionally, the communication apparatus further includes a memory. The processor is coupled to the memory, and may be configured to execute instructions in the memory, to implement the method according to any one of the first aspect or the second aspect and the possible implementations of the first aspect or the second aspect. Optionally, the communication apparatus further includes a communication interface, and the processor is coupled to the communication interface. In embodiments of this application, the communication interface may be a transceiver, a pin, a circuit, a bus, a module, or another type of communication interface. This is not limited.

In an implementation, the communication apparatus is a communication device (for example, a terminal device or an access network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a tenth aspect, a processor is provided, and includes an input circuit, an output circuit, and a processing circuit. The processing circuit is configured to: receive a signal through the input circuit, and transmit a signal through the output circuit, so that the processor performs the method according to any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a computer program product is provided. The computer program product includes a computer program (which may also be referred to as code or instructions). When the computer program is run, a computer is caused to perform the method according to any one of the first aspect or the second aspect and the possible implementations of the first aspect or the second aspect.

According to a twelfth aspect, a computer-readable storage medium is provided. The computer-readable storage medium stores a computer program (which may also be referred to as code or instructions). When the computer-readable storage medium is run on a computer, the computer is caused to perform the method according to any one of the first aspect or the second aspect and the possible implementations of the first aspect or the second aspect.

According to a thirteenth aspect, a communication system is provided, and includes the foregoing at least one first apparatus and at least one second apparatus.

## BRIEF DESCRIPTION OF DRAWINGS

FIG. 1 is a diagram of an architecture of a communication system according to an embodiment of this application;

FIG. 2 is a schematic flowchart of a signal transmission method according to an embodiment of this application;

FIG. 3 is a diagram of a correlator according to an embodiment of this application;

FIG. 4 is a diagram of a correlator corresponding to a generalized Golay sequence with N=4 according to an embodiment of this application;

FIG. 5 is a diagram of a CDF of a calculation complexity reduction proportion of a first sequence when N=32 according to an embodiment of this application;

FIG. 6 is a diagram of autocorrelation performance of a first sequence when $N=16$ according to an embodiment of this application;

FIG. 7 is a diagram of a CDF of a calculation complexity reduction proportion of a first sequence when $N$=16 according to an embodiment of this application;

FIG. 8 is a diagram of autocorrelation performance of a first sequence when $N$=32 according to an embodiment of this application;

FIG. 9 is a block diagram of an example of a communication apparatus according to an embodiment of this application; and

FIG. 10 is a diagram of a structure of another example of a communication apparatus according to an embodiment of this application.

## DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not indicate a definite difference. In embodiments of this application, a term like "example" or "for example" is used to represent an example, evidence, or a description. Any embodiment or design solution described as an "example" or "for example" should not be explained as being more preferred or having more advantages than another embodiment or design solution. The term like "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, vehicle-to-everything (vehicle-to-x V2X) communication, internet of vehicles, machine type communication (machine type communication, MTC), or internet of things (internet of things, IoT). The communication method provided in this application may be further applied to a future evolved communication system. This is not limited in this application.

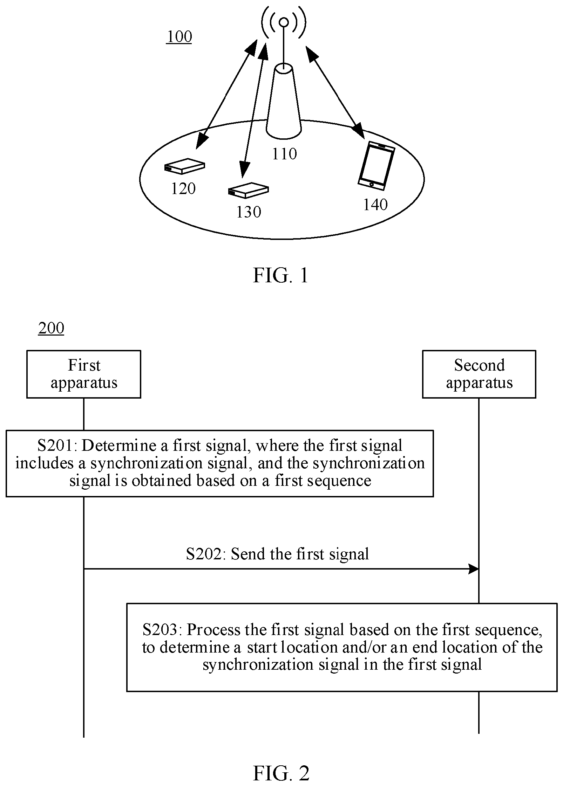

FIG. 1 is a diagram of a communication system 100 to which an embodiment of this application is applicable. The communication system 100 may include at least one network device, for example, a network device 110 shown in FIG. 1. The communication system 100 may further include at least one terminal, for example, terminals 120, 130, and 140 shown in FIG. 1.

A first apparatus provided in embodiments of this application may be a network device, or may be a module (for example, a chip or a chip system) configured in the network device. The network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like.

A second apparatus provided in embodiments of this application may be a terminal or a module (for example, a chip or a chip system) configured in the terminal. The terminal may be a tag, or may be a terminal device or user equipment. The tag may be referred to as an electronic tag, a smart tag, a radio frequency tag, a transponder, a data carrier, or the like, and usually includes a coupling element and a chip. Each tag may have a unique electronic code. In some scenarios, the tag may be attached to an object to identify the object. The terminal may be widely used in various scenarios, for example, internet of things, device-to-device (device-to-device, D2D), vehicle to everything (vehicle to everything, V2X) communication, machine-type communication (machine-type communication, MTC), virtual reality, augmented reality, industrial control, self-driving, telemedicine, smart grid, smart furniture, smart office, smart wearable, smart transportation, and smart city.

FIG. 2 is a schematic flowchart of a signal transmission method 200 according to an embodiment of this application. The method includes but is not limited to S201 and S202.

S201: A first apparatus determines a first signal, where the first signal includes a synchronization signal, and the synchronization signal is obtained based on a first sequence.

The first sequence includes $N$ elements, that is, a length of the first sequence is $N$, $N$ is $2^M$, $M$

The first sequence is related to a generalized Golay sequence whose length is $N$, the first sequence is a sequence including 0 and/or 1, and the generalized Golay sequence is a sequence including 1 and/or -1. The generalized Golay sequence is generated by $M$-level registers, a register depth $2^{P_m}$ of an $m^{th}$-level register in the M-level registers is determined by an $m^{th}$ element $P_m$ in a second sequence $[P]$, $m$ is an integer less than or equal to $M$ and greater than or equal to 1, $P_m$ is an integer greater than or equal to 0, and a sum of first $\lceil M/2 \rceil$ elements in the second sequence $[P]$ is greater than or equal to a sum of last $M - \lceil M/2 \rceil$ elements.

Specifically, that the first sequence is related to the generalized Golay sequence includes: An $n^{th}$ element $x_n$ in the first sequence $[X]$ and an $n^{th}$ element $A_n$ in the generalized Golay sequence $[A]$ satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where

$0 \leq n \leq N - 1$, and $n$ is an integer.

In other words, the first sequence $[X] = [x_0, x_1, \cdots, x_{N-1}]$ may be obtained by transforming the generalized Golay sequence $[A] = [A_0, A_1, \ldots, A_{N-1}]$. If $x_n$ and $A_n$ satisfy: $A_n = 1 - 2x_n$, then

$$[X] = [x_0, x_1, \cdots, x_{N-1}] = \left[ \tfrac{1}{2}(1 - A_0), \tfrac{1}{2}(1 - A_1), \cdots, \tfrac{1}{2}(1 - A_{N-1}) \right].$$

The first sequence may alternatively be an equivalent sequence of a sequence obtained by transforming the generalized Golay sequence. An equivalent sequence of a sequence may be a reverse sequence or a negated sequence of the sequence. For example, for a sequence $[S] = [s_0, s_1, \cdots, s_{N-1}]$, a reverse sequence of the sequence $[S]$ is $[s_{N-1}, \cdots, s_1, s_0]$. If the sequence $S$ includes 0 and 1, that is, $s_i \in \{0,1\}$, a negated sequence of the sequence S is $[1 - s_0, 1 - s_1, \cdots, 1 - S_{N-1}]$; or if the sequence $S$ includes 1 and -1, that is, $s_i \in \{1, -1\}$, a negated sequence of the sequence S is $[-s_0, -s_1, \cdots, -s_{N-1}]$.

For example, the first sequence may be a reverse sequence of a sequence obtained by transforming the generalized Golay sequence, and $x_n$ and $A_n$ satisfy: $A_n = -_{N-n-1}$. The sequence obtained by transforming the generalized Golay sequence is $\left[ \frac{1}{2}(1 - A_0), \frac{1}{2}(1 - A_1), \cdots, \frac{1}{2}(1 - A_{N-1}) \right]$, and then

$$[X] = [x_0, x_1, \cdots, x_{N-1}] = \left[ \frac{1}{2}(1 - A_{N-1}), \cdots, \frac{1}{2}(1 - A_1), \frac{1}{2}(1 - A_0) \right].$$

For another example, the first sequence may be a negated sequence of a sequence obtained by transforming the generalized Golay sequence, and $x_n$ and $A_n$ satisfy: $A_n = 2x_n - 1$. The sequence obtained by transforming the generalized Golay sequence is $\left[ \frac{1}{2}(1 - A_0), \frac{1}{2}(1 - A_1), \cdots, \frac{1}{2}(1 - A_{N-1}) \right]$, and then

$$[X] = [x_0, x_1, \cdots, x_{N-1}] = \left[ \frac{1}{2}(1 + A_0), \frac{1}{2}(1 + A_1), \cdots, \frac{1}{2}(1 + A_{N-1}) \right].$$

For still another example, the first sequence may be a sequence obtained by performing negation and then reverse processing on a sequence obtained by transforming the generalized Golay sequence, or a sequence obtained by performing reverse processing and then negation on a sequence obtained by transforming the generalized Golay sequence. $x_n$ and $A_n$ satisfy: $A_n = 2x_{N-n-1} - 1$. The sequence obtained by transforming the generalized Golay sequence is $\left[ \frac{1}{2}(1 - A_0), \frac{1}{2}(1 - A_1), \cdots, \frac{1}{2}(1 - A_{N-1}) \right]$, and then

$$[X] = [x_0, x_1, \cdots, x_{N-1}] = \left[ \frac{1}{2}(1 + A_{N-1}), \cdots, \frac{1}{2}(1 + A_1), \frac{1}{2}(1 + A_0) \right].$$

The generalized Golay sequence whose length is $N=2^M$ may be generated by the $M$-level registers. Specifically, the generalized Golay sequence $[A]$ may be obtained based on the second sequence $[P]$, a third sequence $[W_1]$, and a fourth sequence $[W_2]$ whose lengths are all $M$ by using the following formulas, where the $n^{th}$ $A_n$ element in the generalized Golay sequence $[A]$ is equal to $a_{M+1}(n)$, $a_{M+1}(n)$ is $a_{m+1}(n)$ when $m = M$, $0 \leq n \leq N - 1$, $1 \leq m \leq M$, and $n$ and $m$ are integers,

$$a_1(n) = \delta(n);$$

$$b_1(n) = \delta(n);$$

$$a_{m+1}(n) = a_m(n) + W_{m,1}b_m(n - 2^{P_m});$$

$$b_{m+1}(n) = a_m(n) - W_{m,2}b_m(n - 2^{P_m});$$

$\delta(n)$ is an impulse function. When $n = 0, \delta(n) = 1$, and when $n \neq 0, \delta(n) = 0$. $P_m$ is the $m^{th}$ element in the second sequence $[P]$, $2^{P_m}$ is the register depth of the $m^{th}$-level register in the M-level registers used to generate the generalized Golay sequence, and $P_m$ is an integer greater than or equal to 0. A register depth of a register indicates a quantity of storage units included in the register. Therefore, the $m^{th}$-level register in the M-level registers includes $2^{P_m}$ storage units. $W_{m,1}$ is an $m^{th}$ element in the third sequence $[W_1]$, where $W_{m,1} \in \{1, -1\}$. $W_{m,2}$ is an $m^{th}$ element in the fourth sequence $[W_2]$, where $W_{m,2} \in \{1, -1\}$.

Therefore, the generalized Golay sequence $[A]$ whose length is $N$ and that is generated by the first apparatus via the M-level registers may be specifically represented as:

$$[A] = [A_0, A_1, \cdots, A_{N-1}] = [a_{M+1}(0), a_{M+1}(1), \cdots, a_{M+1}(N - 1)].$$

The first apparatus may generate the synchronization signal based on the first sequence, and then determine the first signal including the synchronization signal. Specifically, the first apparatus may determine at least one sequence that forms the first signal, the at least one sequence includes the first sequence, and the first apparatus obtains the first signal through OOK modulation. The synchronization signal in the first signal may be considered as being obtained through OOK modulation based on the first sequence.

It should be noted that in specific implementation, a transmit end may directly determine the first sequence, and then generate the synchronization signal based on the first sequence; or may first determine the generalized Golay sequence, then generate the first sequence based on a correspondence between the generalized Golay sequence and the first sequence, and then generate the synchronization signal based on the first sequence; or may determine the first sequence in another manner. This is not limited in this embodiment.

The first apparatus sends the first signal in S202, so that a second apparatus can implement time synchronization based on the synchronization signal in the first signal. This application proposes that if the generalized Golay sequence related to the first sequence satisfies: The sum of the first $\lceil M/2 \rceil$ elements in the second sequence [P] corresponding to the generalized Golay sequence is greater than or equal to the sum of the last $M - \lceil M/2 \rceil$ elements, that is,

$$\sum_{m=1}^{\lceil M/2 \rceil} P_m \geq \sum_{m=\lceil M/2 \rceil+1}^{M} P_m,$$

detection complexity in time synchronization implemented by the second apparatus can be reduced, thereby reducing power consumption. The following specifically describes a case that when the generalized Golay sequence satisfies the condition, the detection complexity in the time synchronization implemented by the second apparatus can be reduced, thereby reducing power consumption.

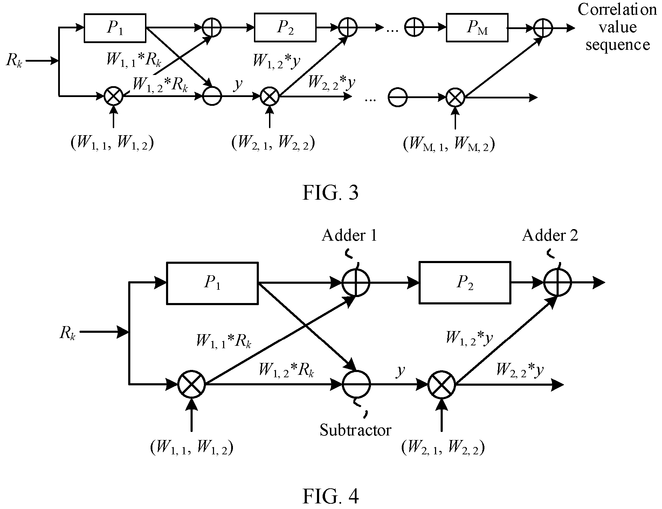

The second apparatus receives the first signal from the first apparatus. Specifically, the second apparatus may obtain a receiving sequence whose length is $N+L$ by using a sliding window whose length is $L$. For example, the receiving sequence [R] may be denoted as $[R] = [R_0, R_1, \cdots, R_{N+L-1}]$. The second apparatus may obtain, based on a correlator including the M-level registers, a correlation value sequence obtained by performing correlation on the generalized Golay sequence whose length is $N$ and the receiving sequence [R], and then determine a location of the first sequence in the receiving sequence [R] based on the correlation value sequence, to implement time synchronization. As shown in FIG. 3, the correlator includes the M-level registers, M adders, and M-1 subtractors. The second apparatus may input $R_k$ at a moment $T_k$, $k \leq N+L-1$, and k is an integer. For example, the second apparatus may input $R_0$ at a moment $T_0$, input $R_1$ at a moment $T_1$, ..., and input $R_{N+L-1}$ at a moment $T_{N+L-1}$. If a delay caused by correlator calculation is not considered, a correlation value output at a moment $T_{N-1}$ is $\sum_{n=0}^{N-1} R_n * a_{M+1}(n)$. Finally, the correlator outputs $N+L-1$ correlation values in total, which are a global aperiodic autocorrelation sequence obtained by performing correlation on the receiving sequence and the generalized Golay sequence. A moment corresponding to a largest value of $L+1$ correlation values output at the moment $T_{N-1}$ to the moment $T_{N+L-1}$ is an end location of the first sequence in the receiving sequence [R], and a start location of the first sequence in the receiving sequence [R] may be obtained based on the length of the first sequence.

In a possible implementation, a communication apparatus (for example, the first apparatus and/or the second apparatus) may generate the generalized Golay sequence by using the correlator shown in FIG. 3. An input sequence is $[a_1]$, where an $n^{th}$ element in the sequence $[a_1]$ is $a_1(n) = \delta(n)$, $0 \leq n \leq N-1$. Specifically, an input at a moment $T_n$ is $a_1(n)$. If a delay caused by correlator calculation is not considered, an output at the moment $T_n$ is $a_{M+1}(N-1-n)$. Finally, the correlator outputs a sequence $[a_{M+1}(N-1), a_{M+1}(N-2), \cdots, a_{M+1}(0)]$ including N values, and the generalized Golay sequence may be obtained by reversing the sequence. It may be considered that an impulse function is input to a correlator system to obtain a reverse sequence of the generalized Golay sequence, in other words, an impulse response function of the correlator system is a reverse sequence of the generalized Golay sequence. Therefore, inputting a received signal into the correlator is equivalent to performing convolution on the received signal and the reverse sequence of the generalized Golay sequence, and this operation may be further equivalent to performing aperiodic correlation on the received signal and the generalized Golay sequence.

If the second apparatus performs correlation by using the correlator shown in FIG. 3, each correlation value needs to undergo $M$ (that is, $\log_2 N$) addition operations and $M-1$ (that is, $\log_2 N-1$) subtraction operations. For example, for a generalized Golay sequence whose length is $N=8$, each correlation value needs to undergo three addition operations and two subtraction operations. For example, a correlator of a generalized Golay sequence whose length is $N=4$ is shown in FIG. 4, and each correlation value needs to undergo two addition operations and one subtraction operation. Specifically, if the Golay sequence with $N=4$ is $[A]=[1, 1, -1, 1]$, the second apparatus obtains, by using a sliding window whose length is $L=4$, a receiving sequence whose length is $N+L=8$, for example, the receiving sequence $[R] = [R_0, R_1, \cdots, R_7] = [1, 1, -1, 1, 0, 0, 0, 0]$. $M = \log_2 N = 2$, lengths of the second sequence [P], the second sequence $[W_1]$, and the third sequence $[W_2]$ are all 2, for example, $[P] = [0,1]$ and $[W_1] = [W_2] = [1, -1]$. $P_1 = 0$, a register depth of an $m^{th}=1^{st}$-level register (which is denoted as a

register 1) is $2^0=1$, and the register includes one storage unit. If $P_2 = 1$, a register depth of an $m^{th}=2^{nd}$-level register (that is, a register 2) is $2^1=2$, and the register includes two storage units. The following uses $D_1$ and $D_2$ to represent storage statuses of storage units in the register 1 and the register 2 respectively, and initial storage statuses of the register 1 and the register 2 are: $D_1 = [0]$ *and* $D_2 = [0, 0]$.

If the receiving sequence [R] is successively input into the correlator shown in FIG. 4,

at a moment $T_0$, $R_0 = 1$ is input, and D1 and D2 are respectively updated to $D_1 = [1]$ and $D_2 = [1, 0]$, to obtain an output correlation value of 1;

at a moment $T_1$, $R_1 = 1$ is input, and D1 and D2 are respectively updated to $D_1 = [1]$ and $D_2 = [2,1]$, to obtain an output correlation value of 0;

at a moment $T_2$, $R_2 = -1$ is input, and D1 and D2 are respectively updated to $D_1 = [-1]$ and $D_2 = [0, 2]$, to obtain an output correlation value of -1;

at a moment $T_3$, $R_3 = 1$ is input, and D1 and D2 are respectively updated to $D_1 = [1]$ and $D_2 = [0, 0]$, to obtain an output correlation value of 4;

at a moment $T_4$, $R_4 = 0$ is input, and D1 and D2 are respectively updated to $D_1 = [0]$ and $D_2 = [1, 0]$, to obtain an output correlation value of -1;

at a moment $T_5$, $R_5 = 0$ is input, and D1 and D2 are respectively updated to $D_1 = [0]$ and $D_2 = [0,1]$, to obtain an output correlation value of 0;

at a moment $T_6$, $R_6 = 0$ is input, and D1 and D2 are respectively updated to $D_1 = [0]$ and $D_2 = [0, 0]$, to obtain an output correlation value of 1; and

at a moment $T_7$, $R_7 = 0$ is input, and D1 and D2 are respectively updated to $D_1 = [0]$ and $D_2 = [0, 0]$, to obtain an output correlation value of 0.

In this case, a correlation value sequence obtained by performing correlation on the local sequence [A]=[1, 1, -1, 1] and the received sequence [R] is [1, 0, -1, 4, -1, 0, 1, 0]. The second apparatus may determine, based on a case that a largest correlation value in the correlation value sequence is the correlation value output at the moment $T_3$, that an end location that is of the Golay sequence corresponding to the first sequence and that is in the receiving sequence [R] is $R_3$ in the receiving sequence [R], and then may determine, based on the length $N$ of the first sequence, a start location that is of the Golay sequence corresponding to the first sequence and that is in the receiving sequence [R], that is, may determine a location that is of the Golay sequence corresponding to the first sequence and that is in the receiving sequence [R], so as to implement time synchronization.

According to theoretical deduction, when the correlator is used for correlation, obtaining the largest correlation value actually means that only last $L+1$ correlation values need to be obtained, that is, it is determined that the last $L+1$ correlation values need to be obtained only based on the length $L$ of the sliding window. For a last adder of the correlator, only addition operations at the moment $T_{N-1}$ to the moment $T_{N+L-1}$ need to be performed, and addition operations at the moment $T_1$ to the moment $T_{N-2}$ may not need to be performed. Addition and subtraction that need to be performed by each adder and subtractor and that are related to the $L+1$ correlation values may be obtained through successive forward recursion. The recursion process is related to register depths of registers at all levels. For example, in the example shown in FIG. 4, to obtain the last $L+1$ correlation values, an adder 2 and a subtractor need to respectively perform addition operations and subtraction operations at the moment $T_{N-1}$ to the moment $T_{N+L-1}$ (that is, at the moment $T_3$ to the moment $T_7$), and do not need to perform addition operations and subtraction operations at the moment $T_0$ to the moment $T_2$. For an adder 1, because the register depth of the register 2 is 2, the last L+1 correlation values are obtained based on addition operations performed by the adder 1 at the moment $T_{N-3}$ to the moment $T_{N+L-3}$ (that is, at the moment $T_1$ to the moment $T_5$). Therefore, the second apparatus only needs to perform addition operations performed by the adder 1 at the moment $T_{N-3}$ to the moment $T_{N+L-3}$, and does not need to perform addition operations performed at the moment $T_0$ to the moment $T_{N-4}$, at the moment $T_{N+L-2}$, and at the moment $T_{N+L-1}$ (that is, the moments $T_0$, $T_6$, *and* $T_7$). If the register depth of the register 2 is 1, the last L+1 correlation values are obtained by performing addition operations by the adder 1 at the moment $T_{N-2}$ to the moment $T_{N+L-2}$ (that is, at the moment $T_2$ to the moment $T_6$), and the second apparatus does not need to perform addition operations at the moment $T_0$ to the moment $T_{N-3}$ and at the moment $T_{N+L-1}$ (that is, the moments $T_0$, $T_1$, and $T_7$). It can be learned from this that the register depth affects a quantity of addition operations that are actually needed. When the generalized Golay sequence is generated by the $M$-level registers, and the sum of the first $[P]$ elements in the second sequence $\lceil M/2 \rceil$ used to determine the register depth of the M-level registers is greater than or equal to the sum of the last $M-\lceil M/2 \rceil$ elements, the second apparatus can perform sequence correlation with low calculation complexity, thereby reducing power consumption, and the calculation complexity is significantly lowered especially when the length of the generalized Golay sequence is long.

In an implementation, quantities of 0s and 1s included in the first sequence are equal. The quantities of 0s and 1s in the first sequence are equal, so that anti-noise performance of the synchronization signal obtained based on the first sequence can be improved.

S202: The first apparatus sends the first signal to the second apparatus.

Correspondingly, the second apparatus receives the first signal from the first apparatus.

S203: The second apparatus processes the first signal based on the first sequence, to determine a start location and/or an end location of the synchronization signal in the first signal.

The second apparatus may calculate, based on the first sequence and the first signal by using a correlator corresponding to the length $N$ of the first sequence, last $L+1$ correlation values in a correlation value sequence whose length is $N+L$-1, where $L$ is a length of a sliding window of the correlator. Specifically, the second apparatus determines addition and subtraction that are related to the last $L+1$ correlation values and that need to be respectively performed by each adder and each subtractor in the correlator, to avoid performing unnecessary calculation, thereby reducing calculation complexity. Optionally, the length $L$ of the sliding window and the length $N$ of the first sequence may be equal, that is, $L=N$.

For example, this embodiment of this application provides candidate sequences of first sequences of different lengths, as shown in Table 1, Table 3, Table 5, Table 7, and Table 9. In specific implementation, a candidate sequence of a first sequence of a length provided below may be used for implementation. Specifically, the first apparatus and the second apparatus reach a consensus on the first sequence used to generate the synchronization signal. For example, the first sequence may be predefined in a communication protocol, and the first apparatus and the second apparatus regard a sequence used to generate the synchronization signal as the predefined first sequence by default, so that time synchronization between the second apparatus and the first apparatus is implemented based on the first sequence. However, this not limited in this application.

For example, the following Table 1 shows candidate sequences of a first sequence whose length is $N=256$. Table 1 shows a total of 176 candidate sequences with identifiers (identifiers, IDs) from 0 to 175. The first sequence shown in Table 1 may be obtained based on a candidate combination of a corresponding second sequence, third sequence, and fourth sequence in Table 2. For example, a sequence whose ID is 0 shown in Table 1 may be obtained based on a second sequence, a third sequence, and a fourth sequence whose IDs are 0 shown in Table 2, and other sequences may be obtained similarly. As shown in Table 2, in each second sequence, a sum of first $\lceil M/2 \rceil$ elements is greater than or equal to a sum of last $M-\lceil M/2 \rceil$ elements.

It should be understood that IDs provided in the following tables are defined in this application for ease of describing a relationship between the first sequence and the second sequence, the third sequence, and the fourth sequence that are used to generate the first sequence. In specific implementation, the sequence is not associated with the ID, and a value of the ID or the like does not indicate sequence sorting.

For another example, the following Table 3 shows candidate sequences of a first sequence whose length is $N=128$. Table 3 includes a total of 52 candidate sequences with identifiers (identifiers, IDs) from 0 to 51. The first sequence shown in Table 3 may be obtained based on a candidate combination of a corresponding second sequence, third sequence, and fourth sequence in Table 4. For example, a sequence whose ID is 0 shown in Table 3 may be obtained based on a second sequence, a third sequence, and a fourth sequence whose IDs are 0 shown in Table 4, and other sequences may be obtained similarly. As shown in Table 4, in each second sequence, a sum of first $\lceil M/2 \rceil$ elements is greater than or equal to a sum of last $M-\lceil M/2 \rceil$ elements.

For another example, Table 5 shows candidate sequences of a first sequence whose length is $N=64$, and the first sequence shown in Table 5 may be obtained based on a candidate combination of a corresponding second sequence, third sequence, and fourth sequence in Table 6. Table 7 shows candidate sequences of a first sequence whose length is $N=32$, and the first sequence shown in Table 7 may be obtained based on a candidate combination of a corresponding second sequence, third sequence, and fourth sequence in Table 8. Table 9 shows candidate sequences of a first sequence whose length is $N=16$, and the first sequence shown in Table 9 may be obtained based on a candidate combination of a corresponding second sequence, third sequence, and fourth sequence in Table 10. In addition, in Table 6, Table 8, and Table 10, in each second sequence, a sum of first $\lceil M/2 \rceil$ elements is greater than or equal to a sum of last $M-\lceil M/2 \rceil$ elements.

It should be understood that, in specific implementation, some or all of the candidate sequences of the first sequence shown in Table 1, Table 3, Table 5, Table 7, or Table 9 may be used as a candidate set of the first sequence, and the first apparatus and the second apparatus may determine, in the candidate set according to a preset rule or in another manner, the first sequence used to generate the synchronization signal. In specific implementation, some or all of candidate combinations of the second sequence, the third sequence, and the fourth sequence shown in Table 2, Table 4, Table 6, Table 8, or Table 10 may be used as a candidate combination set used to generate the first sequence. The first apparatus and the second apparatus may determine, in the candidate combination set according to a preset rule or in another manner, the candidate combination used to generate the first sequence. This is not limited in this application.

**Table 1 Candidate sequences of the first sequence when *N*=256**

| ID | First sequence |
|---|---|
| 0 | [0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 0, 1, 0, 1, 1, 0, 1, 0, 0, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 1, 0, 1, 0, 1, 0, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 0, 0, 1, 0, 1, 0, 1, 1, 0, 0, 1, 1, 0, 0, 1, 1, 0, 0, 1]; |
| 1 | [0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 0, 1, 0, 1, 0, 1, 0, 1, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 0, 1, 0, 0, 1, 1, 0, 0, 1, 1, 0, 0, 1, 1, 0, 0, 1, 1, 0, 1, 0, 0, 1, 0, 1, 0, 1, 0, 1, 1, 0, 1, 0, 0, 1, 1, 0, 1, 0, 0, 1, 0, 1, 0, 1, 0, 1, 0, 1, 1, 0, 1, 0, 0, 1, 1, 0, 1, 0, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1]; |
| 2 | [0, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 1, 0, 1, 0, 0, 1, 1, 0, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 1, 0, 1, 0, 0, 1, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 0, 1, 0, 1, 0, 1, 0, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0,0, 1, 0, 1, 0, 1, 0, 1, 0, 1, 0, 1, 0, 1, 1, 0, 0, 1, 1, 0, 1, 0, 0, 1, 1, 0, 0, 1]; |
| 3 | [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 1, 0, 0, 1, 0, 0, 1, 1, 0, 1, 0, 0, 1, 1, 0, 1, 0, 0, 1, 0, 1, 0, 1, 0, 1, 1, 0, 1, 0, 0, 1, 1, 0, 0, 1, 1, 0, 0, 1, 1, 0, 0, 1, 0, 1, 1, 0, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1]; |
| 4 | [0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 1, 0, 1, 0, 0, 1, 1, 0, 0, 1, 1, 0, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 1, 0, 1, 0, 0, 1, 1, 0, 0, 1, 0, 1]; |
| 5 | [0, 1, 0, 1, 1, 0, 0, 1, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 0, 1, 1, 0, 0, 1, 0, 1, 1, 0, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1]; |
| 6 | [0, 1, 1, 0, 1, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 0, 1, 0, 1, 0, 1, 0, 1, 0, 1,0, 1, 0, 1, 0, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 0, 1, 0, 1, 0, 1, 0, 1, 0, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 0, 1, 0, 1, 0, 0, 1, 0, 1]; |
| 7 | [0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 1, 0, 1, 0, 0, 1, 0, 1, 0, 1, 0, 1, 0, 1, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1]; |

(continued)

| ID | First sequence |
|---|---|
| 8 | [0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0]; |
| 9 | [0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 1, 0, 1, 0, 0, 1, 0, 1, 0, 1, 0, 1]; |
| 10 | [0, 1, 0, 1, 0, 1, 1, 0, 0, 1, 0, 1, 0, 1, 1, 0, 1, 0, 1, 0, 0, 1, 1, 0, 1, 0, 1, 0, 0, 1, 1, 0, 1, 0, 1, 0, 1, 0, 1, 0, 0, 1, 0, 1, 0, 1, 0, 1, 1, 0, 1, 1, 0, 0, 1, 0, 1, 1, 0, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 1, 0, 1, 0, 1, 0, 1, 0, 0, 1, 1, 0, 0, 1, 0, 1, 1, 0, 0, 1, 0, 1, 1, 0, 0, 1, 0, 1, 1, 0, 0, 1, 0, 1, 0, 1, 1, 0, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1]; |
| 11 | [0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 0, 1, 0, 1, 0, 1, 1, 0, 0, 1, 1, 0, 1, 0, 0, 1, 1, 0, 0, 1, 1, 0, 0, 1, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 0, 1, 1, 0, 0, 1, 1, 0, 1, 0, 0, 1, 1, 0, 0, 1, 0, 1, 1, 0, 0, 1, 0, 1, 1, 0, 0, 1, 1, 0, 0, 1, 0, 1, 0, 1, 0, 0, 1, 1, 0, 1, 0, 1, 0, 0, 0, 1]; |
| 12 | [0, 1, 0, 1, 0, 1, 1, 0, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 0, 1, 0, 1, 1, 0, 0, 1, 0, 1, 1, 0, 1, 0, 1, 0, 0, 1, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0]; |
| 13 | [0, 1, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1]; |
| 14 | [0, 1, 0, 1, 0, 1, 1, 0, 0, 1, 0, 1, 0, 1, 1, 0, 1, 0, 0, 1, 1, 0, 1, 0, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1, 1, 0, 1, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 1, 0, 0, 1, 1, 0, 0, 1, 0, 1, 1, 0, 0, 1, 1, 0, 1, 0, 1, 0, 1, 0, 0, 1, 1, 0, 0, 1, 0, 1, 1, 0, 0, 1, 0, 1, 0, 1, 0, 1, 0, 1, 1, 0, 0, 1, 0, 1, 0, 1, 1, 0, 1, 1, 0, 0, 1, 0, 1, 0, 1, 1, 0, 0, 1, 0, 1, 0]; |
| 15 | [0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 1, 0, 0, 1, 0, 1, 0, 1, 0, 1, 1, 0, 1, 0, 1, 0, 0, 1, 0, 1, 1, 0, 0, 1, 1, 0, 1, 0, 1, 0, 0, 1, 1, 0, 1, 0, 0, 1, 1, 0, 1, 0, 1, 1, 1, 0, 1, 0, 0, 1, 0, 1, 0, 0, 0, 1, 1, 0, 0, 1, 0, 1, 1, 0, 1, 0, 1, 0, 0, 1, 1, 0, 1, 0, 1, 0, 1, 1, 0, 0, 1, 0, 1, 0, 1, 0, 1, 0, 1, 1, 0, 0, 1, 0, 1, 0, 1, 1, 0, 0, 1, 1, 0, 0, 1, 0, 1, 0, 1, 1, 0, 1, 0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 1, 0, 0, 1, 0, 1, 1, 0, 0, 1, 1, 0, 0, 1, 0, 1, 0, 1, 1, 0, 0, 1, 0, 1, 1, 0, 1, 0, 1, 0, 0, 1, 1, 0, 1, 0, 1, 0, 0, 0, 1]; |

(continued)

| ID | First sequence |
|---|---|
| 16 | [0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 0, 1, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 1, 0, 1, 0, 1, 0, 0, 1, 1, 0, 1, 0, 1, 0, 0, 1, 1, 0, 1, 0, 1, 0, 0, 1, 1, 0, 1,0,0, 1, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1]; |
| 17 | [0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 0, 1, 0, 1, 1, 0, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 0, 1, 1, 0, 1, 0, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 0, 1, 1, 0, 0, 1, 0, 1, 0, 1, 0, 1, 0, 0, 1, 1, 0, 1, 0, 1, 0, 0, 1]; |
| 18 | [0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 0, 1, 1, 0, 0, 1, 1, 0, 1, 0, 0, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 0, 0, 1, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 1, 0, 1, 0, 1, 0, 1, 0, 1, 0, 1, 0, 1, 0, 0, 1, 1, 0, 0, 1, 0, 1, 0, 1, 1, 0, 1, 0, 0, 1, 1, 0, 1, 0, 0, 1]; |
| 19 | [0, 1, 1, 0, 1, 0, 0, 1, 1, 0, 1, 0, 0, 1, 0, 1, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 0, 1, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1]; |
| 20 | [0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 0, 1, 1, 0, 0, 1, 1, 0, 1, 0, 1, 0, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 0, 1, 0, 1, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 1, 0, 0, 1, 1, 0, 1, 0, 1, 0, 1, 0, 1, 0, 0, 1, 1, 0, 1, 0, 1, 0, 1, 0, 1, 0, 0, 1, 0, 1, 0, 0, 1, 1, 0, 0, 1, 0, 1, 0, 1, 0, 1, 1, 0, 0, 1, 1, 0, 1, 0, 0, 1, 1, 0, 1, 0, 1, 0, 0, 1, 1, 0, 0, 1, 0, 1, 1, 0, 0, 1]; |
| 21 | [0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 1, 0, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 1, 0, 1, 0, 1, 0, 1, 0, 1, 0, 1, 1, 0, 0, 1, 0, 1, 0, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 1, 0, 1, 0, 1, 0, 0, 1, 1, 0, 0, 1, 1, 0, 1, 0, 1, 0, 0, 1, 1, 0, 1, 0, 1, 1, 0, 0, 1]; |
| 22 | [0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1, 1, 0, 1, 0, 1, 0, 0, 1, 0, 1, 0, 1, 0, 0, 1, 1, 0, 1, 0, 1, 0, 1, 0, 0, 1, 0, 1, 0, 1, 0, 0, 1, 1, 0, 0, 1, 0, 1, 0, 1, 1, 0, 1, 0, 1, 0, 1, 0, 0, 1, 0, 1, 0, 1,0, 1, 1, 0, 1, 0, 1, 0, 1, 0, 1, 1, 0, 1, 0, 1, 0, 1, 0, 0, 1]; |
| 23 | [0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 1, 0, 1, 0, 0, 1, 1, 0, 1, 0, 1, 0, 0, 1, 0, 1, 0, 1, 0, 1, 1, 0, 0, 1, 0, 1, 0, 1, 0, 1, 1, 0, 0, 1, 1, 0, 0, 1, 0, 1, 0, 1, 1, 0, 0, 1, 1, 0, 1, 0, 0, 1, 1, 0, 0, 1, 0, 1, 1, 0, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 0, 0, 1, 0, 1, 0, 1, 0, 1, 0, 1, 1, 0, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0, 0, 1, 1, 0, 1, 0, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1]; |

(continued)

| ID | First sequence |
|---|---|
| 24 | [0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 1, 0, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 0, 1, 0, 1, 0, 1, 0, 1, 0, 1, 0, 1, 0, 1, 0, 1]; |
| 25 | [0, 1, 0, 1, 0, 1, 0, 1, 0, 1, 0, 1, 0, 1, 1, 0, 0, 1, 1, 0, 0, 1, 0, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 0, 1, 1, 0, 1, 0, 0, 1, 1, 0, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 0, 1, 0, 0, 1, 1, 0, 0, 1, 1, 0, 0, 1, 1, 0, 0, 1]; |
| 26 | [0, 1, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 0, 1, 1, 0, 0, 0, 1, 1, 0, 1, 0, 0, 1, 0, 1, 0, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 0, 1, 0, 1, 0, 1, 1, 0, 0, 1, 0, 1, 1, 0, 1, 0, 0, 1, 0, 1, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 1, 0, 1, 0, 0, 1, 1, 0, 0, 1, 1, 0, 0, 1]; |
| 27 | [0, 1, 1, 0, 0, 1, 1, 0, 0, 1, 1, 0, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 1, 0, 1, 0, 0, 1, 1, 0, 0, 1, 1, 0, 1, 0, 0, 1, 0, 1, 1, 0, 1, 0, 0, 1, 0, 1, 1, 0, 1, 1, 0, 1, 0, 1, 0, 1, 0, 1, 1, 0, 1, 0, 0, 1, 0, 1, 0, 1, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 0, 1, 0, 1, 1, 0, 0, 1, 1, 0, 1, 0, 0, 1]; |
| 28 | [0, 1, 1, 0, 0, 1, 1, 0, 0, 1, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1, 1, 0, 0, 1, 0, 1, 1, 0, 0, 1, 0, 1, 1, 0, 0, 1, 1, 0, 1, 0, 0, 1, 0, 1, 1, 0, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 0, 1, 1, 0, 1, 0, 0, 1, 1, 0, 0, 1, 1, 0, 0, 1]; |
| 29 | [0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 0, 1, 1, 0, 1, 0, 0, 1, 1, 0, 1, 0, 1, 0, 0, 1, 0, 1, 1, 0, 1, 0, 0, 1, 0, 1, 1, 0, 1, 0, 1, 0, 0, 1, 1, 0, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 0, 1, 0, 1, 1, 0, 1, 0, 0, 1, 1, 0, 0, 1, 1, 0, 1, 0, 0, 1]; |
| 30 | [0, 1, 0, 1, 1, 0, 1, 0, 0, 1, 1, 0, 1, 0, 0, 1, 0, 1, 0, 1, 1, 0, 1, 0, 1, 0, 0, 1, 0, 1, 1, 0, 0, 1, 0, 1, 1, 0, 1, 0, 0, 1, 1, 0, 1, 0, 0, 1, 0, 1, 0, 1, 1, 0, 1, 0, 1, 0, 0, 1, 0, 1, 1, 0, 0, 1, 0, 1, 1, 0, 0, 1, 0, 1, 1, 0, 1, 0, 1, 0, 0, 1, 0, 1, 0, 0, 1, 0, 1, 1, 0, 0, 1, 0, 1, 1, 0, 1, 0, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 0, 1, 1, 0, 0, 1, 1, 0, 0, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0, 1]; |
| 31 | [0, 1, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 1, 0, 1, 0, 1, 0, 1, 0, 1, 0, 0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 0, 1, 1, 0, 0, 1, 1, 0, 0, 1, 0, 1, 0, 1, 0, 1, 1, 0, 1, 0, 0, 1, 0, 1, 0, 0, 1, 1, 0, 1, 0, 0, 1, 1, 0, 1, 0, 1, 0, 0, 1, 1, 0, 1, 0, 1, 0, 0, 1, 0, 1, 0, 1, 1, 0, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 0, 1, 1, 0, 1, 0, 1, 0, 0, 1, 0, 1, 0, 1, 1, 0, 1, 0, 0, 1, 1, 0, 1, 0, 0, 1, 0, 1]; |

(continued)

| ID | First sequence |
|---|---|
| 32 | [0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 0, 1, 0, 1, 0, 1, 1, 0, 0, 1, 1, 0, 0, 1, 0, 1, 1, 0, 1, 0, 1, 0, 0, 1, 0, 1, 0, 1, 1, 0, 0, 1, 0, 1, 0, 1, 1, 0, 1, 0, 1, 0, 0, 1, 1, 0, 0, 1, 0, 1, 0, 1, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 1, 0, 1, 0, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1]; |
| 33 | 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 0, 1, 0, 1, 1, 0, 1, 0, 1, 0, 0, 1, 1, 0, 1, 0, 0, 1, 1, 0, 1, 0, 1, 0, 1, 0, 1, 0, 0, 1, 0, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 0, 1, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 0, 1, 0, 1, 0, 1, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 0, 1, 0, 1, 1, 0, 0, 1, 1, 0, 0, 1]; |
| 34 | [0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1, 0, 0, 1, 1, 0, 1, 0, 1, 0, 0, 1, 0, 1, 1, 0, 1, 0, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 0, 1, 0, 1, 0, 1, 0, 1, 1, 0, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 1, 0, 0, 1, 1, 0, 0, 1, 1, 0, 1, 0, 1, 0, 0, 1, 1, 0, 0, 1, 0, 1, 0, 1, 0, 1, 0, 1, 0, 0, 1, 1, 0, 1, 0, 0, 1, 0, 1, 0, 1, 0, 1, 0, 1, 0, 0, 1, 1, 0, 1, 0, 0, 1, 0, 1, 0, 1, 1, 0, 1, 0, 1, 0, 1]; |
| 35 | [0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1, 0, 1, 1, 0, 0, 1, 0, 1, 0, 1, 1, 0, 1, 0, 0, 1, 1, 0, 1, 0, 0, 1, 0, 1, 0, 1, 0, 1, 0, 1, 0, 1, 1, 0, 0, 1, 1, 0, 0, 1, 1, 0, 1, 0, 0, 1, 0, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 0, 0, 1, 0, 1, 1, 0, 1, 0, 1, 0, 1, 0, 1, 0, 1, 0, 1, 1, 0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1]; |
| 36 | [0, 1, 0, 1, 0, 1, 0, 1, 0, 1, 1, 0, 0, 1, 1, 0, 1, 0, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 0, 1, 1, 0, 0, 1, 1, 0, 1, 0, 1, 0, 1, 0, 1, 0, 1, 0, 0, 1, 1, 0, 1, 0, 0, 1, 1, 0, 1, 0, 0, 1, 0, 1]; |
| 37 | [0, 1, 1, 0, 0, 1, 1, 0, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 1, 0, 1, 0, 0, 1, 1, 0, 0, 1, 0, 1, 1, 0, 1, 0, 1, 0, 1, 0, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1, 0, 1, 1, 0, 0, 1, 1, 0, 0, 1, 0, 1, 0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 0, 1, 0, 1, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1]; |
| 38 | [0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 1, 0, 0, 1, 1, 0, 1, 0, 1, 0, 0, 1, 0, 1, 0, 1, 1, 0, 1, 0, 1, 0, 0, 1, 1, 0, 0, 1, 0, 1, 0, 1, 1, 0, 0, 1, 1, 0, 1, 0, 0, 1, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 1, 1, 0, 0, 1, 0, 1, 1, 0, 1, 0, 1, 0, 0, 1, 0, 1]; |
| 39 | [0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 0, 1, 1, 0, 0, 1, 0, 1, 0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1]; |

(continued)

| ID | First sequence |
|---|---|
| 40 | [0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 1, 0, 1, 0, 0, 1, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 0, 1, 1, 0, 1, 0, 1, 0, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 0, 1, 0, 1]; |
| 41 | [0, 1, 0, 1, 1, 0, 0, 1, 1, 0, 1, 0, 0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 0, 0, 1, 1, 0, 0, 1, 0, 1, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 1, 0, 1, 0, 0, 1]; |
| 42 | [0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 0]; |
| 43 | [0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 0, 1, 0, 1, 1, 1, 0, 1, 0, 1, 0, 1, 0, 1, 0, 0, 1, 0, 1, 0, 1, 0, 1, 0, 1, 0, 1, 0, 1, 1, 0, 0, 1, 1, 0, 0, 1, 1, 0, 1, 0, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 1, 0, 0, 1, 0, 1, 1, 0, 1, 0, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1]; |
| 44 | [0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 0, 1, 1, 0, 1, 0, 0, 1, 1, 0, 1, 0, 0, 1, 1, 0, 1, 0, 0, 1, 0, 1, 0, 1, 1, 0, 1, 0, 0, 0, 1, 0, 1, 0, 1, 1, 0, 1, 0, 0, 1, 1, 0, 0, 1, 1, 0, 1, 0, 1, 0, 1, 0, 1, 0, 0, 1, 0, 0, 1, 1, 0, 0, 1, 0, 1, 0, 1, 0, 1]; |
| 45 | [0, 1, 0, 1, 0, 1, 0, 1, 1, 0, 0, 1, 1, 0, 0, 1, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 0, 1, 0, 1, 0, 1, 1, 0, 1, 0, 0, 1, 1, 0, 1, 0, 1, 0, 0, 1, 0, 1, 0, 1, 1, 0, 1, 0, 0, 1, 1, 0, 0, 1, 0, 1, 0, 1, 0, 1, 0, 1, 0, 1, 1, 0, 0, 1, 1, 0, 0, 1, 0, 1, 1, 0, 0, 1, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 0, 1, 1, 0, 1, 0, 0, 1, 0, 1, 0, 1, 1, 0, 0, 1, 0, 1, 1, 0, 0, 1, 0, 1, 0, 1, 0, 1, 0, 1, 1, 0, 0, 1, 1, 0, 0, 1, 1, 0, 1, 0, 1, 0, 1, 0, 1, 0, 1, 0, 0, 1, 1, 0, 0, 1]; |
| 46 | [0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 0, 1, 0, 1, 1, 0, 0, 1, 0, 1, 0, 1, 0, 1, 0, 1, 0, 1, 0, 0, 1, 0, 1, 1, 0, 1, 0, 0, 1, 0, 1, 0, 1, 0, 1]; |
| 47 | [0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 1, 0, 0, 1, 1, 0, 1, 0, 0, 0, 1, 0, 1, 1, 0, 0, 1, 1, 0, 1, 0, 0, 1, 1, 0, 0, 1, 1, 0, 1, 0, 1, 0, 1, 0, 0, 1, 0, 1, 1, 0, 1, 0, 0, 1, 0, 1, 1, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 1, 0, 1, 0, 0, 1, 1, 0, 0, 1, 0, 1, 0, 1, 0, 1, 0, 0, 1, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 0, 1, 1, 0, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 1, 0, 0, 1]; |

(continued)

| ID | First sequence |
|---|---|
| 48 | [0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1]; |
| 49 | [0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1]; |
| 50 | [0, 1, 1, 0, 1, 0, 1, 0, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 1, 0, 1, 0, 1, 0, 0, 1, 0, 1, 1, 0, 1, 0, 1, 0, 1, 0, 0, 1, 1, 0, 0, 1, 0, 1, 1, 0, 0, 1, 0, 1, 0, 1, 1, 0, 0, 1, 1, 0, 0, 1, 0, 1, 0, 1, 0, 0, 1, 1, 0, 0, 1]; |
| 51 | [0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 0, 1, 0, 1, 0, 1, 1, 0, 0, 1, 0, 1, 0, 1, 1, 0, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 1, 0, 1, 0, 1, 0, 1, 1, 0, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 1, 0, 1, 0, 1, 0, 1, 0, 1, 1, 0, 1, 0, 1, 0, 0, 1, 1, 0, 1, 0, 1, 0, 1, 0, 0, 1]; |
| 52 | [0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 1, 0, 1, 0, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 0, 0, 1, 1, 0, 1, 0, 1, 0, 1, 0, 1, 1, 0, 0, 1, 0, 1, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 1, 0, 0, 1, 0, 1, 0, 0, 1, 1, 0, 1, 0, 1, 0, 0, 1, 1, 0, 0, 1, 0, 1]; |
| 53 | [0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 0, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 1, 1, 0, 0, 1, 0, 1, 0, 1, 0, 0, 1, 1, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1]; |
| 54 | [0, 1, 0, 1, 1, 0, 1, 0, 0, 1, 1, 0, 0, 1, 1, 0, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 0, 1, 1, 0, 0, 1, 1, 0, 0, 1, 1, 0, 1, 0, 1, 0, 0, 1, 0, 1, 1, 0, 1, 0, 1, 0, 0, 1, 1, 0, 1, 0, 1, 0, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 1, 0, 1, 0, 1, 0, 0, 1, 1, 0, 1, 0, 0, 1, 0, 1, 0, 1, 0, 1, 0, 1]; |
| 55 | [0, 1, 0, 1, 1, 0, 1, 0, 1, 0, 0, 1, 1, 0, 0, 1, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 0, 1, 1, 0, 1, 0, 1, 0, 1, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 0, 1, 0, 1, 1, 0, 0, 1, 0, 1, 1, 0, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 0, 0, 1, 0, 1, 1, 0, 1, 0, 1, 0, 0, 1, 1, 0, 0, 1, 0, 1, 0, 1, 1, 0, 1, 0, 0, 1, 1, 0, 1, 0, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1, 0, 0, 1, 0, 1, 1, 0, 0, 1, 0, 1, 0, 1, 0, 1]; |

(continued)

| ID | First sequence |
|---|---|
| 56 | [0, 1, 0, 1, 0, 1, 0, 1, 0, 1, 1, 0, 1, 0, 0, 1, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 0, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 0, 1, 0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 1, 0, 0, 1, 1, 0, 0, 1, 1, 0, 1, 0, 0, 1, 0, 1]; |
| 57 | [0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 0, 1]; |
| 58 | [0, 1, 0, 1, 0, 1, 1, 0, 1, 0, 0, 1, 1, 0, 1, 0, 0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 0, 1, 1, 0, 0, 1, 0, 1, 0, 1, 1, 0, 1, 0, 0, 1, 1, 0, 0, 1, 1, 0, 1, 0, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 1, 0, 1, 0, 1, 0, 1, 0, 0, 1, 1, 0, 1, 0, 0, 1, 0, 1, 0, 1, 1, 0, 0, 1, 1, 0, 0, 1, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1]; |
| 59 | [0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 1, 1, 1, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 0, 1, 1, 0, 0, 1, 1, 1, 0, 1, 0, 1, 0, 1, 0, 1, 0, 0, 1, 1, 0, 1, 0, 0, 1, 1, 0, 1, 0, 0, 1, 0, 1, 0, 1, 0, 1, 0, 1, 1, 0, 0, 1, 1, 0, 0, 1, 0, 1, 0, 1, 0, 1, 0, 1, 0, 0, 1, 1, 0, 0, 1, 0, 1, 1, 0, 0, 1, 0, 1, 1, 0, 1, 0, 1, 0, 0, 1, 0, 1]; |
| 60 | [0, 1, 0, 1, 0, 1, 1, 0, 0, 1, 1, 0, 0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 1, 0, 0, 1, 1, 0, 0, 1, 0, 1, 1, 0, 1, 0, 1, 0, 0, 1, 1, 0, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 1, 0, 0, 1, 0, 1, 0, 1, 1, 0, 0, 1, 0, 1, 1, 0, 0, 1, 0, 1, 0, 1, 0, 1, 0, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 0, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1]; |
| 61 | [0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 0, 1, 0, 1, 0, 1, 1, 0, 0, 1, 0, 1, 1, 0, 1, 0, 0, 1, 1, 0, 1, 0, 1, 0, 1, 0, 1, 0, 1, 0, 0, 1, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 1, 0, 1, 0, 1, 0, 0, 1, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 0, 1]; |
| 62 | [0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 1, 0, 1, 0, 1, 0, 0, 1, 1, 0, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1]; |
| 63 | [0, 1, 0, 1, 0, 1, 0, 1, 0, 1, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 0, 1, 1, 0, 1, 0, 0, 1, 1, 0, 0, 1, 0, 1, 0, 1, 0, 1, 0, 1, 1, 0, 1, 0, 1, 0, 0, 1, 0, 1, 1, 0, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 0, 1, 1, 0, 1, 0, 0, 1, 1, 0, 0, 1, 1, 0, 0, 1]; |

(continued)

| ID | First sequence |
|---|---|
| 64 | [0, 1, 1, 0, 1, 0, 0, 1, 1, 1, 0, 0, 1, 1, 0, 1, 0, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 1, 0, 1, 0, 0, 1, 0, 1, 0, 1, 0, 1, 0, 1, 0, 1, 0, 1, 1, 0, 1, 0, 0, 1, 1, 0, 0, 1, 0, 1, 1, 0, 0, 1, 1, 0, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 0, 0, 1, 1, 0, 1, 0, 1, 0, 1, 0, 0, 1, 0, 1, 1, 0, 1, 0, 1, 0, 0, 1, 1, 0, 0, 1, 0, 1, 1, 0, 1, 0, 0, 1]; |
| 65 | 0, 1, 1, 0, 1, 0, 0, 1, 1, 0, 0, 1, 1, 0, 0, 1, 0, 1, 0, 1, 1, 0, 1, 0, 1, 0, 1, 1, 0, 1, 0, 0, 0, [0, 1, 0, 0, 1, 0, 1, 1, 0, 1, 0, 0, 1, 0, 1,0, 1,0, 1, 0, 1, 1, 0, 1, 0, 0, 1, 0, 1, 0, 0, 1, 0, 1, 1, 0, 1, 0, 1, 0, 1, 0, 1, 0, 1, 0, 0, 1, 1, 0, 1, 0, 0, 0, 1, 1, 0, 0, 1, 1,0,0, 1, 1, 0, 1, 0, 1, 0, 1,0,0, 1, 0, 1, 1, 0, 1, 0, 0, 1, 1, 0, 0, 1, 1, 0, 1, 0, 0, 1, 0, 1, 1, 0, 0, 1, 1, 0, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1,0,0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 0, 1, 1, 0, 1, 1, 0, 0, 1, 1, 0, 0, 1, 1, 0, 0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1]; |
| 66 | [0, 1, 1, 0, 1, 0, 0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1,0, 1, 1, 0, 1, 0, 0, 1, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1]; |
| 67 | [0, 1, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 1, 0, 1, 0, 0, 1, 1, 0, 0, 1, 1, 0, 0, 1, 1, 0, 0, 1, 0, 1, 0, 1, 1, 0, 0, 1, 1, 0, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 1, 0, 0, 1, 1, 0, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 1, 0, 0, 1]; |
| 68 | [0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1]; |
| 69 | [0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 0, 1, 1, 0, 1, 0, 0, 1, 0, 1, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1,0,0, 1, 1,0,0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1]; |
| 70 | [0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 0, 1, 1, 0, 0, 1, 1, 0, 0, 1, 1, 0, 1, 0, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1,0,0, 1, 0, 1]; |
| 71 | [0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 0, 1, 0, 1, 0, 1, 1, 0, 1, 0, 0, 1, 0, 1, 0, 1, 0, 1, 0, 1, 0, 0, 1, 1, 0, 0, 1, 1, 0, 0, 1, 1, 0, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1]; |

(continued)

| ID | First sequence |
|---|---|
| 72 | [0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 1, 1, 0, 1, 0, 0, 1, 1, 0, 1, 0, 0, 1, 0, 1, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 1]; |
| 73 | [0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 0, 1, 0, 1, 1, 0, 1, 0,0, 1, 0, 1]; |
| 74 | [0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 0, 1, 0, 1, 0, 1, 0, 1, 0, 1, 0, 1, 0, 1]; |
| 75 | [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 1, 0, 0, 1, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 1,0,0, 1, 0, 1, 0, 1, 0, 1, 0, 1, 0, 1, 0, 1, 0, 1, 0, 1, 1,0,0, 1, 1, 0, 1, 0, 0, 1, 1, 0, 0, 1, 1, 0, 1, 0, 0, 1, 0, 1, 1, 0, 1, 0, 0, 1, 0, 1, 1, 0, 0, 1, 1, 0, 1, 0, 0, 1, 0, 1, 1,0,0, 1, 1,0,0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 0, 1]; |
| 76 | [0, 1, 0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 0, 1, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 0, 1, 0, 1, 1, 0, 1, 0, 1, 0, 0, 1, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1]; |
| 77 | [0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 1, 0, 1, 0, 0, 1, 1, 0, 0, 1, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 1, 1, 0, 1, 0, 1, 0, 1, 0, 1,0,0, 1, 0, 1]; |
| 78 | [0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 0, 0, 1, 1, 0, 0, 1, 1, 0, 0, 0, 1, 1, 0, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 0, 1, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 1, 0, 1, 0, 1, 1, 1, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 0, 1, 0, 1, 0, 1, 0, 1]; |
| 79 | [0, 1, 0, 1, 1, 0, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 0, 1, 1, 0, 0, 1, 0, 1, 0, 1, 0, 1, 0, 1, 0, 1, 0, 1, 0, 1, 0, 1, 0, 1, 0, 0, 1, 1, 0, 1, 0, 0, 1, 0, 1, 0, 1, 0, 0, 1, 1, 1, 0, 1, 0, 0, 1, 0, 1, 1, 0, 1, 0, 0, 1, 0, 1, 1, 0, 1, 0, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 1, 1, 0, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1]; |

(continued)

| ID | First sequence |
|---|---|
| 80 | [0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 1, 0, 0, 1, 0, 1,0, 1, 0, 1, 1, 0, 1, 0, 0, 1,0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 1, 1, 0, 1, 0, 1, 0, 1, 0, 1, 1, 0, 1, 0, 1, 1, 0, 0, 1, 0, 1, 0, 1, 0, 0, 1, 0, 1, 1, 0, 1, 0, 0, 1,0, 1, 1, 0, 0, 1, 0, 1, 1, 0, 0, 1, 1, 0, 1, 0, 0, 1, 0, 1, 1,0,0, 1, 1,0,0, 1, 0, 1, 0, 1, 0, 1, 1, 0, 1, 0, 1, 0, 1, 0, 1, 0, 0, 1, 0, 1, 0, 1, 0, 0, 1, 0, 1]; |
| 81 | [0, 1, 0, 1, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 1, 0, 1, 0, 1,0,0, 1, 0, 1]; |
| 82 | [0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 1, 0, 1, 0, 1, 0, 1, 0, 0, 1, 1, 0, 1, 1, 0, 1, 0, 1, 0, 0, 1, 0, 1, 1, 0, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 1,0,0, 1, 0, 1]; |
| 83 | [0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 0, 1, 0, 0, 1, 0, 1, 0, 1, 0, 1, 1, 0, 1, 0, 0, 1, 1, 0, 1, 0, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1]; |
| 84 | [0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 1, 0, 0, 1, 1, 0, 0, 1, 0, 1, 1,0,0, 1, 1, 0, 1, 0, 1, 0, 1, 0, 1, 0, 1, 0,0, 1, 0, 1, 1,0,0, 1, 0, 1, 1, 0, 1, 0, 0, 1, 0, 1, 1, 0, 1, 0, 1, 0, 0, 1, 0, 1]; |
| 85 | [0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 1, 0, 1, 0, 0, 1, 0, 1, 0, 1, 0, 1, 1, 0, 1, 0, 1, 0, 1, 0, 0, 1, 0, 1, 1, 0, 0, 1, 1, 0, 1, 0, 1, 0, 0, 1, 0, 0, 1, 1, 0, 1, 0, 0, 1, 0, 1, 1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 1, 0, 1, 0, 1, 0, 0, 1, 0, 1, 0, 1, 1, 0, 1, 0, 0, 1]; |
| 86 | [0, 1, 0, 1, 1, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 0, 0, 1, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 0, 1, 0, 0, 1, 1, 0, 1, 0, 1, 1, 0, 0, 1, 0, 1, 0, 1, 1, 0, 1, 0, 1, 0, 0, 1, 1, 0, 0, 1, 0, 1, 1, 0, 1, 0, 1, 0, 1, 1, 0, 1, 0, 1, 0, 1, 0, 0, 1, 1, 0, 0, 1, 0, 1]; |
| 87 | [0, 1, 0, 1, 1, 0, 0, 1, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 0, 1, 0, 1, 0, 1, 1, 0, 0, 1, 0, 1, 0, 1, 0, 1, 1, 0, 0, 1, 0, 1, 1, 0, 0, 0, 1, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 1, 0, 1, 0, 1, 0, 1, 0, 1, 0, 0, 1, 1, 0, 1, 0, 1, 0, 1, 0, 1, 0, 0, 1, 0, 1, 1, 0, 1, 0, 1, 0, 0, 1, 1, 0, 1, 0, 1, 0, 0, 1, 0, 1, 0, 0, 0, 1, 1, 0, 0, 1, 0, 1, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 0, 1, 1,0,0, 1, 0, 1]; |

(continued)

| ID | First sequence |
|---|---|
| 88 | [0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1]; |
| 89 | [0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 1, 0, 1, 0, 1, 0, 0, 1, 0, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 1, 0, 0, 1, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 0, 1, 0, 0, 1, 0, 1, 1, 0, 1, 0, 1, 0, 1, 0, 0, 1, 0, 1, 1, 0, 1, 0, 0, 1]; |
| 90 | [0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 1, 0, 1, 0, 0, 1, 0, 0, 1, 0, 1, 0, 1, 0, 1, 1, 0, 1, 0, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1]; |
| 91 | [0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 1, 0, 1, 0, 1, 0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 1, 0, 0, 1, 1, 0, 0, 1, 1, 0, 1, 0, 1, 0, 1, 0, 1, 0, 1, 0, 0, 1, 0, 1, 0, 1, 0, 1, 1, 0, 1, 0, 0, 1, 1, 0, 1, 0, 0, 1, 0, 1, 1, 0, 1, 0, 0, 0, 1]; |
| 92 | [0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 1, 0, 1, 0, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1]; |
| 93 | [0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 1, 0, 0, 1, 1, 0, 1, 0, 0, 1, 1, 0, 0, 1, 0, 1, 1, 0, 0, 1, 1, 0, 0, 1, 0, 1, 0, 1, 0, 1, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1, 0, 0, 0, 1]; |
| 94 | [0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 1, 0, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 0, 0, 1, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 0, 0, 1, 0, 1, 0, 1, 0, 1]; |
| 95 | [0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 0, 1, 1, 0, 1, 0, 1, 0, 0, 1, 0, 1, 1, 0, 0, 1, 1, 0, 1, 0, 0, 0, 1]; |

| ID | First sequence |
|---|---|
| 96 | [0, 1, 0, 1, 0, 1, 0, 1, 1, 0, 0, 1, 0, 1, 1, 0, 1, 0, 1, 0, 0, 1, 0, 1, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 0, 1, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 1, 0, 1, 0, 1, 0, 0, 1, 1, 0, 0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 0, 1, 1, 0, 0, 1, 0, 1, 0, 1, 0, 1]; |
| 97 | [0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 1, 0, 1, 0, 0, 1, 0, 1, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 0, 0, 1, 1, 0, 0, 1, 0, 1, 0, 1, 0, 1]; |
| 98 | [0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 0, 1, 1, 0, 0, 1, 1, 0, 1, 0, 1, 0, 0, 1, 0, 1, 1, 0, 1, 0, 1, 0, 1, 0, 1, 0, 1, 0, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 0, 1, 0, 1, 0, 0, 1, 1, 0, 1, 0, 0, 1, 1, 0, 0, 1, 0, 1, 1, 0, 1, 0, 0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1]; |
| 99 | , 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 0, 1, 0, 0, 1, 0, 1, 0, 1, 0, 1, 0, 1, 0, 1]; |
| 100 | [0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 0, 1, 1, 0, 0, 1, 0, 1, 0, 1, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1]; |
| 101 | [0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 0, 1, 0, 1, 1, 0, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1]; |
| 102 | [0, 1, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 1, 1, 0, 0, 1, 1, 0, 0, 1, 1, 0, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 0, 1, 0, 1, 0, 1]; |
| 103 | [0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 1, 0, 1, 0, 1, 0, 1, 0, 1, 0, 1, 0, 1, 0, 1, 1, 0, 1, 0, 0, 1, 0, 1]; |

(continued)

| ID | First sequence |
|---|---|
| 104 | [0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1]; |
| 105 | [0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1]; |
| 106 | [0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 0, 1, 0, 1, 0, 0, 1, 0, 1, 1, 1, 0, 0, 1, 1, 0, 0, 1, 1, 0, 0, 1, 1, 0, 0, 1, 0, 1, 0, 1, 0, 1, 0, 1, 0, 1, 1, 0, 0, 1, 0, 0, 1, 0, 0, 1, 0, 0, 1, 1, 0, 0, 1, 1, 0, 1, 0, 1, 0, 0, 1, 1, 0, 0, 1, 0, 1, 0, 1, 0, 1, 0, 1, 1, 0, 1, 0, 0, 1, 0, 1, 1, 0, 1, 0, 0, 0, 1, 1, 1, 0, 0, 1, 0, 0, 1, 0, 1, 1, 1, 0, 1, 0, 0, 1, 0, 1, 0, 1, 1, 1, 0, 1, 0, 0, 1, 1, 0, 0, 1, 0, 1, 1, 0, 0, 1, 0, 1, 1, 0, 1, 0, 1, 0, 1, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 0, 1, 0, 1, 0, 1, 1, 0, 1, 0, 0, 1, 0, 1, 1, 0, 1, 0, 0, 1, 1, 0, 1, 0, 0, 0, 1, 0, 1]; |
| 107 | [0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 0, 1, 0, 1, 1, 0, 0, 1, 1, 0, 1, 0, 0, 1, 0, 1, 1, 0, 1, 0, 0, 1, 0, 1, 0, 1, 0, 1, 0, 0, 1, 1, 0, 0, 1, 1, 0, 1, 0, 1, 0, 1, 0, 0, 1, 1, 0, 0, 1, 1, 0, 0, 1, 1, 0, 0, 1, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 1, 1, 0, 0, 1, 0, 1, 1, 0, 1, 0, 0, 1, 1, 0, 1, 0, 0, 1, 0, 1, 1, 0, 1, 0, 0, 1, 1, 0, 0, 1, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 0, 1, 0, 1, 0, 1]; |
| 108 | [0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 1, 0, 1, 0, 0, 1, 0, 1, 1, 0, 1, 0, 0, 0, 1, 1, 0, 1, 0, 0, 0, 1, 0, 1, 1, 0, 0, 1, 0, 1, 0, 1, 0, 1, 1, 0, 1, 0, 0, 1, 0, 1, 0, 1, 1, 0, 1, 0, 0, 1, 0, 0, 1, 1, 0, 1, 0, 1, 0, 1, 1, 0, 0, 1, 1, 0, 0, 1, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 0, 1, 0, 1]; |
| 109 | [0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 1, 0, 1, 0, 1, 0, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 0, 1, 0, 1, 0, 1, 1, 0, 1, 0, 1, 0, 0, 1, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 1, 0, 0, 1, 0, 1, 1, 0, 0, 1, 0, 1, 1, 0, 1, 0, 1, 0, 1, 0, 1, 0, 0, 1, 0, 1, 0, 1, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 0, 1, 0, 1, 0, 1, 0, 1, 0, 1]; |
| 110 | [0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 1, 1, 1, 1, 0, 0, 1, 1, 0, 0, 1, 1, 1, 0, 1, 0, 1, 0, 1, 0, 1, 0, 1, 0, 0, 1, 0, 0, 1, 0, 0, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 1, 1, 1, 1, 0, 0, 1, 0, 1, 1, 0, 0, 1, 0, 1, 1, 0, 1, 0, 0, 0, 1, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 0, 1, 0, 1, 0, 1, 0, 1, 1, 0, 0, 0, 1, 1, 0, 0, 1, 0, 1, 1, 0, 1, 0, 1, 0, 1, 0, 1, 0, 1, 0, 0, 1, 0, 1, 0, 1, 0, 0, 1, 0, 1, 1, 0, 0, 1, 1, 0, 1, 0, 0, 1, 1, 0, 1, 0, 0, 1, 0, 1]; |
| 111 | [0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 0, 1, 1, 0, 1, 0, 0, 0, 1, 1, 0, 1, 0, 0, 0, 1, 0, 1]; |

(continued)

| ID | First sequence |
|---|---|
| 112 | [0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 0, 1, 0, 1, 0, 1, 1, 0, 1, 0, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1]; |
| 113 | [0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 1, 0, 1, 0, 1, 0, 0, 1, 0, 1, 1, 0, 1, 0, 0, 1, 0, 1, 1, 0, 1, 0, 0, 0, 1, 1, 0, 0, 1, 0, 1, 1, 0, 1, 0, 1, 0, 0, 1, 0, 1, 0, 1, 0, 1, 1, 0, 1, 0, 0, 1, 1, 0, 1, 0, 1, 0, 0, 1, 0, 1, 1, 0, 1, 0, 0, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1]; |
| 114 | [0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 1, 0, 0, 1, 0, 1, 0, 1, 1, 0, 1, 0, 1, 0, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 1, 0, 0, 1, 0, 1]; |
| 115 | [0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1]; |
| 116 | [0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 1, 0, 1, 0, 0, 1, 0, 1]; |
| 117 | [0, 1, 0, 1, 1, 0, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 0, 1, 0, 1, 0, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 1, 0, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 0, 1, 1, 0, 1, 0, 1, 0, 0, 1, 0, 1]; |
| 118 | [0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 1, 0, 1, 0, 1, 0, 1, 0, 0, 1, 1, 0, 1, 0, 0, 1, 1, 0, 0, 1, 1, 0, 0, 1, 1, 0, 0, 1]; |
| 119 | [0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 0, 1, 0, 1, 0, 1, 0, 1, 0, 1, 0, 1, 1, 0, 1, 0, 1, 0, 1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 1, 0, 1, 0, 0, 1, 0, 1, 0, 1, 0, 1, 0, 1, 1, 0, 1, 0, 0, 1, 0, 1, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 1, 0, 1, 0, 0, 1, 1, 0, 1, 0, 0, 1, 1, 0, 0, 1, 1, 0, 0, 1]; |

(continued)

| ID | First sequence |
|---|---|
| 120 | [0, 1, 0, 1, 1, 0, 1, 0, 1, 0, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1,0,0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 0, 1, 1,0,0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 0, 1, 1, 0, 0, 1, 1, 0, 0, 1, 0, 1, 0, 1,0, 1, 1,0, 1,0,0, 1, 0, 1]; |
| 121 | [0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 0, 0, 1, 0, 1, 1, 0, 0, 1, 0, 1, 1, 0, 1, 0, 0, 1, 1, 0, 1, 0, 0, 1, 0, 1, 0, 1, 0, 1, 0, 1, 0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1]; |
| 122 | [0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1, 1, 0, 0, 1, 1, 0, 0, 1, 1, 0, 1, 0, 0, 1, 1, 0, 1, 0, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1]; |
| 123 | [0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 0, 1, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 0, 1, 1, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1]; |
| 124 | [0, 1, 0, 1, 1, 0, 1,0,0, 1, 0, 1, 0, 1,0, 1, 1,0,0, 1, 1,0,0, 1, 1,0,0, 1, 0, 1, 1, 0, 0, 1, 0, 1, 1, 0, 1, 0, 0, 1, 0, 1, 0, 1, 0, 1, 0, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 1, 0, 1, 0, 0, 1, 1, 0, 1, 0, 1, 0, 1, 0, 1, 0, 1, 0, 1, 0, 1, 1, 0, 1, 0, 0, 1, 0, 1, 0, 1, 0, 1, 1, 0, 0, 1, 0, 1, 1, 0, 1, 0, 0, 1, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1]; |
| 125 | [0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 0, 1, 1, 0, 0, 1, 0, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1,0,0, 1, 0, 1]; |
| 126 | [0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 1, 0, 0, 1, 1, 0, 1, 0, 1, 0, 0, 1, 1, 0, 1, 0, 0, 1, 0, 1, 0, 1, 0, 1, 0, 1, 0, 1, 0, 1, 0, 0, 1, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 0, 1, 1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 0, 1, 0, 1, 1, 0, 1,0, 1,0,0, 1, 0, 1]; |
| 127 | [0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 1, 0, 1,0,0, 1, 0, 1]; |

(continued)

| ID | First sequence |
|---|---|
| 128 | [0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1]; |
| 129 | [0, 1, 0, 1, 1, 0, 0, 1, 1, 0, 1, 0, 1, 0, 1, 0, 1, 0, 1, 0, 0, 1, 0, 1, 0, 1, 1, 0, 1, 0, 1, 0, 0, 1, 0, 1, 1, 0, 0, 1, 1, 0, 1, 0, 1, 0, 1, 0, 1, 0, 1, 0, 0, 1, 0, 1, 0, 1, 0, 1, 0, 0, 1, 0, 1, 1, 0, 0, 1, 0, 1, 1, 0, 0, 0, 1, 0, 1, 0, 1, 0, 1, 0, 1, 0, 1, 1, 0, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 0, 1, 1, 0, 0, 1, 1, 0, 1, 0, 1, 0, 0, 1]; |
| 130 | [0, 1, 1, 0, 0, 1, 0, 1, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 0, 1, 0, 1, 1, 0, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 0, 1, 1, 0, 1, 0, 1, 0, 1, 0, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 0, 1, 0, 1]; |
| 131 | [0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 1, 0, 1, 0, 0, 1, 1, 0, 0, 1, 0, 1, 1, 0, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 1, 0, 0, 1, 0, 1, 0, 1, 1, 0, 0, 1]; |
| 132 | [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0, 1, 0, 0, 1, 1, 0, 0, 1, 0, 1, 0, 1, 0, 1, 0, 1, 0, 1, 1, 0, 0, 1, 1, 0, 0, 1, 0, 1, 0, 1, 0, 1, 0, 1, 0, 1, 0, 0, 1, 0, 1, 0, 1, 1, 0, 1, 0, 1, 0, 0, 1, 1, 0, 0, 1, 1, 0, 0, 1, 1, 0, 1, 0, 1, 0, 1, 0, 1, 0, 1, 0, 0, 1, 0, 1]; |
| 133 | [0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 1, 0, 1, 0, 1, 0, 1, 0, 0, 1, 0, 1, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1, 0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 0, 1, 0, 1, 0, 0, 1, 1, 0, 0, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 0, 1, 1, 0, 1, 0, 0, 1]; |
| 134 | [0, 1, 1, 0, 0, 1, 0, 1, 0, 1, 1, 0, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 0, 1, 0, 1, 1, 0, 0, 1, 0, 1, 0, 1, 1, 0, 0, 1, 0, 0, 1, 0, 0, 1, 1, 0, 0, 1, 0, 1, 0, 0, 1, 1, 0, 1, 0, 0, 1, 1, 0, 0, 1, 0, 1, 1, 0, 0, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 0, 1, 0, 1, 0, 1, 0, 0, 1, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1]; |
| 135 | [0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 0, 1, 0, 1, 1, 0, 0, 1, 0, 1, 0, 0, 1, 1, 0, 0, 1, 0, 1, 0, 1, 0, 1, 1, 0, 0, 1, 1, 0, 1, 0, 0, 1, 1, 0, 0, 1, 0, 1, 1, 0, 0, 1, 1, 0, 1, 0, 1, 0, 1, 0, 0, 1, 0, 1, 1, 0, 0, 1, 1, 0, 1, 0, 0, 1, 1, 0, 1, 0, 1, 0, 1, 1, 0, 0, 1, 0, 1, 0, 1, 0, 1, 0, 1, 0, 0, 1, 0, 1, 0, 1, 1, 0, 0, 1, 1, 0, 0, 1, 0, 1, 0, 1, 1, 0, 0, 1, 0, 1, 0, 1, 0, 1, 1, 0, 0, 1, 1, 0, 1, 0, 1, 0, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1]; |

(continued)

| ID | First sequence |
|---|---|
| 136 | [0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 0, 1, 1, 0, 0, 1, 0, 1, 1, 0, 0, 0, 1, 1, 0, 1, 0, 0, 1, 1, 0, 1, 0, 1, 0, 0, 1, 1, 1, 0, 1, 0, 1, 0, 0, 1, 1, 0, 1, 0, 1, 0, 1, 0, 0, 1, 1, 0, 1, 0, 1, 0, 0, 1, 0, 0, 1, 0, 1, 1, 0, 1, 0, 1, 0, 1, 1, 0, 0, 1, 0, 1, 0, 1, 1, 0, 0, 1, 0, 1, 1, 0, 1, 1, 0, 1, 0, 0, 1, 1, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 0, 1, 0, 1, 0, 1, 1, 0, 0, 1, 1, 0, 1, 0, 0, 1, 1, 0, 0, 1, 0, 1, 1, 0, 0, 1, 0, 1, 0, 1, 1, 0, 0, 1]; |
| 137 | [0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 0, 1]; |
| 138 | [0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 1, 1, 0, 0, 1, 1, 1, 0, 1, 0, 0, 1, 1, 0, 0, 1, 1, 0, 0, 1, 0, 1, 0, 1, 0, 1, 1, 1, 0, 0, 1, 0, 1, 1, 0, 0, 1, 0, 1, 1, 0, 1, 0, 0, 1, 1, 0, 0, 1, 1, 0, 0, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 1, 0, 0, 1, 1, 0, 1, 1, 0, 1, 0, 1, 1, 0, 0, 1, 1, 1, 0, 1, 0, 1, 0, 0, 1, 0, 1, 0, 1, 1, 0, 0, 1, 1, 0, 1, 0, 1, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 0, 1, 0, 1, 0, 1, 1, 0, 1, 0, 0, 1, 0, 1, 0, 1, 1, 0, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1]; |
| 139 | [0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 0, 1, 0, 1, 0, 1, 0, 1, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 0, 1, 0, 1, 1, 0, 0, 1, 0, 1, 0, 1, 0, 1, 0, 1, 1, 0, 0, 1, 1, 0, 0, 1, 1, 0, 1, 0, 0, 1, 0, 1, 1, 0, 1, 0, 1, 0, 0, 1, 1, 0, 0, 1, 0, 1, 1, 0, 1, 0, 0, 1, 1, 0, 1, 0, 0, 1, 1, 0, 1, 0, 0, 1]; |
| 140 | [0, 1, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 1, 0, 0, 1, 0, 1, 0, 1, 0, 1, 1, 0, 0, 1, 0, 1, 0, 1, 0, 1, 0, 1, 1, 0, 0, 1, 1, 0, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 0, 1, 0, 1, 0, 1, 1, 0, 0, 1, 0, 1, 0, 1, 1, 0, 1, 0, 0, 1, 1, 0, 1, 0, 1, 0, 0, 1, 1, 0, 0, 1, 1, 0, 0, 1, 0, 1, 1, 0, 0, 1]; |
| 141 | [0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 1, 0, 0, 1, 0, 1, 0, 1, 1, 0, 0, 0, 1, 0, 1, 0, 1, 1, 0, 1, 0, 1, 0, 1, 0, 0, 1, 1, 0, 0, 1, 1, 0, 1, 0, 1, 0, 1, 0, 1, 0, 0, 1, 0, 1, 0, 1, 1, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 0, 1, 0, 1, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 0, 1, 0, 0, 1, 1, 0, 1, 0, 1, 0, 1, 0, 1, 0, 0, 1, 1, 0, 0, 1, 0, 1, 0, 1, 0, 1, 0, 1, 0, 1, 0, 0, 1, 1, 0, 0, 1, 0, 1, 1, 0, 0, 1]; |
| 142 | [0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 1, 0, 1, 0, 1, 0, 0, 1, 1, 0, 1, 0, 1, 0, 0, 1, 0, 1, 1, 0, 1, 0, 1, 0, 1, 0, 0, 1, 0, 1, 0, 1, 0, 1, 0, 1, 0, 0, 1, 0, 1, 0, 1, 0, 1, 0, 1, 1, 0, 0, 1, 1, 0, 1, 0, 1, 0, 1, 1, 0, 0, 1, 0, 1, 0, 1, 0, 1, 1, 0, 0, 1, 0, 1, 0, 1, 0, 1, 0, 1, 0, 1, 0, 1, 0, 1, 0, 1, 0, 0, 1]; |
| 143 | [0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 0, 1, 1, 0, 1, 0, 1, 0, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 0, 1, 1, 0, 0, 1, 0, 1, 0, 1, 1, 0, 1, 0, 0, 1, 0, 1, 0, 1, 1, 0, 0, 1, 0, 1, 0, 1, 0, 1, 0, 1, 1, 0, 0, 1, 0, 1, 0, 1, 0, 0, 1, 1, 0, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 1, 0, 1, 0, 1, 0, 1, 0, 0, 1, 0, 1, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 0, 1]; |

(continued)

| ID | First sequence |
|---|---|
| 144 | [0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0, 0, 1, 0, 1, 0, 1, 0, 1, 0, 0, 1, 1, 0, 0, 1, 0, 1, 1, 0, 0, 1, 0, 1, 0, 0, 1, 1, 0, 0, 1, 0, 1, 1, 0, 0, 1, 1, 0, 1, 0, 1, 0, 0, 1, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 1, 0, 1, 0, 0, 1, 1, 0, 1, 0, 1, 0, 0, 1, 1, 0, 0, 1, 0, 1, 0, 1, 1,0,0, 1, 0, 1]; |
| 145 | [0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 0, 1, 0, 1, 0, 1, 1, 1, 0, 1, 1, 0, 0, 0, 1, 0, 1, 1, 0, 0, 0, 1, 0, 1, 0, 1, 1, 0, 0, 0, 1, 1, 0, 1, 0, 0, 1, 0, 0, 0, 1, 1, 0, 0, 1, 0, 1, 0, 0, 1, 1, 0, 1, 0, 0, 0, 1, 1, 0, 0, 0, 1, 0, 0, 0, 1, 1, 0, 0, 1, 1, 0, 1, 0, 1, 0, 1, 0, 0, 1, 0, 1, 0, 1, 0, 1, 1, 0, 0, 1, 0, 1, 0, 0, 1, 1, 0, 0, 1, 1, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 1, 0, 0, 1, 1, 1, 0, 0, 1, 0, 0, 1, 1, 0, 1, 1, 0, 1, 0, 1, 0, 0, 1, 0, 0, 1, 0, 1, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 0, 0, 1]; |
| 146 | [0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1,0,0, 1, 0, 1, 1, 0, 0, 1, 1, 0, 0, 1, 0, 1, 1, 0, 1, 0, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 1, 0, 0, 1, 0, 1, 1,0,0, 1, 1, 0, 0, 1, 1, 0, 0, 1, 0, 1, 1, 0, 1, 0, 1, 0, 1, 0, 1, 0, 1, 0, 1, 0, 1, 0, 0, 1, 0, 1, 1, 0, 0, 0, 1, 1,0,0, 1, 1, 0, 0, 1, 0, 1, 1, 0, 1, 0, 1, 0, 1, 0, 1, 0, 0, 1, 0, 1, 1, 0, 1, 0, 1, 0, 0, 1, 1, 0, 0, 1, 1, 0, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 0, 1]; |
| 147 | [0, 1, 1, 0, 1, 0, 0, 1, 0, 1, 0, 1, 0, 1, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 0, 1, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 1, 0, 0, 1, 0, 1, 1, 0, 0, 1, 1, 0, 0, 1, 1, 0, 0, 1]; |
| 148 | [0, 1, 0, 1, 1, 0, 1, 0, 1, 0, 0, 1, 1, 0, 0, 1, 1, 0, 0, 1, 0, 1, 0, 1, 0, 0, 1, 0, 1, 0, 1, 0, 1, 1, 0, 1, 0, 0, 1, 0, 1, 0, 1, 1, 0, 0, 1, 1, 0, 1, 0, 0, 1, 1, 0, 1, 0, 1, 0, 1, 0, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 1, 0, 1, 0, 0, 1, 0, 1, 0, 1, 0, 1, 0, 0, 1, 0, 1, 1, 0, 1, 0, 1, 0, 1, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 1, 0, 1, 0, 0, 1, 0, 1, 0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 0, 1, 1, 0, 0, 1, 0, 1, 0, 1, 0, 1, 0, 0, 1, 0, 1, 1, 0, 0, 1, 0, 1, 0, 1, 0, 1]; |
| 149 | [0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0, 1, 0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 1, 0, 0, 1, 0, 1, 0, 1, 1, 0, 0, 1, 0, 1, 0, 0, 1, 0, 1, 1, 0, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 1, 0, 0, 1, 0, 1, 1, 0, 0, 1, 1, 0, 0, 1, 1, 0, 1, 0, 0, 1, 1, 0, 1, 0, 1, 0, 0, 1, 0, 0, 1, 0, 1, 1, 0, 1, 0, 1, 0, 0, 1, 1, 0, 0, 1]; |
| 150 | [0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 1, 0, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 0, 1, 0, 1, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 0, 1, 0, 1, 1, 0, 1, 0, 0, 1, 0, 1, 0, 1, 0, 1, 1, 0, 1, 0, 0, 1, 0, 1, 1, 0, 0, 1, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1]; |
| 151 | [0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 0, 1, 1, 0, 0, 1, 1, 0, 1, 0, 1, 0, 0, 1, 0, 1, 1, 0, 1, 0, 0, 1, 0, 1, 0, 1, 0, 1, 0, 1, 0, 1, 0, 1, 0, 1, 1, 0, 1, 0, 0, 1, 1, 0, 0, 1, 0, 1, 0, 1, 0, 1, 0, 1, 1, 0, 1, 0, 1, 0, 0, 1, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 1, 0, 0, 1, 1, 0, 1, 0, 1, 0, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 1,0, 1, 0, 1, 0, 1, 1, 0, 1, 0, 0, 1]; |

(continued)

| ID | First sequence |
|---|---|
| 152 | [0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 1, 0, 0, 1, 0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 1, 0, 1, 0, 0, 1, 1, 0, 0, 1, 0, 1, 0, 1, 1, 0, 1, 0, 0, 1, 0, 1, 0, 1, 0, 1, 1, 0, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 1, 0, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1]; |
| 153 | [0, 1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 1, 0, 1, 0, 0, 1, 1, 0, 0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 0, 1, 0, 1, 0, 1, 0, 1, 0, 1, 0, 1, 1, 0, 0, 1, 0, 1, 1, 0, 1, 0, 0, 1, 1, 0, 1, 0, 0, 1]; |
| 154 | [0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 1, 0, 1, 1, 0, 1, 0, 0, 1, 0, 1, 1, 0, 1, 0, 0, 0, 1, 1, 0, 1, 0, 1, 0, 1, 0, 1, 0, 1, 0, 1, 0, 1, 1, 0, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 1,0,0, 1, 0, 1]; |
| 155 | [0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 1, 0, 1, 0, 1, 0, 1, 0, 1, 0, 0, 1, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 0, 0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 1, 0, 0, 1, 0, 1, 0, 1, 0, 1, 0, 1, 0, 1, 0, 1, 1, 0, 1, 0, 1,0,0, 1, 0, 1]; |
| 156 | [0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 0, 1, 1, 0, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 1, 0, 0, 1, 1, 0, 1, 0, 0, 1, 0, 1, 0, 1, 0, 1, 0, 1, 0, 1, 1, 0, 1, 0, 0, 0, 1, 0, 1, 0, 1, 0, 1, 1, 0, 0, 1, 1, 0, 0, 1, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 1, 0, 1, 0, 1,0,0, 1, 0, 1]; |
| 157 | [0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 0, 1, 1, 0, 0, 1, 0, 1, 0, 1, 0, 1, 0, 1, 0, 1, 0, 1, 1, 0, 1, 0, 0, 1, 0, 1, 1, 0, 1,0,0, 1,0, 1,0, 1,0, 1, 1, 0, 0, 1, 1, 0, 0, 1, 1, 0, 0, 1, 0, 1, 1, 0, 0, 1, 1, 0, 1,0,0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 1, 0, 1,0,0, 1, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 1, 0, 1, 0, 0, 1, 0, 1, 1,0,0, 1, 1, 0, 1, 0, 1, 0, 1, 0, 1, 0, 1, 0, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 0, 1]; |
| 158 | [0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 0, 1, 0, 1, 0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 0, 1, 0, 1, 0, 1, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 1, 0, 0, 1]; |
| 159 | [0, 1, 1, 0, 0, 1, 1, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 0, 1, 1, 0, 0, 1, 1, 0, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 0, 1, 0, 0, 1, 1, 0, 0, 1, 1, 0, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 1, 0, 1, 0, 1, 1, 0, 1, 0, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1]; |

(continued)

| ID | First sequence |
|---|---|
| 160 | [0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 1, 0, 0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 1, 0, 0, 1, 1, 0, 0, 1]; |
| 161 | [0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 0, 1, 0, 0, 1, 0, 1, 0, 1, 0, 1, 1, 0, 1, 0, 0, 0, 1, 0, 1, 1, 0, 0, 1, 0, 1, 1, 0, 0, 1, 0, 1, 1, 0, 0, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 1, 0, 0, 1, 0, 1, 0, 1, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1]; |
| 162 | [0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 1, 0, 1, 0, 0, 0, 1, 1, 0, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 1, 0, 0, 1, 1, 0, 0, 1, 0, 1, 0, 1]; |
| 163 | [0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 0, 1, 0, 1, 0, 1, 0, 1, 0, 1, 0, 1, 0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 1, 0, 1, 0, 0, 1, 0, 1, 0, 1, 1, 0, 0, 1, 1, 0, 0, 1, 0, 1, 0, 1]; |
| 164 | [0, 1, 0, 1, 0, 1, 1, 0, 0, 1, 1, 0, 0, 1, 0, 1, 0, 1, 0, 1, 0, 1, 0, 1, 1, 0, 1, 0, 0, 1, 1, 0, 1, 0, 1, 0, 1, 0, 1, 0, 1, 0, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 0, 1, 0, 1, 1, 0, 0, 1, 0, 1, 1, 0, 1, 0, 1, 0, 0, 1, 1, 0, 0, 1, 1, 0, 1, 0, 1, 0, 0, 1, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 0, 1, 0, 1]; |
| 165 | [0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 1, 0, 0, 0, 1, 1, 0, 0, 1, 1, 0, 1, 0, 0, 1, 0, 1, 1, 0, 1, 1, 0, 1, 0, 0, 1, 1, 0, 1, 0, 0, 1, 0, 1, 0, 1, 0, 1, 1, 0, 0, 1, 1, 0, 0, 1, 0, 1, 1, 0, 0, 1, 0, 1, 0, 1, 0, 1, 0, 0, 1, 1, 0, 1, 0, 0, 1, 1, 0, 1, 0, 0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0, 0, 1, 0, 1, 0, 1, 1, 0, 1, 0, 1, 0, 0, 1, 0, 1, 0, 1, 0, 1, 0, 0, 1, 1, 0, 0, 1, 1, 0, 1, 0, 0, 1, 1, 0, 1, 0, 1, 0, 1, 0, 1, 0, 1, 0, 1, 0, 0, 0, 1, 1, 0, 0, 1, 1, 0, 0, 1, 0, 1]; |
| 166 | [0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0, 1, 0, 1, 0, 0, 1, 1, 0, 0, 1, 0, 1, 0, 1, 0, 1, 0, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 0, 0, 1, 0, 1, 0, 1, 0, 1, 1, 0, 1, 0, 1, 0, 1, 0, 0, 1, 0, 1]; |
| 167 | [0, 1, 0, 1, 1, 0, 0, 1, 0, 1, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 0, 0, 1, 1, 0, 0, 1, 1, 0, 0, 1, 0, 1, 0, 1, 1, 0, 0, 1, 0, 1, 1, 0, 0, 1, 1, 0, 1, 0, 1, 0, 0, 1]; |

(continued)

| ID | First sequence |
|---|---|
| 168 | [0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0, 0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 1, 0, 0, 0, 1, 0, 1, 1, 0, 0, 1, 0, 1, 0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 0, 0, 1, 0, 1, 0, 1, 1, 0, 0, 1, 1, 0, 1, 0, 1, 0, 0, 1, 0, 1]; |
| 169 | [0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 0, 1, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 1, 0, 1, 0, 1, 0, 1, 0, 0, 1, 1, 0, 0, 1, 1, 0, 0, 1, 1, 0, 1, 0, 1, 0, 1, 0, 1, 0, 1, 1, 0, 0, 1, 0, 1, 1, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 1, 0, 0, 1]; |
| 170 | [0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 0, 1, 1, 0, 0, 1, 0, 1, 1, 0, 1, 0, 0, 1, 1, 0, 0, 1, 1, 0, 1, 0, 1, 0, 1, 0, 1, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 0, 1, 1, 0, 0, 1, 0, 1, 1, 0, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 1]; |
| 171 | [0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 0, 1, 0, 1, 0, 1, 1, 0, 0, 1, 0, 1, 0, 1, 0, 1, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 1, 0, 1, 0, 0, 1, 1, 0, 0, 1, 1, 0, 0, 1, 0, 1, 0, 1, 1, 0, 0, 1, 0, 1, 0, 1, 0, 1, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 0, 1, 1, 0, 0, 1, 0, 1, 1, 0, 1, 0, 1, 0, 1, 0, 1, 0, 0, 1, 1, 0, 0, 1]; |
| 172 | [0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 0, 1, 0, 1, 1, 0, 0, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 0, 1, 1, 0, 1, 0, 1, 0, 1, 0, 0, 1, 1, 0, 1, 0, 1, 0, 0, 1, 0, 1, 0, 1, 0, 1, 1, 0, 0, 1, 0, 1]; |
| 173 | [0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 0, 1, 0, 1, 0, 0, 1, 1, 0, 1, 0, 0, 1, 1, 0, 1, 0, 1, 0, 1, 0, 0, 1, 1, 0, 0, 1, 0, 1, 1, 0, 0, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 0, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1]; |
| 174 | [0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1, 0, 1, 0, 0, 1, 1, 0, 1, 0, 1, 0, 1, 0, 0, 1, 1, 0, 0, 1, 0, 1, 0, 1, 0, 1, 0, 1, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 0, 0, 1, 1, 0, 1, 0, 1, 1, 0, 0, 1, 1, 0, 1, 0, 1, 0, 0, 1, 1, 0, 0, 1, 0, 1, 0, 1, 0, 1, 0, 1, 0, 1, 0, 1, 1, 0, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0, 0, 1]; |
| 175 | [0, 1, 0, 1, 1, 0, 0, 1, 1, 0, 1, 0, 0, 1, 0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 1, 0, 1, 0, 1, 0, 0, 1, 1, 0, 0, 1, 0, 1, 0, 1, 0, 0, 1, 1, 0, 1, 0, 1, 0, 1, 0, 1, 0, 1, 0, 0, 1, 0, 1, 0, 1, 1, 0, 0, 1, 0, 1, 0, 1, 0, 1, 0, 1, 0, 1, 1, 0, 0, 1, 0, 1, 0, 1, 0, 1, 0, 1, 0, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 0, 1, 0, 1, 0, 0, 1, 1, 0, 1, 0, 0, 1, 1, 0, 1, 0, 1, 0, 1, 0, 1, 0, 0, 1]. |

**Table 2 Candidate combinations of the second sequence, the third sequence, and the fourth sequence when *N*=256**

| ID | Second sequence [$P$] | Third sequence [$W_1$] | Fourth sequence [$W_2$] |
|---|---|---|---|
| 0 | [6, 5, 2, 7, 1, 4, 3, 0] | [-1, -1, 1, 1, -1, 1, -1, -1] | [-1, -1, 1, 1, -1, 1, 1, -1] |
| 1 | [6, 5, 2, 7, 1, 4, 3, 0] | [-1, 1, 1, 1, -1, -1, -1, -1] | [-1, 1, 1, 1, -1, -1, 1, -1] |
| 2 | [6, 5, 2, 7, 1, 4, 3, 0] | [1, -1, 1, 1, -1, 1, 1, -1] | [1, -1, 1, 1, -1, 1, -1, -1] |
| 3 | [6, 5, 2, 7, 1, 4, 3, 0] | [1, 1, 1, 1, -1, -1, 1, -1] | [1, 1, 1, 1, -1, -1, -1, -1] |
| 4 | [3, 7, 6, 4, 5, 2, 1, 0] | [1, 1, -1, 1, -1, -1, -1, -1] | [1, 1, -1, 1, -1, -1, 1, -1] |
| 5 | [3, 7, 6, 4, 5, 2, 1, 0] | [-1, 1, -1, 1, -1, -1, 1, -1] | [-1, 1, -1, 1, -1, -1, -1, -1] |
| 6 | [6, 5, 3, 4, 2, 7, 1, 0] | [1, 1, -1, -1, -1, 1, -1, -1] | [1, 1, -1, -1, -1, 1, 1, -1] |
| 7 | [6, 5, 3, 4, 2, 7, 1, 0] | [-1, 1, -1, -1, -1, 1, 1, -1] | [-1, 1, -1, -1, -1, 1, -1, -1] |
| 8 | [5, 7, 1, 6, 4, 2, 3, 0] | [1, 1, 1, -1, 1, 1, -1, -1] | [1, 1, 1, -1, 1, 1, 1, -1] |
| 9 | [5, 7, 1, 6, 4, 2, 3, 0] | [-1, 1, 1, -1, 1, 1, 1, -1] | [-1, 1, 1, -1, 1, 1, -1, -1] |
| 10 | [7, 5, 3, 6, 1, 2, 4, 0] | [1, -1, 1, 1, 1, 1, -1, -1] | [1, -1, 1, 1, 1, 1, 1, -1] |
| 11 | [7, 5, 3, 6, 1, 2, 4, 0] | [-1, 1, 1, 1, -1, -1, -1, -1] | [-1, 1, 1, 1, -1, -1, 1, -1] |
| 12 | [7, 5, 3, 6, 1, 2, 4, 0] | [-1, -1, 1, 1, 1, 1, 1, -1] | [-1, -1, 1, 1, 1, 1, -1, -1] |
| 13 | [7, 5, 3, 6, 1, 2, 4, 0] | [1, 1, 1, 1, -1, -1, 1, -1] | [1, 1, 1, 1, -1, -1, -1, -1] |
| 14 | [7, 5, 3, 6, 2, 1, 4, 0] | [1, 1, 1, -1, 1, 1, -1, -1] | [1, 1, 1, -1, 1, 1, 1, -1] |
| 15 | [7, 5, 3, 6, 2, 1, 4, 0] | [-1, -1, 1, -1, -1, -1, -1, -1] | [-1, -1, 1, -1, -1, -1, 1, -1] |
| 16 | [7, 5, 3, 6, 2, 1, 4, 0] | [-1, 1, 1, -1, 1, 1, 1, -1] | [-1, 1, 1, -1, 1, 1, -1, -1] |
| 17 | [7, 5, 3, 6, 2, 1, 4, 0] | [1, -1, 1, -1, -1, -1, 1, -1] | [1, -1, 1, -1, -1, -1, -1, -1] |
| 18 | [6, 7, 3, 1, 5, 2, 4, 0] | [1, -1, -1, -1, -1, -1, -1, -1] | [1, -1, -1, -1, -1, -1, 1, -1] |
| 19 | [6, 7, 3, 1, 5, 2, 4, 0] | [-1, -1, -1, -1, -1, -1, 1, -1] | [-1, -1, -1, -1, -1, -1, -1, -1] |
| 20 | [6, 4, 7, 3, 5, 1, 2, 0] | [1, -1, 1, -1, 1, -1, -1, -1] | [1, -1, 1, -1, 1, -1, 1, -1] |
| 21 | [6, 4, 7, 3, 5, 1, 2, 0] | [-1, -1, 1, -1, -1, -1, -1, -1] | [-1, -1, 1, -1, -1, -1, 1, -1] |
| 22 | [6, 4, 7, 3, 5, 1, 2, 0] | [-1, -1, 1, -1, 1, -1, 1, -1] | [-1, -1, 1, -1, 1, -1, -1, -1] |
| 23 | [6, 4, 7, 3, 5, 1, 2, 0] | [1, -1, 1, -1, -1, -1, 1, -1] | [1, -1, 1, -1, -1, -1, -1, -1] |
| 24 | [7, 5, 2, 6, 3, 4, 1, 0] | [1, 1, 1, 1, 1, -1, -1, -1] | [1, 1, 1, 1, 1, -1, 1, -1] |
| 25 | [7, 5, 2, 6, 3, 4, 1, 0] | [-1, 1, 1, 1, 1, -1, 1, -1] | [-1, 1, 1, 1, 1, -1, -1, -1] |
| 26 | [7, 6, 3, 2, 5, 1, 4, 0] | [-1, 1, 1, 1, -1, -1, -1, -1] | [-1, 1, 1, 1, -1, -1, 1, -1] |
| 27 | [7, 6, 3, 2, 5, 1, 4, 0] | [1, -1, -1, -1, -1, -1, -1, -1] | [1, -1, -1, -1, -1, -1, 1, -1] |
| 28 | [7, 6, 3, 2, 5, 1, 4, 0] | [1, 1, 1, 1, -1, -1, 1, -1] | [1, 1, 1, 1, -1, -1, -1, -1] |
| 29 | [7, 6, 3, 2, 5, 1, 4, 0] | [-1, -1, -1, -1, -1, -1, 1, -1] | [-1, -1, -1, -1, -1, -1, -1, -1] |
| 30 | [5, 6, 4, 3, 1, 7, 2, 0] | [1, -1, 1, 1, 1, 1, -1, -1] | [1, -1, 1, 1, 1, 1, 1, -1] |
| 31 | [5, 6, 4, 3, 1, 7, 2, 0] | [-1, -1, 1, 1, 1, 1, 1, -1] | [-1, -1, 1, 1, 1, 1, -1, -1] |
| 32 | [7, 6, 1, 3, 5, 4, 2, 0] | [-1, 1, 1, 1, -1, -1, -1, -1] | [-1, 1, 1, 1, -1, -1, 1, -1] |
| 33 | [7, 6, 1, 3, 5, 4, 2, 0] | [1, 1, -1, 1, -1, -1, -1, -1] | [1, 1, -1, 1, -1, -1, 1, -1] |
| 34 | [7, 6, 1, 3, 5, 4, 2, 0] | [-1, -1, 1, -1, -1, -1, -1, -1] | [-1, -1, 1, -1, -1, -1, 1, -1] |
| 35 | [7, 6, 1, 3, 5, 4, 2, 0] | [1, -1, -1, -1, -1, -1, -1, -1] | [1, -1, -1, -1, -1, -1, 1, -1] |
| 36 | [7, 6, 1, 3, 5, 4, 2, 0] | [1, 1, 1, 1, -1, -1, 1, -1] | [1, 1, 1, 1, -1, -1, -1, -1] |
| 37 | [7, 6, 1, 3, 5, 4, 2, 0] | [-1, 1, -1, 1, -1, -1, 1, -1] | [-1, 1, -1, 1, -1, -1, -1, -1] |
| 38 | [7, 6, 1, 3, 5, 4, 2, 0] | [1, -1, 1, -1, -1, -1, 1, -1] | [1, -1, 1, -1, -1, -1, -1, -1] |

(continued)

| ID | Second sequence [P] | Third sequence [W₁] | Fourth sequence [W₂] |
|---|---|---|---|
| 39 | [7, 6, 1, 3, 5, 4, 2, 0] | [-1, -1, -1, -1, -1, -1, 1, -1] | [-1, -1, -1, -1, -1, -1, -1, -1] |
| 40 | [7, 4, 6, 3, 5, 2, 1, 0] | [-1, -1, -1, -1, 1, -1, -1, -1] | [-1, -1, -1, -1, 1, -1, 1, -1] |
| 41 | [7, 4, 6, 3, 5, 2, 1, 0] | [1, -1, -1, -1, 1, -1, 1, -1] | [1, -1, -1, -1, 1, -1, -1, -1] |
| 42 | [7, 5, 4, 3, 2, 6, 1, 0] | [1, -1, -1, 1, -1, 1, -1, -1] | [1, -1, -1, 1, -1, 1, 1, -1] |
| 43 | [7, 5, 4, 3, 2, 6, 1, 0] | [-1, -1, -1, 1, -1, 1, 1, -1] | [-1, -1, -1, 1, -1, 1, -1, -1] |
| 44 | [7, 5, 2, 6, 4, 3, 1, 0] | [-1, -1, 1, -1, -1, -1, -1, -1] | [-1, -1, 1, -1, -1, -1, 1, -1] |
| 45 | [7, 5, 2, 6, 4, 3, 1, 0] | [1, -1, 1, -1, -1, -1, 1, -1] | [1, -1, 1, -1, -1, -1, -1, -1] |
| 46 | [6, 7, 3, 2, 4, 5, 1, 0] | [1, -1, -1, 1, -1, 1, -1, -1] | [1, -1, -1, 1, -1, 1, 1, -1] |
| 47 | [6, 7, 3, 2, 4, 5, 1, 0] | [-1, -1, -1, 1, -1, 1, 1, -1] | [-1, -1, -1, 1, -1, 1, -1, -1] |
| 48 | [5, 6, 4, 3, 2, 7, 1, 0] | [1, -1, -1, 1, -1, 1, -1, -1] | [1, -1, -1, 1, -1, 1, 1, -1] |
| 49 | [5, 6, 4, 3, 2, 7, 1, 0] | [-1, -1, -1, 1, -1, 1, 1, -1] | [-1, -1, -1, 1, -1, 1, -1, -1] |
| 50 | [5, 4, 7, 6, 3, 2, 1, 0] | [-1, -1, 1, -1, -1, -1, -1, -1] | [-1, -1, 1, -1, -1, -1, 1, -1] |
| 51 | [5, 4, 7, 6, 3, 2, 1, 0] | [1, -1, 1, -1, -1, -1, 1, -1] | [1, -1, 1, -1, -1, -1, -1, -1] |
| 52 | [5, 4, 6, 7, 3, 2, 1, 0] | [1, 1, -1, 1, -1, -1, -1, -1] | [1, 1, -1, 1, -1, -1, 1, -1] |
| 53 | [5, 4, 6, 7, 3, 2, 1, 0] | [-1, 1, -1, 1, -1, -1, 1, -1] | [-1, 1, -1, 1, -1, -1, -1, -1] |
| 54 | [6, 4, 7, 5, 1, 3, 2, 0] | [1, -1, 1, 1, 1, 1, -1, -1] | [1, -1, 1, 1, 1, 1, 1, -1] |
| 55 | [6, 4, 7, 5, 1, 3, 2, 0] | [1, -1, 1, -1, 1, -1, -1, -1] | [1, -1, 1, -1, 1, -1, 1, -1] |
| 56 | [6, 4, 7, 5, 1, 3, 2, 0] | [-1, -1, 1, 1, 1, 1, 1, -1] | [-1, -1, 1, 1, 1, 1, -1, -1] |
| 57 | [6, 4, 7, 5, 1, 3, 2, 0] | [-1, -1, 1, -1, 1, -1, 1, -1] | [-1, -1, 1, -1, 1, -1, -1, -1] |
| 58 | [7, 4, 6, 5, 2, 1, 3, 0] | [1, 1, 1, -1, 1, 1, -1, -1] | [1, 1, 1, -1, 1, 1, 1, -1] |
| 59 | [7, 4, 6, 5, 2, 1, 3, 0] | [-1, 1, 1, 1, -1, -1, -1, -1] | [-1, 1, 1, 1, -1, -1, 1, -1] |
| 60 | [7, 4, 6, 5, 2, 1, 3, 0] | [-1, 1, 1, -1, 1, 1, 1, -1] | [-1, 1, 1, -1, 1, 1, -1, -1] |
| 61 | [7, 4, 6, 5, 2, 1, 3, 0] | [1, 1, 1, 1, -1, -1, 1, -1] | [1, 1, 1, 1, -1, -1, -1, -1] |
| 62 | [7, 6, 3, 2, 5, 4, 1, 0] | [-1, 1, 1, 1, -1, -1, -1, -1] | [-1, 1, 1, 1, -1, -1, 1, -1] |
| 63 | [7, 6, 3, 2, 5, 4, 1, 0] | [1, 1, 1, 1, -1, -1, 1, -1] | [1, 1, 1, 1, -1, -1, -1, -1] |
| 64 | [7, 6, 1, 4, 5, 2, 3, 0] | [-1, -1, -1, -1, 1, -1, -1, -1] | [-1, -1, -1, -1, 1, -1, 1, -1] |
| 65 | [7, 6, 1, 4, 5, 2, 3, 0] | [1, 1, -1, 1, -1, -1, -1, -1] | [1, 1, -1, 1, -1, -1, 1, -1] |
| 66 | [7, 6, 1, 4, 5, 2, 3, 0] | [1, -1, -1, -1, 1, -1, 1, -1] | [1, -1, -1, -1, 1, -1, -1, -1] |
| 67 | [7, 6, 1, 4, 5, 2, 3, 0] | [-1, 1, -1, 1, -1, -1, 1, -1] | [-1, 1, -1, 1, -1, -1, -1, -1] |
| 68 | [7, 6, 3, 4, 1, 5, 2, 0] | [-1, 1, -1, -1, 1, 1, -1, -1] | [-1, 1, -1, -1, 1, 1, 1, -1] |
| 69 | [7, 6, 3, 4, 1, 5, 2, 0] | [-1, 1, -1, 1, 1, -1, -1, -1] | [-1, 1, -1, 1, 1, -1, 1, -1] |
| 70 | [7, 6, 3, 4, 1, 5, 2, 0] | [1, 1, -1, -1, 1, 1, 1, -1] | [1, 1, -1, -1, 1, 1, -1, -1] |
| 71 | [7, 6, 3, 4, 1, 5, 2, 0] | [1, 1, -1, 1, 1, -1, 1, -1] | [1, 1, -1, 1, 1, -1, -1, -1] |
| 72 | [7, 6, 1, 5, 2, 4, 3, 0] | [1, 1, 1, -1, 1, 1, -1, -1] | [1, 1, 1, -1, 1, 1, 1, -1] |
| 73 | [7, 6, 1, 5, 2, 4, 3, 0] | [-1, 1, 1, -1, -1, 1, -1, -1] | [-1, 1, 1, -1, -1, 1, 1, -1] |
| 74 | [7, 6, 1, 5, 2, 4, 3, 0] | [1, -1, 1, -1, 1, -1, -1, -1] | [1, -1, 1, -1, 1, -1, 1, -1] |
| 75 | [7, 6, 1, 5, 2, 4, 3, 0] | [-1, -1, 1, -1, -1, -1, -1, -1] | [-1, -1, 1, -1, -1, -1, 1, -1] |
| 76 | [7, 6, 1, 5, 2, 4, 3, 0] | [-1, 1, 1, -1, 1, 1, 1, -1] | [-1, 1, 1, -1, 1, 1, -1, -1] |
| 77 | [7, 6, 1, 5, 2, 4, 3, 0] | [1, 1, 1, -1, -1, 1, 1, -1] | [1, 1, 1, -1, -1, 1, -1, -1] |

(continued)

| ID | Second sequence [P] | Third sequence [W₁] | Fourth sequence [W₂] |
|---|---|---|---|
| 78 | [7, 6, 1, 5, 2, 4, 3, 0] | [-1, -1, 1, -1, 1, -1, 1, -1] | [-1, -1, 1, -1, 1, -1, -1, -1] |
| 79 | [7, 6, 1, 5, 2, 4, 3, 0] | [1, -1, 1, -1, -1, -1, 1, -1] | [1, -1, 1, -1, -1, -1, -1, -1] |
| 80 | [6, 7, 1, 5, 2, 4, 3, 0] | [-1, -1, 1, -1, -1, -1, -1, -1] | [-1, -1, 1, -1, -1, -1, 1, -1] |
| 81 | [6, 7, 1, 5, 2, 4, 3, 0] | [1, -1, 1, -1, -1, -1, 1, -1] | [1, -1, 1, -1, -1, -1, -1, -1] |
| 82 | [7, 6, 2, 5, 3, 1, 4, 0] | [1, 1, -1, -1, -1, 1, -1, -1] | [1, 1, -1, -1, -1, 1, 1, -1] |
| 83 | [7, 6, 2, 5, 3, 1, 4, 0] | [-1, -1, -1, -1, 1, -1, -1, -1] | [-1, -1, -1, -1, 1, -1, 1, -1] |
| 84 | [7, 6, 2, 5, 3, 1, 4, 0] | [-1, 1, -1, -1, -1, 1, 1, -1] | [-1, 1, -1, -1, -1, 1, -1, -1] |
| 85 | [7, 6, 2, 5, 3, 1, 4, 0] | [1, -1, -1, -1, 1, -1, 1, -1] | [1, -1, -1, -1, 1, -1, -1, -1] |
| 86 | [6, 5, 7, 1, 2, 3, 4, 0] | [-1, 1, 1, 1, -1, -1, -1, -1] | [-1, 1, 1, 1, -1, -1, 1, -1] |
| 87 | [6, 5, 7, 1, 2, 3, 4, 0] | [1, 1, 1, 1, -1, -1, 1, -1] | [1, 1, 1, 1, -1, -1, -1, -1] |
| 88 | [7, 6, 2, 5, 1, 4, 3, 0] | [1, 1, 1, -1, 1, 1, -1, -1] | [1, 1, 1, -1, 1, 1, 1, -1] |
| 89 | [7, 6, 2, 5, 1, 4, 3, 0] | [1, 1, -1, -1, -1, 1, -1, -1] | [1, 1, -1, -1, -1, 1, 1, -1] |
| 90 | [7, 6, 2, 5, 1, 4, 3, 0] | [1, -1, 1, -1, 1, -1, -1, -1] | [1, -1, 1, -1, 1, -1, 1, -1] |
| 91 | [7, 6, 2, 5, 1, 4, 3, 0] | [1, -1, -1, -1, -1, -1, -1, -1] | [1, -1, -1, -1, -1, -1, 1, -1] |
| 92 | [7, 6, 2, 5, 1, 4, 3, 0] | [-1, 1, 1, -1, 1, 1, 1, -1] | [-1, 1, 1, -1, 1, 1, -1, -1] |
| 93 | [7, 6, 2, 5, 1, 4, 3, 0] | [-1, 1, -1, -1, -1, 1, 1, -1] | [-1, 1, -1, -1, -1, 1, -1, -1] |
| 94 | [7, 6, 2, 5, 1, 4, 3, 0] | [-1, -1, 1, -1, 1, -1, 1, -1] | [-1, -1, 1, -1, 1, -1, -1, -1] |
| 95 | [7, 6, 2, 5, 1, 4, 3, 0] | [-1, -1, -1, -1, -1, -1, 1, -1] | [-1, -1, -1, -1, -1, -1, -1, -1] |
| 96 | [6, 5, 7, 1, 3, 2, 4, 0] | [-1, -1, 1, 1, -1, 1, -1, -1] | [-1, -1, 1, 1, -1, 1, 1, -1] |
| 97 | [6, 5, 7, 1, 3, 2, 4, 0] | [1, -1, 1, 1, -1, 1, 1, -1] | [1, -1, 1, 1, -1, 1, -1, -1] |
| 98 | [7, 6, 1, 5, 4, 2, 3, 0] | [1, 1, 1, -1, 1, 1, -1, -1] | [1, 1, 1, -1, 1, 1, 1, -1] |
| 99 | [7, 6, 1, 5, 4, 2, 3, 0] | [-1, -1, 1, 1, -1, 1, -1, -1] | [-1, -1, 1, 1, -1, 1, 1, -1] |
| 100 | [7, 6, 1, 5, 4, 2, 3, 0] | [-1, 1, 1, -1, 1, 1, 1, -1] | [-1, 1, 1, -1, 1, 1, -1, -1] |
| 101 | [7, 6, 1, 5, 4, 2, 3, 0] | [1, -1, 1, 1, -1, 1, 1, -1] | [1, -1, 1, 1, -1, 1, -1, -1] |
| 102 | [6, 7, 4, 3, 2, 5, 1, 0] | [-1, -1, -1, 1, 1, 1, -1, -1] | [-1, -1, -1, 1, 1, 1, 1, -1] |
| 103 | [6, 7, 4, 3, 2, 5, 1, 0] | [1, -1, -1, 1, -1, 1, -1, -1] | [1, -1, -1, 1, -1, 1, 1, -1] |
| 104 | [6, 7, 4, 3, 2, 5, 1, 0] | [1, -1, -1, 1, 1, 1, 1, -1] | [1, -1, -1, 1, 1, 1, -1, -1] |
| 105 | [6, 7, 4, 3, 2, 5, 1, 0] | [-1, -1, -1, 1, -1, 1, 1, -1] | [-1, -1, -1, 1, -1, 1, -1, -1] |
| 106 | [7, 6, 2, 5, 4, 1, 3, 0] | [-1, -1, -1, 1, 1, 1, -1, -1] | [-1, -1, -1, 1, 1, 1, 1, -1] |
| 107 | [7, 6, 2, 5, 4, 1, 3, 0] | [1, 1, 1, -1, 1, 1, -1, -1] | [1, 1, 1, -1, 1, 1, 1, -1] |
| 108 | [7, 6, 2, 5, 4, 1, 3, 0] | [-1, 1, -1, -1, 1, 1, -1, -1] | [-1, 1, -1, -1, 1, 1, 1, -1] |
| 109 | [7, 6, 2, 5, 4, 1, 3, 0] | [-1, -1, 1, 1, -1, 1, -1, -1] | [-1, -1, 1, 1, -1, 1, 1, -1] |
| 110 | [7, 6, 2, 5, 4, 1, 3, 0] | [1, -1, -1, 1, -1, 1, -1, -1] | [1, -1, -1, 1, -1, 1, 1, -1] |
| 111 | [7, 6, 2, 5, 4, 1, 3, 0] | [1, 1, -1, -1, -1, 1, -1, -1] | [1, 1, -1, -1, -1, 1, 1, -1] |
| 112 | [7, 6, 2, 5, 4, 1, 3, 0] | [1, -1, -1, 1, 1, 1, 1, -1] | [1, -1, -1, 1, 1, 1, -1, -1] |
| 113 | [7, 6, 2, 5, 4, 1, 3, 0] | [-1, 1, 1, -1, 1, 1, 1, -1] | [-1, 1, 1, -1, 1, 1, -1, -1] |
| 114 | [7, 6, 2, 5, 4, 1, 3, 0] | [1, 1, -1, -1, 1, 1, 1, -1] | [1, 1, -1, -1, 1, 1, -1, -1] |
| 115 | [7, 6, 2, 5, 4, 1, 3, 0] | [1, -1, 1, 1, -1, 1, 1, -1] | [1, -1, 1, 1, -1, 1, -1, -1] |
| 116 | [7, 6, 2, 5, 4, 1, 3, 0] | [-1, -1, -1, 1, -1, 1, 1, -1] | [-1, -1, -1, 1, -1, 1, -1, -1] |

(continued)

| ID | Second sequence [P] | Third sequence [W₁] | Fourth sequence [W₂] |
|---|---|---|---|
| 117 | [7, 6, 2, 5, 4, 1, 3, 0] | [-1, 1, -1, -1, -1, 1, 1, -1] | [-1, 1, -1, -1, -1, 1, -1, -1] |
| 118 | [7, 5, 6, 1, 4, 2, 3, 0] | [-1, 1, 1, -1, -1, 1, -1, -1] | [-1, 1, 1, -1, -1, 1, 1, -1] |
| 119 | [7, 5, 6, 1, 4, 2, 3, 0] | [1, 1, -1, -1, -1, 1, -1, -1] | [1, 1, -1, -1, -1, 1, 1, -1] |
| 120 | [7, 5, 6, 1, 4, 2, 3, 0] | [-1, 1, 1, 1, -1, -1, -1, -1] | [-1, 1, 1, 1, -1, -1, 1, -1] |
| 121 | [7, 5, 6, 1, 4, 2, 3, 0] | [1, 1, -1, 1, -1, -1, -1, -1] | [1, 1, -1, 1, -1, -1, 1, -1] |
| 122 | [7, 5, 6, 1, 4, 2, 3, 0] | [1, 1, 1, -1, -1, 1, 1, -1] | [1, 1, 1, -1, -1, 1, -1, -1] |
| 123 | [7, 5, 6, 1, 4, 2, 3, 0] | [-1, 1, -1, -1, -1, 1, 1, -1] | [-1, 1, -1, -1, -1, 1, -1, -1] |
| 124 | [7, 5, 6, 1, 4, 2, 3, 0] | [1, 1, 1, 1, -1, -1, 1, -1] | [1, 1, 1, 1, -1, -1, -1, -1] |
| 125 | [7, 5, 6, 1, 4, 2, 3, 0] | [-1, 1, -1, 1, -1, -1, 1, -1] | [-1, 1, -1, 1, -1, -1, -1, -1] |
| 126 | [6, 5, 7, 1, 4, 2, 3, 0] | [-1, 1, 1, 1, -1, -1, -1, -1] | [-1, 1, 1, 1, -1, -1, 1, -1] |
| 127 | [6, 5, 7, 1, 4, 2, 3, 0] | [1, 1, 1, 1, -1, -1, 1, -1] | [1, 1, 1, 1, -1, -1, -1, -1] |
| 128 | [5, 6, 7, 1, 4, 2, 3, 0] | [-1, -1, 1, -1, -1, -1, -1, -1] | [-1, -1, 1, -1, -1, -1, 1, -1] |
| 129 | [5, 6, 7, 1, 4, 2, 3, 0] | [1, -1, 1, -1, -1, -1, 1, -1] | [1, -1, 1, -1, -1, -1, -1, -1] |
| 130 | [7, 6, 4, 3, 5, 2, 1, 0] | [1, -1, 1, 1, 1, 1, -1, -1] | [1, -1, 1, 1, 1, 1, 1, -1] |
| 131 | [7, 6, 4, 3, 5, 2, 1, 0] | [-1, -1, 1, 1, 1, 1, 1, -1] | [-1, -1, 1, 1, 1, 1, -1, -1] |
| 132 | [7, 5, 6, 2, 4, 3, 1, 0] | [-1, -1, 1, -1, -1, -1, -1, -1] | [-1, -1, 1, -1, -1, -1, 1, -1] |
| 133 | [7, 5, 6, 2, 4, 3, 1, 0] | [1, -1, 1, -1, -1, -1, 1, -1] | [1, -1, 1, -1, -1, -1, -1, -1] |
| 134 | [6, 7, 4, 3, 5, 2, 1, 0] | [-1, -1, -1, 1, 1, 1, -1, -1] | [-1, -1, -1, 1, 1, 1, 1, -1] |
| 135 | [6, 7, 4, 3, 5, 2, 1, 0] | [1, -1, -1, -1, -1, -1, -1, -1] | [1, -1, -1, -1, -1, -1, 1, -1] |
| 136 | [6, 7, 4, 3, 5, 2, 1, 0] | [1, -1, -1, 1, 1, 1, 1, -1] | [1, -1, -1, 1, 1, 1, -1, -1] |
| 137 | [6, 7, 4, 3, 5, 2, 1, 0] | [-1, -1, -1, -1, -1, -1, 1, -1] | [-1, -1, -1, -1, -1, -1, -1, -1] |
| 138 | [6, 5, 7, 2, 4, 3, 1, 0] | [-1, -1, 1, -1, -1, -1, -1, -1] | [-1, -1, 1, -1, -1, -1, 1, -1] |
| 139 | [6, 5, 7, 2, 4, 3, 1, 0] | [1, -1, 1, -1, -1, -1, 1, -1] | [1, -1, 1, -1, -1, -1, -1, -1] |
| 140 | [6, 7, 3, 5, 4, 1, 2, 0] | [-1, -1, -1, -1, 1, -1, -1, -1] | [-1, -1, -1, -1, 1, -1, 1, -1] |
| 141 | [6, 7, 3, 5, 4, 1, 2, 0] | [1, -1, -1, -1, -1, -1, -1, -1] | [1, -1, -1, -1, -1, -1, 1, -1] |
| 142 | [6, 7, 3, 5, 4, 1, 2, 0] | [1, -1, -1, -1, 1, -1, 1, -1] | [1, -1, -1, -1, 1, -1, -1, -1] |
| 143 | [6, 7, 3, 5, 4, 1, 2, 0] | [-1, -1, -1, -1, -1, -1, 1, -1] | [-1, -1, -1, -1, -1, -1, -1, -1] |
| 144 | [6, 7, 3, 5, 4, 2, 1, 0] | [-1, -1, 1, -1, -1, -1, -1, -1] | [-1, -1, 1, -1, -1, -1, 1, -1] |
| 145 | [6, 7, 3, 5, 4, 2, 1, 0] | [1, -1, 1, -1, -1, -1, 1, -1] | [1, -1, 1, -1, -1, -1, -1, -1] |
| 146 | [7, 5, 6, 4, 1, 3, 2, 0] | [-1, -1, -1, 1, 1, 1, -1, -1] | [-1, -1, -1, 1, 1, 1, 1, -1] |
| 147 | [7, 5, 6, 4, 1, 3, 2, 0] | [1, -1, -1, 1, -1, 1, -1, -1] | [1, -1, -1, 1, -1, 1, 1, -1] |
| 148 | [7, 5, 6, 4, 1, 3, 2, 0] | [-1, -1, -1, -1, 1, -1, -1, -1] | [-1, -1, -1, -1, 1, -1, 1, -1] |
| 149 | [7, 5, 6, 4, 1, 3, 2, 0] | [1, -1, -1, -1, -1, -1, -1, -1] | [1, -1, -1, -1, -1, -1, 1, -1] |
| 150 | [7, 5, 6, 4, 1, 3, 2, 0] | [1, -1, -1, 1, 1, 1, 1, -1] | [1, -1, -1, 1, 1, 1, -1, -1] |
| 151 | [7, 5, 6, 4, 1, 3, 2, 0] | [-1, -1, -1, 1, -1, 1, 1, -1] | [-1, -1, -1, 1, -1, 1, -1, -1] |
| 152 | [7, 5, 6, 4, 1, 3, 2, 0] | [1, -1, -1, -1, 1, -1, 1, -1] | [1, -1, -1, -1, 1, -1, -1, -1] |
| 153 | [7, 5, 6, 4, 1, 3, 2, 0] | [-1, -1, -1, -1, -1, -1, 1, -1] | [-1, -1, -1, -1, -1, -1, -1, -1] |
| 154 | [7, 6, 5, 1, 4, 2, 3, 0] | [-1, 1, 1, 1, -1, -1, -1, -1] | [-1, 1, 1, 1, -1, -1, 1, -1] |
| 155 | [7, 6, 5, 1, 4, 2, 3, 0] | [1, 1, -1, 1, -1, -1, -1, -1] | [1, 1, -1, 1, -1, -1, 1, -1] |

(continued)

| ID | Second sequence [$P$] | Third sequence [$W_1$] | Fourth sequence [$W_2$] |
|---|---|---|---|
| 156 | [7, 6, 5, 1, 4, 2, 3, 0] | [1, 1, 1, 1, -1, -1, 1, -1] | [1, 1, 1, 1, -1, -1, -1, -1] |
| 157 | [7, 6, 5, 1, 4, 2, 3, 0] | [-1, 1, -1, 1, -1, -1, 1, -1] | [-1, 1, -1, 1, -1, -1, -1, -1] |
| 158 | [7, 6, 5, 2, 4, 1, 3, 0] | [-1, 1, 1, 1, -1, -1, -1, -1] | [-1, 1, 1, 1, -1, -1, 1, -1] |
| 159 | [7, 6, 5, 2, 4, 1, 3, 0] | [1, 1, -1, 1, -1, -1, -1, -1] | [1, 1, -1, 1, -1, -1, 1, -1] |
| 160 | [7, 6, 5, 2, 4, 1, 3, 0] | [1, 1, 1, 1, -1, -1, 1, -1] | [1, 1, 1, 1, -1, -1, -1, -1] |
| 161 | [7, 6, 5, 2, 4, 1, 3, 0] | [-1, 1, -1, 1, -1, -1, 1, -1] | [-1, 1, -1, 1, -1, -1, -1, -1] |
| 162 | [6, 5, 7, 4, 3, 1, 2, 0] | [1, -1, 1, 1, 1, 1, -1, -1] | [1, -1, 1, 1, 1, 1, 1, -1] |
| 163 | [6, 5, 7, 4, 3, 1, 2, 0] | [-1, -1, 1, 1, -1, 1, -1, -1] | [-1, -1, 1, 1, -1, 1, 1, -1] |
| 164 | [6, 5, 7, 4, 3, 1, 2, 0] | [-1, -1, 1, 1, 1, 1, 1, -1] | [-1, -1, 1, 1, 1, 1, -1, -1] |
| 165 | [6, 5, 7, 4, 3, 1, 2, 0] | [1, -1, 1, 1, -1, 1, 1, -1] | [1, -1, 1, 1, -1, 1, -1, -1] |
| 166 | [7, 5, 6, 4, 3, 2, 1, 0] | [-1, -1, -1, -1, 1, -1, -1, -1] | [-1, -1, -1, -1, 1, -1, 1, -1] |
| 167 | [7, 5, 6, 4, 3, 2, 1, 0] | [1, -1, -1, -1, 1, -1, 1, -1] | [1, -1, -1, -1, 1, -1, -1, -1] |
| 168 | [6, 7, 4, 5, 2, 3, 1, 0] | [-1, -1, 1, -1, -1, -1, -1, -1] | [-1, -1, 1, -1, -1, -1, 1, -1] |
| 169 | [6, 7, 4, 5, 2, 3, 1, 0] | [1, -1, 1, -1, -1, -1, 1, -1] | [1, -1, 1, -1, -1, -1, -1, -1] |
| 170 | [7, 6, 5, 2, 4, 3, 1, 0] | [1, 1, -1, 1, -1, -1, -1, -1] | [1, 1, -1, 1, -1, -1, 1, -1] |
| 171 | [7, 6, 5, 2, 4, 3, 1, 0] | [-1, 1, -1, 1, -1, -1, 1, -1] | [-1, 1, -1, 1, -1, -1, -1, -1] |
| 172 | [6, 7, 4, 5, 3, 2, 1, 0] | [-1, -1, -1, -1, 1, -1, -1, -1] | [-1, -1, -1, -1, 1, -1, 1, -1] |
| 173 | [6, 7, 4, 5, 3, 2, 1, 0] | [-1, -1, 1, -1, -1, -1, -1, -1] | [-1, -1, 1, -1, -1, -1, 1, -1] |
| 174 | [6, 7, 4, 5, 3, 2, 1, 0] | [1, -1, -1, -1, 1, -1, 1, -1] | [1, -1, -1, -1, 1, -1, -1, -1] |
| 175 | [6, 7, 4, 5, 3, 2, 1, 0] | [1, -1, 1, -1, -1, -1, 1, -1] | [1, -1, 1, -1, -1, -1, -1, -1] |

**Table 3 Candidate sequences of the first sequence when $N$=128**

| ID | First sequence |
|---|---|
| 0 | [0, 0, 0, 0, 1, 1, 1, 1, 0, 0, 0, 0, 1, 1, 1, 1, 0, 1, 1, 0, 1, 0, 0, 1, 0, 1, 1, 0, 1, 0, 0, 1, 1, 1, 0, 0, 1, 1, 0, 0, 1, 1, 0, 0, 0, 1, 1, 0, 0, 1, 0, 1, 0, 1, 0, 1, 0, 1, 0, 1, 0, 1, 0, 1, 0, 1, 1, 1, 1, 1, 1, 1, 0, 0, 0, 0, 0, 0, 0, 1, 0, 0, 1, 1, 0, 0, 1, 0, 1, 1, 0, 0, 1, 1, 0, 0, 0, 1, 1, 1, 1, 0, 0, 1, 0, 0, 0, 0, 1, 1, 0, 1, 1, 0, 1, 0, 1, 0, 0, 1, 0, 1]; |
| 1 | [0, 1, 0, 1, 1, 0, 1, 0, 1, 0, 1, 0, 0, 1, 0, 1, 0, 0, 1, 1, 1, 1, 0, 0, 1, 1, 0, 0, 0, 0, 1, 1, 1, 0, 0, 1, 1, 0, 0, 1, 0, 1, 1, 0, 0, 1, 1, 0, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 0, 1, 1, 0, 1, 0, 0, 1, 0, 1, 1, 0, 1, 0, 0, 1, 0, 0, 0, 0, 1, 1, 1, 1, 0, 0, 0, 0, 1, 1, 1, 1]; |
| 2 | [0, 1, 0, 1, 1, 0, 1, 0, 1, 0, 0, 1, 0, 1, 0, 0, 1, 1, 1, 1, 0, 0, 1, 1, 0, 0, 0, 0, 1, 1, 0, 0, 0, 0, 1, 1, 1, 1, 0, 0, 0, 0, 1, 1, 1, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 1, 0, 0, 1, 1, 0, 0, 0, 0, 0, 0, 0, 0, 1, 0, 0, 1, 1, 0, 0, 1, 0, 1, 1, 0, 0, 1, 1, 0]; |
| 3 | [0, 1, 1, 0, 0, 1, 1, 0, 1, 0, 0, 1, 1, 0, 0, 1, 0, 0, 0, 0, 0, 0, 0, 0, 1, 1, 1, 1, 1, 1, 1, 1, 0, 0, 1, 1, 0, 0, 1, 1, 0, 0, 0, 1, 1, 0, 0, 1, 1, 0, 1, 0, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 1, 1, 1, 1, 0, 0, 0, 1, 1, 1, 0, 0, 0, 1, 1, 0, 0, 0, 1, 1, 0, 0, 1, 0, 1, 0, 0, 1, 0, 1, 0, 1, 1, 0, 1, 0]; |
| 4 | [0, 0, 0, 0, 0, 0, 0, 0, 1, 1, 1, 1, 1, 1, 1, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 1, 1, 0, 0, 0, 0, 1, 1, 1, 1, 0, 0, 0, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 0, 0, 1, 1]; |
| 5 | [0, 0, 1, 1, 1, 1, 0, 0, 1, 1, 0, 0, 0, 0, 1, 1, 0, 1, 0, 1, 1, 0, 1, 0, 1, 0, 1, 0, 0, 1, 0, 1, 1, 0, 0, 1, 0, 1, 1, 0, 1, 0, 0, 0, 1, 0, 1, 1, 1, 0, 1, 1, 1, 1, 0, 0, 0, 0, 1, 1, 1, 0, 0, 0, 0, 1, 1, 0, 0, 1, 1, 0, 0, 1, 1, 0, 1, 1, 0, 0, 1, 0, 1, 0, 1, 0, 1, 0, 1, 0, 1, 0, 0, 1, 1, 0, 0, 1, 1, 0, 1, 0, 0, 1, 0, 0, 0, 0, 0, 0, 0, 0, 1, 1, 1, 1, 1, 1, 1, 1]; |

(continued)

| ID | First sequence |
|---|---|
| 6 | [0, 1, 1, 0, 0, 1, 1, 0, 1, 0, 0, 1, 1, 0, 0, 1, 0, 0, 1, 1, 1, 1, 0, 0, 1, 1, 0, 0, 0, 0, 1, 1, 0, 0, 0, 0, 0, 0, 0, 0, 1, 1, 1, 1, 1, 1, 1, 1, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 0, 0, 0, 0, 1, 1, 1, 1, 0, 0, 0, 0, 1, 1, 1, 1, 0, 0, 1, 1, 0, 0, 1, 1, 0, 0, 1, 1, 0, 0, 1, 1, 0, 1, 1, 0, 1, 0, 0, 1, 0, 1, 1, 0, 1, 0, 0, 0, 1]; |
| 7 | [0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1, 0, 0, 0, 0, 1, 1, 1, 1, 0, 0, 0, 0, 0, 1, 1, 1, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 0, 0, 0, 0, 0, 0, 0, 0, 1, 1, 1, 1, 1, 1, 1, 1, 0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1]; |
| 8 | 0, 0, 0, 0, 0, 0, 0, 1, 1, 1, 1, 1, 1, 0, 1, 1, 0, 1, 0, 1, 0, 1, 0, 0, 1, 0, 1, 1, 0, 0, 1, 1, 0, 0, 1, 0, 1, 1, 0, 0, 1, 1, 0, 1, 1, 0, 1, 0, 1, 0, 0, 1, 1, 0, 1, 1, 1, 1, 0, 0, 1, 1, 0, 0, 1, 1, 1, 1, 0, 0, 1, 1, 0, 0, 1, 0, 1, 1, 0, 0, 1, 0, 1, 0, 1, 0, 1, 0, 1, 0, 0, 1, 0, 1, 0, 1, 0, 0, 0, 0, 1, 1, 1, 1, 0, 0, 0, 0, 1, 1, 1, 1, 1]; |
| 9 | [0, 0, 0, 0, 1, 1, 1, 1, 0, 0, 0, 0, 1, 1, 1, 1, 0, 1, 0, 1, 0, 1, 0, 1, 0, 1, 0, 1, 0, 1, 0, 1, 0, 1, 1, 0, 0, 1, 1, 0, 1, 0, 1, 1, 0, 1, 0, 0, 1, 1, 1, 0, 0, 1, 1, 0, 0, 1, 1, 0, 0, 0, 0, 1, 1, 0, 0, 1, 1, 1, 0, 1, 1, 0, 0, 1, 0, 0, 0, 1, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 0, 0, 0, 0, 0, 0, 1, 1, 1, 1, 1, 1, 1, 1]; |
| 10 | [0, 1, 1, 0, 0, 1, 1, 0, 1, 0, 0, 1, 1, 0, 0, 1, 0, 0, 1, 1, 1, 0, 0, 1, 1, 0, 0, 0, 0, 1, 1, 0, 0, 0, 0, 0, 0, 0, 0, 1, 1, 1, 1, 1, 1, 1, 1, 0, 1, 0, 0, 1, 1, 0, 1, 1, 0, 1, 0, 1, 0, 0, 1, 0, 1, 1, 0, 1, 0, 1, 0, 1, 0, 1, 0, 1, 0, 1, 0, 1, 0, 1, 0, 1, 1, 1, 1, 0, 0, 0, 0, 1, 1, 1, 1, 0, 0, 0, 1, 1, 0, 0, 1, 1, 0, 0, 1, 1, 0, 0, 1, 1, 0, 0, 1, 0, 0, 1, 0, 1, 1, 0, 1, 0, 0, 1, 0, 1, 1, 0]; |
| 11 | [0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1, 0, 0, 0, 0, 1, 1, 1, 1, 0, 0, 0, 0, 0, 1, 1, 1, 1, 0, 1, 0, 1, 0, 1, 0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 1, 1, 1, 1, 1, 1, 1, 0, 0, 0, 0, 0, 0, 0, 0, 0, 1, 1, 0, 0, 0, 0, 1, 1, 0, 0, 1, 1, 1, 0, 0, 1, 0, 0, 1, 1, 0, 0, 1, 0, 1, 1, 0, 0, 1, 1, 0]; |
| 12 | [0, 0, 0, 0, 1, 1, 1, 1, 0, 0, 0, 0, 1, 1, 1, 1, 0, 1, 0, 1, 0, 1, 0, 1, 0, 1, 0, 1, 0, 1, 0, 1, 1, 0, 1, 1, 0, 1, 0, 0, 1, 0, 1, 1, 0, 1, 1, 0, 0, 1, 1, 0, 0, 1, 1, 0, 0, 1, 1, 0, 0, 1, 1, 1, 1, 1, 1, 1, 0, 0, 0, 0, 0, 0, 0, 0, 1, 0, 1, 0, 0, 1, 0, 1, 0, 1, 0, 1, 1, 0, 1, 0, 0, 0, 1, 1, 0, 0, 1, 1, 0, 0, 0, 0, 1, 1]; |
| 13 | [0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1, 1, 0, 1, 0, 0, 1, 0, 1, 0, 1, 0, 1, 0, 1, 1, 0, 1, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 1, 0, 0, 1, 0, 1, 0, 1, 1, 0, 0, 1, 0, 1, 1, 0, 0, 1, 0, 1, 0, 1, 0, 1, 0, 1, 0, 1, 0, 1, 0, 0, 0, 0, 1, 1, 1, 1, 0, 0, 0, 0, 1, 1, 1, 1]; |
| 14 | [0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 0, 1, 1, 0, 0, 1, 1, 0, 0, 0, 0, 1, 1, 1, 1, 0, 0, 0, 0, 1, 1, 1, 1, 0, 0, 0, 0, 0, 0, 0, 0, 1, 1, 1, 1, 1, 1, 1, 1, 0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1]; |
| 15 | [0, 1, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 0, 1, 1, 1, 1, 0, 0, 1, 1, 0, 0, 0, 0, 1, 1, 0, 0, 0, 0, 0, 0, 0, 1, 1, 1, 1, 1, 1, 1, 0, 0, 0, 0, 1, 1, 1, 1, 0, 0, 0, 0, 1, 1, 1, 1, 0, 0, 1, 1, 0, 0, 1, 1, 0, 1, 1, 0, 1, 1, 0, 1, 0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1]; |
| 16 | [0, 0, 0, 0, 0, 0, 0, 0, 1, 1, 1, 1, 1, 1, 1, 1, 0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 1, 0, 0, 1, 1, 0, 0, 1, 1, 0, 0, 1, 1, 0, 0, 1, 1, 1, 1, 0, 0, 0, 0, 1, 1, 1, 1, 0, 0, 0, 0]; |
| 17 | [0, 0, 0, 0, 1, 1, 1, 1, 0, 0, 0, 0, 1, 1, 1, 1, 0, 0, 1, 1, 0, 0, 1, 1, 0, 0, 1, 1, 0, 0, 1, 1, 0, 1, 1, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 1, 0, 1, 0, 0, 1, 1, 0, 0, 1, 1, 0, 1, 1, 0, 0, 0, 0, 1, 1, 0, 0, 1, 1, 1, 1, 0, 0, 1, 1, 1, 1, 1, 1, 1, 1, 0, 0, 0, 0, 0, 0, 0, 0]; |
| 18 | [0, 1, 0, 1, 0, 1, 0, 1, 0, 1, 0, 1, 0, 1, 0, 0, 0, 0, 1, 1, 1, 1, 0, 0, 0, 0, 1, 1, 1, 1, 0, 0, 1, 0, 1, 1, 0, 1, 0, 0, 1, 0, 1, 1, 0, 1, 0, 1, 0, 1, 0, 1, 0, 0, 1, 1, 0, 1, 1, 0, 0, 1, 1, 0, 0, 1, 1, 0, 0, 1, 1, 0, 0, 1, 1, 1, 1, 1, 1, 1, 1, 0, 0, 0, 0, 0, 0, 0, 0, 1, 0, 1, 0, 0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1]; |
| 19 | [0, 1, 1, 0, 0, 1, 1, 0, 1, 0, 0, 1, 1, 0, 0, 1, 0, 0, 1, 1, 1, 1, 0, 0, 1, 1, 0, 0, 0, 0, 1, 1, 1, 0, 1, 0, 0, 1, 0, 0, 1, 0, 1, 0, 1, 0, 1, 1, 0, 1, 0, 1, 1, 1, 1, 1, 1, 1, 1, 0, 0, 0, 0, 0, 0, 0, 0, 0, 1, 1, 0, 0, 1, 1, 0, 0, 1, 1, 0, 0, 1, 1, 0, 0, 1, 0, 0, 1, 0, 1, 1, 0, 0, 1, 0, 1, 0, 1, 0, 0, 1, 0, 1, 1, 0, 0, 0, 0, 1, 1, 1, 0, 0, 0, 0, 1, 1, 1, 1, 0, 1, 0, 1, 0, 1, 0, 1, 0, 1, 0, 1, 0, 1]; |
| 20 | [0, 1, 0, 1, 0, 1, 0, 1, 0, 1, 0, 1, 0, 1, 0, 0, 0, 0, 0, 0, 1, 1, 1, 1, 1, 1, 1, 1, 0, 0, 1, 0, 1, 1, 0, 1, 0, 0, 0, 1, 0, 1, 1, 0, 1, 1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 1, 0, 1, 0, 0, 0, 1, 0, 1, 0, 1, 1, 0, 1, 0, 0, 0, 1, 1, 0, 0, 1, 1, 0, 0, 1, 1, 0, 0, 1, 1, 0, 1, 1, 0, 0, 1, 1, 0, 1, 0, 1, 1, 0, 0, 1]; |
| 21 | [0, 1, 1, 0, 0, 1, 1, 0, 1, 0, 0, 1, 1, 0, 0, 1, 0, 0, 1, 1, 0, 0, 1, 1, 0, 0, 1, 1, 1, 0, 1, 0, 0, 1, 0, 1, 0, 1, 0, 1, 1, 0, 1, 0, 1, 1, 1, 1, 0, 0, 0, 0, 1, 1, 1, 1, 0, 0, 0, 0, 1, 0, 0, 0, 0, 1, 1, 0, 0, 1, 1, 1, 0, 0, 1, 0, 0, 1, 0, 1, 1, 0, 1, 0, 0, 0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1]; |

(continued)

| ID | First sequence |
|----|----------------|
| 22 | [0, 0, 0, 0, 0, 0, 0, 0, 1, 1, 1, 1, 1, 1, 1, 1, 0, 0, 1, 1,0,0, 1, 1, 0, 0, 1, 1, 0, 0, 1, 1, 0, 1, 0, 1, 1, 0, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0]; |
| 23 | [0, 0, 0, 0, 1, 1, 1, 1, 0, 0, 0, 0, 1, 1, 1, 1, 0, 0, 1, 1, 1, 1, 0, 0, 1, 1, 0, 0, 0, 0, 1, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 0, 1, 1, 0, 1, 0, 1, 1, 0, 1, 0, 1, 1, 0, 1, 0, 0, 1, 1, 1, 1, 1, 1, 1, 0, 0, 0, 0, 0, 0, 0, 0]; |
| 24 | [0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0, 1, 1, 0, 0, 1, 1, 0, 0, 1, 1,0,0, 1, 1,0,0, 1, 1, 1, 1, 1, 1, 1, 1, 1,0,0,0,0,0,0,0,0,0, 1, 1, 0, 1, 0, 1, 1, 0, 1, 0, 0, 1, 0, 1, 0, 1, 1, 0, 1, 0, 1, 0, 1, 0, 0, 1, 0, 1]; |
| 25 | [0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 1, 1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1]; |
| 26 | [0, 0, 1, 1, 0, 0, 1, 1, 0, 0, 1, 1, 0, 0, 1, 1, 0, 0, 0, 0, 0, 0, 0, 1, 1, 1, 1, 1, 1, 1, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0]; |
| 27 | [0, 0, 1, 1, 1, 1, 0, 0, 1, 1, 0, 0, 0, 0, 1, 1, 0, 0, 0, 0, 1, 1, 1, 1, 0, 0, 0, 0, 1, 1, 1, 1, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0]; |
| 28 | [0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1]; |
| 29 | [0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 1, 0, 0, 1, 1, 0, 0, 1, 1, 0, 1, 0, 0, 1, 1, 0, 0, 1, 1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0, 0, 0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1]; |
| 30 | [0, 0, 1, 1, 0, 0, 1, 1, 0, 0, 1, 1, 0, 0, 1, 1, 0, 1, 1, 0, 0, 1, 1, 0, 1, 0, 0, 1, 1, 0, 0, 1, 0, 0, 0, 0, 1, 1, 1, 1, 0, 0, 0, 0, 1, 1, 1, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 0, 0, 1, 0, 1, 1, 0, 1, 0, 0, 1, 0, 1, 1, 0, 1, 1, 0, 0, 0, 1, 1, 0, 0, 1, 1, 1, 1, 0, 0]; |
| 31 | [0, 0, 1, 1, 1, 1,0,0, 1, 1,0,0,0,0, 1, 1, 0, 1, 1,0, 1,0,0, 1,0, 1, 1,0, 1,0,0, 1,0,0,0, 0, 0, 0, 0, 1, 1, 1, 1, 1, 1, 1, 1, 1, 0, 1, 0, 1, 0, 1, 0, 1, 0, 1, 0, 1, 0, 1, 0, 1, 1, 0, 1, 0, 1, 0, 0, 1, 0, 1, 0, 1, 0, 1, 1, 0, 1, 0, 1, 0, 1, 1, 1, 1, 0, 0, 0, 0, 1, 1, 1, 1, 0, 0, 0, 0, 1, 0, 0, 1, 1, 0, 0, 1, 0, 1, 1, 0, 0, 1, 1, 0, 1, 1, 0, 0, 1, 1, 0, 0, 1, 1, 0, 0]; |
| 32 | [0, 1, 0, 1, 0, 1, 0, 1, 0, 1, 0, 1, 0, 1, 0, 1, 0, 0, 0, 0, 0, 0, 0, 0, 1, 1, 1, 1, 1, 1, 1, 1, 0, 1, 1, 0, 1, 0, 0, 1, 0, 1, 1, 0, 1, 0, 0, 1, 1, 0, 0, 1, 1, 1, 1, 0, 0, 1, 1, 0, 0, 0, 0, 1, 1, 0, 0, 1, 1, 0, 0, 1, 1, 0, 0, 1, 1, 0, 0, 1, 1, 0, 1, 1, 0, 0, 1, 1, 0, 1, 0, 1, 0, 1, 0, 1, 0, 1, 0, 1, 0, 0, 1, 0, 1, 0, 0, 0, 0, 1, 1, 1, 1, 0, 0, 0, 0, 1, 1, 1, 1, 0, 1, 0, 1, 0, 1, 0, 1, 0, 1, 0, 0, 1, 0, 1]; |
| 33 | [0, 1, 0, 1, 1, 0, 1, 0, 1, 0, 1, 0, 0, 1, 0, 1, 0, 0, 0, 0,1, 1, 1, 1, 0, 0, 0, 0, 1, 1, 1, 1, 0, 1, 1, 0, 0, 1, 1, 0, 1, 0, 0, 1, 1, 0, 0, 1, 1, 0, 0, 1, 1, 1, 1, 0, 0, 1, 1, 0, 0, 0, 0, 1, 1, 0, 1, 1, 0, 1, 0, 1, 0, 1, 0, 1, 0, 1, 0, 0, 1, 0, 0, 0, 0, 0, 0, 0, 0, 1, 1, 1, 1, 1, 1, 1, 0, 1, 0, 1, 0, 1, 0, 1, 1, 0, 1, 0, 1, 0, 1]; |
| 34 | [0, 1, 1, 0, 0, 1, 1, 0, 1, 0, 0, 1, 1, 0, 0, 1, 0, 0, 1, 1,0,0, 1, 1, 0, 0, 1, 1, 0, 0, 1, 1, 1, 0, 1, 0, 0, 1, 0, 1, 0, 1, 0, 1, 0, 1, 0, 1, 1, 1, 1, 0, 0, 0, 0, 1, 1, 1, 1, 0, 0, 0, 0, 1, 1, 1, 1, 1, 1, 1, 1, 0, 0, 0, 0, 0, 0, 0, 0, 0, 0, 1, 0, 1, 0, 1, 0, 1, 0, 1, 0, 1, 0, 1, 0, 1, 0, 0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1]; |
| 35 | [0, 1, 1, 0, 1, 0, 0, 1, 0, 1, 1, 0, 1, 0, 0, 1, 0, 0, 1, 1, 1, 1, 0, 0, 1, 1, 0, 0, 0, 0, 1, 1, 1, 0, 1, 0, 1, 0, 1, 0, 1, 0, 1, 0, 1, 0, 1, 0, 1, 1, 1, 1, 1, 1, 1, 0, 1, 0, 0, 0, 0, 0, 0, 0, 1, 1, 1, 1, 0, 0, 0, 0, 1, 1, 1, 1, 0, 0, 0, 0, 1, 0, 1, 0, 0, 0, 1, 0, 1, 0, 0, 1, 0, 0, 0, 1, 1, 0, 0, 1, 1, 0, 0, 1, 1, 0, 0, 1, 1, 0, 1, 1, 0, 0, 1, 1, 0, 1, 0, 0, 1, 1, 0, 1]; |
| 36 | [0, 1, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 1, 1, 1, 1, 1, 0, 0, 0, 0, 0, 0, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0, 0, 1, 1, 0, 1, 0, 0, 1, 0, 1, 1, 0, 1, 0, 0, 1, 0, 1, 1, 1, 0, 1, 0, 1, 0, 1, 0, 0, 1, 0, 1]; |
| 37 | [0, 1, 0, 1, 1, 0, 1, 0, 1, 0, 1, 0, 0, 1, 0, 1, 0, 1, 1, 0, 1, 0, 0, 1, 1, 0, 0, 0, 0, 1, 1, 0, 0, 1, 1, 1, 1, 0, 0, 0, 0, 1, 1, 0, 0, 1, 1, 1, 1, 1, 0, 0, 0, 1, 1, 1, 1, 0, 0, 0, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1]; |

| ID | First sequence |
|---|---|
| 38 | [0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 0, 0, 1, 1, 0, 0, 1, 1, 1, 1, 0, 0, 1, 1, 1, 1, 0, 0, 0, 0, 0, 1, 1, 1, 1, 0, 0, 0, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1]; |
| 39 | [0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 0, 1, 1, 1, 1, 1, 1, 0, 0, 0, 0, 0, 1, 1, 1, 1, 0, 0, 0, 0, 0, 1, 1, 0, 0, 1, 1, 1, 1, 0, 0, 1, 1, 0, 0, 1, 1, 0, 0, 1, 1, 0, 0, 1, 1, 0, 0, 1, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1]; |
| 40 | [0, 0, 0, 0, 1, 1, 1, 1, 0, 0, 0, 0, 1, 1, 1, 1, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 0, 0, 1, 0, 0, 1, 1, 0, 1, 1, 0, 0, 1, 1, 0, 0, 1, 0, 1, 1, 1, 1, 0, 0, 1, 1, 0, 0, 0, 0, 1, 1]; |
| 41 | [0, 0, 1, 1, 1, 1, 1, 0, 0, 0, 0, 1, 1, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 0, 1, 0, 1, 1, 0, 0, 1, 1, 1, 1, 1, 1, 1, 1, 1, 0, 0, 0, 0, 0, 0, 0, 0, 0, 1, 0, 1, 0, 1, 0, 1, 0, 1, 0, 1, 0, 1, 0, 0, 1, 0, 1, 0, 0, 1, 0, 1, 1, 0, 1, 0, 1, 0, 1, 0, 0, 1, 0, 1, 0, 0, 0, 0, 1, 1, 1, 0, 0, 0, 0, 1, 1, 1, 1]; |
| 42 | 0, 0, 0, 0, 0, 1, 1, 1, 1, 1, 1, 1, 1, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 0, 1, 0, 1, 1, 0, 0, 1, 1, 0, 0, 1, 1, 0, 0, 0, 0, 1, 1, 0, 0, 1, 1, 1, 1, 0, 0, 1, 0, 0, 1, 0, 1, 1, 0, 1, 0, 0, 1, 0, 1, 1, 0]; |
| 43 | [0, 1, 1, 0, 1, 0, 0, 1, 0, 1, 1, 0, 1, 0, 0, 1, 0, 0, 1, 1, 1, 1, 0, 0, 1, 1, 0, 0, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 1, 1, 1, 1, 1, 1, 1, 1, 1, 0, 0, 0, 0, 0, 0, 0, 0, 0, 1, 1, 1, 1, 0, 0, 0, 0, 1, 1, 1, 1, 0, 0, 0, 0, 1, 0, 1, 0, 0, 1, 0, 1, 0, 1, 0, 1, 1, 0, 1, 0]; |
| 44 | [0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1, 1, 0, 0, 1, 1,0,0, 1,0, 1, 1,0,0, 1, 1,0, 1, 1,0,0, 1, 1,0,0, 1, 1,0,0, 1, 1, 1, 0, 0, 1, 1, 1, 1, 0, 0, 1, 0, 0, 1, 0, 1, 1, 0, 1, 0, 0, 1, 0, 1, 1, 0, 0, 1, 1, 1, 0, 1, 0, 1, 0, 1, 0, 0, 1, 0, 1, 0, 0, 0, 0, 1, 1, 1, 1, 0, 0, 0, 0, 1, 1, 1, 1]; |
| 45 | 1, 1, 1, 1,0,0,0,0, 1, 1, 1, 1,0, 1,0, 1, 1,0, 1,0, 1,0, 1,0, 1,0,0, 1,0, 1, 1,0,0, 1, 0, 1, 1, 0, 1, 0, 1, 1, 0, 1, 1, 0, 0, 0, 0, 1, 1, 0, 0, 1, 1, 1, 1, 0, 0, 1, 1, 0, 0, 1, 1, 0, 0, 1, 1, 0, 0, 1, 1, 0, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 0, 0, 0, 0, 0, 0, 1, 1, 1, 1, 1, 1, 1, 1]; |
| 46 | [0, 0, 1, 1, 0, 0, 1, 1, 0, 0, 1, 1, 0, 0, 1, 1, 0, 1, 1, 0, 0, 1, 1, 0, 1, 0, 0, 1, 1, 0, 0, 1, 1, 0, 1, 0, 0, 1,0, 1, 0, 0, 1, 0, 1, 0, 1, 1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 1, 0, 0, 1, 1, 0, 1, 0, 1, 0, 1, 1, 0, 1, 0, 0, 1, 1, 0, 1, 0, 0, 1, 0, 1, 1, 0, 1, 0, 0, 1, 0, 0, 1, 1, 1, 1, 0, 0, 1, 1,0,0,0,0, 1, 1]; |
| 47 | [0, 0, 1, 1, 1, 1, 0, 0, 1, 1, 0, 0, 0, 0, 1, 1, 0, 1, 1, 0, 1, 0, 0, 1, 0, 1, 1, 0, 0, 1, 1, 0, 1, 0, 0, 1, 0, 1, 0, 1, 0, 1, 1, 0, 1, 0, 1, 1, 1, 1, 0, 0, 0, 0, 1, 1, 1, 1, 0, 0, 0, 0, 1, 1, 1, 1, 1, 1, 1, 1, 0, 0, 0, 0, 0, 0, 0, 0, 1, 0, 1, 0, 1, 0, 1, 0, 1, 0, 1, 0, 1, 0, 0, 1, 0, 1, 0, 1, 0, 0, 1, 1, 0, 0, 1, 1, 0, 0, 1, 1, 0, 0, 1, 1]; |
| 48 | [0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1, 1, 0, 1, 0, 0, 1, 0, 1, 0, 1, 0, 1, 0, 1, 1, 0, 1, 0, 1, 1, 1, 1, 0, 0, 0, 0, 1, 1, 1, 1, 0, 0, 0, 0, 1, 1, 0, 0, 1, 1, 0, 0, 1, 1, 0, 0, 1, 1, 0, 0, 1, 1, 0, 0, 1, 0, 0, 1, 1, 0, 0, 1, 1, 0, 1, 0, 0, 1, 1, 0, 1, 0, 0, 1, 1, 0, 1, 0, 0, 1, 1, 0, 1, 0, 0, 1, 0, 0, 1, 1, 1, 1, 0, 0, 1, 1, 0, 0, 0, 0, 1, 1]; |
| 49 | [0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1, 1, 0, 0, 1, 1, 0, 0, 1, 0, 1, 1,0,0, 1, 1, 0, 1, 1, 0, 0, 1, 1, 0, 0, 1, 1, 0, 0, 1, 1, 0, 0, 1, 1, 1, 1, 0, 0, 0,0, 1, 1, 1,0,0,0,0, 1,0, 1,0,0, 1,0, 1,0, 1,0, 1, 1,0, 1,0, 1,0,0, 1,0, 1,0, 1,0, 1, 0, 1, 0, 1, 0, 1, 0, 0, 0, 0, 0, 0, 0, 0, 1, 1, 1, 1, 1, 1, 1, 1]; |
| 50 | [0, 0, 0, 0, 1, 1, 1, 1, 0, 0, 0, 0, 1, 1, 1, 1, 0, 1, 1, 0, 1, 0, 0, 1, 0, 1, 0, 0, 1, 0, 1, 1, 0, 1, 0, 0, 1, 1, 1, 0, 0, 1, 1, 0, 0, 1, 1, 0, 0, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 0, 0, 1, 1, 0, 0, 1, 1, 0, 0, 0, 1, 1, 1, 1, 0, 0, 1, 1, 0, 0, 0, 1, 1, 0, 1, 0, 1, 1, 0, 0, 1, 0, 1, 0, 0, 1, 0, 1]; |
| 51 | [0, 1,0, 1, 1,0, 1,0, 1,0, 1,0,0, 1,0, 1,0,0, 1, 1, 1, 1,0,0, 1, 1,0,0,0,0, 1, 1, 1,0,0, 1, 1, 0, 0, 1, 0, 1, 1, 0, 0, 1, 1, 0, 1,0, 1, 1,0,0, 1, 1, 0, 1, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1,0, 1,0,0, 1,0, 1, 1,0, 1,0,0, 1,0,0,0,0, 1, 1, 1, 1, 0, 0, 0, 0, 1, 1, 1, 1]. |

**Table 4 Candidate combinations of the second sequence, the third sequence, and the fourth sequence when *N*=128**

| ID | Second sequence [$P$] | Third sequence [$W_1$] | Fourth sequence [$W_2$] |
|---|---|---|---|
| 0 | [3, 6, 2, 5, 1, 4, 0] | [1, -1, -1, -1, 1, 1, 1] | [1, -1, -1, -1, 1, 1, -1] |
| 1 | [3, 6, 2, 5, 1, 4, 0] | [-1, -1, -1, -1, 1, 1, -1] | [-1, -1, -1, -1, 1, 1, -1] |

(continued)

| ID | Second sequence [P] | Third sequence [$W_1$] | Fourth sequence [$W_2$] |
|---|---|---|---|
| 2 | [2, 6, 3, 5, 0, 4, 1] | [-1, -1, -1, 1, -1, 1, 1] | [-1, -1, -1, 1, -1, 1, -1] |
| 3 | [2, 6, 3, 5, 0, 4, 1] | [1, -1, -1, 1, -1, 1, -1] | [1, -1, -1, 1, -1, 1, -1] |
| 4 | [2, 6, 3, 5, 0, 4, 1] | [1, -1, -1, -1, 1, 1, 1] | [1, -1, -1, -1, 1, 1, -1] |
| 5 | [2, 6, 3, 5, 0, 4, 1] | [-1, -1, -1, -1, 1, 1, -1] | [-1, -1, -1, -1, 1, 1, -1] |
| 6 | [3, 6, 1, 5, 0, 4, 2] | [-1, 1, -1, 1, -1, 1, 1] | [-1, 1, -1, 1, -1, 1, -1] |
| 7 | [3, 6, 1, 5, 0, 4, 2] | [1, 1, -1, 1, -1, 1, -1] | [1, 1, -1, 1, -1, 1, -1] |
| 8 | [3, 6, 1, 5, 0, 4, 2] | [-1, -1, 1, -1, 1, 1, 1] | [-1, -1, 1, -1, 1, 1, -1] |
| 9 | [3, 6, 1, 5, 0, 4, 2] | [1, -1, 1, -1, 1, 1, -1] | [1, -1, 1, -1, 1, 1, -1] |
| 10 | [3, 6, 1, 5, 0, 4, 2] | [-1, -1, -1, 1, -1, 1, 1] | [-1, -1, -1, 1, -1, 1, -1] |
| 11 | [3, 6, 1, 5, 0, 4, 2] | [1, -1, -1, 1, -1, 1, -1] | [1, -1, -1, 1, -1, 1, -1] |
| 12 | [3, 6, 2, 4, 0, 5, 1] | [1, -1, -1, 1, 1, -1, 1] | [1, -1, -1, 1, 1, -1, -1] |
| 13 | [3, 6, 2, 4, 0, 5, 1] | [-1, -1, -1, 1, 1, -1, -1] | [-1, -1, -1, 1, 1, -1, -1] |
| 14 | [3, 6, 0, 5, 1, 4, 2] | [1, 1, -1, 1, 1, 1, 1] | [1, 1, -1, 1, 1, 1, -1] |
| 15 | [3, 6, 0, 5, 1, 4, 2] | [-1, 1, -1, 1, 1, 1, -1] | [-1, 1, -1, 1, 1, 1, -1] |
| 16 | [3, 6, 0, 5, 1, 4, 2] | [-1, -1, 1, 1, 1, 1, 1] | [-1, -1, 1, 1, 1, 1, -1] |
| 17 | [3, 6, 0, 5, 1, 4, 2] | [1, -1, 1, 1, 1, 1, -1] | [1, -1, 1, 1, 1, 1, -1] |
| 18 | [3, 6, 0, 4, 2, 5, 1] | [1, -1, -1, 1, 1, -1, 1] | [1, -1, -1, 1, 1, -1, -1] |
| 19 | [3, 6, 0, 4, 2, 5, 1] | [-1, -1, -1, 1, 1, -1, -1] | [-1, -1, -1, 1, 1, -1, -1] |
| 20 | [3, 4, 0, 6, 2, 5, 1] | [1, 1, -1, -1, 1, -1, 1] | [1, 1, -1, -1, 1, -1, -1] |
| 21 | [3, 4, 0, 6, 2, 5, 1] | [-1, 1, -1, -1, 1, -1, -1] | [-1, 1, -1, -1, 1, -1, -1] |
| 22 | [3, 4, 1, 6, 0, 5, 2] | [-1, 1, 1, -1, 1, 1, 1] | [-1, 1, 1, -1, 1, 1, -1] |
| 23 | [3, 4, 1, 6, 0, 5, 2] | [1, 1, 1, -1, 1, 1, -1] | [1, 1, 1, -1, 1, 1, -1] |
| 24 | [3, 4, 1, 6, 0, 5, 2] | [1, 1, 1, -1, -1, -1, 1] | [1, 1, 1, -1, -1, -1, -1] |
| 25 | [3, 4, 1, 6, 0, 5, 2] | [-1, 1, 1, -1, -1, -1, -1] | [-1, 1, 1, -1, -1, -1, -1] |
| 26 | [3, 4, 1, 6, 0, 5, 2] | [1, 1, -1, -1, 1, 1, 1] | [1, 1, -1, -1, 1, 1, -1] |
| 27 | [3, 4, 1, 6, 0, 5, 2] | [-1, 1, -1, -1, 1, 1, -1] | [-1, 1, -1, -1, 1, 1, -1] |
| 28 | [3, 4, 1, 6, 0, 5, 2] | [-1, 1, -1, -1, -1, -1, 1] | [-1, 1, -1, -1, -1, -1, -1] |
| 29 | [3, 4, 1, 6, 0, 5, 2] | [1, 1, -1, -1, -1, -1, -1] | [1, 1, -1, -1, -1, -1, -1] |
| 30 | [3, 4, 0, 6, 1, 5, 2] | [1, 1, 1, -1, -1, 1, 1] | [1, 1, 1, -1, -1, 1, -1] |
| 31 | [3, 4, 0, 6, 1, 5, 2] | [-1, 1, 1, -1, -1, 1, -1] | [-1, 1, 1, -1, -1, 1, -1] |
| 32 | [3, 4, 0, 6, 1, 5, 2] | [1, 1, -1, 1, 1, 1, 1] | [1, 1, -1, 1, 1, 1, -1] |
| 33 | [3, 4, 0, 6, 1, 5, 2] | [-1, 1, -1, 1, 1, 1, -1] | [-1, 1, -1, 1, 1, 1, -1] |
| 34 | [3, 4, 0, 6, 1, 5, 2] | [-1, 1, -1, -1, -1, -1, 1] | [-1, 1, -1, -1, -1, -1, -1] |
| 35 | [3, 4, 0, 6, 1, 5, 2] | [1, 1, -1, -1, -1, -1, -1] | [1, 1, -1, -1, -1, -1, -1] |
| 36 | [3, 4, 1, 5, 0, 6, 2] | [1, 1, 1, -1, -1, -1, 1] | [1, 1, 1, -1, -1, -1, -1] |
| 37 | [3, 4, 1, 5, 0, 6, 2] | [-1, 1, 1, -1, -1, -1, -1] | [-1, 1, 1, -1, -1, -1, -1] |
| 38 | [3, 4, 1, 5, 0, 6, 2] | [-1, 1, -1, -1, -1, -1, 1] | [-1, 1, -1, -1, -1, -1, -1] |
| 39 | [3, 4, 1, 5, 0, 6, 2] | [1, 1, -1, -1, -1, -1, -1] | [1, 1, -1, -1, -1, -1, -1] |
| 40 | [3, 4, 0, 5, 2, 6, 1] | [1, 1, 1, -1, -1, -1, 1] | [1, 1, 1, -1, -1, -1, -1] |

(continued)

| ID | Second sequence [P] | Third sequence [W₁] | Fourth sequence [W₂] |
|---|---|---|---|
| 41 | [3, 4, 0, 5, 2, 6, 1] | [-1, 1, 1, -1, -1, -1, -1] | [-1, 1, 1, -1, -1, -1, -1] |
| 42 | [3, 4, 0, 5, 2, 6, 1] | [-1, 1, -1, 1, -1, -1, 1] | [-1, 1, -1, 1, -1, -1, -1] |
| 43 | [3, 4, 0, 5, 2, 6, 1] | [1, 1, -1, 1, -1, -1, -1] | [1, 1, -1, 1, -1, -1, -1] |
| 44 | [3, 4, 0, 5, 1, 6, 2] | [-1, 1, 1, -1, 1, -1, 1] | [-1, 1, 1, -1, 1, -1, -1] |
| 45 | [3, 4, 0, 5, 1, 6, 2] | [1, 1, 1, -1, 1, -1, -1] | [1, 1, 1, -1, 1, -1, -1] |
| 46 | [3, 4, 0, 5, 1, 6, 2] | [1, 1, -1, -1, -1, 1] | [1, 1, 1, -1, -1, -1, -1] |
| 47 | [3, 4, 0, 5, 1, 6, 2] | [-1, 1, 1, -1, -1, -1, -1] | [-1, 1, 1, -1, -1, -1, -1] |
| 48 | [1, 6, 3, 4, 0, 5, 2] | [1, -1, -1, 1, 1, -1, 1] | [1, -1, -1, 1, 1, -1, -1] |
| 49 | [1, 6, 3, 4, 0, 5, 2] | [-1, -1, -1, 1, 1, -1, -1] | [-1, -1, -1, 1, 1, -1, -1] |

**Table 5 Candidate sequences of the first sequence when N=64**

| ID | First sequence |
|---|---|
| 0 | [0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0]; |
| 1 | [0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0]; |
| 2 | [0, 1, 0, 1, 1, 0, 0, 1, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0]; |
| 3 | [0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 0, 1, 0, 1, 1, 0, 0, 1, 1, 0]; |
| 4 | [0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0]; |
| 5 | [0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0]; |
| 6 | [0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 0, 1, 0, 1, 1, 0]; |
| 7 | [0, 1, 1, 0, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 1, 0, 0, 1, 1, 0]; |
| 8 | [0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 1, 0, 0, 1, 1, 0, 0, 1, 1, 0, 1, 0, 0, 1, 0, 1, 1, 0, 0, 1, 1, 0]; |
| 9 | [0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 0, 1, 1, 0, 0, 1, 1, 0, 0, 1, 1, 0, 1, 0, 1, 0, 1, 0]; |
| 10 | [0, 1, 0, 1, 1, 0, 1, 0, 1, 0, 0, 1, 0, 1, 1, 0, 0, 1, 0, 1, 1, 0, 1, 0, 0, 1, 1, 0, 1, 0, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 1, 0]; |
| 11 | [0, 1, 1, 0, 0, 1, 1, 0, 1, 0, 1, 0, 1, 0, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 0, 1, 1, 0, 1, 0, 0, 1, 1, 0, 1, 0, 1, 0]; |
| 12 | [0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 0, 1, 1, 0, 0, 1, 1, 0, 1, 0, 1, 0]; |
| 13 | [0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 1, 0, 0, 1, 1, 0, 1, 0, 1, 0, 1, 0, 1, 0]; |
| 14 | [0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0]; |
| 15 | [0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0]; |

(continued)

| ID | First sequence |
|---|---|
| 16 | [0, 1, 1, 0, 1, 0, 0, 1, 0, 0, 0, 0, 1, 1, 1, 1, 0, 0, 1, 1, 0, 0, 1, 1, 0, 1, 0, 1, 0, 1, 0, 1, 1, 0, 0, 1, 0, 1, 1, 0, 1, 1, 1, 1, 0, 0, 0, 0, 1, 1, 0, 0, 1, 1, 0, 0, 1, 0, 1, 0, 1, 0, 1, 0]; |
| 17 | [0, 0, 0, 0, 1, 1, 1, 1, 0, 1, 1, 0, 1, 0, 0, 1, 1, 0, 1, 0, 1, 0, 1, 0, 1, 1, 0, 0, 1, 1, 0, 0, 1, 1, 1, 1, 0, 0, 0, 0, 1, 0, 0, 1, 0, 1, 1, 0, 0, 1, 0, 1, 0, 1, 0, 1, 0, 0, 1, 1, 0, 0, 1, 1]; |
| 18 | [0, 1, 0, 1, 0, 1, 0, 1, 0, 0, 1, 1, 0, 0, 1, 1, 0, 0, 0, 0, 1, 1, 1, 1, 0, 1, 1, 0, 1, 0, 0, 1, 1, 0, 1, 0, 1, 0, 1, 0, 1, 1, 0, 0, 1, 1, 0, 0, 1, 1, 1, 1, 0, 0, 0, 0, 1, 0, 0, 1, 0, 1, 1, 0]; |
| 19 | [0, 0, 1, 1, 0, 0, 1, 1, 0, 1, 0, 1, 0, 1, 0, 1, 1, 0, 0, 1, 0, 1, 1, 0, 1, 1, 1, 1, 0, 0, 0, 0, 1, 1, 0, 0, 1, 1, 0, 0, 1, 0, 1, 0, 1, 0, 0, 1, 1, 0, 1, 0, 0, 1, 0, 0, 0, 0, 1, 1, 1, 1]; |
| 20 | [0, 1, 0, 1, 0, 1, 0, 1, 1, 0, 1, 0, 1, 0, 1, 0, 1, 0, 0, 1, 1, 0, 0, 1, 1, 0, 0, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 1, 0, 1, 0]; |
| 21 | [0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0]; |
| 22 | [0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 0, 1, 1, 0, 0, 1, 0, 1, 1, 0, 0, 1, 0, 1, 1, 0]; |
| 23 | [0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 1, 0, 0, 1, 0, 1, 0, 1, 0, 1, 0, 1, 1, 0, 1, 0, 1, 1, 0, 1, 0, 1, 0, 1, 0, 0, 1, 0, 1, 1, 0, 1, 0]; |
| 24 | [0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 1, 0, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0]; |
| 25 | [0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 1, 0, 0, 1, 0, 1, 1, 0, 1, 0, 0, 0, 1, 1, 0, 0, 1, 1, 0, 1, 0, 0, 1, 0, 1, 1, 0, 1, 0, 1, 0, 1, 0]; |
| 26 | [0, 1, 0, 1, 0, 1, 0, 1, 0, 1, 0, 1, 1, 0, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0]; |
| 27 | [0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 0, 1, 1, 0, 0, 1, 0, 1, 1, 0, 0, 1, 1, 0, 1, 0, 1, 0, 1, 0, 1, 0]; |
| 28 | [0, 0, 1, 1, 0, 0, 1, 1, 0, 1, 1, 0, 1, 0, 0, 1, 0, 0, 0, 0, 1, 1, 1, 1, 0, 1, 0, 1, 0, 1, 0, 1, 1, 1, 0, 0, 1, 1, 0, 0, 1, 0, 0, 0, 1, 0, 1, 1, 0, 1, 1, 1, 1, 0, 0, 0, 0, 1, 0, 1, 0, 1, 0, 1, 0]; |
| 29 | [0, 1, 0, 1, 0, 1, 0, 1, 0, 0, 0, 0, 1, 1, 1, 1, 0, 1, 1, 0, 1, 0, 0, 1, 0, 0, 1, 1, 0, 0, 1, 1, 1, 0, 1, 0, 1, 0, 1, 0, 1, 1, 1, 1, 1, 0, 0, 0, 0, 1, 0, 0, 1, 0, 1, 1, 0, 1, 1, 0, 0, 1, 1, 0, 0]; |
| 30 | [0, 0, 1, 1, 0, 0, 1, 1, 0, 1, 1, 0, 1, 0, 0, 1, 1, 1, 0, 0, 1, 1, 0, 0, 1, 0, 0, 1, 0, 0, 1, 0, 1, 1, 0, 0, 1, 0, 1, 0, 1, 0, 1, 0, 0, 0, 0, 0, 1, 1, 1, 1, 1, 1, 0, 1, 0, 1, 0, 1, 0, 1, 1, 1, 1, 1, 0, 0, 0, 0]; |
| 31 | [0, 1, 1, 0, 1, 0, 0, 1, 0, 0, 1, 1, 0, 0, 1, 1, 1, 0, 0, 1, 0, 1, 1, 0, 1, 1, 0, 0, 1, 1, 0, 0, 1, 1, 1, 1, 0, 0, 0, 0, 1, 0, 1, 0, 1, 0, 1, 0, 0, 0, 0, 0, 1, 1, 1, 1, 0, 1, 0, 1, 0, 1, 0, 1]; |
| 32 | [0, 0, 0, 0, 1, 1, 1, 1, 0, 1, 0, 1, 0, 1, 0, 1, 1, 1, 1, 1, 0, 0, 0, 0, 1, 0, 1, 0, 1, 0, 1, 0, 0, 1, 1, 0, 1, 0, 0, 0, 1, 0, 0, 0, 1, 1, 0, 0, 1, 1, 1, 0, 0, 1, 0, 1, 1, 0, 1, 1, 0, 0, 1, 1, 0, 0]; |
| 33 | [0, 1, 0, 1, 0, 1, 0, 1, 0, 0, 0, 1, 1, 1, 1, 1, 0, 1, 0, 1, 0, 1, 0, 1, 1, 1, 1, 0, 0, 0, 0, 1, 1, 0, 0, 1, 1, 0, 0, 1, 0, 0, 1, 0, 1, 1, 0, 0, 0, 1, 1, 0, 0, 1, 1, 0, 1, 1, 0, 1, 0, 0, 0, 1]; |
| 34 | [0, 1, 1, 0, 1, 0, 0, 1, 0, 0, 1, 1, 0, 0, 1, 1, 0, 0, 0, 0, 1, 1, 1, 1, 0, 1, 0, 1, 0, 1, 0, 1, 1, 0, 0, 1, 0, 1, 1, 0, 1, 1, 0, 0, 1, 1, 0, 0, 1, 1, 1, 1, 0, 0, 0, 0, 1, 0, 1, 0, 1, 0, 1, 0]; |
| 35 | [0, 0, 1, 1, 0, 0, 1, 1, 0, 1, 1, 0, 1, 0, 0, 1, 1, 0, 1, 0, 1, 0, 1, 0, 1, 1, 1, 0, 0, 0, 0, 1, 1, 0, 0, 1, 1, 0, 0, 1, 0, 0, 1, 0, 1, 1, 0, 0, 1, 0, 1, 0, 1, 0, 1, 0, 0, 0, 0, 1, 1, 1, 1]; |
| 36 | [0, 1, 0, 1, 0, 1, 0, 1, 0, 0, 0, 1, 1, 1, 1, 0, 0, 1, 1, 0, 0, 1, 1, 0, 1, 1, 0, 1, 0, 0, 1, 1, 0, 1, 0, 1, 0, 1, 0, 1, 1, 1, 1, 1, 0, 0, 0, 0, 1, 1, 0, 0, 1, 1, 0, 0, 1,0,0, 1, 0, 1, 1, 0]; |
| 37 | [0, 0, 0, 0, 1, 1, 1, 1, 0, 1, 0, 1, 0, 1, 0, 1, 1, 0, 0, 1, 0, 1, 1, 0, 1, 1, 0, 0, 1, 1, 0, 0, 1, 1, 1, 1,0,0,0,0, 1, 0, 1, 0, 1,0, 1,0,0, 1, 1, 0, 1,0,0, 1,0,0, 1, 1, 0, 0, 1, 1]; |
| 38 | [0, 0, 0, 0, 1, 1, 1, 1, 0, 0, 1, 1, 0, 0, 1, 1, 0, 1, 1, 0, 1, 0, 0, 1, 0, 1, 0, 1, 0, 1, 0, 1, 1, 1, 1, 1,0,0,0,0, 1, 1,0,0, 1, 1,0,0, 1,0,0, 1,0, 1, 1,0, 1,0, 1,0, 1,0, 1,0]; |

(continued)

| ID | First sequence |
|----|----------------|
| 39 | [0, 1, 0, 1, 0, 1, 0, 1, 0, 1, 1, 0, 1, 0, 0, 1, 0, 0, 1, 1, 0, 0, 1, 1, 0, 0, 0, 0, 1, 1, 1, 1, 1, 0, 1, 0, 1, 0, 1, 0, 1, 0, 0, 0, 1, 0, 1, 1, 0, 1, 1, 0, 0, 1, 1, 0, 0, 1, 1, 1, 1, 0, 0, 0, 0]. |

**Table 6 Candidate combinations of the second sequence, the third sequence, and the fourth sequence when**
**_N_=64**

| ID | Second sequence [$P$] | Third sequence [$W_1$] | Fourth sequence [$W_2$] |
|----|-----------------------|------------------------|-------------------------|
| 0 | [4, 5, 3, 2, 1, 0] | [-1, 1, 1, 1, 1, -1] | [-1, 1, 1, 1, -1, -1] |
| 1 | [4, 5, 3, 2, 1, 0] | [1, 1, 1, 1, -1, -1] | [1, 1, 1, 1, 1, -1] |
| 2 | [4, 3, 5, 2, 1, 0] | [1, -1, -1, -1, 1, -1] | [1,-1,-1,-1,-1,-1] |
| 3 | [4, 3, 5, 2, 1, 0] | [-1,-1,-1,-1,-1,-1] | [-1, -1, -1, -1, 1, -1] |
| 4 | [3, 5, 4, 2, 1, 0] | [1, -1, -1, -1, 1, -1] | [1,-1,-1,-1,-1,-1] |
| 5 | [3, 5, 4, 2, 1, 0] | [-1,-1,-1,-1,-1,-1] | [-1, -1, -1, -1, 1, -1] |
| 6 | [4, 5, 2, 3, 1, 0] | [1, 1, -1, 1, 1, -1] | [1, 1, -1, 1, -1, -1] |
| 7 | [4, 5, 2, 3, 1, 0] | [-1, 1, -1, 1, -1, -1] | [-1, 1, -1, 1, 1, -1] |
| 8 | [2, 4, 5, 3, 1, 0] | [1, -1, -1, -1, 1, -1] | [1,-1,-1,-1,-1,-1] |
| 9 | [2, 4, 5, 3, 1, 0] | [-1,-1,-1,-1,-1,-1] | [-1, -1, -1, -1, 1, -1] |
| 10 | [2, 5, 4, 3, 1, 0] | [-1, -1, 1, -1, 1, -1] | [-1, -1, 1, -1, -1, -1] |
| 11 | [2, 5, 4, 3, 1, 0] | [1, -1, 1, -1, -1, -1] | [1, -1, 1, -1, 1, -1] |
| 12 | [4, 2, 5, 1, 3, 0] | [1, 1, -1, 1, 1, -1] | [1, 1, -1, 1, -1, -1] |
| 13 | [4, 2, 5, 1, 3, 0] | [-1, 1, -1, 1, -1, -1] | [-1, 1, -1, 1, 1, -1] |
| 14 | [3, 4, 2, 5, 1, 0] | [1, -1, -1, -1, 1, -1] | [1,-1,-1,-1,-1,-1] |
| 15 | [3, 4, 2, 5, 1, 0] | [-1,-1,-1,-1,-1,-1] | [-1, -1, -1, -1, 1, -1] |
| 16 | [5, 2, 4, 0, 3, 1] | [-1, -1, 1, -1, 1, -1] | [1, -1, 1, -1, 1, -1] |
| 17 | [5, 2, 4, 0, 3, 1] | [-1, -1, -1, 1, 1, 1] | [1, -1, -1, 1, 1, -1] |
| 18 | [5, 2, 4, 0, 3, 1] | [-1, 1, 1, -1, 1, 1] | [1, 1, 1, -1, 1, -1] |
| 19 | [5, 2, 4, 0, 3, 1] | [-1, 1, -1, 1, 1, -1] | [1, 1, -1, 1, 1, -1] |
| 20 | [3, 4, 1, 5, 2, 0] | [-1, -1, 1, -1, 1, -1] | [-1, -1, 1, -1, -1, -1] |
| 21 | [3, 4, 1, 5, 2, 0] | [1, -1, 1, -1, -1, -1] | [1, -1, 1, -1, 1, -1] |
| 22 | [4, 2, 3, 5, 1, 0] | [-1, -1, 1, -1, 1, -1] | [-1, -1, 1, -1, -1, -1] |
| 23 | [4, 2, 3, 5, 1, 0] | [1, -1, 1, -1, -1, -1] | [1, -1, 1, -1, 1, -1] |
| 24 | [1, 4, 5, 3, 2, 0] | [1, -1, -1, -1, 1, -1] | [1,-1,-1,-1,-1,-1] |
| 25 | [1, 4, 5, 3, 2, 0] | [-1,-1,-1,-1,-1,-1] | [-1, -1, -1, -1, 1, -1] |
| 26 | [4, 1, 5, 2, 3, 0] | [1, 1, -1, 1, 1, -1] | [1, 1, -1, 1, -1, -1] |
| 27 | [4, 1, 5, 2, 3, 0] | [-1, 1, -1, 1, -1, -1] | [-1, 1, -1, 1, 1, -1] |
| 28 | [5, 1, 4, 2, 3, 0] | [-1, -1, 1, 1, 1, 1] | [1, -1, 1, 1, 1, -1] |
| 29 | [5, 1, 4, 2, 3, 0] | [-1, 1, 1, 1, 1, -1] | [1, 1, 1, 1, 1, -1] |
| 30 | [4, 2, 3, 0, 5, 1] | [-1, 1, 1, 1, 1, -1] | [1, 1, 1, 1, 1, -1] |
| 31 | [4, 2, 3, 0, 5, 1] | [-1, -1, 1, -1, -1, -1] | [1, -1, 1, -1, -1, -1] |
| 32 | [4, 2, 3, 0, 5, 1] | [-1, -1, 1, 1, 1, 1] | [1, -1, 1, 1, 1, -1] |
| 33 | [4, 2, 3, 0, 5, 1] | [-1, 1, 1, -1, -1, 1] | [1, 1, 1, -1, -1, -1] |

(continued)

| ID | Second sequence [P] | Third sequence [$W_1$] | Fourth sequence [$W_2$] |
|---|---|---|---|
| 34 | [5, 2, 3, 0, 4, 1] | [-1, -1, 1, -1, 1, -1] | [1, -1, 1, -1, 1, -1] |
| 35 | [5, 2, 3, 0, 4, 1] | [-1, 1, 1, 1, -1, -1] | [1, 1, 1, 1, -1, -1] |
| 36 | [5, 2, 3, 0, 4, 1] | [-1, 1, 1, -1, 1, 1] | [1, 1, 1, -1, 1, -1] |
| 37 | [5, 2, 3, 0, 4, 1] | [-1, -1, 1, 1, -1, 1] | [1, -1, 1, 1, -1, -1] |
| 38 | [5, 2, 3, 1, 4, 0] | [-1, -1, 1, 1, 1, 1] | [1, -1, 1, 1, 1, -1] |
| 39 | [5, 2, 3, 1, 4, 0] | [-1, 1, 1, 1, 1, -1] | [1, 1, 1, 1, 1, -1] |

**Table 7 Candidate sequences of the first sequence when *N*=32**

| ID | First sequence | ID | First sequence |
|---|---|---|---|
| 0 | [0, 0, 0, 1, 0, 0, 1, 0, 1, 1, 1, 0, 1, 1, 0, 1, 0, 0, 0, 1, 1, 1, 0, 1, 0, 0, 0, 1, 1, 1, 0, 1] | 43 | [0, 1, 1, 0, 1, 1, 0, 0, 1, 0, 1, 0, 0, 0, 0, 1, 1, 0, 0, 0, 1, 1, 0, 1, 1, 1, 1, 0, 1, 0, 0, 1] |
| 1 | [0, 1, 0, 0, 0, 1, 1, 1, 0, 1, 0, 0, 0, 1, 1, 1, 0, 1, 0, 0, 1, 0, 0, 0, 1, 0, 1, 1, 0, 1, 1, 1] | 44 | [0, 0, 1, 1, 0, 0, 0, 0, 1, 1, 1, 1, 1, 1, 0, 0, 1, 0, 0, 1, 1, 0, 1, 0, 1, 0, 1, 0, 1, 0, 0, 1] |
| 2 | [0, 0, 0, 1, 0, 1, 0, 0, 1, 1, 1, 0, 1, 0, 1, 1, 0, 0, 1, 0, 0, 1, 1, 1, 0, 0, 1, 0, 0, 1, 1, 1] | 45 | [0, 1, 1, 0, 1, 0, 1, 0, 1, 0, 1, 0, 0, 1, 1, 0, 1, 1, 0, 0, 0, 0, 0, 0, 0, 1, 1, 1, 1, 0, 0, 1, 1] |
| 3 | [0, 0, 0, 1, 1, 0, 1, 1, 0, 0, 0, 1, 1, 0, 1, 1, 0, 0, 1, 0, 1, 0, 0, 0, 1, 1, 0, 1, 0, 1, 1, 1] | 46 | [0, 1, 0, 1, 1, 0, 0, 1, 0, 1, 0, 1, 0, 1, 1, 0, 1, 1, 1, 1, 0, 0, 1, 1, 0, 0, 0, 0, 0, 0, 0, 1, 1] |
| 4 | [0, 0, 1, 1, 0, 1, 0, 1, 0, 0, 1, 1, 0, 1, 0, 1, 0, 0, 0, 0, 0, 1, 1, 0, 1, 1, 1, 1, 1, 0, 0, 1] | 47 | [0, 0, 1, 1, 1, 1, 1, 0, 0, 1, 1, 0, 0, 0, 0, 1, 0, 0, 1, 0, 1, 0, 1, 0, 1, 1, 0, 0, 1, 0, 1] |
| 5 | [0, 1, 1, 0, 0, 0, 0, 0, 1, 0, 0, 1, 1, 1, 1, 1, 0, 1, 0, 1, 0, 0, 1, 1, 0, 1, 0, 1, 0, 0, 1, 1] | 48 | [0, 1, 1, 0, 0, 0, 1, 1, 0, 0, 1, 1, 0, 1, 1, 0, 1, 0, 1, 0, 0, 0, 0, 0, 1, 1, 1, 1, 0, 1, 0, 0, 1] |
| 6 | [0, 0, 0, 1, 0, 0, 1, 0, 1, 1, 1, 0, 1, 1, 0, 1, 0, 1, 0, 0, 0, 1, 1, 1, 0, 1, 0, 0, 0, 0, 1, 1, 1] | 49 | [0, 1, 0, 1, 0, 0, 0, 0, 1, 1, 1, 1, 1, 0, 1, 0, 1, 0, 0, 0, 1, 0, 0, 1, 1, 0, 0, 1, 1, 1, 0, 0, 1] |
| 7 | [0, 0, 0, 1, 1, 1, 0, 1, 0, 0, 0, 1, 1, 1, 0, 1, 0, 1, 0, 0, 1, 0, 0, 0, 1, 0, 1, 1, 0, 1, 1, 1] | 50 | [0, 1, 0, 1, 1, 1, 1, 0, 0, 0, 0, 1, 0, 1, 0, 1, 0, 0, 1, 1, 1, 0, 0, 1, 1, 0, 0, 1, 0, 0, 1] |
| 8 | [0, 1, 0, 0, 0, 1, 1, 1, 0, 1, 0, 0, 0, 1, 1, 1, 0,0,0, 1,0, 1, 1, 1, 0, 1, 1, 0, 1] | 51 | [0, 1, 1, 0, 1, 1, 0, 0, 1, 1, 0, 0, 0, 1, 1, 0, 1, 0, 1, 0, 1, 0, 1, 1, 1, 1, 0, 0, 0, 0, 0, 1, 0, 1] |
| 9 | [0, 1, 0, 0, 1, 0, 0, 0, 1, 0, 1, 1, 0, 1, 1, 1, 0,0,0, 1, 1, 1,0, 1,0,0,0, 1, 1, 1, 0, 1] | 52 | [0, 0, 1, 1, 0, 0, 0, 0, 1, 0, 0, 1, 1, 0, 1, 0, 1, 0, 1, 1, 1, 1, 1, 1, 0, 0, 1, 0, 1, 0, 1, 0, 0, 1] |
| 10 | [0, 0, 0, 0, 0, 1, 1, 0, 1, 1, 1, 1, 1, 0, 0, 1, 0, 1, 0, 1,0,0, 1, 1, 0, 1,0, 1,0,0, 1, 1] | 53 | [0, 1, 1, 0, 1, 0, 1, 0, 1, 1, 0, 0, 0, 0, 0, 0, 1, 0, 1, 0, 0, 1, 1, 0, 1, 1, 1, 1, 0, 0, 1, 1] |
| 11 | [0, 0, 1, 1, 0, 1, 0, 1, 0, 0, 1, 1, 0, 1, 0, 1, 0, 1, 0, 0, 0, 0, 0, 1, 0, 0, 1, 1, 1, 1, 1] | 54 | [0, 0, 1, 1, 1, 1, 1, 1, 0, 0, 1, 1, 0, 0, 0, 0, 1, 0, 1, 0, 0, 1, 1, 0, 1, 0, 1, 0, 1, 0, 0, 1] |
| 12 | [0, 1, 0, 1, 0, 0, 1, 1, 0, 1, 0, 1, 0, 0, 1, 1, 0, 0, 0, 0, 0, 1, 1, 0, 1, 1, 1, 1, 1, 0, 0, 1] | 55 | [0, 1, 1, 0, 1, 0, 1, 0, 1, 0, 0, 1, 1, 0, 1, 0, 1, 0, 1, 1, 1, 1, 0, 0, 1, 1, 0, 0, 0, 0, 0, 0, 0, 1, 1] |
| 13 | [0, 1, 1, 0, 0, 0, 0, 0, 1, 0, 0, 1, 1, 1, 1, 1, 0, 0, 1, 1, 0, 1, 0, 1, 0, 0, 1, 1, 0, 1, 0, 1] | 56 | [0, 0, 0, 0, 1, 0, 1, 0, 1, 1, 1, 1, 1, 0, 1, 0, 1, 0, 0, 1, 0, 0, 1, 1, 0, 1, 1, 0, 0, 0, 1, 1] |
| 14 | [0, 1, 0, 0, 1, 0, 1, 1, 0, 0, 0, 1, 1, 1, 0, 1, 0, 1, 1, 1, 0, 1, 1, 0, 0, 0, 1, 0, 0, 0, 1] | 57 | [0, 0, 1, 1, 0, 0, 1, 0, 0, 1, 1, 0, 1, 1, 0, 1, 0, 1, 0, 0, 0, 0, 0, 1, 0, 1, 0, 1, 1, 1, 1] |
| 15 | [0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1] | 58 | [0, 1, 0, 1, 1, 1, 1, 1, 0, 1, 0, 1, 0, 0, 0, 0, 1, 1, 0, 0, 0, 1, 1, 0, 1, 1, 0, 0, 1, 0, 0, 1] |
| 16 | [0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1] | 59 | [0, 1, 1, 0, 1, 1, 0, 0, 1, 0, 0, 1, 1, 1, 0, 0, 1, 1, 1, 1, 0, 1, 0, 1, 0, 0, 0, 0, 0, 1, 0, 1] |
| 17 | [0, 1, 1, 1, 1, 0, 0, 0, 1, 1, 0, 1, 0, 0, 0, 1, 0, 1, 0, 0, 0, 1, 0, 0, 0, 1, 1, 0, 1, 1, 1, 0, 1] | 60 | [0, 0, 1, 1, 0, 0, 0, 0, 1, 1, 1, 1, 1, 1, 0, 0, 1, 0, 0, 1, 0, 1, 0, 1, 0, 1, 0, 1, 1, 0, 0, 1] |

(continued)

| ID | First sequence | ID | First sequence |
|---|---|---|---|
| 18 | [0, 0, 1, 0, 1, 1, 0, 1, 0, 0, 0, 1, 1, 1, 1, 0, 1, 1, 0, 1, 1, 1, 0, 1, 0, 0, 0, 1, 0, 0, 0, 1] | 61 | [0, 1, 1, 0, 0, 1, 0, 1, 0, 1, 0, 1, 0, 1, 1, 0, 1, 1, 0, 0, 0, 0, 0, 0, 0, 0, 1, 1, 1, 1, 0, 0, 1, 1] |
| 19 | [0, 1, 1, 1, 0, 1, 1, 1, 0, 1, 0, 0, 0, 1, 0, 0, 1, 0, 0, 0, 0, 1, 1, 1, 0, 1, 0, 0, 1, 0, 1, 1] | 62 | [0, 0, 1, 1, 1, 1, 1, 1, 0, 0, 0, 0, 1, 1, 0, 0, 1, 0, 0, 1, 1, 0, 1, 0, 1, 0, 1, 0, 1, 0, 0, 1] |
| 20 | [0, 0, 1, 0, 0, 0, 1, 0, 1, 1, 1, 0, 1, 1, 1, 0, 1, 1, 0, 1, 0, 0, 1, 0, 1, 1, 1, 0, 0, 0, 0, 1] | 63 | [0, 1, 1, 0, 1, 0, 1, 0, 1, 0, 1, 0, 0, 1, 1, 0, 1, 1, 0, 0, 1, 1, 1, 1, 0, 0, 0, 0, 0, 0, 0, 1, 1] |
| 21 | [0, 1, 1, 1, 1, 0, 0, 0, 1, 0, 1, 1, 0, 1, 0, 0, 1, 0, 0, 0, 1, 0, 0, 0, 1, 0, 1, 1, 1, 0, 1, 1] | 64 | [0, 0, 1, 0, 0, 1, 1, 0, 1, 1, 0, 1, 0, 0, 1, 0, 1, 0, 1, 0, 1, 0, 1, 0, 0, 0, 0, 1, 1, 1, 1] |
| 22 | [0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1] | 65 | [0, 0, 0, 0, 1, 1, 1, 0, 1, 0, 1, 0, 1, 0, 1, 0, 1, 1, 0, 1, 0, 0, 1, 0, 0, 1, 1, 0, 0, 1, 1] |
| 23 | [0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1] | 66 | [0, 1, 0, 1, 0, 1, 0, 1, 0, 0, 0, 0, 1, 1, 1, 1, 0, 0, 1, 1, 0, 0, 1, 1, 0, 1, 1, 0, 1, 0, 0, 1] |
| 24 | [0, 0, 1, 0, 1, 1, 0, 1, 0, 0, 1, 0, 0, 0, 1, 0, 1, 1, 1, 0, 1, 1, 1, 0, 1, 1, 1, 0, 0, 0, 0, 1] | 67 | [0, 1, 1, 0, 1, 0, 0, 1, 0, 0, 1, 1, 0, 0, 1, 1, 0, 0, 0, 0, 1, 1, 1, 1, 0, 1, 0, 1, 0, 1, 0, 1] |
| 25 | [0, 1, 1, 1, 1, 0, 0, 0, 1, 0, 0, 0, 1, 0, 0, 0, 1, 0, 1, 1, 1, 0, 1, 1, 0, 1, 0, 0, 1, 0, 1, 1] | 68 | [0, 0, 1, 1, 0, 0, 1, 1, 0, 1, 1, 0, 1, 0, 0, 1, 1, 0, 1, 0, 1, 0, 1, 0, 1, 1, 1, 1, 0, 0, 0, 0] |
| 26 | [0, 1, 1, 0, 0, 0, 1, 1, 0, 1, 0, 1, 0, 0, 0, 0, 1, 1, 1, 1, 1, 0, 1, 0, 1, 1, 0, 0, 1, 0, 0, 1] | 69 | [0, 0, 0, 0, 1, 1, 1, 1, 0, 1, 0, 1, 0, 1, 0, 1, 1, 0, 0, 1, 0, 1, 1, 0, 1, 1, 0, 0, 1, 1, 0, 0] |
| 27 | [0, 1, 1, 0, 1, 1, 0, 0, 1, 0, 1, 0, 0, 0, 0, 0, 1, 1, 1, 1, 0, 1, 0, 1, 0, 0, 1, 1, 1, 0, 0, 1] | 70 | [0, 0, 1, 1, 0, 0, 1, 1, 1, 0, 0, 1, 0, 1, 1, 0, 1, 0, 1, 0, 1, 0, 1, 0, 0, 0, 0, 0, 1, 1, 1, 1] |
| 28 | [0, 1, 0, 0, 0, 1, 0, 0, 1, 0, 1, 1, 0, 1, 0, 0, 1, 1, 1, 0, 1, 1, 1, 0, 1, 1, 1, 0, 0, 0, 0, 1] | 71 | [0, 0, 0, 0, 1, 1, 1, 1, 1, 0, 1, 0, 1, 0, 1, 0, 1, 0, 0, 1, 0, 1, 1, 0, 0, 0, 1, 1, 0, 0, 1, 1] |
| 29 | [0, 1, 1, 1, 1, 0, 0, 0, 1, 0, 0, 0, 1, 0, 0, 0, 1, 1, 0, 1, 0, 0, 1, 0, 1, 1, 0, 1, 1, 1, 0, 1] | 72 | [0, 1, 0, 1, 0, 1, 0, 1, 0, 0, 0, 0, 1, 1, 1, 1, 1, 1, 0, 0, 1, 1, 0, 0, 1, 0, 0, 1, 0, 1, 1, 0] |
| 30 | [0, 0, 1, 0, 0, 0, 1, 0, 1, 1, 0, 1, 0, 0, 1, 0, 1, 1, 1, 0, 1, 1, 1, 0, 1, 1, 1, 0, 0, 0, 0, 1] | 73 | [0, 1, 1, 0, 1, 0, 0, 1, 0, 0, 1, 1, 0, 0, 1, 1, 1, 1, 1, 1, 0, 0, 0, 0, 1, 0, 1, 0, 1, 0, 1, 0] |
| 31 | [0, 1, 1, 1, 1, 0, 0, 0, 1, 0, 0, 0, 1, 0, 0, 0, 1, 0, 1, 1, 0, 1, 0, 0, 1, 0, 1, 1, 1, 0, 1, 1] | 74 | [0, 1, 0, 1, 0, 1, 0, 1, 1, 1, 1, 1, 0, 0, 0, 0, 1, 1, 0, 0, 1, 1, 0, 0, 0, 1, 1, 0, 1, 0, 0, 1] |
| 32 | [0, 1, 1, 1, 0, 1, 1, 1, 0, 0, 1, 0, 0, 0, 1, 0, 1, 0, 1, 1, 0, 1, 0, 0, 1, 1, 1, 0, 0, 0, 0, 1] | 75 | [0, 1, 1, 0, 1, 0, 0, 1, 1, 1, 0, 0, 1, 1, 0, 0, 1, 1, 1, 1, 0, 0, 0, 0, 0, 1, 0, 1, 0, 1, 0, 1] |
| 33 | [0, 1, 1, 1, 1, 0, 0, 0, 1, 1, 0, 1, 0, 0, 1, 0, 1, 0, 1, 1, 1, 0, 1, 1, 0, 0, 0, 1, 0, 0, 0, 1] | 76 | [0, 0, 0, 0, 1, 1, 1, 1, 0, 0, 1, 1, 0, 0, 1, 1, 0, 1, 1, 0, 1, 0, 0, 1, 0, 1, 0, 1, 0, 1, 0, 1] |
| 34 | [0, 1, 1, 0, 0, 1, 0, 1, 0, 0, 1, 1, 0, 0, 0, 0, 1, 1, 1, 1, 1, 1, 0, 0, 1, 0, 1, 0, 1, 0, 0, 1] | 77 | [0, 1, 0, 1, 0, 1, 0, 1, 0, 1, 1, 0, 1, 0, 0, 1, 0, 0, 1, 1, 0, 0, 1, 1, 0, 0, 0, 0, 1, 1, 1, 1] |
| 35 | [0, 1, 1, 0, 1, 0, 1, 0, 1, 1, 0, 0, 0, 0, 0, 0, 0, 1, 1, 1, 1, 0, 0, 1, 1, 0, 1, 0, 1, 1, 0, 0, 1] | 78 | [0, 0, 0, 0, 1, 1, 1, 1, 0, 0, 1, 1, 0, 0, 1, 1, 1, 0, 0, 1, 0, 1, 1, 0, 1, 0, 1, 0, 1, 0, 1, 0] |
| 36 | [0, 1, 0, 1, 1, 0, 0, 1, 0, 0, 0, 0, 1, 1, 0, 0, 1, 1, 1, 1, 1, 1, 0, 0, 1, 0, 1, 0, 1, 0, 0, 1] | 79 | [0, 1, 0, 1, 0, 1, 0, 1, 0, 1, 1, 0, 1, 0, 0, 1, 1, 1, 0, 0, 1, 1, 0, 0, 1, 1, 1, 1, 1, 0, 0, 0, 0] |
| 37 | [0, 1, 1, 0, 1, 0, 1, 0, 1, 1, 0, 0, 0, 0, 0, 0, 1, 1, 0, 0, 1, 1, 1, 1, 0, 1, 1, 0, 0, 1, 0, 1] | 80 | [0, 0, 1, 1, 0, 0, 1, 1, 0, 0, 0, 0, 1, 1, 1, 1, 1, 0, 1, 0, 1, 0, 1, 0, 1, 0, 0, 1, 0, 1, 1, 0] |
| 38 | [0, 0, 1, 0, 1, 1, 0, 1, 0, 0, 0, 1, 1, 1, 1, 0, 1, 0, 0, 0, 1, 0, 0, 0, 1, 0, 1, 1, 1, 0, 1, 1] | 81 | [0, 1, 1, 0, 1, 0, 0, 1, 0, 1, 0, 1, 0, 1, 0, 1, 1, 1, 1, 1, 0, 0, 0, 0, 1, 1, 0, 0, 1, 1, 0, 0] |
| 39 | [0, 0, 1, 0, 0, 0, 1, 0, 1, 1, 1, 0, 1, 1, 1, 0, 1, 0, 0, 0, 0, 1, 1, 1, 0, 1, 0, 0, 1, 0, 1, 1] | 82 | [0, 0, 0, 0, 1, 1, 1, 1, 1, 0, 0, 1, 1, 0, 0, 1, 0, 0, 1, 0, 1, 1, 0, 0, 1, 0, 1, 0, 1, 0, 1] |
| 40 | [0, 1, 1, 1, 0, 1, 1, 1, 0, 1, 0, 0, 0, 1, 0, 0, 1, 1, 0, 1, 0, 0, 1, 0, 1, 1, 1, 0, 0, 0, 0, 1] | 83 | [0, 1, 0, 1, 0, 1, 0, 1, 1, 0, 0, 1, 0, 1, 1, 0, 1, 1, 0, 0, 1, 1, 0, 0, 0, 0, 0, 0, 0, 1, 1, 1, 1] |

(continued)

| ID | First sequence | ID | First sequence |
|---|---|---|---|
| 41 | [0, 1, 1, 1, 1, 0, 0, 0, 1, 0, 1, 1, 0, 1, 0, 0, 1, 1, 0, 1, 1, 1, 0, 1, 0, 0, 0, 1, 0, 0, 0, 1] | 84 | [0, 0, 1, 1, 0, 0, 1, 1, 1, 1, 1, 1, 0, 0, 0, 0, 1, 0, 1, 0, 1, 0, 1, 0, 0, 1, 1, 0, 1, 0, 0, 1] |
| 42 | [0, 1, 0, 1, 0, 0, 0, 0, 1, 0, 0, 1, 1, 1, 0, 0, 1, 1, 1, 1, 1, 0, 1, 0, 1, 1, 0, 0, 1, 0, 0, 1] | 85 | [0, 1, 1, 0, 1, 0, 0, 1, 1, 0, 1, 0, 1, 0, 1, 0, 1, 1, 1, 1, 0, 0, 0, 0, 0, 0, 0, 0, 1, 1, 0, 1, 1] |

Table 8 Candidate combinations of the second sequence, the third sequence, and the fourth sequence when N=32

| ID | Second sequence [$P$] | Third sequence [$W_1$] | Fourth sequence [$W_2$] |
|---|---|---|---|
| 0 | [3, 4, 2, 1, 0] | [-1, 1, 1, 1, 1] | [-1, 1, 1, 1, -1] |
| 1 | [3, 4, 2, 1, 0] | [1, 1, 1, 1, -1] | [1, 1, 1, 1, -1] |
| 2 | [3, 4, 1, 0, 2] | [-1, 1, 1, 1, 1] | [-1, 1, 1, 1, -1] |
| 3 | [3, 4, 1, 0, 2] | [1, 1, 1, 1, -1] | [1, 1, 1, 1, -1] |
| 4 | [3, 4, 1, 2, 0] | [1, 1, -1, 1, 1] | [1, 1, -1, 1, -1] |
| 5 | [3, 4, 1, 2, 0] | [-1, 1, -1, 1, -1] | [-1, 1, -1, 1, -1] |
| 6 | [3, 4, 0, 1, 2] | [-1, 1, 1, 1, 1] | [-1, 1, 1, 1, -1] |
| 7 | [3, 4, 0, 1, 2] | [1, 1, 1, 1, -1] | [1, 1, 1, 1, -1] |
| 8 | [3, 4, 0, 1, 2] | [1, 1, -1, 1, 1] | [1, 1, -1, 1, -1] |
| 9 | [3, 4, 0, 1, 2] | [-1, 1, -1, 1, -1] | [-1, 1, -1, 1, -1] |
| 10 | [3, 4, 0, 2, 1] | [-1, 1, 1, 1, 1] | [-1, 1, 1, 1, -1] |
| 11 | [3, 4, 0, 2, 1] | [1, 1, 1, 1, -1] | [1, 1, 1, 1, -1] |
| 12 | [3, 4, 0, 2, 1] | [1, 1, -1, 1, 1] | [1, 1, -1, 1, -1] |
| 13 | [3, 4, 0, 2, 1] | [-1, 1, -1, 1, -1] | [-1, 1, -1, 1, -1] |
| 14 | [2, 4, 3, 0, 1] | [-1, -1, 1, -1, 1] | [-1, -1, 1, -1, -1] |
| 15 | [2, 4, 3, 0, 1] | [1, -1, 1, -1, -1] | [1, -1, 1, -1, -1] |
| 16 | [2, 4, 3, 0, 1] | [1, -1, -1, -1, 1] | [1, -1, -1, -1, -1] |
| 17 | [2, 4, 3, 0, 1] | [-1, -1, -1, -1, -1] | [-1, -1, -1, -1, -1] |
| 18 | [2, 4, 3, 1, 0] | [-1, -1, 1, -1, 1] | [-1, -1, 1, -1, -1] |
| 19 | [2, 4, 3, 1, 0] | [1, -1, 1, -1, -1] | [1, -1, 1, -1, -1] |
| 20 | [2, 4, 3, 1, 0] | [1, -1, -1, -1, 1] | [1, -1, -1, -1, -1] |
| 21 | [2, 4, 3, 1, 0] | [-1, -1, -1, -1, -1] | [-1, -1, -1, -1, -1] |
| 22 | [3, 2, 4, 0, 1] | [1, -1, -1, -1, 1] | [1, -1, -1, -1, -1] |
| 23 | [3, 2, 4, 0, 1] | [-1, -1, -1, -1, -1] | [-1, -1, -1, -1, -1] |
| 24 | [3, 2, 4, 1, 0] | [1, -1, -1, -1, 1] | [1, -1, -1, -1, -1] |
| 25 | [3, 2, 4, 1, 0] | [-1, -1, -1, -1, -1] | [-1, -1, -1, -1, -1] |
| 26 | [3, 1, 4, 0, 2] | [1, -1, -1, -1, 1] | [1, -1, -1, -1, -1] |
| 27 | [3, 1, 4, 0, 2] | [-1, -1, -1, -1, -1] | [-1, -1, -1, -1, -1] |
| 28 | [2, 3, 4, 0, 1] | [1, -1, -1, -1, 1] | [1, -1, -1, -1, -1] |
| 29 | [2, 3, 4, 0, 1] | [-1, -1, -1, -1, -1] | [-1, -1, -1, -1, -1] |
| 30 | [2, 3, 4, 1, 0] | [1, -1, -1, -1, 1] | [1, -1, -1, -1, -1] |
| 31 | [2, 3, 4, 1, 0] | [-1, -1, -1, -1, -1] | [-1, -1, -1, -1, -1] |
| 32 | [2, 4, 1, 0, 3] | [1, -1, -1, -1, 1] | [1, -1, -1, -1, -1] |

(continued)

| ID | Second sequence [P] | Third sequence [W₁] | Fourth sequence [W₂] |
|----|---------------------|---------------------|----------------------|
| 33 | [2, 4, 1, 0, 3] | [-1, -1, -1, -1, -1] | [-1, -1, -1, -1, -1] |
| 34 | [3, 0, 4, 1, 2] | [1, -1, -1, -1, 1] | [1, -1, -1, -1, -1] |
| 35 | [3, 0, 4, 1, 2] | [-1, -1, -1, -1, -1] | [-1, -1, -1, -1, -1] |
| 36 | [3, 0, 4, 2, 1] | [1, -1, -1, -1, 1] | [1, -1, -1, -1, -1] |
| 37 | [3, 0, 4, 2, 1] | [-1, -1, -1, -1, -1] | [-1, -1, -1, -1, -1] |
| 38 | [2, 4, 0, 1, 3] | [-1, -1, 1, -1, 1] | [-1, -1, 1, -1, -1] |
| 39 | [2, 4, 0, 1, 3] | [1, -1, 1, -1, -1] | [1, -1, 1, -1, -1] |
| 40 | [2, 4, 0, 1, 3] | [1, -1, -1, -1, 1] | [1, -1, -1, -1, -1] |
| 41 | [2, 4, 0, 1, 3] | [-1, -1, -1, -1, -1] | [-1, -1, -1, -1, -1] |
| 42 | [1, 3, 4, 0, 2] | [1, -1, -1, -1, 1] | [1, -1, -1, -1, -1] |
| 43 | [1, 3, 4, 0, 2] | [-1, -1, -1, -1, -1] | [-1, -1, -1, -1, -1] |
| 44 | [0, 4, 3, 1, 2] | [1, -1, -1, -1, 1] | [1, -1, -1, -1, -1] |
| 45 | [0, 4, 3, 1, 2] | [-1, -1, -1, -1, -1] | [-1, -1, -1, -1, -1] |
| 46 | [0, 4, 3, 2, 1] | [-1, -1, 1, -1, 1] | [-1, -1, 1, -1, -1] |
| 47 | [0, 4, 3, 2, 1] | [1, -1, 1, -1, -1] | [1, -1, 1, -1, -1] |
| 48 | [1, 4, 2, 0, 3] | [-1, -1, 1, -1, 1] | [-1, -1, 1, -1, -1] |
| 49 | [1, 4, 2, 0, 3] | [1, -1, 1, -1, -1] | [1, -1, 1, -1, -1] |
| 50 | [1, 4, 2, 0, 3] | [1, -1, -1, -1, 1] | [1, -1, -1, -1, -1] |
| 51 | [1, 4, 2, 0, 3] | [-1, -1, -1, -1, -1] | [-1, -1, -1, -1, -1] |
| 52 | [0, 3, 4, 1, 2] | [1, -1, -1, -1, 1] | [1, -1, -1, -1, -1] |
| 53 | [0, 3, 4, 1, 2] | [-1, -1, -1, -1, -1] | [-1, -1, -1, -1, -1] |
| 54 | [3, 2, 1, 4, 0] | [1, -1, -1, -1, 1] | [1, -1, -1, -1, -1] |
| 55 | [3, 2, 1, 4, 0] | [-1, -1, -1, -1, -1] | [-1, -1, -1, -1, -1] |
| 56 | [3, 2, 0, 4, 1] | [-1, -1, 1, -1, 1] | [-1, -1, 1, -1, -1] |
| 57 | [3, 2, 0, 4, 1] | [1, -1, 1, -1, -1] | [1, -1, 1, -1, -1] |
| 58 | [3, 2, 0, 4, 1] | [1, -1, -1, -1, 1] | [1, -1, -1, -1, -1] |
| 59 | [3, 2, 0, 4, 1] | [-1, -1, -1, -1, -1] | [-1, -1, -1, -1, -1] |
| 60 | [3, 1, 2, 4, 0] | [-1, -1, 1, -1, 1] | [-1, -1, 1, -1, -1] |
| 61 | [3, 1, 2, 4, 0] | [1, -1, 1, -1, -1] | [1, -1, 1, -1, -1] |
| 62 | [3, 1, 2, 4, 0] | [1, -1, -1, -1, 1] | [1, -1, -1, -1, -1] |
| 63 | [3, 1, 2, 4, 0] | [-1, -1, -1, -1, -1] | [-1, -1, -1, -1, -1] |
| 64 | [1, 4, 0, 3, 2] | [-1, 1, 1, 1, 1] | [-1, 1, 1, 1, -1] |
| 65 | [1, 4, 0, 3, 2] | [1, 1, 1, 1, -1] | [1, 1, 1, 1, -1] |
| 66 | [1, 4, 0, 3, 2] | [1, 1, -1, 1, 1] | [1, 1, -1, 1, -1] |
| 67 | [1, 4, 0, 3, 2] | [-1, 1, -1, 1, -1] | [-1, 1, -1, 1, -1] |
| 68 | [1, 4, 0, 3, 2] | [-1, -1, 1, 1, 1] | [-1, -1, 1, 1, -1] |
| 69 | [1, 4, 0, 3, 2] | [1, -1, 1, 1, -1] | [1, -1, 1, 1, -1] |
| 70 | [1, 4, 0, 3, 2] | [-1, -1, 1, -1, 1] | [-1, -1, 1, -1, -1] |
| 71 | [1, 4, 0, 3, 2] | [1, -1, 1, -1, -1] | [1, -1, 1, -1, -1] |

(continued)

| ID | Second sequence [P] | Third sequence [$W_1$] | Fourth sequence [$W_2$] |
|---|---|---|---|
| 72 | [1, 4, 0, 3, 2] | [1, -1, -1, 1, 1] | [1, -1, -1, 1, -1] |
| 73 | [1, 4, 0, 3, 2] | [-1, -1, -1, 1, -1] | [-1, -1, -1, 1, -1] |
| 74 | [1, 4, 0, 3, 2] | [1, -1, -1, -1, 1] | [1, -1, -1, -1, -1] |
| 75 | [1, 4, 0, 3, 2] | [-1, -1, -1, -1, -1] | [-1, -1, -1, -1, -1] |
| 76 | [2, 3, 1, 4, 0] | [-1, 1, 1, 1, 1] | [-1, 1, 1, 1, -1] |
| 77 | [2, 3, 1, 4, 0] | [1, 1, 1, 1, -1] | [1, 1, 1, 1, -1] |
| 78 | [2, 3, 1, 4, 0] | [-1, 1, 1, -1, 1] | [-1, 1, 1, -1, -1] |
| 79 | [2, 3, 1, 4, 0] | [1, 1, 1, -1, -1] | [1, 1, 1, -1, -1] |
| 80 | [2, 3, 1, 4, 0] | [1, 1, -1, -1, 1] | [1, 1, -1, -1, -1] |
| 81 | [2, 3, 1, 4, 0] | [-1, 1, -1, -1, -1] | [-1, 1, -1, -1, -1] |
| 82 | [2, 3, 1, 4, 0] | [-1, -1, 1, -1, 1] | [-1, -1, 1, -1, -1] |
| 83 | [2, 3, 1, 4, 0] | [1, -1, 1, -1, -1] | [1, -1, 1, -1, -1] |
| 84 | [2, 3, 1, 4, 0] | [1, -1, -1, -1, 1] | [1, -1, -1, -1, -1] |

**Table 9 Candidate sequences of the first sequence when *N*=16**

| ID | First sequence |
|---|---|
| 0 | [0, 0, 1, 1, 0, 1, 1, 0, 1, 0, 0, 1, 1, 1, 0, 0] |
| 1 | [0, 0, 1, 1, 1, 0, 0, 1, 0, 1, 1, 0, 1, 1, 0, 0] |
| 2 | [0, 1, 1, 0, 0, 0, 1, 1, 1, 1, 0, 0, 1, 0, 0, 1] |
| 3 | [0, 1, 1, 0, 1, 1, 0, 0, 0, 0, 1, 1, 1, 0, 0, 1] |

**Table 10 Candidate combinations of the second sequence, the third sequence, and the fourth sequence when *N*=16**

| ID | Second sequence [P] | Third sequence [$W_1$] | Fourth sequence [$W_2$] |
|---|---|---|---|
| 0 | [3, 0, 2, 1] | [-1, 1, 1, -1] | [-1, 1, -1, -1] |
| 1 | [3, 0, 2, 1] | [1, 1, -1, -1] | [1, 1, 1, -1] |
| 2 | [3, 0, 2, 1] | [-1, -1, 1, -1] | [-1, -1, -1, -1] |
| 3 | [3, 0, 2, 1] | [1, -1, -1, -1] | [1, -1, 1, -1] |
| 4 | [3, 0, 2, 1] | [-1, 1, 1, -1] | [-1, 1, -1, -1] |

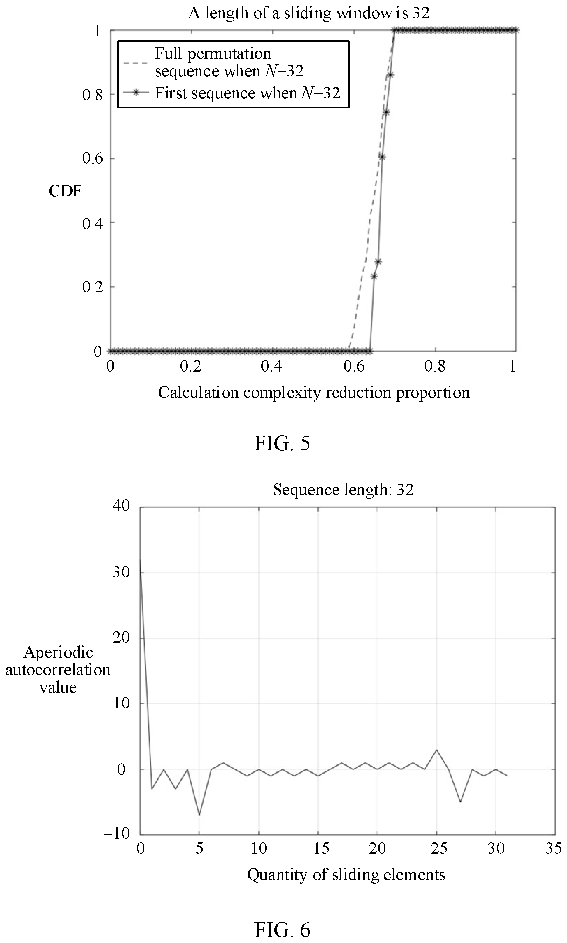

FIG. 5 shows a cumulative distribution function (cumulative distribution function, CDF) of calculation complexity reduction ratios of the sequences in the candidate set of the first sequence when N=32 shown in Table 7 according to an embodiment of this application. A size of a sliding correlation window is 32, and a full permutation sequence is a sequence that is related to a generalized Golay sequence whose length is N=32 in a generalized Golay sequence set and that includes 0 and 1. As shown in FIG. 5, when the second apparatus performs correlation on the received signal with the local sequence, the second apparatus needs to perform 32 times of correlation, and N-1=31 addition operations need to be performed in each time of correlation. Therefore, total baseline calculation complexity is: (N - *1)(L* + 1) addition calculation operations. It can be learned from FIG. 5 that calculation complexity of the first sequence whose length is N=32 provided in this application is reduced by 63% to 70% compared with baseline complexity.

For example, the first sequence is a sequence whose ID is 0 in the candidate set of the first sequence when N=32 shown in Table 7, that is, the sequence [0, 0, 0, 1, 0, 0, 1, 0, 1, 1, 1, 0, 1, 1, 0, 1, 0, 0, 0, 1, 1, 1, 0, 1, 0, 0, 0, 1, 1, 1, 0, 1], and autocorrelation performance of the sequence is shown in FIG. 6. When a quantity of sliding elements is 0, it indicates ideal synchronization. In this case, a correlation value is equal to a sequence length, that is, 32. A smaller correlation value obtained by sliding another quantity of sliding elements indicates better autocorrelation performance. It can be found from FIG. 6 that a correlation value is - 3 when a shift is 1, a correlation value is 0 when a shift is 2, and correlation values obtained through other shifts do not exceed 3. Therefore, the synchronization signal generated based on the first sequence provided in this application can further enable a receive end to have high timing precision while having low time synchronization implementation complexity.

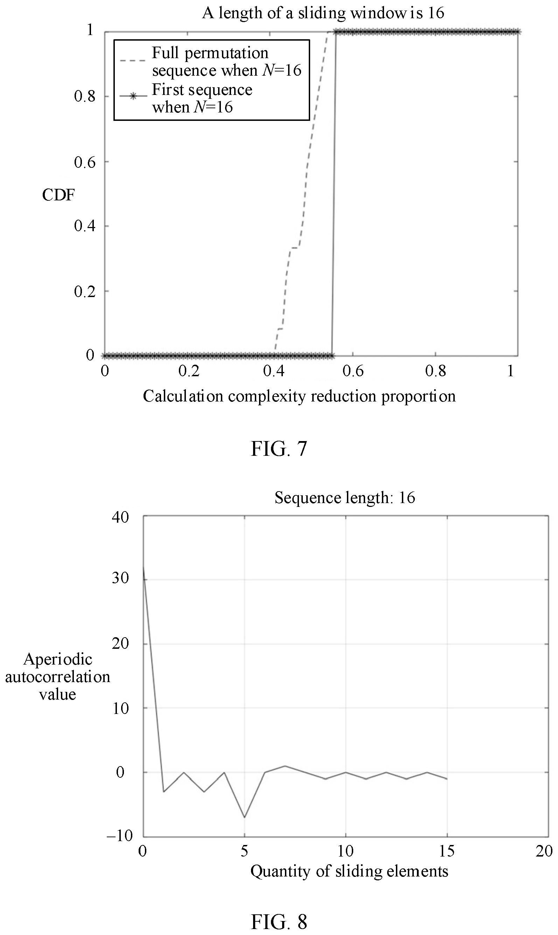

FIG. 7 shows a calculation complexity reduction ratio of a sequence in a candidate set of the first sequence when N= 16 shown in Table 9 according to an embodiment of this application. A size of a sliding correlation window is 16, and a full permutation sequence is a sequence that is related to a generalized Golay sequence whose length is $N$=16 in a generalized Golay sequence set and that includes 0 and 1. As shown in FIG. 5, when the second apparatus performs correlation on the received signal with the local sequence, the second apparatus needs to perform 16 times of correlation, and $N$-1=15 addition operations need to be performed in each time of correlation. Therefore, total baseline calculation complexity is: (N - 1)($L$ + 1) addition calculation operations. It can be learned from FIG. 7 that calculation complexity of the first sequence whose length is N=16 provided in this application is reduced by 55% compared with baseline complexity.

For example, the first sequence is a sequence whose ID is 0 in the candidate set of the first sequence when $N$=16 shown in Table 9, that is, the sequence [0, 0, 1, 1, 0, 1, 1, 0, 1, 0, 0, 1, 1, 1, 0, 0], and autocorrelation performance of the sequence is shown in FIG. 6. When a quantity of sliding elements is 0, it indicates ideal synchronization. In this case, a correlation value is equal to a sequence length, that is, 32. A smaller correlation value obtained by sliding another quantity of sliding elements indicates better autocorrelation performance. It can be found from FIG. 8 that a correlation value is - 1 when a shift is 1, a correlation value is - 6 when a shift is 2, and correlation values obtained through other shifts do not exceed 2. Therefore, the synchronization signal generated based on the first sequence provided in this application can further enable a receive end to have high timing precision while having low time synchronization implementation complexity.

It may be understood that to implement functions in the foregoing embodiments, a base station and a terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

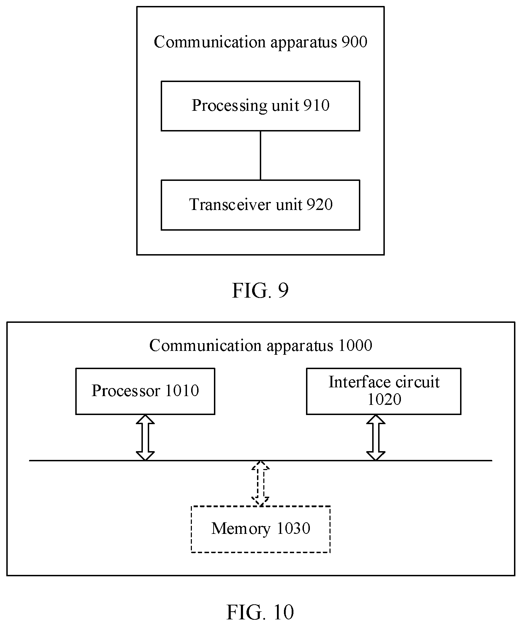

FIG. 9 and FIG. 10 are diagrams of structures of possible communication apparatuses according to embodiments of this application. These communication apparatuses may be configured to implement functions of the terminal or the network device in the foregoing method embodiments, and therefore can also implement beneficial effect of the foregoing method embodiments. In embodiments of this application, the communication apparatus may be one of the terminals 120a to 120j as shown in FIG. 1, or the network device 110a or 110b as shown in FIG. 1, or a module (for example, a chip or a chip system) used in the terminal or the network device.

The communication apparatus 900 includes a transceiver unit 920, and the transceiver unit 920 may be configured to receive or send information. The communication apparatus 900 may further include a processing unit 910, and the processing unit 910 may be configured to process instructions or data, to implement a corresponding operation.

It should be further understood that when the communication apparatus 900 is a chip configured in (or used in) a communication device, the transceiver unit 920 in the communication apparatus 900 may be an input/output interface or a circuit in the chip, and the processing unit 910 in the communication apparatus 900 may be a processor in the chip.

Optionally, the communication apparatus 900 may further include a storage unit 930. The storage unit 930 may be configured to store the instructions or the data. The processing unit 910 may execute the instructions or the data stored in the storage unit, to cause the communication apparatus to implement a corresponding operation.

The communication apparatus 900 may be configured to implement functions of the first communication apparatus or the second communication apparatus in the method embodiment shown in FIG. 8.

When the communication apparatus 900 is configured to implement the functions of the first communication apparatus in the method embodiment shown in FIG. 8, the transceiver unit 920 is configured to be used by the processing unit 910 to determine a first signal, where the first signal includes a synchronization signal, and the synchronization signal is obtained based on a first sequence; and the transceiver unit is configured to send the first signal, where the first sequence includes $N$ elements, $N$ is $2^M$, $M$ is a positive integer, and an $n^{th}$ element $x_n$ in the first sequence and an $n^{th}$ element $A_n$ in a generalized Golay sequence satisfy:

$$A_n = 1 - 2x_n, \ \text{or} \ A_n = 2x_n - 1, \ \text{or} \ A_n = 1 - 2x_{N-n-1}, \ \text{or} \ A_n = 2x_{N-n-1} - 1,$$

where

$0 \le n \le N$ - 1, $n$ is an integer, the generalized Golay sequence is generated by $M$-level registers, a register depth $2^{P_m}$ of an $m^{th}$-level register in the M-level registers is determined by an $m^{th}$ element $P_m$ in a second sequence, $m$ is an integer less than or equal to M and greater than or equal to 1, $P_m$ is an integer greater than or equal to 0, and a sum of first $\lceil M/2 \rceil$ elements in the second sequence is greater than or equal to a sum of last $M-\lceil M/2 \rceil$ elements.

When the communication apparatus 900 is configured to implement the function of the second communication apparatus in the method embodiment shown in FIG. 8, the processing unit 910 is configured to be used by the transceiver unit to receive a first signal from a first apparatus, where the first signal includes a synchronization signal determined based on a first sequence; and the processing unit is configured to process the first signal based on the first sequence, to determine a start location and/or an end location of the synchronization signal in the first signal, where the first sequence includes N elements, N is $2^M$, M is a positive integer, and an $n^{th}$ element $x_n$ in the first sequence and an $n^{th}$ element $A_n$ in a generalized Golay sequence satisfy:

$$A_n = 1 - 2x_n, \text{ or } A_n = 2x_n - 1, \text{ or } A_n = 1 - 2x_{N-n-1}, \text{ or } A_n = 2x_{N-n-1} - 1,$$

where

$0 \le n \le N - 1$, n is an integer, the generalized Golay sequence is generated by M-level registers, a register depth $2^{P_m}$ of an $m^{th}$-level register in the M-level registers is determined by an $m^{th}$ element $P_m$ in a second sequence, m is an integer less than or equal to M and greater than or equal to 1, $P_m$ is an integer greater than or equal to 0, and a sum of first $\lceil M/2 \rceil$ elements in the second sequence is greater than or equal to a sum of last $M-\lceil M/2 \rceil$ elements.

For more detailed descriptions of the processing unit 910 and the transceiver unit 920, refer to related descriptions in the method embodiment shown in FIG. 8.

It should be understood that the transceiver unit 920 in the communication apparatus 900 may be implemented by using a communication interface (for example, a transceiver, a transceiver circuit, an input/output interface, or a pin). When the communication interface is a transceiver, the transceiver may include a receiver and/or a transmitter. The processing unit 910 in the communication apparatus 900 may be implemented by using at least one processor. The processing unit 910 in the communication apparatus 900 may alternatively be implemented by using at least one logic circuit. Optionally, the communication apparatus 900 further includes a storage unit, and the storage unit may be implemented by using a memory.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, or store input data required by the processor 1010 to run the instructions, or store data generated after the processor 1010 runs the instructions.

In an implementation, the memory 1030 may be integrated into the processor 1010, or may be independent of the processor 1010.

When the communication apparatus 1000 is configured to implement the method shown in FIG. 8, the processor 1010 is configured to implement the functions of the processing unit 910, and the interface circuit 1020 is configured to implement the functions of the transceiver unit 920.

When the communication apparatus is a chip used in a terminal device, the chip in the terminal device may implement the functions of the second apparatus in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device may implement the functions of the first apparatus in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

According to the methods provided in embodiments of this application, an embodiment of this application further provides a computer program product. The computer program product includes computer program code. When the computer program code is executed by one or more processors, an apparatus including the processor is caused to perform the method shown in FIG. 2.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores the foregoing computer program or instructions. When the computer program or instructions are run by one or more processors, an apparatus including the processor is caused to perform the method shown in FIG. 2.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system that includes the foregoing one or more first apparatuses. The system may further include the foregoing one or more second apparatuses.

In several embodiments provided in this application, it should be understood that the disclosed system, apparatus, and method may be implemented in other manners. For example, the described apparatus is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims..

**Claims**

1.  A signal transmission method, comprising:

    determining, by a first apparatus, a first signal, wherein the first signal comprises a synchronization signal, and the synchronization signal is obtained based on a first sequence; and
    sending, by the fi rst apparatus, the first signal, wherein
    the first sequence comprises $N$ elements, $N$ is $2^M$, $M$ is a positive integer, and an $n^{th}$ element $x_n$ in the first sequence and an $n^{th}$ element $A_n$ in a generalized Golay sequence satisfy:

    $$A_n = 1 - 2x_n, \text{ or } A_n = 2x_n - 1, \text{ or } A_n = 1 - 2x_{N-n-1}, \text{ or } A_n = 2x_{N-n-1} - 1,$$

    , wherein
    $0 \leq n \leq N-1$, $n$ is an integer, the generalized Golay sequence is generated by M-level registers, a register depth $2^{P_m}$ of an $m^{th}$-level register in the M-level registers is determined by an $m^{th}$ element $P_m$ in a second sequence, $m$ is an integer less than or equal to $M$ and greater than or equal to 1, $P_m$ is an integer greater than or equal to 0, and a sum of first [M/2] elements in the second sequence is greater than or equal to a sum of last $M - \lceil M/2 \rceil$ elements.

2.  A signal transmission method, comprising:

    receiving, by a second apparatus, a first signal from a first apparatus, wherein the first signal comprises a synchronization signal determined based on a first sequence; and
    processing, by the second apparatus, the first signal based on the first sequence, to determine a start location and/or an end location of the synchronization signal in the first signal, wherein
    the first sequence comprises $N$ elements, $N$ is $2^M$, $M$ is a positive integer, and an $n^{th}$ element $x_n$ in the first sequence and an $n^{th}$ element $A_n$ in a generalized Golay sequence satisfy:

    $$A_n = 1 - 2x_n, \text{ or } A_n = 2x_n - 1, \text{ or } A_n = 1 - 2x_{N-n-1}, \text{ or } A_n = 2x_{N-n-1} - 1,$$

    wherein
    $0 \leq n \leq N-1$, $n$ is an integer, the generalized Golay sequence is generated by M-level registers, a register depth $2^{P_m}$ of an $m^{th}$-level register in the M-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

3.  A signal transmission method, comprising:

    determining, by a first apparatus, a first signal, wherein the first signal comprises a synchronization signal, and the synchronization signal is obtained based on a first sequence;
    sending, by the first apparatus, the first signal;
    receiving, by a second apparatus, the first signal; and
    processing, by the second apparatus, the first signal based on the first sequence, to determine a start location and/or an end location of the synchronization signal in the first signal, wherein
    the first sequence comprises $N$ elements, $N$ is $2^M$, $M$ is a positive integer, and an $n^{th}$ element $x_n$ in the first sequence and an $n^{th}$ element $A_n$ in a generalized Golay sequence satisfy:

    $$A_n = 1 - 2x_n, \text{ or } A_n = 2x_n - 1, \text{ or } A_n = 1 - 2x_{N-n-1}, \text{ or } A_n = 2x_{N-n-1} - 1,$$

    wherein
    $0 \leq n \leq N-1$, n is an integer, the generalized Golay sequence is generated by M-level registers, a register depth $2^{P_m}$ of an $m^{th}$-level register in the M-level registers is determined by an $m^{th}$ element $P_m$ in a second sequence, $m$ is an integer less than or equal to $M$ and greater than or equal to 1, $P_m$ is an integer greater than or equal to 0, and a sum of first $\lceil M/2 \rceil$ elements in the second sequence is greater than or equal to a sum of last $M - \lceil M/2 \rceil$ elements.

4.  The method according to any one of claims 1 to 3, wherein quantities of 0s and 1s comprised in the first sequence are equal.

5. The method according to any one of claims 1 to 4, wherein that the synchronization signal is obtained based on the first sequence comprises: the synchronization signal is obtained by performing on-off keying OOK modulation on the first sequence.

6. The method according to any one of claims 1 to 5, wherein when N=256, the first sequence is one of the following sequences, or the first sequence comprises an equivalent sequence of one of the following sequences:

[0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 1, 0, 1, 0, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1]; or

[0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 0, 1, 1, 0, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 1, 0, 1, 0, 0, 1, 0, 1, 0, 1, 0, 1, 0, 0, 1, 1, 0, 0, 1, 1, 0, 0, 1, 1, 0, 1, 0, 1, 0, 0, 1, 1, 0, 1, 0, 0, 1, 0, 1, 1, 0, 1, 0, 0, 1, 0, 1, 0, 1, 0, 1, 0, 1, 1, 0, 1, 0, 1, 0, 1, 0, 1, 0, 0, 1, 1, 0, 0, 1, 1]; or [0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 1, 0, 1, 0, 1, 0, 0, 1, 0, 0, 1, 0, 1, 0, 1, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 0, 1, 0, 1, 0, 1, 1, 0, 1, 0, 1, 0, 0, 1, 1, 0, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 1, 0, 0, 1]; or

[0, 1, 1, 0, 0, 1, 1, 0, 0, 1, 1, 0, 0, 1, 1, 0, 1, 0, 1, 0, 1, 0, 1, 0, 1, 0, 0, 1, 0, 1, 0, 1, 0, 1, 0, 1, 1, 0, 1, 0, 0, 1, 0, 1, 1, 0, 1, 0, 0, 1, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 0, 1, 1, 0, 0, 1, 0, 1, 0, 1, 0, 1, 0, 1, 0, 1, 0, 1, 0, 1, 0, 0, 1, 1, 0, 0, 1, 1, 0, 0, 1]; or

[0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 1, 0, 0, 1, 0, 1, 1, 0, 0, 1, 0, 1, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 0, 1, 1, 0, 1, 0, 0, 1, 1, 0, 1, 0, 0, 1, 1, 0, 1, 0, 1, 0, 1, 0, 0, 1, 0, 1, 1, 0, 1, 0, 0, 1, 1, 0, 0, 1, 0, 1, 0, 1, 1, 0, 0, 1, 1, 0, 1, 0, 1, 0, 1, 0, 1, 0, 1, 0, 0, 1, 1, 0, 1, 0, 0, 1, 1, 0, 0, 1, 0, 1]; or

[0, 1, 0, 1, 1, 0, 0, 1, 1, 0, 1, 0, 0, 1, 1, 0, 0, 1, 0, 1, 1, 0, 0, 1, 1, 0, 1, 0, 0, 1, 1, 0, 1, 0, 0, 1, 1, 0, 1, 0, 0, 1, 1, 0, 1, 0, 1, 0, 1, 0, 0, 1, 0, 1, 0, 1, 0, 1, 1, 0, 0, 1, 0, 1, 1, 0, 1, 0, 0, 1, 1, 0, 1, 0, 1, 0, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 0, 1, 0, 1, 1, 0, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 0, 1, 0, 1, 1, 0, 0, 1, 0, 1, 1, 0, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 0, 1, 1, 0, 1, 0, 1, 0, 0, 0, 1]; or

[0, 1, 1, 0, 1, 0, 0, 1, 1, 0, 0, 1, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 0, 1, 0, 1, 1, 0, 1, 0, 1, 0, 0, 1, 0, 1, 0, 1, 0, 1, 1, 0, 1, 0, 1, 0, 0, 1, 0, 1, 0, 1, 0, 1, 1, 0, 1, 0, 1, 0, 0, 1, 0, 1, 1, 0, 1, 0, 1, 0, 0, 1, 0, 1, 0]; or

[0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 0, 1, 0, 1, 0, 1, 1, 0, 1, 0, 0, 1, 0, 1, 0, 1, 0, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 1, 0, 0, 1, 0, 1, 1, 0, 0, 1, 0, 1, 1, 0, 0, 1, 0, 1, 0, 1, 0, 1, 1, 0, 1, 0, 0, 1, 0]; or

[0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1,0,0, 1, 0, 1, 1, 0, 1, 0,0, 1, 1, 0,0, 1, 1, 0,0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 1, 0, 1,0,0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 1, 0, 0, 1, 1, 0, 1, 0, 0, 1, 1, 0,0, 1, 1, 0, 0, 1, 1,0,0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 1, 0, 1, 0, 1, 0, 1,0, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0,0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1]; or

[0, 1,0, 1,0, 1, 0, 1, 0, 1, 0, 1, 1, 0, 1,0,0, 1,0, 1, 1, 0, 1,0,0, 1,0, 1, 0, 1, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1, 1, 0, 1, 0, 0, 1, 1, 0, 0, 1, 0, 1, 1, 0, 1, 0, 0, 1, 1, 0, 0, 1, 0, 1, 0, 1, 0, 1, 0, 1, 1, 0, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 0]; or

[0, 1,0, 1,0, 1, 1,0,0, 1,0, 1,0, 1, 1, 0, 1,0, 1,0, 1,0,0, 1, 1, 0, 1,0, 1,0, 1, 0,0, 1, 1,0, 1,0, 1, 0, 1, 0, 1, 0, 0, 1, 0, 1, 0, 1, 0, 1, 0, 1, 0, 0, 1, 1, 0, 0, 1, 1, 0, 1, 0,0, 1, 1, 0,0, 1, 1, 0, 1, 0,0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 1, 0, 0, 1, 0, 1, 1, 0, 1, 0, 1, 0, 0, 1, 0, 1, 0, 1, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1, 1, 0, 0, 1, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1]; or

[0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 1, 0, 0, 1, 1, 0, 0, 1, 0, 1, 0, 1, 0, 1, 1, 0, 0, 1, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 0, 1, 0, 1, 0, 1, 0, 1, 1, 0, 0, 1, 0, 1, 0, 1, 1, 0, 1, 0, 1, 0, 1, 0, 1, 0, 0, 1, 0, 1, 1, 0, 0, 1, 0, 1, 0, 1, 1, 0, 0, 1, 0, 1, 0, 1, 0, 1, 0, 1, 1, 0, 0, 1, 1, 0, 0, 1, 0, 1, 0, 1, 0, 1, 0, 1, 1, 0, 0, 1, 0, 1, 0, 1, 0, 1, 1, 0, 0, 1, 1, 0, 1, 0, 1, 0]; or

[0, 1, 0, 1, 0, 1, 1, 0, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 1, 1, 0, 0, 1, 0, 1, 0, 1, 1, 0, 0, 1, 0, 1, 1, 0, 0, 1, 0, 1, 1, 0, 0, 1, 0, 1, 1, 0, 0, 1, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 0, 1, 1, 0, 1, 0, 1, 0, 1, 0, 1, 0, 1, 0, 1, 0, 0, 1, 1, 0, 1, 0, 1, 0, 0, 1, 1, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 0, 1, 1, 0, 0, 1, 1, 0, 1, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1]; or

[0, 1, 1,0, 1,0, 1,0,0, 1, 1, 0, 1,0, 1,0,0, 1, 1, 0, 0, 1,0, 1,0, 1, 1, 0, 0, 1,0, 1,0, 1, 1, 0, 1, 0, 1, 0, 1, 0, 0, 1, 0, 1, 0, 1, 0, 1, 0, 1,0, 1,0,0, 1, 0, 1, 1, 0, 0, 1, 1,0, 1, 0,0, 1, 0, 1, 1, 0, 0, 1, 1, 0, 1, 0, 0, 1, 1, 0, 0, 1, 0, 1, 0, 1, 1, 0, 1, 0, 1, 0, 1, 0,0, 1, 0, 1,0, 1, 1, 0, 0, 1, 0, 1, 0, 1, 1, 0, 0, 1, 0, 1, 0, 1, 1, 0, 0, 1, 0, 1, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 1, 0, 1, 0, 0, 1, 1, 0, 1, 0, 0, 1, 1, 0, 0, 1, 0, 1, 0, 1, 0, 1, 0, 1, 1, 0, 1, 0, 0, 1, 1, 0, 0, 1, 0, 1, 0, 1, 0, 1, 0, 1, 0, 1, 0, 1, 0, 0, 1, 1, 0, 1, 0, 0, 1, 1, 0, 0, 1, 0, 1, 0, 1, 0, 1, 0, 1, 0, 0, 1, 1, 0, 1, 0, 0, 1, 1, 0, 1, 0, 1, 0, 0, 1, 1, 0, 1, 0, 1, 0, 1, 0, 1, 0]; or

[0, 1, 0, 1, 0, 1, 1, 0, 0, 1, 0, 1, 0, 1, 1, 0, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 1, 0, 1, 0, 0, 1, 1, 0, 0, 1, 0, 1, 1, 0, 0, 1, 0, 1, 1, 0, 1, 0, 1, 0, 1, 0, 1, 0, 0, 1, 1, 0, 0, 1, 0, 1, 0, 1, 0, 1, 1, 0, 1, 0, 0, 1, 1, 0, 1, 0, 1, 0, 0, 1, 0, 1, 0, 1, 1, 0, 0, 1, 0, 1, 0, 1, 0, 0, 1, 1, 0, 1, 0, 1, 0, 1, 0, 0, 1, 0, 1, 0, 1, 1, 0, 0, 1, 1, 0, 0, 1, 0, 1, 1, 0, 0, 1, 0, 1, 0, 1, 0, 1, 0, 1, 0, 0, 1, 0, 1, 1, 0, 0, 1, 1, 0, 0, 1, 1, 0, 1, 0, 1, 0, 1, 0, 1, 0]; or [0, 1, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 1, 0, 1, 0, 1, 1, 0, 1, 0, 1, 0, 1, 0, 0, 1, 1, 0, 0, 1, 1, 0, 1, 0, 0, 1, 1, 0, 1, 0, 0, 1, 1, 0, 0, 1, 1, 0, 0, 1, 0, 1, 0, 1, 0, 1, 1, 0, 1, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 0, 0, 1, 1, 0, 1, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 1, 0, 1, 0, 1, 0, 1, 0]; or

[0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 0, 1, 0, 1, 1, 0, 0, 1, 1, 0, 0, 1, 1, 0, 1, 0, 1, 0, 1, 0, 0, 1, 1, 0, 0, 1, 0, 1, 1, 0, 0, 1, 1, 0, 0, 1, 1, 0, 1, 0, 1, 0, 1, 0, 0, 1, 1, 0, 0, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 0, 1, 0, 1, 0, 1, 0, 1, 0, 1, 0, 0, 1, 1, 0, 1, 0, 1, 0, 0, 1, 1, 0, 0, 1, 0, 1, 1, 0, 0, 1, 0, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 0, 1, 0, 1, 1, 0, 1, 0, 0, 1, 1, 0, 1, 0, 1, 0, 0, 1, 1, 0, 1, 0, 1, 0,0, 1, 1, 0, 1, 0, 0,0, 1, 1, 0, 1,0,0, 1, 0, 1, 0, 1, 1,0,0, 1,0, 1, 0, 1]; or

[0, 1, 1,0, 1,0, 1,0,0, 1, 1, 0, 1,0, 1,0,0, 1,0, 1, 1,0,0, 1,0, 1, 0, 1, 1,0,0, 1, 1,0,0, 1,0, 1, 0, 1, 1,0,0, 1, 1, 0,0, 1, 0, 1, 0, 1, 1,0, 1, 0, 1, 0, 0, 1, 1, 0, 1, 0, 1, 0,0, 1, 0, 1, 0, 1, 1, 0,0, 1, 1, 0, 0, 1, 1,0, 0, 1, 0, 1, 0, 1, 1, 0, 0, 1, 1, 0, 0, 1, 0, 1, 1, 0, 0, 1, 1, 0, 1, 0, 1, 0, 1, 0,0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1,0,0, 1, 1, 0, 1, 0, 1, 0, 1, 0,0, 1, 1, 0, 1, 0, 1, 0,0, 1, 1, 0, 1, 0, 1, 0, 1, 0,0, 1, 1, 0, 1, 0, 0, 1, 1, 0, 1, 0, 0, 1, 1, 0, 1, 0, 1, 0, 0, 1, 1, 0, 1, 0, 1, 0, 1, 0, 1, 1,0,0, 1, 1, 0,0, 1, 0, 1, 0, 1, 0, 0, 1, 1, 0, 1, 0, 1, 0, 1, 0, 1, 1, 0, 1, 0, 1, 0, 0, 1, 1, 0, 1, 0, 1, 0, 1, 0,0, 1, 1, 0, 1, 0, 1, 0, 0, 1, 1, 0, 1, 0, 1, 0, 1, 0, 0, 1, 0, 1, 0,

0, 1, 1, 0, 1, 0, 1, 0, 0, 1]; or

[0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 0, 1, 1, 0, 0, 1, 1, 0, 0, 1, 0, 1, 0, 1, 0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 0, 1, 0, 1, 0, 1, 0, 1, 0, 1, 0, 1, 0, 1, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1, 1, 0, 0, 1, 0, 1, 0, 1, 1, 0, 1, 0, 0, 1, 0, 0, 1, 1, 0, 1, 0, 0, 1]; or

[0, 1, 1, 0, 1, 0, 0, 1, 1, 0, 1, 0, 0, 1, 0, 1, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 0, 1, 0, 1, 0, 1, 1, 0, 0, 1, 0, 1, 1, 0, 0, 1, 0, 1, 1, 0, 1, 0, 1, 0, 1, 0, 0, 1, 1, 0, 0, 1, 0, 1, 0, 1, 0, 1, 0, 1, 0, 1, 0, 1, 1, 0, 0, 1, 1, 0, 0, 1, 0, 1, 0, 1, 0, 1, 0, 1, 0, 1, 0, 1, 1, 0, 0, 1, 1, 0, 0, 1, 0, 1, 0, 1, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 1, 0, 1, 0, 1, 0, 0, 1, 0, 1, 0, 1, 0, 1, 0, 1, 0, 1, 0, 1, 0, 0, 1, 1, 0, 1, 0, 1, 0, 1, 0, 0, 1, 0, 1, 1, 0, 0, 1, 1, 0, 0, 1, 0, 1, 1, 0, 1, 0, 1, 0, 1, 0, 1, 0, 1, 0, 0, 1, 0, 1, 0, 1, 0, 1, 0, 1, 1, 0, 0, 1, 1, 0, 0, 1, 0, 1, 1, 0, 1, 0, 0, 1]; or

[0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 0, 1, 1, 0, 0, 1, 0, 1, 0, 1, 1, 0, 0, 1, 1, 0, 1, 0, 1, 0, 0, 1, 0, 1, 0, 0, 1, 1, 0, 1, 0, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 1, 0, 1, 0, 0, 1, 1, 0, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 0, 1, 1, 0, 0, 1, 0, 1, 1, 0, 0, 1]; or

[0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 1, 0, 1, 0, 0, 1, 1, 0, 1, 0, 1, 0, 0, 1, 1, 0, 0, 1, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 1, 0, 0, 1, 1, 0, 1, 0, 1, 0, 0, 1, 0, 1, 1, 0, 0, 1, 0, 1, 0, 1, 1, 0, 1, 0, 1, 0, 0, 1, 0, 1, 1, 0, 0, 1, 1, 0, 1, 0, 1, 0, 0, 1, 0, 1, 1, 0, 0, 1, 1, 0, 1, 0, 1, 0, 1, 0, 0, 1, 1, 0, 0, 1, 0, 1, 1, 0, 0, 1]; or

[0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 0, 1, 0, 1, 1, 0, 0, 1, 0, 1, 0, 1, 1, 0, 1, 0, 1, 0, 0, 1, 0, 1, 0, 0, 1, 1, 0, 1, 0, 1, 0, 1, 0, 0, 1, 1, 0, 0, 1, 1, 0, 1, 0, 1, 0, 0, 1, 1, 0, 0, 1, 1, 0, 1, 0, 1, 0, 0, 1, 1, 0, 0, 1, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 0, 1, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1]; or

[0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 1, 0, 0, 1, 0, 1, 0, 1, 1, 0, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 1, 0, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 0, 1, 0, 1, 1, 0, 1, 0, 1, 0, 1, 0, 0, 1, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 0, 1, 0, 1, 0, 1, 1, 0, 1, 0, 1, 0, 0, 1, 0, 1, 1, 0, 1, 0, 1, 0, 0, 1, 0, 1, 0, 1, 0, 1, 0, 0, 1, 0, 1, 0, 1, 0, 1, 1, 0, 0, 1, 0, 1, 0]; or [0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1, 0, 1, 0, 1, 1, 0, 0, 1, 0, 1, 0, 0, 1, 1, 0, 1, 0, 0, 1, 1, 0, 1, 0, 0, 1, 1, 0, 1, 0, 1, 0, 0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 0, 1, 1, 0, 1, 0, 1, 0, 0, 1, 0, 1, 1, 0, 1, 0, 1, 0, 1, 0, 0, 1, 0, 1, 0, 1, 0, 1, 0, 0, 1, 0, 1, 0, 1, 0, 1, 0]; or

[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 1]; or

[0, 1, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 0, 1, 0, 1, 1, 0, 0, 1, 1, 0, 0, 1, 1, 0, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 0, 1, 0, 1, 1, 0, 1, 0, 1, 0, 0, 1, 0, 1, 1, 0, 0, 1, 1, 0, 0, 1, 1, 0, 1, 0, 1, 0, 0, 1, 1, 0, 1, 0, 0, 1, 0, 1, 0, 1, 0, 1, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 1, 0, 0, 1, 0, 1, 0, 1, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 1, 0, 1, 0, 1, 0, 0, 1, 0, 1, 1, 0, 0, 1, 1, 0, 1, 0, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 0, 1]; or

[0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 1, 0, 0, 1, 0, 1, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 0, 1, 0, 1, 0, 1, 0, 1, 1, 0, 0, 1, 0, 1, 0, 1, 1, 0, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1,

0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1, 1, 0, 0, 1, 1, 0,
1, 0, 0, 1, 0, 1, 1, 0, 0, 1, 1, 0, 1, 0, 1, 0, 0, 1, 0, 1, 1, 0, 1, 0, 1, 0, 1, 0, 1, 0, 1, 0, 1, 0, 1, 0, 1, 0, 0, 1, 0, 1, 0, 1, 1, 0, 0,
1, 1, 0, 0, 1, 1, 0, 1, 0, 0, 1]; or

[0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 1,
0, 0, 1, 0, 1, 1, 0, 1, 0, 0, 1, 1, 0, 0, 1, 0, 1, 1, 0, 0, 1, 1, 0, 1, 0, 0, 1, 0, 1, 1, 0, 0, 1, 0, 1, 0, 1, 0, 1, 1, 0, 1, 0, 1, 0, 0, 1, 0, 1, 1, 0,
1, 0, 0, 1, 0, 1, 0, 1, 0, 1, 0, 1, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 1, 0, 1, 0,
1, 0, 1, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 0, 1,
1, 0, 0, 1, 0, 1, 1, 0, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 1, 0, 1,
0, 0, 1, 1, 0, 0, 1, 1, 0, 0, 1]; or

[0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 1,
0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 0, 1,
0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 1, 0, 1,
0, 0, 1, 0, 1, 0, 1, 0, 1, 0, 1, 0, 1, 0, 1, 0, 1, 1, 0, 1, 0, 0, 1, 0, 1, 0, 1, 1, 0, 0, 1, 1, 0, 1, 0, 0, 1, 0, 1, 1, 0, 1, 0, 1, 0, 0, 1,
0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 0, 1, 0, 1, 0, 1, 0, 1, 0, 1, 0, 1, 1, 0, 1, 0, 1, 0, 0, 1, 1, 0, 0,
1, 1, 0, 0, 1, 1, 0, 1, 0, 0, 1]; or

[0, 1, 0, 1, 1, 0, 1, 0, 0, 1, 1, 0, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 1, 0, 0, 1, 1, 0, 1, 0, 0, 0, 1, 0,
1, 0, 1, 1, 0, 1, 0, 1, 0, 0, 1, 0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1,
0, 1, 1, 0, 1, 0, 0, 1, 1, 0, 1, 0, 0, 1, 1, 0, 1, 0, 0, 1, 0, 1, 0, 1, 0, 1, 0, 1, 0, 1, 1, 0, 0, 1, 0, 1, 1, 0, 0, 1, 1, 0, 0, 1, 0, 1, 0, 1, 0, 1, 0, 1, 1,
0, 0, 1, 1, 0, 1, 0, 1, 0, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 0, 1,
1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 1, 0, 0, 1, 0, 1, 0, 1, 0, 1, 0, 1, 1, 0, 0, 1, 1,
0, 0, 1, 0, 1, 0, 1, 0, 1, 0, 1]; or

[0, 1, 0, 1, 0, 1, 0, 1, 0, 1, 1, 0, 0, 1, 1, 0, 0, 1, 0, 1, 0, 1, 0, 1, 1, 0, 0, 1, 1, 0, 0, 1, 0, 1, 0, 1, 0, 1, 0, 1, 0, 0, 1, 1, 0, 0, 1, 1,
0, 1, 0, 1, 0, 1, 0, 0, 1, 1, 0, 0, 1, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 1, 0,
1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 1, 0, 1, 0, 0, 1, 1,
0, 1, 0, 0, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 0, 1, 1, 0, 0, 1, 0, 1, 1, 0, 1, 0, 1, 0, 0, 1,
0, 1, 1, 0, 1, 0, 1, 0, 0, 1, 0, 1, 0, 1, 1, 0, 1, 0, 0, 1, 1, 0, 1, 0, 0, 1, 0, 1, 1, 0, 0, 1, 0, 1, 1, 0, 1, 0, 1, 0, 1, 0, 0, 1, 0, 1, 1, 0, 1,
0, 0, 1, 1, 0, 1, 0, 0, 1, 0, 1]; or

[0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 1, 0, 0, 1, 1,
0, 1, 0, 1, 0, 1, 0, 0, 1, 1, 0, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 1, 0,
0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 0, 1, 1, 0, 1, 0, 0, 1, 0, 1, 1, 0, 0, 1, 0, 1, 1, 0, 0, 1, 0, 1, 1, 0,
1, 0, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 1,
0, 0, 1, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0,
1, 0, 1, 0, 1, 0, 1, 0, 1, 0, 1]; or

[0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1,
0, 0, 1, 1, 0, 0, 1, 0, 1, 0, 1, 0, 1, 0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0,
1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 0, 1, 1, 0, 1, 0, 1, 0, 0, 1, 1, 0, 0, 1, 0, 1, 0, 1, 0,
1, 1, 0, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 0,
0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 1,
0, 0, 1, 0, 1, 0, 1, 0, 1, 0, 1]; or

[0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 1,
0, 0, 1, 1, 0, 0, 1, 0, 1, 0, 1, 0, 1, 0, 1, 0, 1, 0, 1, 1, 0, 1, 0, 0, 1, 1, 0, 1, 0, 0, 1, 1, 0, 1, 0, 1, 0, 1, 0, 1, 0, 0, 1, 1, 0, 0, 1, 1, 0,
1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 0, 1, 1, 0, 1, 0, 1, 0, 0, 1, 1, 0, 0, 1, 0, 1, 0, 1, 0,
1, 1, 0, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0, 0, 1, 1, 0, 0, 1, 0, 1, 0, 1, 0, 1, 0, 0, 1,
0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 1, 0, 1, 0,
1, 0, 1, 1, 0, 0, 1, 1, 0, 0, 1]; or

[0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 1,
0, 1, 0, 1, 0, 1, 0, 1, 0, 0, 1, 1, 0, 0, 1, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1,
1, 0, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 1, 0, 0, 1, 0, 1, 0,
1, 1, 0, 0, 1, 0, 1, 0, 1, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1, 0, 0, 1, 0, 1, 1,
0, 1, 0, 0, 1, 0, 1, 1, 0, 1, 0, 1, 0, 0, 1, 1, 0, 0, 1, 0, 1, 1, 0, 1, 0, 1, 0, 1, 0, 1, 0, 0, 1, 1, 0, 0, 1, 0, 1, 1, 0, 1, 0, 1, 0, 0, 1, 1, 0, 0,
1, 1, 0, 0, 1, 0, 1, 0, 1, 0, 1]; or

[0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1,
0, 1, 0, 0, 1, 0, 1, 0, 1, 1, 0, 1, 0, 0, 1, 0, 1, 1, 0, 1, 0, 0, 1, 0, 1, 1, 0, 0, 1, 1, 0, 0, 1, 0, 1, 1, 0, 1, 0, 1, 0, 1, 0, 0, 1, 0, 1, 1, 0,
0, 1, 1, 0, 1, 0, 1, 0, 0, 1, 1, 0, 1, 0, 0, 1, 1, 0, 0, 1, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 1, 0, 1, 0, 0, 1,
0, 1, 0, 1, 1, 0, 0, 1, 1, 0, 0, 1, 0, 1, 1, 0, 1, 0, 1, 0, 1, 0, 1, 1, 0, 0, 1, 1, 0, 0, 1, 1, 0, 1, 0, 1, 0, 1, 0, 0, 1, 0, 1, 1, 0, 0, 1, 1, 0, 0, 1, 0, 1,
1, 0, 1, 0, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 0, 1, 1, 0, 1, 0, 1, 0, 1, 0, 1,
0, 1, 0, 1, 0, 0, 1, 1, 0, 0, 1]; or

[0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1,
0, 1, 0, 0, 0, 1, 0, 1, 0, 1, 1, 0, 1, 0, 0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 0, 1, 0, 1, 1, 0,
0, 1, 1, 0, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 0, 1, 0, 1, 1, 0, 1, 0, 1, 0, 0, 1, 1, 0, 0, 1, 0, 1, 0, 1,
0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 0, 1,
1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 0, 1, 0, 1, 1, 0, 1, 0, 0, 1, 1, 0, 0, 1,
0, 0, 1, 1, 0, 1, 0, 0, 1, 0, 1]; or

[0, 1, 1, 0, 0, 1, 1, 0, 0, 1, 0, 1, 0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 0, 1, 1,

0, 0, 1, 0, 1, 1, 0, 0, 1, 0, 1, 1, 0, 1, 0, 0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 0, 1, 1, 0, 1, 0,
1, 0, 1, 0, 1, 0, 0, 1, 1, 0, 0, 1, 1, 0, 1, 0, 1, 0, 0, 1, 0, 1, 0, 1, 1, 0, 1, 0, 0, 1, 1, 0, 0, 1, 1, 0, 0, 1, 1, 0, 1, 0, 1, 0, 1, 0, 0, 1, 1,
0, 1, 0, 0, 1, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 0, 1, 1, 0, 1, 0, 0, 1, 0, 1, 0, 1, 0, 1,
0, 1, 0, 1, 0, 1, 1, 0, 0, 1, 1, 0, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 0,
1, 0, 1, 0, 1, 1, 0, 1, 0, 0, 1]; or

[0, 1, 0, 1, 0, 1, 0, 1, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1,
0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 1, 0, 1, 0, 0, 1, 1, 0, 1, 0, 0, 1, 0, 1, 0, 1,
1, 0, 0, 1, 1, 0, 0, 1, 0, 1, 0, 1, 0, 1, 0, 1, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1, 1, 0, 1,
0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 0, 1, 0, 1, 1, 0, 0, 1, 0, 1, 1, 0, 0, 1, 1, 0,
0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 0,
1, 1, 0, 1, 0, 1, 0, 0, 1, 0, 1]; or

[0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 1, 0, 1, 0, 1, 0, 1, 0, 1, 0, 1,
0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 1, 0, 0, 1,
0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 1, 0, 0, 1, 1, 0, 0, 1, 0, 1, 0, 1, 0, 1, 0, 1, 0, 1, 0, 1, 1,
0, 1, 0, 0, 1, 1, 0, 1, 0, 0, 1, 0, 1, 0, 1, 1, 0, 0, 1, 1, 0, 0, 1, 0, 1, 0, 1, 0, 1, 0, 1, 0, 1, 1, 0, 1, 0, 0, 1, 0, 1, 0, 1, 1, 0, 1, 0, 1, 0, 1, 0,
1, 0, 1, 0, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 0, 1, 0, 1, 0, 1, 1, 0, 0, 1, 1, 0, 0, 1, 0, 1, 1,
0, 1, 0, 0, 1, 1, 0, 1, 0, 0, 1]; or

[0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 0, 1, 1, 0, 0, 1, 0, 1, 1,
0, 0, 1, 1, 0, 1, 0, 1, 0, 0, 1, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0,
0, 1, 1, 0, 1, 0, 0, 1, 1, 0, 0, 1, 0, 1, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 1, 0, 0,
1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 0, 0, 1, 1, 0,
1, 0, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 1, 0, 0, 1, 1,
0, 1, 0, 0, 1, 1, 0, 0, 1, 0, 1]; or

[0, 1, 0, 1, 1, 0, 0, 1, 1, 0, 1, 0, 0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1,
0, 1, 0, 1, 0, 0, 1, 1, 0, 1, 0, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 0, 1, 1, 0, 1, 0, 1, 0,
1, 0, 1, 0, 0, 1, 0, 1, 0, 1, 0, 1, 1, 0, 1, 0, 1, 0, 1, 0, 1, 0, 0, 1, 0, 1, 0, 1, 0, 1, 1, 0, 0, 1, 0, 1, 0, 1, 1, 0, 0, 1, 1, 0, 1, 0, 1, 0, 0, 1, 0,
1, 1, 0, 0, 1, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0,
0, 1, 1, 0, 1, 0, 1, 0, 0, 1, 1, 0, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 0,
1, 1, 0, 1, 0, 1, 0, 1, 0, 0, 1]; or

[0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 1,
0, 0, 1, 0, 1, 1, 0, 0, 1, 1, 0, 0, 1, 1, 0, 0, 1, 0, 1, 0, 1, 0, 1, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0,
1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 0, 1, 1, 0, 1, 0, 0, 1, 1, 0, 1, 0, 0, 0,
1, 0, 1, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 0, 1, 0, 1, 0, 1,
0, 1, 0, 1, 0, 1, 1, 0, 1, 0, 1, 0, 1, 0, 1, 0, 1, 0, 0, 1, 0, 1, 1, 0, 1, 0, 0, 1, 0, 1, 0, 1, 0, 1, 0, 1, 0, 0, 1, 0, 1, 1, 0, 1, 0, 0, 1, 0, 1, 0,
1, 0, 1, 1, 0, 1, 0, 0, 1, 0, 1]; or

[0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 0, 1, 0, 1, 1, 0, 1, 0, 1, 0, 1, 0, 1,
0, 1, 0, 0, 1, 0, 1, 0, 1, 0, 1, 0, 1, 0, 1, 0, 1, 1, 0, 0, 1, 1, 0, 0, 1, 1, 0, 1, 0, 1, 0, 0, 1, 1, 0, 0, 1, 1, 0, 0, 1, 0, 1, 1, 0, 1, 0, 1, 0, 0, 1, 1, 0,
0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 1, 0, 0, 1, 1, 0, 0, 1, 1, 0, 0, 1, 0, 1, 0, 1, 1,
0, 0, 1, 0, 1, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 1, 0, 0, 0, 1,
1, 0, 0, 1, 0, 1, 1, 0, 1, 0, 0, 1, 1, 0, 0, 1, 0, 1, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 0, 0, 1, 1,
0, 0, 1, 0, 1, 1, 0, 1, 0, 0, 1]; or

[0, 1, 1, 0, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 0, 0,
1, 1, 0, 1, 0, 0, 1, 0, 1, 0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 1, 0, 0, 1, 0, 1, 1, 0, 0, 1, 1, 0, 0, 0, 1,
1, 0, 0, 1, 1, 0, 1, 0, 1, 0, 1, 0, 1, 0, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1, 0, 1, 0, 1, 1, 0, 1, 0, 1, 1,
0, 0, 1, 1, 0, 0, 1, 0, 1, 0, 1, 1, 0, 0, 1, 0, 1, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 1, 0,
1, 0, 1, 0, 0, 1, 1, 0, 0, 1, 1, 0, 1, 0, 1, 0, 1, 0, 0, 1, 1, 0, 0, 1, 1, 0, 1, 0, 1, 0, 1, 0, 1, 0, 1, 1, 0, 1, 0, 0, 1, 0, 1, 0,
1, 0, 1, 1, 0, 1, 0, 0, 1, 0, 1]; or

[0, 1, 0, 1, 0, 1, 0, 0, 1, 0, 1, 0, 1, 0, 1, 1, 0, 1, 0, 0, 1, 0, 1, 0, 1, 0, 1, 0, 1, 1, 0, 1, 0, 0, 1, 0, 1, 1, 0, 1, 0, 1, 0, 1, 0, 1, 0, 1, 0, 1,
0, 1, 0, 0, 1, 1, 0, 0, 1, 1, 0, 1, 0, 1, 0, 1, 0, 1, 0, 1, 1, 0, 1, 0, 0, 1, 0, 1, 0, 1, 0, 1, 0, 1, 0, 1, 1, 0, 1, 0, 0, 1, 1, 0, 1, 0, 1, 0, 0, 1, 1, 0,
0, 1, 1, 0, 0, 1, 1, 0, 1, 0, 1, 0, 1, 0, 1, 0, 1, 1, 0, 1, 0, 0, 1, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1,
0, 1, 0, 1, 1, 0, 0, 1, 0, 1, 0, 1, 1, 0, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 0, 1, 0, 1, 0, 1, 0, 1,
0, 1, 0, 1, 0, 1, 1, 0, 1, 0, 0, 0, 1, 1, 0, 0, 1, 1, 0, 1, 0, 1, 0, 1, 0, 1, 1, 0, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1,
0, 1, 0, 1, 0, 0, 1, 1, 0, 0, 1]; or

[0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 0,
1, 0, 1, 1, 0, 1, 0, 1, 0, 1, 0, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 1, 0, 1, 0, 0, 1, 0, 1, 0, 1,
0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 1, 0, 1, 0, 1, 1,
0, 1, 0, 0, 1, 0, 1, 1, 0, 0, 1, 1, 0, 1, 0, 1, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 0, 1, 1, 0,
0, 1, 1, 0, 0, 1, 1, 0, 1, 0, 0, 1, 1, 0, 0, 1, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1, 0,
1, 1, 0, 0, 1, 0, 1, 1, 0, 0, 1]; or

[0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 0, 1, 0, 1, 0,
1, 0, 1, 1, 0, 1, 0, 1, 0, 1, 0, 1, 0, 1, 0, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1,
0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1, 0, 1, 1, 0, 0, 1, 0, 1, 0, 1, 1,
0, 0, 1, 0, 1, 1, 0, 0, 1, 1, 0, 1, 0, 0, 1, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 0, 1, 0, 1, 0,
0, 1, 1, 0, 0, 1, 1, 0, 1, 0, 0, 1, 1, 0, 0, 1, 0, 1, 0, 1, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 1, 1, 0, 1, 0, 0, 0, 1, 0, 1, 1,

0, 1, 0, 0, 1, 0, 1, 0, 1, 0, 1]; or

[0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 1, 0, 1, 0, 1, 0, 1, 0, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 1, 0, 1, 0, 0, 1, 1, 0, 0, 1]; or

[0, 1, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 1, 0, 0, 1, 0, 1, 1, 0, 0, 1, 1, 0, 0, 1, 1, 0, 1, 0, 0, 1, 0, 1, 1, 0, 1, 0, 0, 1, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 1, 0, 1, 0, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 1, 0, 1, 0, 1, 0, 1, 1, 0, 1, 0, 1, 0, 1, 0, 0, 1, 0, 1, 0, 1, 1, 0, 1, 0, 0, 1, 0, 1, 0, 1, 0, 1, 0, 1, 1, 0, 1, 0, 1, 0, 1, 0, 1, 0, 1, 0, 0, 1, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 0, 1, 0, 1, 0, 1, 0, 1, 0, 1, 0, 1, 0, 1, 1, 0, 1, 0, 0, 1, 0, 1, 0, 1, 0, 1, 1, 0, 1, 1, 0, 1, 0, 0, 1, 0, 1, 0, 1]; or

[0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 1, 0, 1, 0, 1, 0, 0, 1, 0, 1, 1, 0, 1, 0, 1, 0, 1, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 1, 0, 1, 0, 1, 0, 1, 0, 1, 0, 0, 1, 0, 1, 0, 1, 1, 0, 1, 0, 1, 0, 1, 0, 1, 0, 1, 1, 0, 1, 0, 1, 0, 0, 1, 0, 1, 1, 0, 1, 0, 1, 0, 1, 0, 1, 0, 1, 0, 1, 0, 1, 0, 1, 1, 0, 0, 1, 1, 0, 0, 1, 1, 0, 1, 0, 0, 1, 1, 0, 0, 1, 1, 0, 1, 0, 1, 0, 0, 1, 0, 1, 1, 0, 1, 0, 0, 1, 1, 0, 0, 1, 1, 0, 0, 1, 1, 0, 0, 1, 1, 0, 1, 0, 0, 1, 1, 0, 0, 1, 0, 1, 0, 1, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 1, 0, 0, 1, 1]; or [0, 1, 1, 0, 1, 0, 1, 0, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 0, 1, 1, 0, 0, 1, 0, 1, 1, 0, 0, 1, 0, 1, 0, 1, 0, 1, 0, 1, 0, 1, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 0, 1, 0, 1, 0, 1, 1, 0, 1, 0, 1, 0, 1, 0, 1, 0, 0, 1, 1, 0, 0, 1, 0, 1, 0, 1, 0, 1, 0, 1, 1, 0, 1, 0, 1, 0, 1, 0, 0, 1, 1, 0, 1, 0, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 0, 1, 1, 0, 0, 1, 1, 0, 1]; or

[0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 1, 0, 1, 0, 1, 0, 1, 0, 0, 1, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 0, 1, 0, 0, 1, 0, 1, 0, 1, 1, 0, 0, 1, 0, 1, 0, 1, 0, 1, 1, 0, 0, 1, 0, 1, 0, 0, 1, 1, 0, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 1, 0, 1, 0, 1, 0, 1, 0, 0, 1]; or

[0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 0, 1, 0, 1, 0, 1, 0, 1, 1, 0, 1, 0, 1, 0, 1, 0, 1, 0, 0, 1, 1, 0, 1, 0, 1, 0, 1, 0, 0, 1, 0, 1, 0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 0, 0, 1, 1, 0, 1, 0, 1, 0, 0, 1, 1, 0, 1, 0, 1, 0, 0, 1, 1, 0, 0, 1, 0, 1, 0, 1, 0, 1, 1, 0, 0, 1, 0, 1, 0, 1, 1, 0, 0, 1, 0, 1, 0, 1, 0, 1, 1, 0, 1]; or

[0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 1, 0, 1, 0, 1, 0, 1, 0, 0, 1, 0, 1, 1, 0, 0, 1, 1, 0, 1, 0, 1, 0, 1, 0, 0, 1, 1, 0, 1, 0, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 1, 0, 0, 1, 0, 1, 0, 1, 1, 0, 1, 0, 1, 0, 1, 0, 0, 1, 1, 1, 0, 0, 1, 0, 1, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 1, 1, 0, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 0, 1, 0, 0, 1, 1, 0, 1, 0, 1, 0, 0, 1, 1, 0, 0, 1, 0, 1, 0, 1, 0, 1, 0, 1, 1, 0, 0, 1, 0, 1]; or

[0, 1, 0, 1, 1, 0, 0, 1, 1, 0, 1, 0, 1, 0, 0, 1, 0, 1, 0, 1, 1, 0, 0, 1, 1, 0, 1, 0, 0, 1, 0, 1, 0, 1, 0, 1, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 1, 0, 1, 0, 1, 0, 0, 1, 1, 0, 0, 1, 1, 0, 0, 1, 1, 0, 1, 0, 1, 0, 1, 0, 0, 1, 0, 1, 0, 1, 1, 0, 1, 0, 0, 1, 0, 1, 0, 1, 0, 1, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 0, 1, 0, 1, 0, 1, 1, 0, 1, 0, 0, 1, 0, 1, 0, 1, 0, 1, 0, 1, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 0, 1, 0, 1, 0, 1, 0, 1]; or

[0, 1, 0, 1, 0, 1, 0, 1, 0, 1, 1, 0, 1, 0, 0, 0, 1, 1, 0, 1, 0, 1, 0, 1, 0, 1, 0, 1, 0, 1, 0, 0, 1, 0, 1, 1, 0, 0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 0, 1, 0, 1, 0, 1, 1, 0, 0, 1, 0, 1, 0, 1, 1, 0, 0, 1, 1, 0, 1, 0, 0, 1, 0, 1, 1, 0, 0, 1, 1, 0, 0, 1, 0, 1, 0, 1, 0, 1, 0, 1, 1, 0, 0, 1, 0, 1, 0, 1, 0, 1, 0, 1, 1, 0, 0, 1, 0, 1, 0, 1, 0, 1, 1, 0, 0, 1, 0, 1, 0, 1, 0, 1, 0, 0, 1, 1, 0, 1, 0, 0, 1, 1, 0, 0, 1, 0, 1, 0, 1, 0, 1, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1, 0, 0, 1, 1, 0, 0, 1, 1, 0, 1, 0, 0, 1, 0, 1, 1, 0, 1, 0,
1, 0, 1, 0, 1, 0, 0, 1, 0, 1, 1, 0, 0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 1, 0, 0, 1, 1,
0, 0, 1, 1, 0, 1, 0, 0, 1, 0, 1]; or

[0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0,
1, 1, 0, 0, 1, 1, 0, 1, 0, 1, 0, 0, 1, 0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 0, 1,
1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 0, 1, 0, 1, 0, 1, 1, 0, 0, 1, 0, 1, 1, 0, 0, 1, 0,
1, 0, 1, 0, 1, 1, 0, 0, 1, 0, 1, 1, 0, 0, 1, 1, 0, 0, 1, 1, 0, 1, 0, 1, 0, 0, 1, 0, 1, 0, 1, 1, 0, 0, 1, 1, 0, 1, 0, 1, 0, 0, 1, 0, 1, 1, 0, 1, 0,
1, 0, 1, 0, 0, 1, 1, 0, 1, 0, 0, 1, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 1, 0, 0,
1, 1, 0, 1, 0, 1, 0, 0, 1, 0, 1]; or

[0, 1, 0, 1, 0, 1, 1, 0, 1, 0, 0, 1, 1, 0, 1, 0, 0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 1,
0, 1, 0, 0, 1, 1, 0, 0, 1, 1, 0, 1, 0, 1, 0, 0, 1, 0, 1, 0, 1, 1, 0, 1, 0, 1, 0, 0, 1, 1, 0, 1, 0, 1, 0, 1, 0, 1, 0, 0, 1, 0, 1, 1, 0, 0, 1, 0, 1,
0, 1, 1, 0, 0, 1, 1, 0, 0, 1, 0, 1, 0, 1, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 1,
0, 1, 0, 0, 1, 0, 1, 1, 0, 0, 1, 0, 1, 1, 0, 1, 0, 0, 1, 1, 0,0, 1, 1, 0, 1, 0, 1, 0, 0, 1, 0, 1, 1, 0, 0, 1, 1, 0, 0, 1, 0, 1, 0, 1, 0, 1, 0, 1,
0, 1, 1, 0, 1, 0, 0, 1, 1, 0, 1,0,0, 1, 0, 1, 0, 1, 1, 0, 1, 0, 0, 1, 1, 0, 1, 0, 0, 1, 0, 1, 1, 0, 0, 1, 1, 0, 0, 1, 0, 1, 0, 1, 0, 1, 0, 1,
1, 0,0, 1, 1, 0, 0, 1, 0, 1, 0, 1]; or

[0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 1, 0, 0, 1, 0,
1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 1, 0,
0, 1, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 0, 1, 0, 1, 0, 1, 0, 1, 1, 0, 0, 1, 0, 1, 1,
0, 1, 0, 1, 0, 1, 0, 1, 0, 0, 1, 1, 0, 1, 0, 0, 1, 1, 0, 1, 0, 1, 0, 0, 1, 0, 1, 0, 1, 1, 0, 0, 1, 1, 0, 0, 1, 0, 1, 1, 0, 1, 0, 1, 0, 0, 1, 1, 0, 0, 1,
0, 1, 0, 1, 0, 1, 0, 1, 1, 0, 0, 1, 1, 0, 0, 1, 0, 1, 0, 1, 0, 1, 0, 1, 1, 0, 0, 1, 0, 1, 1, 0, 0, 1, 0, 1, 1, 0, 1, 0, 1, 0, 0, 1, 0, 1, 1, 0, 0,
1, 0, 1, 1, 0, 1, 0, 1, 0, 0, 1]; or

[0, 1, 0, 1, 0, 1, 1, 0, 0, 1, 1, 0, 0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 0, 1, 0, 1, 1,
0, 1, 0, 0, 1, 1, 0, 1, 0, 0, 1, 0, 1, 0, 1, 0, 1, 0, 1, 1, 0, 0, 1, 1, 0, 0, 1, 0, 1, 1, 0, 1, 0, 1, 0, 1, 0, 0, 1, 1, 0, 0, 1, 1, 0, 1, 0, 0, 1,
0, 1, 1, 0, 0, 1, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0, 0, 1, 1, 0, 0, 1, 1, 0, 1, 0, 1, 0, 0, 1, 0,
1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 0, 1, 1, 0, 1, 0, 0, 1, 0, 1, 0, 1, 1, 0, 1, 0, 1, 0,
1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0, 1, 0, 0, 1, 1, 1, 0, 1, 0, 0, 1, 0, 1, 0, 1]; or

[0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 0, 1, 1, 0, 0, 1, 0, 1, 0, 1, 0, 1, 0, 1, 1, 0, 0,
1, 1, 0, 0, 1, 0, 1, 0, 1, 0, 1, 0, 1, 1, 0, 0, 1, 1, 0, 1, 0, 1, 0, 0, 1, 0, 1, 1, 0, 0, 1, 1, 0, 0, 1, 0, 1, 0, 1, 1, 0, 0, 1, 1, 0, 1, 0, 1, 0,
0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 0, 1, 1, 0, 1, 0, 1, 0, 1, 0, 0, 1, 0, 1, 1, 0, 0, 1, 1, 0, 0,
1, 0, 1, 0, 1, 1, 0, 1, 0, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 0, 1, 0, 1, 1, 0,
1, 0, 1, 0, 0, 1, 0, 1, 1, 0, 0, 1, 0, 1, 1, 0, 0, 1, 0, 1, 1, 0, 1, 0, 1, 0, 1, 0, 1, 0, 0, 1, 1, 0, 0, 1, 1,
0, 1, 0, 1, 0, 1, 0, 1, 0, 0, 1]; or

[0, 1, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 1,
0, 1, 0, 0, 1, 0, 1, 1, 0, 1, 0, 1, 0, 1, 0, 0, 1, 1, 0, 0, 1, 1, 0, 1, 0, 1, 0, 0, 1, 1, 0, 1, 0, 1, 0, 1, 0, 1, 0, 0, 1, 0, 1, 1, 0, 1, 0, 1, 0,
0, 1, 0, 1, 1, 0, 0, 1, 1, 0, 0, 1, 1, 0, 1, 0, 1, 0, 1, 0, 0, 1, 0, 1, 0, 1, 0, 1, 0, 1, 1, 0, 0, 1, 1, 0, 0, 1, 1, 0, 0, 1, 0, 1, 1, 0, 0, 1, 0,
1, 0, 1, 0, 1, 0, 1, 0, 0, 1, 1, 0, 1, 0, 0, 1, 1, 0, 1, 0, 0, 1, 0, 1, 1, 0, 0, 1, 1, 0, 0, 1, 0, 1, 1, 0, 1, 0, 1, 0, 0, 1, 0, 1, 0, 1, 0, 1, 0, 1, 1, 0,
0, 1, 1, 0, 1, 0, 0, 1, 0, 1, 1, 0, 1, 0, 1, 0, 1, 0, 1, 0, 0, 1, 0, 1, 1, 0, 1, 0, 1, 0, 1, 0, 1, 0, 0, 1, 1, 0, 1, 0, 1,
0, 1, 0, 1, 0, 1, 0, 1, 0, 0, 1]; or

[0, 1, 0, 1, 0, 1, 0, 1, 0, 1, 0, 1, 1, 0, 1, 0, 1, 0, 0, 1, 1, 0, 0, 1, 1, 0, 0, 1, 0, 1, 1, 0, 1, 0, 1, 0, 0, 1, 1, 0, 1, 0, 1, 0, 1, 0, 1, 0, 1,
0, 0, 1, 0, 1, 1, 0, 1, 0, 0, 1, 1, 0, 0, 1, 0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 1, 0,
1, 0, 0, 1, 0, 1, 0, 1, 0, 1, 0, 1, 1, 0, 0, 1, 0, 1, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 0, 0,
1, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0,
1, 0, 1, 0, 0, 1, 0, 1, 1, 0, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 1, 0, 1,
0, 0, 1, 1, 0, 0, 1, 1, 0, 0, 1]; or

[0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 0,
1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 1, 0, 1, 0, 0, 1, 1, 0, 0, 1, 1, 0, 0, 1, 1, 0, 1, 0,
1, 0, 1, 0, 1, 0, 0, 1, 0, 1, 1, 0, 1, 0, 1, 0, 0, 1, 1, 0, 0, 1, 0, 1, 1, 0, 1, 0, 1, 0, 0, 1, 1, 0, 0, 1, 0, 1, 1, 0, 0, 1, 1, 0, 0, 1, 1, 0, 0, 1, 0,
1, 1, 0, 1, 0, 1, 0, 1, 0, 1, 0, 1, 0, 0, 1, 1, 0, 0, 1, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0,
0, 1, 0, 1, 0, 1, 0, 1, 0, 1, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 0, 1, 1,
0, 0, 1, 0, 1, 1, 0, 1, 0, 0, 1]; or

[0, 1, 1, 0, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0,
1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 1, 0,
1, 0, 1, 0, 1, 0, 0, 1, 0, 1, 1, 0, 1, 0, 0, 1, 1, 0, 0, 1, 1, 0, 1, 0, 0, 1, 0, 1, 1, 0, 0, 1, 1, 0, 1, 0, 0, 1, 1, 0, 0, 1, 0, 1, 0, 1, 0, 1, 0,
1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 0, 1, 1, 0, 1, 0, 0, 1, 0, 1, 1, 0, 1, 0, 1, 0,
0, 1, 0, 1, 0, 1, 0, 1, 0, 1, 1, 0, 0, 1, 0, 1, 1, 0, 0, 1, 1, 0, 0, 1, 1, 0, 1, 0, 1, 0, 1, 0, 1, 1, 0, 1, 0, 0, 1, 0, 1, 1, 0, 0, 1, 1,
0, 0, 1, 0, 1, 1, 0, 1, 0, 0, 1]; or

[0, 1, 1, 0, 1, 0, 0, 1, 0, 1, 1, 0, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 0, 1, 0, 1, 0, 1, 0, 1, 0, 1, 0, 1, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 0, 1, 1, 0, 0, 1, 1, 0, 1, 0,
1, 0, 1, 0, 1, 0, 1, 0, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1,
0, 0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 0, 1, 0, 1,
1, 0, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 0, 1, 1, 0, 0,
1, 1, 0, 0, 1, 1, 0, 1, 0, 0, 1]; or

[0, 1, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0,
1, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 1, 0, 1, 0, 0, 1, 0, 1, 1, 0, 0, 1, 1, 0, 1, 0, 1, 0,
1, 0, 1, 0, 1, 0, 1, 0, 0, 1, 0, 1, 0, 1, 1, 0, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 1, 0, 1,
0, 0, 1, 0, 1, 1, 0, 1, 0, 1, 0, 1, 0, 0, 1, 1, 0, 0, 1, 1, 0, 0, 1, 1, 0, 1, 0, 0, 1, 1, 0, 1, 0, 1, 0, 1, 0, 1, 0, 1, 0, 0, 1, 0, 1, 0, 1, 0, 1,
1, 0, 1, 0, 0, 1, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 1, 0, 0,
1, 1, 0, 0, 1, 1, 0, 1, 0, 0, 1]; or

[0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1,
0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 1, 0, 0, 1, 0, 1,
1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 0, 1, 1,
0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1,
1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 0, 1, 1, 0, 0, 1, 1, 0, 1, 0, 1, 0, 1,
0, 1, 0, 0, 1, 0, 1, 0, 1, 0, 1]; or

[0, 1, 0, 1, 1, 0, 1, 0, 1, 0, 1, 0, 0, 1, 0, 1, 0, 1, 1, 0, 1, 0, 1, 0, 0, 1, 0, 1, 1, 0, 1, 0, 1, 0, 0, 1, 1, 0, 0, 1, 1, 0, 0, 1, 0, 1, 1, 0, 0, 1, 1, 0, 1, 0, 1,
0, 1, 0, 1, 0, 1, 0, 1, 0, 1, 0, 0, 1, 0, 1, 1, 0, 1, 0, 0, 1, 0, 1, 1, 0, 1, 0, 0, 1, 1, 0, 1, 0, 1, 0, 0, 1, 1, 0, 1, 0, 0, 1, 0, 1, 1, 0, 1, 0, 0, 1,
1, 0, 0, 1, 1, 0, 0, 1, 1, 0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 0,
1, 1, 0, 1, 0, 0, 1, 0, 1, 1, 0, 0, 1, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0,
1, 0, 0, 1, 0, 1, 1, 0, 1, 0, 0, 1, 1, 0, 1, 0, 0, 0, 1, 1, 0, 0, 1, 0, 1, 1, 0, 1, 0, 0, 1, 1, 0, 0, 1, 1, 0, 0, 1, 1, 0, 0, 1, 1, 0, 1, 0, 1, 0, 1,
0, 0, 1, 0, 1, 0, 1, 0, 1]; or

[0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 1,
0, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 0, 1, 1, 0,
1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 0, 1, 1,
0, 0, 1, 1, 0, 0, 1, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 1, 0,
1, 0, 1, 0, 1, 0, 1, 0, 1, 0, 0, 1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 0, 1, 0, 1, 1, 0, 1,
0, 1, 0, 1, 0, 0, 1, 0, 1]; or

[0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 0, 1, 1, 0, 1,
0, 0, 1, 0, 1, 1, 0, 1, 0, 0, 1, 0, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1,
0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 1, 0, 0,
1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0,
1, 0, 1, 0, 1, 0, 1, 0, 1, 0, 0, 1, 1, 0, 0, 1, 0, 1, 1, 0, 0, 1, 0, 1, 1, 0, 0, 1, 1, 0, 0, 1, 0, 1, 1, 0, 1, 0, 0, 1, 0, 1, 0, 1, 1, 0, 1,
0, 1, 0, 1, 0, 0, 1, 0, 1]; or

[0, 1, 0, 1, 0, 1, 0, 1, 1, 0, 1, 0, 1, 0, 1, 0, 1, 0, 0, 1, 0, 0, 1, 1, 0, 1, 0, 0, 1, 1, 0, 0, 1, 1, 0, 0, 1, 0, 1, 1, 0, 1, 0, 0, 1, 1, 0, 1, 0, 0, 1, 1, 0, 0, 1, 1, 0,
0, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1,
0, 1, 1, 0, 1, 0, 0, 1, 0, 1, 1, 0, 1, 0, 1, 0, 0, 1, 0, 1, 0, 1, 0, 1, 1, 0, 1, 0, 0, 1, 0, 1, 0, 1, 1, 0, 1, 0, 1, 0, 1, 0, 0, 1, 1, 0, 0,
1, 1, 0, 0, 1, 1, 0, 1, 0, 0, 1, 1, 0, 1, 0, 0, 1, 1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 1, 0,
1, 0, 1, 0, 1, 0, 1, 0, 1, 0, 0, 1, 1, 0, 0, 1, 0, 1, 1, 0, 0, 1, 0, 1, 1, 0, 0, 1, 1, 0, 1, 0, 0, 1, 0, 1, 1, 0, 1, 0, 0, 1, 0, 1, 0, 1, 1, 0, 1,
0, 1, 0, 1, 0, 0, 1, 0, 1]; or

[0, 1, 0, 1, 0, 1, 0, 1, 1, 0, 1, 0, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 0, 1, 0, 1, 1, 0, 0, 1, 1, 0, 1, 0, 0, 0, 1, 1,
0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 0, 1, 0, 1, 1, 0, 1, 0, 0, 1, 1, 0, 0, 1, 1, 0,
1, 0, 0, 1, 0, 1, 0, 1, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 0, 1,
1, 1, 0, 1, 0, 0, 1, 0, 1, 1, 0, 1, 0, 1, 0, 0, 1, 0, 1, 1, 0, 0, 1, 1, 0, 1, 0, 0, 1, 0, 1, 1, 0, 0, 1, 1, 0, 1, 0, 0, 1, 1, 0, 0, 1, 1, 0, 0, 1,
1, 0, 0, 1, 0, 1, 1, 0, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 0,
1, 0, 1, 0, 1, 0, 1, 0, 0, 1]; or

[0, 1, 0, 1, 0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1,
1, 1, 0, 0, 1, 1, 0, 0, 1, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 0, 1,
0, 1, 1, 0, 1, 0, 1, 0, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1,
1, 0, 1, 0, 1, 0, 1, 0, 1, 0, 1, 1, 0, 0, 1, 1, 0, 1, 0, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 0,
1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0, 0, 1, 0, 1, 0, 1, 0,
1, 0, 1, 0, 1, 0, 1, 0, 1]; or

[0, 1, 0, 1, 1, 0, 1, 0, 1, 0, 1, 0, 1, 0, 0, 1, 0, 1, 1, 0, 1, 0, 0, 1, 0, 1, 1, 0, 0, 1, 1, 0, 1, 0, 0, 1, 1, 0, 1, 0, 0, 1, 1, 0, 0, 1, 0, 1, 1, 0, 0, 1, 1, 0, 1, 0, 0, 1, 1,
0, 0, 1, 0, 1, 1, 0, 1, 0, 0, 1, 1, 0, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 1, 0,
1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 0, 1, 0, 1, 0, 1,
0, 1, 0, 1, 1, 0, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 1, 0, 1, 0,
0, 1, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 0, 0, 1, 0, 1, 0, 1, 1, 0, 1, 0, 1, 0, 1, 0, 1, 0,
1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 0, 1, 0, 1, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1]; or

[0, 1, 0, 1, 0, 1, 0, 1, 0, 1, 0, 1, 0, 1, 0, 1, 0, 1, 1, 0, 1, 0, 1, 0, 1, 0, 0, 1, 0, 1, 1, 0, 0, 1, 0, 1, 1, 0, 1, 0, 0, 1, 0, 1, 1, 0, 1,
0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1, 1, 0, 1, 0,
1, 0, 0, 1, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1,
0, 0, 1, 0, 1, 0, 1, 0, 1, 1, 0, 1, 0, 0, 1, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 0, 1, 1, 0,
0, 1, 1, 0, 0, 1, 1, 0, 0, 1, 1, 0, 0, 1, 1, 0, 1, 0, 0, 1, 1, 0, 0, 1, 0, 1, 1, 0, 1, 0, 1, 0, 0, 1, 0, 1, 1, 0, 1, 0, 0, 1, 0, 1, 1, 0, 1, 0, 1,
0, 1, 0, 0, 1, 0, 1, 0, 1, 0, 1]; or

[0, 1, 0, 1, 1, 0, 1, 0, 0, 1, 0, 1, 1, 0, 1, 0, 0, 1, 0, 1, 0, 1, 0, 1, 1, 0, 1, 0, 1, 0, 1, 0, 1, 0, 1, 0, 0, 1, 1, 0, 0, 1, 1, 0, 0, 1, 1, 0, 0, 1, 1, 0, 0,
1, 0, 1, 1, 0, 0, 1, 1, 0, 1, 0, 0, 1, 0, 1, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 1, 0, 1, 0, 1, 0,
1, 0, 1, 0, 1, 0, 1, 0, 1, 0, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 0,
1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 1, 0, 0, 1, 1, 0, 0, 1, 0, 1,
1, 0, 1, 0, 0, 1, 0, 1, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 1, 0, 1,
0, 1, 0, 1, 0, 0, 1, 0, 1]; or

[0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0,
1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0, 0, 1,
0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 1, 0, 1, 0, 0, 1, 0,
1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 1, 0, 0, 1,
1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 0, 1, 0, 1, 1, 0, 1, 0, 1, 0, 1, 0, 1,
0, 1, 0, 0, 1, 0, 1, 0, 1, 0, 1]; or

[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1,
0, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 1, 0, 0, 1, 1, 0, 1, 0, 1, 0, 1,
0, 1, 0, 1, 0, 1, 0, 1, 0, 1, 1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1,
0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 1, 0,
0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1,
0, 1, 0, 1, 0, 0, 1, 0, 1]; or

[0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1,
0, 1, 0, 0, 1, 0, 1, 1, 0, 1, 0, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 0, 1, 1, 0,
0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 0, 1, 0, 1, 1, 0, 0, 1, 1, 0, 0, 1, 1, 0, 1, 0, 0, 1, 0, 1, 1, 0, 0,
1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 0, 1, 0, 1,
1, 0, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0,
1, 1, 0, 1, 0, 0, 1, 0, 1]; or

[0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 0, 1,
1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 0, 1, 0, 1, 0, 1, 0, 1, 1, 0, 0,
1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 0, 1, 1, 0, 1, 0, 0, 1, 0, 1, 1, 0, 1, 0, 0, 1, 0, 1, 1, 0,
0, 1, 1, 0, 1, 0, 0, 1, 1, 0, 0, 1, 0, 1, 0, 1, 0, 1, 0, 1, 0, 1, 1, 0, 1, 0, 1, 0, 1, 0, 0, 1, 0, 1, 0, 1, 1, 0, 1, 0, 0, 1, 1, 0, 1, 0,
0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0,
1, 0, 1, 0, 1, 0, 0, 1, 0, 1]; or

[0, 1, 0, 1, 1, 0, 1, 0, 1, 0, 0, 1, 0, 1, 1, 0, 1, 0, 0, 0, 1, 0, 1, 1, 0, 1, 0, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1,
0, 0, 1, 1, 0, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 1, 0, 1, 0, 1, 0,
0, 1, 0, 1, 1, 0, 0, 1, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1,
1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 1, 0,
1, 0, 0, 1, 1, 0, 0, 1, 1, 0, 0, 1, 1, 0, 0, 1, 0, 1, 0, 1, 0, 1, 0, 0, 1, 0, 1, 1, 0, 0, 1, 1, 0, 1, 0, 0, 0, 1, 1, 0, 1, 0, 0, 0, 1, 1, 0, 0, 1, 0, 1, 1,
0, 1, 0, 1, 0, 0, 1, 0, 1]; or

[0, 1, 1, 0, 1, 0, 0, 1, 0, 1, 0, 1, 1, 0, 1, 0, 1, 0, 1, 0, 1, 0, 0, 1, 0, 1, 1, 0, 0, 1, 0, 1, 1, 0, 1, 0, 0, 1, 1, 0, 1, 0, 1, 0, 0, 1, 1, 0, 0, 1, 0, 1, 0, 1, 0, 1, 0,
1, 0, 1, 0, 1, 0, 1, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 0, 1,
1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 1, 0, 0, 1, 0, 1, 1, 0, 1, 0, 1, 0, 1, 0, 0, 1, 0, 1, 0, 1, 0,
1, 1, 0, 1, 0, 0, 1, 1, 0, 1, 0, 0, 0, 1, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 1, 0, 1, 0, 0, 0, 1,
1, 0, 0, 1, 1, 0, 1, 0, 1, 0, 1, 0, 0, 1, 0, 1, 0, 1, 0, 1, 0, 1, 1, 0, 0, 1, 1, 0, 0, 1, 1, 0, 1, 0, 0, 0, 1, 1, 0, 1, 0, 0, 0, 1, 1, 0, 1, 0, 1, 0, 0, 0,
1, 0, 1, 0, 1, 1, 0, 1, 0, 0, 1]; or

[0, 1, 0, 1, 1, 0, 1, 0, 1, 0, 0, 1, 0, 1, 1, 0, 0, 1, 1, 0, 1, 0, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 1, 0,
0, 1, 1, 0, 0, 1, 1, 0, 1, 0, 1, 0, 1, 0, 0, 1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1,
0, 0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 0, 1, 0, 1, 1, 0, 1, 0, 0, 0, 1, 1, 0, 0, 1, 0, 1, 1, 0, 0, 1,
0, 1, 1, 0, 0, 1, 0, 1, 1, 0, 1, 0, 0, 1, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 0, 1,
1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 1, 0, 0, 1, 0, 1, 1, 0, 1, 0, 0, 0, 1, 0, 1,
1, 0, 1, 0, 1, 0, 0, 1, 0, 1]; or

[0, 1, 1, 0, 1, 0, 0, 1, 0, 1, 0, 1, 1, 0, 1, 0, 0, 1, 1, 0, 1, 0, 0, 1, 1, 0, 1, 0, 0, 1, 1, 0, 0, 1, 1, 0, 0, 1, 1, 0, 0, 1, 0, 1, 0, 1, 0, 1, 0, 1, 0, 1, 0, 1, 1,
0, 1, 0, 1, 0, 1, 0, 0, 1, 1, 0, 0, 1, 1, 0, 1, 0, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 0, 0, 1, 1,
0, 0, 1, 0, 1, 1, 0, 0, 1, 0, 1, 1, 0, 1, 0, 0, 0, 1, 0, 1, 1, 0, 1, 0, 1, 0, 0, 1, 0, 1, 1, 0, 1, 0, 0, 0, 1, 0, 1, 1, 0, 1, 0, 0, 0, 1, 0, 1, 0, 1, 1, 0, 1, 0, 0, 1, 1, 0, 1, 0, 0, 1, 1, 0, 1, 0, 0, 1, 1, 0, 0, 1, 1, 0, 0, 1, 0, 1, 0, 1, 0, 1, 0, 1, 1, 0, 1, 0, 1, 0, 1, 0, 0, 1, 1, 0, 0, 1, 1, 0, 0, 1, 1, 0,
0, 1, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 1, 0, 1, 0, 0,
1, 0, 1, 0, 1, 1, 0, 1, 0, 0, 1]; or

[0, 1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 0, 1, 1, 0, 0, 1, 1, 0, 1, 0, 1, 0, 1, 0, 0, 1, 1, 0, 1,
0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 0, 1, 0, 1,
1, 0, 0, 1, 1, 0, 1, 0, 1, 0, 0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 1, 0, 1, 0, 0, 1, 0,
1, 0, 1, 1, 0, 0, 1, 1, 0, 1, 0, 1, 0, 0, 1, 0, 1, 0, 1, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1,
0, 1, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 1, 0, 1, 0, 1,
0, 0, 1, 1, 0, 0, 1, 0, 1]; or

[0, 1, 0, 1, 1, 0, 0, 1, 1, 0, 1, 0, 1, 0, 0, 1, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0,
1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0,
0, 1, 1, 0, 0, 1, 0, 1, 0, 1, 1, 0, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 0, 1, 1, 0, 1, 0,
0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0,
1, 0, 1, 0, 0, 1, 1, 0, 1, 0, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 1, 0, 0, 1, 1, 0, 1, 0, 1,
0, 0, 1, 1, 0, 0, 1, 0, 1]; or

[0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 1, 0, 0, 1, 0, 1, 1, 0, 0, 1, 1, 0, 1, 0, 0, 1, 1, 0,
1, 0, 0, 1, 0, 1, 1, 0, 1, 0, 0, 1, 0, 1, 0, 1, 0, 1, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 0,
1, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0,
0, 1, 1, 0, 0, 1, 1, 0, 0, 1, 1, 0, 1, 0, 0, 1, 0, 1, 1, 0, 0, 1, 1, 0, 1, 0, 0, 1, 1, 0, 1, 0, 0, 1, 0, 1, 1, 0, 1, 0, 0, 1, 0, 1, 1, 0, 1, 0, 0,
1, 0, 1, 0, 1, 0, 1, 1, 0, 1, 0, 1, 0, 0, 1, 0, 1, 1, 0, 1, 0, 0, 1, 0, 1, 1, 0, 0, 1, 1, 0, 0, 1, 1, 0, 0, 1, 1, 0, 0, 1, 0, 1, 0, 1, 0, 1, 0, 1, 0,
1, 0, 1, 0, 1, 0, 1, 1, 0, 1]; or

[0, 1, 1, 0, 1, 0, 0, 1, 1, 0, 0, 1, 0, 1, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 0, 1, 0, 1, 0, 1, 1, 0, 0,
1, 1, 0, 0, 1, 1, 0, 0, 1, 1, 0, 0, 1, 0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 1, 0, 1, 0, 1, 0,
0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 1, 0, 1, 0, 0, 1, 1, 0, 0, 1, 0, 1, 1, 0, 0, 1, 0, 1, 1,
0, 1, 0, 0, 1, 0, 1, 1, 0, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0,
0, 1, 0, 1, 1, 0, 0, 1, 1, 0, 1, 0, 1, 0, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1, 1, 0, 1, 0, 0, 0,
1, 0, 1, 1, 0, 0, 1, 0, 0, 1]; or

[0, 1, 0, 1, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 0, 0, 1, 0,
1, 0, 1, 1, 0, 1, 0, 0, 1, 0, 1, 1, 0, 1, 0, 1, 0, 1, 0, 0, 1, 0, 1, 0, 1, 0, 1, 1, 0, 1, 0, 1, 0, 0, 1, 1, 0, 1, 0, 0, 1, 0, 1, 1, 0, 1, 0, 0, 0, 1, 0, 1,
1, 0, 0, 1, 1, 0, 1, 0, 0, 1, 1, 0, 0, 1, 1, 0, 0, 1, 1, 0, 1, 0, 1, 0, 1, 0, 1, 0, 1, 0, 1, 0, 1, 0, 0, 1, 0, 1, 0, 1, 0, 1, 1, 0, 1, 0, 1, 0, 1, 0, 1, 0, 0,
1, 1, 0, 0, 1, 1, 0, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 0, 1, 1, 0, 1, 0, 0, 0, 1, 0, 1,
1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 0, 1, 0, 1, 0,
1, 0, 1, 0, 1, 0, 1, 0, 0, 1]; or

[0, 1, 1, 0, 1, 0, 0, 1, 1, 0, 0, 1, 0, 1, 1, 0, 1, 0, 1, 0, 0, 1, 0, 1, 1, 0, 1, 0, 1, 0, 0, 1, 0, 1, 1, 0, 1, 0, 1, 0, 1, 0, 0, 1, 0, 1, 0, 1, 0, 1, 0, 1, 1, 1,
0, 0, 1, 1, 0, 0, 1, 1, 0, 0, 1, 1, 0, 1, 0, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 1, 0, 1, 0, 1, 0, 1,
1, 0, 1, 0, 1, 0, 1, 0, 0, 1, 0, 1, 1, 0, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0, 1, 0, 0,
1, 0, 1, 1, 0, 1, 0, 0, 1, 0, 1, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 1, 0, 0, 1, 1, 0, 0, 1,
1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 0, 1, 0, 1, 0, 1, 1, 0, 1, 0, 0, 0, 1, 1, 0, 1, 0, 1, 0, 0,
1, 0, 1, 1, 0, 1, 0, 0, 1]; or

[0, 1, 0, 1, 0, 1, 0, 1, 0, 1, 0, 1, 0, 1, 0, 1, 1, 0, 0, 1, 1, 0, 1, 0, 1, 0, 0, 1, 1, 0, 0, 1, 1, 0, 0, 1, 0, 1, 1, 0, 1, 0, 0, 1, 0, 1, 1, 0, 1, 0, 1,
0, 1, 0, 0, 1, 0, 1, 0, 1, 0, 1, 1, 0, 1, 0, 0, 1, 0, 1, 1, 0, 1, 0, 0, 1, 0, 1, 1, 0, 1, 0, 0, 1, 1, 0, 1, 0, 0, 1, 1, 0, 1, 0, 1, 0, 0, 1, 0, 1, 1, 0, 1, 0,
0, 1, 1, 0, 0, 1, 1, 0, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 0, 1, 1, 0, 1, 0, 1, 0,
1, 1, 0, 0, 1, 0, 1, 1, 0, 0, 1, 1, 0, 0, 1, 1, 1, 0, 1, 0, 1, 0, 1, 0, 1, 0, 0, 1, 1, 0, 1, 0, 0, 1, 0, 1, 0, 1, 1, 0, 1, 0, 1, 0, 1, 0, 0, 1, 0, 1, 0, 1, 0,
1, 1, 0, 1, 0, 1, 0, 1, 0, 0, 1, 0, 1, 1, 0, 0, 1, 0, 1, 1, 0, 1, 0, 1, 0, 0, 1, 0, 1, 1, 0, 1, 0, 0, 1, 1, 0, 0, 1, 0, 1, 1, 0, 0, 1, 0, 1, 0,
1, 0, 1, 0, 1, 0, 1, 0, 1, 0]; or [0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 0, 1, 0, 1, 0, 1, 0, 1, 0, 1, 0, 1, 0, 1, 0, 1,
0, 0, 1, 1, 0, 0, 1, 0, 1, 1, 0, 0, 1, 1, 0, 0, 1, 1, 0, 0, 1, 1, 0, 0, 1, 1, 0, 0, 1, 1, 0, 0, 1, 0, 1, 0, 1, 0, 1, 1, 0, 1, 0, 1, 0, 1, 0, 1, 0,
1, 0, 0, 1, 0, 1, 1, 0, 1, 0, 0, 1, 0, 1, 1, 0, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 1, 0, 1, 0, 1,
0, 0, 1, 0, 1, 0, 1, 0, 1, 1, 0, 1, 0, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 1, 0, 0, 1, 0, 1, 1, 0,
0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 1, 0, 0, 1, 0, 1, 1, 0, 1, 0, 0, 0, 1, 0, 1, 1, 0, 0, 1, 0,
1, 1, 0, 0, 1, 1, 0, 1, 0, 0, 1]; or

[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 0, 0,
1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 1, 0, 0, 1, 0, 1, 1, 0, 0, 0, 1,
1, 0, 0, 1, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 1,
0, 0, 1, 0, 1, 0, 1, 0, 1, 1, 0, 1, 0, 1, 0, 0, 1, 0, 1, 0, 1, 0, 1, 0, 1, 0, 1, 0, 1, 0, 1, 1, 0, 0, 1, 1, 0, 1, 0, 0, 1, 1, 0, 1, 0, 0, 1, 0, 1, 1, 0,
0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 0, 1, 0, 1, 1, 0, 0, 1, 0, 1,
1, 0, 0, 1, 1, 0, 1, 0, 0, 1]; or

[0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 0, 1, 1, 0, 1, 0, 1, 0, 0, 1, 0, 1, 1, 0, 1, 0, 0, 0,
1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 0, 1, 1, 0, 1, 0, 1, 0, 1, 0, 0, 1, 1, 0, 0, 1, 0, 1, 1, 0, 0, 0, 1,
1, 0, 0, 1, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 1, 0, 1, 0, 1, 1,
0, 0, 1, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 1, 0, 1, 0, 0, 1, 1, 0, 1, 0, 0, 1, 0, 1, 1, 0,
0, 1, 1, 0, 0, 1, 1, 0, 0, 1, 1, 0, 0, 1, 0, 1, 0, 1, 0, 1, 1, 0, 1, 0, 1, 0, 1, 0, 1, 0, 1, 0, 0, 1, 0, 1, 1, 0, 1, 0, 0, 0, 1, 1, 0, 0, 1, 1, 0, 0, 1, 0,
1, 0, 1, 0, 1, 0, 1, 0, 1, 0, 1]; or

[0, 1, 1, 0, 1, 0, 0, 1, 0, 1, 1, 0, 1, 0, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 1, 0, 1, 0, 1, 0, 1,

0, 0, 1, 1, 0, 1, 0, 0, 1, 1, 0, 0, 1, 1, 0, 0, 1, 1, 0, 0, 1, 1, 0, 0, 1, 1,0,0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1, 0, 0, 1, 1, 0, 1, 0, 0, 1, 1, 0, 0, 1, 0, 1, 1, 0, 1, 0, 0, 1, 0, 1, 1, 0, 0, 1, 0, 1, 1, 0, 1, 0, 1, 0, 1,0,0, 1, 0, 1, 0, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 0, 0, 1, 1, 0, 0, 1, 1, 0, 0, 1, 1, 0, 1, 0, 0, 1, 1, 0, 0, 1, 1, 0, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 1, 0, 1, 0, 0, 1, 0, 1, 1,
0, 0, 1, 1, 0, 1, 0, 0, 1]; or

[0, 1,0, 1,0, 1,0, 1, 1,0,0, 1,0, 1, 1, 0, 1,0, 1,0,0, 1,0, 1,0, 1, 1, 0, 0, 1, 1,0, 1,0, 1,0, 1,0, 1,0,0, 1, 1,0, 1,0,0, 1,0, 1,0, 1, 1,0, 1,0, 1,0,0, 1, 1,0, 1,0, 1,0, 1,0, 1,0,0, 1, 1,0, 1,0,0, 1, 1,0, 1,0, 1,0, 1,0, 1,0,0, 1, 1,0, 1,0,0, 1,0, 1,0, 1, 1,0, 1,0, 1,0,0, 1, 1,0, 0, 1,0, 1,0, 1,0, 1, 1,0, 0, 1,0, 1,0, 1,0, 1,0,0, 1, 1,0, 0, 1,0, 1,0, 1,0, 1,0, 1, 1,0,0, 1, 1,0, 1,0, 1,0,0, 1,0, 1, 1,0,0, 1,0, 1,0, 1,0, 1, 1,0,0, 1,0, 1, 1,0,0, 1,0, 1,0, 1,0, 1,0, 1,0, 0, 1, 1,0,0, 1,0, 1,0, 1,0, 1, 1,0,0, 1,0, 1, 1,0,0, 1,0, 1,0, 1,0, 1,0, 1,0, 1, 1,0,0, 1, 1,0,
0, 1, 0, 1, 0, 1, 1, 0, 1, 0, 0, 1, 1, 0, 1, 0, 0, 1, 1, 0, 1, 0, 1, 0, 1, 0, 0, 1, 1, 0, 0, 1, 1, 0, 1, 0, 1, 0,0, 1, 0, 1, 1,0,0, 1,0, 1,
1,0,0, 1, 0, 1,0, 1, 0, 1]; or

[0, 1,0, 1,0, 1,0, 1, 1, 0, 0, 1,0, 1, 1, 0, 0, 1,0, 1, 1, 0, 1, 0, 1, 0, 0, 1, 1, 0, 0, 1, 1, 0, 1, 0, 1, 0, 1, 0, 1, 0, 0, 1, 1, 0, 1, 0, 0, 1, 1, 0, 1, 0, 0, 1, 1,
0, 1, 0, 0, 1, 0, 1, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1,
0, 1, 0, 1, 0, 1, 1, 0, 0, 1, 0, 1, 1, 0, 0, 1, 0, 1, 1, 0, 1, 0, 1, 0, 0, 1, 1, 0, 0, 1, 0, 1, 1, 0, 0, 1, 1, 0, 1, 0, 1, 0, 0, 1, 0, 1, 0, 1, 1,
0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 1, 0, 0, 1, 1, 0, 1, 0, 1, 0, 1, 0, 0, 1, 1, 0,
0, 1, 1, 0, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0, 1, 0, 1, 0, 1, 0,
1, 1, 0, 0, 1, 0, 1, 0, 1, 0, 1]; or

[0, 1,0, 1,0, 1, 1,0, 1,0,0, 1, 0, 1,0, 1,0, 1, 1,0, 1,0, 1,0, 1,0, 1,0, 1,0,0, 1, 1,0,0, 1,0, 1, 1,0, 1,0,0, 1,0, 1, 1,0,0, 1,0, 1, 1,0, 1,0, 1,0,0, 1, 1,0,0, 1, 1,0, 0, 1,0, 1,0, 1, 1,0,0, 1,0, 1, 1,0,0, 1, 1,0, 1,0,0, 1, 1,0,0, 1, 1,0, 0, 1, 1,0,0, 1, 1,0,0, 1, 1,0, 1,0,
0, 1,0, 1,0,0, 1,0, 1, 1, 0, 1,0,0, 1,0, 1, 1,0, 1,0, 1,0, 1,0, 1,0, 1,0, 1,0,0, 1,0, 1,0, 1,0, 1, 1,0, 1,0,0, 1,0, 1,0, 1,0, 1,
1,0, 1,0, 1,0, 1,0, 1,0, 1,0,0, 1, 1,0,0, 1,0, 1, 1,0, 1,0,0, 1,0, 1, 1,0, 1,0,0, 1, 1,0,0, 1, 1,0,0, 1, 1,0,0, 1, 1,
0,0, 1,0, 1, 1,0, 1,0,0, 1, 1,0,0, 1,0, 1, 1,0,0, 1, 1,0,0, 1, 1,0,0, 1,0, 1,0, 1, 1,0, 1,0,0, 1,0, 1, 1,0, 1,0, 1,0, 1,0,0, 1,
0, 1, 0, 1, 0, 1, 0, 1, 0, 1]; or

[0, 1,0, 1,0, 1,0, 1, 1,0, 1,0,0, 1,0, 1, 1,0, 1,0,0, 1,0, 1,0, 1,0, 1,0, 1,0, 1,0, 1,0, 1, 1,0,0, 1, 1,0, 1,0,0, 1,0, 1, 1,0,0,
1, 1,0, 1,0,0, 1, 1,0,0, 1, 1,0,0, 1, 1,0,0, 1, 1,0,0, 1, 1,0, 1,0, 1,0,0, 1,0, 1, 1,0, 1,0,0, 1,0, 1, 1,0, 1,0,0, 1, 1,0,0, 1, 1,0, 0, 1, 1,0,
1,0, 1,0, 1,0,0, 1,0, 1, 1,0, 1,0, 1,0, 1,0,0, 1,0, 1,0, 1,0, 1,0, 1, 1,0, 1,0, 1,0, 1,0,0, 1,0, 1, 1,0, 1,0,0, 1,0,
1, 1,0, 1,0, 1,0, 1,0, 1,0, 1,0,0, 1, 1,0,0, 1,0, 1, 1,0, 1,0,0, 1, 1,0,0, 1,0, 1, 1,0,0, 1, 1,0,0, 1, 1,0, 1,0,0, 1,
1,0,0, 1,0, 1, 1,0, 1,0,0, 1,0, 1, 1,0, 1,0,0, 1, 1,0,0, 1, 1,0,0, 1, 1,0, 1,0, 1,0, 1,0,0, 1,0, 1, 1,0, 1,0, 1,0, 1,0,0,
1, 0, 1, 0, 1, 0, 1, 0, 1, 0, 1]; or

[0, 1,0, 1,0, 1,0, 1,0, 1,0, 1, 1,0, 1,0, 1,0, 1,0, 1,0,0, 1,0, 1, 1,0, 1,0, 1,0, 1,0,0, 1, 1,0,0, 1, 1,0,0, 1,0, 1, 1,0,0, 1, 1,
0, 1,0,0, 1,0, 1, 1,0,0, 1, 1,0,0, 1, 1,0,0, 1, 1,0,0, 1, 1,0, 1,0,0, 1,0, 1, 1,0, 1,0,0, 1, 1,0, 1,0, 1,0, 1,0,
1,0, 1,0, 1,0, 1,0,0, 1,0, 1, 1,0, 1,0,0, 1,0, 1, 1,0, 1,0, 1,0, 1,0,0, 1,0, 1,0, 1, 1,0, 1,0, 1,0, 1,0, 1,0,0,
1,0, 1, 1,0, 1,0, 1,0, 1,0,0, 1, 1,0,0, 1, 1,0,0, 1, 1,0, 1,0, 1,0,0, 1, 1,0,0, 1,0, 1, 1,0, 1,0,0, 1, 1,0,0, 1, 1,0, 0, 1,
1,0,0, 1, 1,0, 1,0, 0, 1, 1,0,0, 1,0, 1, 1,0, 1,0,0, 1, 1,0, 1,0, 1,0, 1,0, 1,0, 1,0, 1,0,0, 1,0, 1, 1,0, 1,0, 1,0, 1,0, 1,
0, 0, 1, 0, 1, 0, 1, 0, 1]; or

[0, 1,0, 1,0, 1,0, 1,0, 1,0, 1, 1,0, 1,0, 1,0, 1,0, 1,0,0, 1,0, 1, 1,0, 1,0, 1,0, 1,0,0, 1, 1,0,0, 1, 1,0,0, 1, 1,0,0, 1, 1,0, 1,0,
1, 1,0, 1,0,0, 1,0, 1, 1,0,0, 1, 1,0, 1,0,0, 1, 1,0,0, 1, 1,0,0, 1,0, 1, 1,0,0, 1, 1,0, 1,0,0, 1,0, 1, 1,0, 1,0,0, 1,0, 1,0, 1,0,
1,0, 1,0, 1,0, 1,0, 1,0,0, 1,0, 1, 1,0, 1,0,0, 1,0, 1, 1,0, 1,0, 1,0, 1,0,0, 1,0, 1,0, 1,0, 1,0, 1, 1,0, 1,0, 1,0, 1,
0, 0, 1,0, 1, 1,0, 1,0, 1,0, 1,0,0, 1, 1,0,0, 1, 1,0,0, 1, 1,0, 1,0,0, 1,0, 1, 1,0, 1,0,0, 1, 1,0,0, 1, 1,0,0, 1, 1,0,
0, 1, 1,0,0, 1, 1,0, 1,0,0, 1, 1,0,0, 1,0, 1, 1,0, 1,0,0, 1, 1,0, 1,0, 1,0, 1,0, 1,0, 1,0, 1,0, 1,0, 1, 1,0, 1,0,0, 1,0, 1, 1,
0, 1, 0, 0, 1, 0, 1, 0, 1, 0, 1]; or

[0, 1, 1,0,0, 1, 1,0,0, 1, 1,0, 1,0,0, 1, 1,0,0, 1, 1,0,0, 1,0, 1, 1,0, 1,0, 1,0,0, 1,0, 1,0, 1, 1,0, 1,0, 1,0,0, 1,0, 1,0, 1,0, 1,0, 1, 1,0, 1,
0,0, 1,0, 1,0, 1,0, 1,0, 1,0, 1, 1,0,0, 1, 1,0,0, 1, 1,0,0, 1,0, 1, 1,0,0, 1, 1,0,0, 1,0, 1, 1,0,0, 1, 1,0, 1,0,0, 1,0, 1, 1,0, 1,0, 1,0,
0, 1,0, 1, 1,0, 1,0, 1,0, 1,0,0, 1,0, 1, 1,0, 1,0, 1,0, 1,0, 1,0, 1,0,0, 1, 1,0,0, 1, 1,0,0, 1,0, 1, 1,0, 1,0,0, 1,
1,0,0, 1,0, 1, 1,0, 1,0,0, 1, 1,0, 1,0,0, 1,0, 1, 1,0, 1,0, 1,0, 1,0, 1,0, 1,0, 1,0,0, 1,0, 1,0, 1,0, 1,0, 1,0, 1, 1,0,0, 1, 1,
0,0, 1, 1,0,0, 1,0, 1, 1,0, 1,0,0, 1, 1,0,0, 1,0, 1, 1,0, 1,0,0, 1, 1,0, 1,0,0, 1,0, 1, 1,0, 1,0, 1,0, 1,0, 1,0, 1,0,0, 1,
0, 1, 0, 1, 0, 1, 0, 1, 0, 1]; or

[0, 1, 1, 0, 1,0,0, 1,0, 1, 1,0,0, 1, 1,0, 1,0,0, 1,0, 1, 1,0,0, 1, 1,0,0, 1, 1,0,0, 1,0, 1,0, 1,0, 1,0, 1,0, 1,0, 1, 1,0, 1,0, 1,
0, 1,0, 1,0, 1,0,0, 1,0, 1, 1,0, 1,0,0, 1, 1,0, 1,0,0, 1,0, 1, 1,0,0, 1,0, 1, 1,0, 1,0, 1,0,0, 1,0, 1, 1,0, 1,0,0, 1, 1,0,0, 1, 1,0,0, 1,
0, 1,0, 1,0, 1, 1,0, 1,0, 1,0, 1,0, 1,0, 1,0,0, 1,0, 1, 1,0, 1,0, 1,0, 1,0,0, 1,0, 1,0, 1, 1,0, 1,0, 1,0,0, 1, 1,0, 1,0, 1,0, 1,0, 0,
1, 0, 1, 1, 0, 0, 1, 1, 0, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 0, 1, 1,
0, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 1, 0, 0, 1,
0, 1, 0, 1, 0, 1, 0, 1, 0, 1]; or

[0, 1,0, 1,0, 1,0, 1,0, 1, 1,0, 1,0, 1,0, 1,0, 1,0, 1,0, 1,0,0, 1,0, 1, 1,0, 1,0, 1,0,0, 1, 1,0, 1,0,0, 1, 1,0, 1,0,0, 1,0, 1, 1,0,0, 1, 1,0, 1,0,
0, 1,0, 1, 1,0,0, 1, 1,0,0, 1, 1,0,0, 1,0, 1,0, 1,0, 1,0, 1,0, 1, 1,0, 1,0, 1,0, 1,0, 1,0, 1,0, 1,0,0, 1,0, 1, 1,0, 1,0,0, 1, 1,
0, 1,0,0, 1,0, 1, 1,0,0, 1, 1,0, 1,0,0, 1,0, 1, 1,0,0, 1, 1,0,0, 1, 1,0, 1,0, 1,0, 1,0, 1,0, 1,0, 1,0, 1,0,0, 1,0, 1, 1,0, 1,0,
1,0, 1, 1,0, 1,0,0, 1, 1,0,0, 1, 1,0, 1,0, 1,0, 1,0,0, 1,0, 1, 1,0, 1,0, 1,0, 1,0,0, 1, 1,

0, 1, 1, 0, 0, 1, 1, 0, 0, 1]; or

[0, 1,0, 1, 1,0, 1,0,0, 1,0, 1,0, 1,0, 1, 1,0, 1,0,0, 1, 0, 1,0, 1,0, 1, 0, 1,0, 1,0, 1, 1,0, 0, 1, 1, 0, 0, 1, 1, 0, 1, 0, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 0, 1, 1, 0, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 1, 0, 1, 0, 1, 0, 1, 0, 0, 1, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 1, 0, 1, 0, 1, 0, 1, 0, 0, 1, 1, 0, 1, 0, 1, 0, 1, 0, 1, 0, 1, 0, 1, 0, 1, 0, 0, 1, 1, 0, 1, 0, 1, 0, 1, 0, 1, 1, 0, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 1, 0, 0, 1, 0, 1, 1, 0, 1, 0, 1, 0, 1, 0, 1, 0, 1, 0, 0, 1, 0, 1, 1, 0, 1, 0, 1, 0, 1, 0, 1, 0, 1, 0, 1, 0, 0, 1, 1, 0, 1, 0, 1, 0, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 0, 1, 1, 0, 1, 0, 0, 1, 1, 0, 0,
1, 0, 1, 1, 0, 1, 0, 0, 1, 0, 0, 1]; or

[0, 1,0, 1, 1,0, 1,0, 1,0,0, 1,0, 1, 1,0,0, 1, 1,0, 1,0,0, 1, 1,0, 1,0,0, 1, 0, 1,0, 1,0, 1, 0, 1,0, 1, 1,0,0, 1, 1,0,0, 1, 1, 0, 0, 1, 1,0,0, 1,0,0, 1,0, 1,0, 1,0, 1, 0, 1, 1,0, 1,0, 1,0, 1,0,0, 1, 1,0,0, 1, 1,0, 1,0,0, 1, 1,0,0, 1,0, 1,0, 1,0, 1,0, 1, 1, 0, 1, 0,0, 1,0, 1,0, 1, 1,0, 1,0,0, 1,0, 1, 1,0, 1,0,0, 1, 1,0, 1,0,0, 1,0, 1, 1,0, 1,0,0, 1,0, 1,0, 1, 1,0, 1,0,0, 1, 1,0,0, 1, 0, 1, 1,0,0, 1,0, 1, 1,0, 1,0, 1,0, 1,0, 1,0,0, 1, 1,0,0, 1, 1,0,0, 1, 1,0, 1,0, 1,0, 1,0, 1,0, 1,0, 1,0, 1,
0, 1,0,0, 1, 1,0,0, 1, 1,0, 1,0,0, 1, 1,0,0, 1,0, 1,0, 1,0, 1,0, 1, 1,0, 1,0,0, 1,0, 1,0, 1, 1,0, 1,0,0, 1,0, 1, 1,0, 1,0, 1,0,
0, 1, 1, 0, 1, 0, 0, 1, 0, 1]; or

[0, 1,0, 1,0, 1,0, 1, 1,0,0, 1, 1,0,0, 1,0, 1, 1,0,0, 1, 1,0, 1,0, 1,0, 1,0, 1,0, 1,0, 1,0,0, 1,0, 1,0, 1, 1,0, 1,0,0, 1,0,
1, 1,0, 1,0,0, 1, 1,0, 1,0,0, 1,0, 1,0, 1,0, 1, 1,0, 1,0, 1,0, 1,0,0, 1,0, 1, 1,0,0, 1, 1,0, 1,0,0, 1, 1,0, 1,0,0, 1,0, 1, 1,0,
1,0, 1,0, 1,0,0, 1, 1,0,0, 1, 1,0,0, 1, 1,0,0, 1, 1,0, 1,0, 1,0, 1,0, 1,0,0, 1,0, 1,0, 1,0, 1, 1,0,0, 1, 1,0,0, 1,0, 1, 1,
0,0, 1, 1,0, 1,0, 1,0, 1,0, 1,0, 1,0,0, 1,0, 1,0, 1, 1,0, 1,0,0, 1,0, 1, 1,0, 1,0,0, 1, 1,0, 1,0,0, 1,0, 1, 1,0, 1,0, 1,0,
0, 1,0, 1,0, 1, 1,0, 1,0,0, 1, 1,0,0, 1,0, 1, 1,0, 1,0,0, 1,0, 1, 1,0, 1,0,0, 1,0, 1,0, 1,0, 1, 1,0,0, 1, 1,0,0, 1, 1,0,0, 1, 1,
0, 0, 1, 0, 1, 0, 1, 0, 1]; or

[0, 1,0, 1, 1,0, 1,0, 1,0,0, 1,0, 1, 1,0,0, 1, 1,0, 1,0,0, 1, 1,0, 1,0,0, 1,0, 1, 1,0, 1,0, 1,0, 1,0,0, 1, 1,0,0, 1, 1,0,0, 1, 1,
0,0, 1, 1,0, 1,0, 1,0, 1,0, 1,0,0, 1,0, 1,0, 1,0, 1, 1,0,0, 1, 1,0,0, 1,0, 1, 1,0,0, 1, 1,0, 1,0, 1,0, 1,0, 1,0, 1,0, 1,0,
0, 1,0, 1,0, 1, 1,0, 1,0,0, 1,0, 1, 1,0, 1,0,0, 1, 1,0, 1,0,0, 1,0, 1, 1,0, 1,0,0, 1,0, 1,0, 1, 1,0, 1,0,0, 1, 1,0,0, 1,0, 1,
1, 1,0,0, 1,0, 1, 1,0, 1,0,0, 1,0, 1,0, 1, 1,0,0, 1, 1,0,0, 1, 1,0,0, 1, 1,0,0, 1,0, 1,0, 1,0, 1,0, 1,0, 1,0, 1,0, 1,0, 1,
0, 1, 1,0,0, 1, 1,0,0, 1,0, 1, 1,0,0, 1, 1,0, 1,0, 1,0, 1,0, 1,0, 1,0, 1,0, 1,0,0, 1,0, 1,0, 1, 1,0, 1,0,0, 1,0, 1, 1,0, 1,0,0,
1, 1, 0, 1, 0, 0, 1, 0, 1]; or

[0, 1,0, 1,0, 1, 1,0,0, 1, 1,0,0, 1, 1,0,0, 1, 1,0,0, 1,0, 1,0, 1,0, 1,0, 1,0, 1,0, 1,0, 1, 1,0, 1,0, 1,0,0, 1,0, 1, 1,0,0, 1, 1,
0, 1,0,0, 1, 1,0, 1,0,0, 1,0, 1, 1,0, 1,0,0, 1,0, 1,0, 1, 1,0, 1,0,0, 1,0, 1, 1,0, 1,0,0, 1,0, 1, 1,0, 1,0,0, 1, 1,0, 1,0,0, 1,0, 1, 1,0, 1,0,
1,0, 1,0,0, 1, 1,0,0, 1, 1,0, 1,0,0, 1, 1,0,0, 1,0, 1,0, 1,0, 1,0, 1, 1,0, 1,0, 1,0, 1,0, 1, 1,0, 1,0,0, 1, 1,0,0, 1, 1,0,0,
1, 1,0, 1,0, 1,0, 1,0, 1,0, 1,0,0, 1,0, 1,0, 1, 1,0, 1,0,0, 1, 1,0,0, 1,0, 1, 1,0,0, 1,0, 1, 1,0, 1,0, 1,0, 1,0,0, 1, 1,0,0, 1,
0, 1,0, 1, 1,0, 1,0,0, 1,0, 1, 1,0, 1,0,0, 1, 1,0, 1,0,0, 1,0, 1, 1,0, 1,0, 1,0, 1,0,0, 1, 1,0,0, 1, 1,0, 1,0,0, 1, 1,0,0,
1, 0, 1, 0, 1, 0, 1, 0, 1]; or

[0, 1,0, 1, 1,0, 1,0, 1,0,0, 1,0, 1, 1,0, 1,0, 1,0,0, 1,0, 1, 1,0,0, 1,0, 1, 1,0, 1,0, 1,0,0, 1,0, 1,0, 1,0, 1, 1,0,0, 1, 1,0,0, 1,0, 1, 1,
0,0, 1, 1,0, 1,0, 1,0, 1,0, 1,0, 1,0, 1,0, 1,0,0, 1, 1,0,0, 1, 1,0,0, 1, 1,0,0, 1, 1,0, 1,0, 1,0, 1,0, 1,0, 1,0, 1,0, 1,0, 1,0,
0, 1,0, 1,0, 1, 1,0, 1,0,0, 1, 1,0,0, 1,0, 1, 1,0,0, 1,0, 1, 1,0, 1,0,0, 1,0, 1, 1,0, 1,0, 1,0, 1,0,0, 1,0, 1, 1,0, 1,0,0, 1,0,
1, 1,0,0, 1,0, 1, 1,0, 1,0,0, 1,0, 1,0, 1, 1,0,0, 1, 1,0, 1,0,0, 1,0, 1, 1,0,0, 1, 1,0, 1,0, 1,0, 1,0, 1,0,0, 1,0, 1,0, 1,
0, 1, 1,0,0, 1, 1,0,0, 1, 1,0,0, 1, 1,0,0, 1,0, 1,0, 1,0, 1,0, 1,0, 1,0, 1,0, 1, 1,0, 1,0, 1,0,0, 1,0, 1, 1,0,0, 1, 1,0, 1,0,0,
1, 1, 0, 1, 0, 0, 1, 0, 1]; or

[0, 1,0, 1, 1,0, 1,0, 1,0,0, 1,0, 1, 1,0, 1,0, 1,0,0, 1,0, 1, 1,0,0, 1,0, 1, 1,0, 1,0, 1,0,0, 1,0, 1,0, 1, 1,0, 1,0, 1,0, 1,0, 1,0, 1,0,0, 1, 1,0,0, 1,0, 1,0, 1,0,
1, 1,0,0, 1,0, 1,0, 1,0, 1,0, 1,0, 1,0, 1,0, 1,0, 1, 1,0,0, 1, 1,0,0, 1, 1,0,0, 1, 1,0,0, 1,0, 1,0, 1,0, 1,0, 1,0, 1,0, 1, 1,0, 1,0,
0, 1,0, 1,0, 1, 1,0, 1,0,0, 1, 1,0,0, 1,0, 1, 1,0,0, 1,0, 1, 1,0, 1,0,0, 1,0, 1, 1,0, 1,0, 1,0, 1,0,0, 1,0, 1, 1,0, 1,0,0, 1,0,
1, 1,0,0, 1,0, 1, 1,0, 1,0, 1,0, 1,0, 1,0, 1,0,0, 1, 1,0,0, 1, 1,0, 1,0,0, 1, 1,0,0, 1,0, 1,0, 1,0, 1,0, 1,0, 1, 1,0, 1,0, 1,0,
1,0,0, 1, 1,0,0, 1, 1,0,0, 1, 1,0, 1,0, 1,0, 1,0, 1,0, 1,0, 1,0,0, 1,0, 1, 1,0, 1,0, 1,0,0, 1,0, 1, 1,0,0, 1, 1,0, 1,0, 1,0,0, 1,
1,0, 1,0,0, 1, 0, 1]; or

[0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 1, 0, 1, 0, 0, 1, 0, 1, 0, 1, 0, 1, 1, 0, 0, 1, 1, 0, 1,
0,0, 1, 1,0,0, 1, 1,0, 1,0, 1,0, 1,0, 1,0, 1,0, 1,0, 1,0, 1,0, 1,0, 1,0,0, 1, 1,0,0, 1, 1,0,0, 1, 1,0,0, 1, 1,0, 1,0, 1,0, 1,0,
1,0,0, 1,0, 1, 1,0,0, 1,0, 1, 1,0,0, 1, 1,0, 1,0,0, 1,0, 1, 1,0, 1,0,0, 1,0, 1, 1,0, 1,0,0, 1,0, 1, 1,0, 1,0,0, 1,0, 1, 1,
0, 1,0,0, 1,0, 1,0, 1, 1,0, 1,0,0, 1,0, 1,0, 1, 1,0,0, 1, 1,0, 1,0,0, 1, 1,0,0, 1, 1,0,0, 1, 1,0, 1,0, 1,0, 1,0,0, 1,0, 1,
0, 1,0, 1, 1,0,0, 1, 1,0,0, 1, 1,0,0, 1, 1,0,0, 1,0, 1,0, 1,0, 1,0, 1,0, 1,0, 1,0, 1, 1,0, 1,0,0, 1, 1,0,0, 1, 1,0, 1,0,0, 1,0,
1, 1, 0, 1, 0, 1, 0, 0, 1, 1, 0, 1]; or

[0, 1,0, 1,0, 1,0, 1, 1,0,0, 1, 1,0,0, 1, 1,0,0, 1, 1,0,0, 1,0, 1,0, 1,0, 1,0, 1,0, 1,0, 1,0, 1, 1,0, 1,0, 1,0,0, 1,0, 1, 1,0,0, 1, 1,
0, 1,0,0, 1,0, 1,0, 1, 1,0, 1,0,0, 1,0, 1, 1,0, 1,0,0, 1, 1,0, 1,0,0, 1,0, 1, 1,0, 1,0,0, 1,0, 1,0, 1, 1,0, 1,0,0, 1,0, 1,0, 1,
1,0, 1,0, 1,0, 1,0,0, 1, 1,0,0, 1,0, 1, 1,0,0, 1, 1,0, 1,0,0, 1,0, 1, 1,0,0, 1, 1,0, 1,0, 1,0, 1,0, 1,0, 1,0, 1,0, 1,0, 1,0,
1, 1,0,0, 1, 1,0, 1,0, 1,0, 1,0,0, 1,0, 1, 1,0, 1,0,0, 1,0, 1, 1,0, 1,0,0, 1,0, 1,0, 1, 1,0, 1,0,0, 1, 1,0,0, 1,0, 1, 1,0, 1,0,0, 1,0, 1,0, 1,
1,0, 1,0,0, 1, 1,0, 1,0,0, 1,0, 1, 1,0, 1,0, 1,0, 1,0, 1,0, 1,0, 1,0, 1,0, 1,0, 1,0, 1,0,0, 1, 1,0,0, 1,0, 1, 1,0,0,
1, 1, 0, 0, 1, 0, 1, 0, 1, 0, 1]; or

[0, 1,0, 1, 1,0, 1,0,0, 1, 1,0, 1,0,0, 1,0, 1, 1,0, 1,0,0, 1, 1,0, 1,0, 1, 1,0, 1,0, 1,0, 1,0, 1,0, 1,0, 1,0, 1,0, 1,0,0, 1, 1,0,0, 1,0, 1,
0, 1,0, 1,0, 1,0, 1,0, 1,0, 1,0, 1,0, 1, 1,0, 1,0,0, 1, 1,0,0, 1, 1,0,0, 1, 1,0,0, 1,0, 1,0, 1,0, 1, 1,0, 1,0,0, 1, 1,0,0, 1, 1,0, 1,0,
0, 1,0, 1, 1,0,0, 1, 1,0, 1,0, 1,0, 1,0, 1,0, 1,0,0, 1,0, 1, 1,0,0, 1, 1,0, 1,0,0, 1,0, 1, 1,0, 1,0, 1,0, 1,0,0, 1, 1,0,0, 1, 1,0,0, 1, 1,0, 0, 0, 1, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 1, 0,
1, 0, 1, 0, 0, 1, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1, 0, 0, 1, 1, 0, 0, 1, 0, 1, 1,
0, 1, 0, 1, 0, 0, 1, 0, 1]; or

[0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 0, 1, 0, 1, 1, 0, 1, 0, 1, 0, 0, 1, 1, 0, 1, 0, 1, 0, 0, 1, 0, 1, 1,
0, 1, 0, 0, 1, 0, 1, 0, 1, 1, 0, 1, 0, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0,
1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1,
0, 0, 1, 1, 0, 1, 0, 1, 0, 1, 0, 0, 1, 0, 1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 1, 0,
1, 0, 0, 1, 1, 0, 1, 0, 0, 1, 1, 0, 0, 1, 0, 1, 1, 0, 1, 0, 1, 0, 0, 1, 0, 1, 0, 1, 0, 1, 0, 1, 0, 1, 0, 1, 1, 0, 0, 1, 1, 0, 0, 1, 1, 0, 0, 1, 1,
0, 0, 1, 0, 1, 0, 1, 0, 1]; or

[0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 0, 1, 0, 1, 0, 1, 0, 1, 0, 1, 0, 1, 1, 0, 0, 1, 1, 0, 0, 1, 1,
0, 0, 1, 1, 0, 0, 1, 0, 1, 0, 1, 0, 1, 1, 0, 1, 0, 1, 0, 1, 0, 1, 0, 1, 0, 0, 1, 1, 0, 0, 1, 0, 1, 1, 0, 0, 1, 1, 0, 0, 1, 0, 1, 0, 1, 0, 1, 1, 0, 1, 0,
0, 1, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1,
0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0,
1, 0, 1, 0, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0, 0, 1, 0, 1, 1, 0,
1, 0, 1, 0, 0, 1, 0, 1]; or

[0, 1, 0, 1, 1, 0, 1, 0, 0, 1, 1, 0, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 1, 0, 0, 1, 1, 0, 0, 1, 1, 0, 0,
1, 1, 0, 0, 1, 1, 0, 1, 0, 1, 0, 1, 0, 1, 0, 0, 1, 0, 1, 0, 1, 0, 1, 0, 1, 1, 0, 0, 1, 1, 0, 1, 0, 0, 1, 1, 0, 0, 1, 1, 0, 1, 0, 1, 0, 1, 0, 1, 0, 1, 0,
0, 1, 0, 1, 1, 0, 0, 1, 0, 1, 1, 0, 1, 0, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 0, 1, 1, 0, 1,
0, 0, 1, 0, 1, 0, 1, 1, 0, 1, 0, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1,
0, 1, 0, 1, 1, 0, 0, 1, 1, 0, 1, 0, 0, 1, 1, 0, 0, 1, 1, 0, 1, 0, 1, 0, 1, 0, 1, 0, 1, 0, 1, 0, 0, 1, 0, 1, 1, 0, 0, 1, 0, 1, 1, 0, 1, 0, 0, 1, 0, 1, 1,
0, 1, 0, 1, 0, 0, 1, 0, 1]; or

[0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 1,
0, 1, 0, 0, 1, 0, 1, 0, 1, 0, 1, 0, 1, 0, 1, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 1, 0, 1, 0,
1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 1, 0, 0, 1, 0, 1, 1, 0, 1, 0, 0, 1, 0, 1, 0,
1, 1, 0, 1, 0, 1, 0, 1, 0, 1, 0, 0, 1, 1, 0, 0, 1, 1, 0, 1, 0, 0, 1, 0, 1, 1, 0, 1, 0, 1, 0, 0, 1, 0, 1, 0, 1, 0, 1, 0, 1, 0, 1, 0, 1, 1, 0, 1, 0,
1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1,
0, 0, 1, 1, 0, 0, 1, 1, 0, 0, 1]; or

[0, 1, 1, 0, 0, 1, 1, 0, 1, 0, 0, 1, 0, 1, 1, 0, 1, 0, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 1,
0, 1, 0, 0, 1, 0, 1, 0, 1, 0, 1, 0, 1, 1, 0, 1, 0, 1, 0, 1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 0, 1, 0, 1,
0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 0, 1, 1, 0, 1, 0, 1, 0, 1,
0, 0, 1, 0, 1, 0, 1, 0, 1, 0, 1, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0,
1, 0, 1, 0, 0, 1, 0, 1, 1, 0, 1, 0, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 0, 1, 1, 0, 1,
0, 0, 1, 1, 0, 0, 1, 1, 0, 0, 1]; or

[0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1,
0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0,
0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 1,
0, 0, 1, 1, 0, 1, 0, 0, 1, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1,
0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0,
1, 0, 1, 1, 0, 1, 0, 0, 1, 0, 1]; or

[0, 1, 0, 1, 1, 0, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1,
0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 0, 1,
1, 0, 1, 0, 0, 1, 1, 0, 0, 1, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 0, 1, 1,
0, 0, 1, 0, 1, 1, 0, 1, 0, 0, 1, 1, 0, 1, 0, 0, 1, 1, 0, 1, 0, 0, 1, 0, 1, 1, 0, 1, 0, 1, 0, 1, 0, 1, 0, 1, 0, 0, 1, 1, 0, 0, 1, 0, 1, 1, 0, 1, 0, 0, 0, 1,
0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0,
1, 0, 1, 1, 0, 1, 0, 0, 1, 0, 1]; or

[0, 1, 1, 0, 0, 1, 1, 0, 0, 1, 1, 0, 1, 0, 0, 1, 1, 0, 1, 0, 0, 1, 0, 1, 1, 0, 1, 0, 1, 0, 1, 0, 0, 1, 1, 0, 0, 1, 1, 0, 0, 1, 1, 0, 1, 0, 0, 1, 1,
0, 1, 0, 0, 1, 0, 1, 1, 0, 1, 0, 1, 0, 1, 0, 1, 0, 0, 1, 0, 1, 0, 1, 0, 1, 0, 1, 1, 0, 1, 0, 1, 0, 1, 0, 0, 1, 0, 1, 1, 0, 1, 0, 0, 1, 1, 0, 0, 1, 1, 0,
1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 0, 1, 1, 0, 0, 1, 1, 0, 0, 1, 1, 0, 1, 0, 1, 0, 0, 1, 1, 0, 1,
0, 0, 1, 0, 1, 1, 0, 1, 0, 1, 0, 1, 0, 1, 0, 0, 1, 1, 0, 0, 1, 1, 0, 0, 1, 0, 1, 1, 0, 1, 0, 1, 0, 0, 1, 0, 1, 0, 1, 0, 1, 0, 1, 0, 1, 0, 1, 0, 1,
0, 1, 0, 1, 0, 1, 1, 0, 1, 0, 1, 0, 0, 1, 0, 1, 1, 0, 1, 0, 1, 0, 0, 1, 1, 0, 0, 1, 0, 1, 0, 1, 0, 1, 0, 1, 0, 1, 1, 0, 1, 0, 1, 0, 0, 1, 0,
1, 1, 0, 1, 0, 0, 1, 1, 0, 0, 1]; or

[0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 1, 0, 0, 1, 0, 1, 0, 1, 1, 0, 1, 0, 0, 1, 0, 1, 0, 1, 1,

0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 1, 0, 0, 1, 0, 1, 1, 0, 1, 0, 0, 1, 0, 0, 1, 0, 1, 1, 0, 0, 1, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 0, 1, 0, 0, 1, 0, 1]; or

[0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 0, 1, 1, 0, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 0, 0, 1, 0, 1, 0, 1, 1, 0, 1, 0, 0, 1, 1, 0, 0, 1, 1, 0, 1, 0, 1, 0, 1, 0, 1, 0, 1, 0, 1, 0, 0, 1, 0, 1, 0, 1, 0, 0, 1, 0, 1]; or

[0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 1, 0, 1, 0, 0, 1, 1, 0, 0, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 1, 0, 1, 0, 1, 1, 0, 1, 0, 0, 1, 0, 1, 1, 0, 0, 1, 0, 1, 0, 1, 0, 1, 0, 1, 0, 1, 0, 1, 0, 1, 0, 1, 0, 0, 1, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 0, 0, 1, 1, 0, 0, 1, 1, 0, 0, 1, 1, 0, 1, 0, 1, 1, 0, 1, 0, 0, 1, 1, 0, 1]; or

[0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 1, 0, 0, 1, 1, 0, 0, 1, 0, 1, 0, 1, 0, 0, 1, 0, 1, 1, 0, 0, 1, 0, 1, 1, 0, 1, 0, 1, 0, 1, 0, 0, 1, 1, 0, 0, 1, 0, 1, 0, 1, 0, 1, 0, 1, 0, 1, 0, 1, 0, 1, 0, 1, 1, 0, 1, 0, 0, 1, 1, 0, 0, 1, 0, 1, 1, 0, 0, 1, 1, 0, 1, 0, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 0, 1]; or

[0, 1, 1, 0, 1, 0, 0, 1, 1, 0, 0, 1, 1, 0, 0, 1, 1, 0, 1, 0, 1, 0, 1, 0, 0, 1, 0, 1, 1, 0, 1, 0, 1, 0, 1, 0, 0, 1, 0, 1, 1, 0, 0, 1, 1, 0, 0, 1, 1, 0, 0, 1, 1, 0, 0, 1, 1, 0, 1, 0, 1, 0, 1, 0, 1, 1, 0, 1, 0, 0, 1, 0, 1, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 1, 0, 1, 0, 1, 0, 1, 0, 0, 1, 0, 1, 1, 0, 0, 1, 0, 1, 1, 0, 0, 1, 1, 0, 0, 1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0, 1, 0, 0, 1, 0, 1, 0, 1, 0, 1, 0, 1, 0, 1, 0, 1, 1, 0, 0, 1, 1, 0, 1, 0, 0, 1, 0, 1, 1, 0, 0, 1, 0, 1, 1, 0, 1, 0, 0, 1, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1]; or

[0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 0, 1, 0, 1, 0, 1, 0, 1, 0, 1, 0, 1, 1, 0, 1, 0, 0, 1, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 1, 0, 0, 1, 0, 1, 1, 0, 1, 0, 0, 1, 0, 1, 0, 1, 1, 0, 0, 1, 1, 0, 0, 1, 1, 0, 0, 1, 0, 1, 1, 0, 0, 1, 0, 1, 0, 1, 0, 1, 1, 0, 0, 1, 1, 0, 0, 1, 1, 0, 0, 1, 0, 1, 1, 0, 1, 0, 1, 0, 1, 0, 0, 1, 0, 1, 1, 0, 1, 0, 1, 0, 1, 0, 0, 1, 1, 0, 0, 1, 1, 0, 1, 0, 1, 0, 1, 0, 1, 0, 1, 0, 1, 0, 1, 0, 1, 0, 1, 0, 0, 1, 1, 0, 0, 1, 1, 0, 1, 0, 0, 1]; or

[0, 1, 1, 0, 0, 1, 0, 1, 0, 1, 1, 0, 0, 1, 0, 1, 0, 1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 0, 1, 0, 1, 0, 1, 0, 0, 1, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 0, 1, 1, 0, 1, 0, 1, 0, 0, 1, 1, 0, 1, 0, 1, 0, 1, 0, 0, 1, 1, 0, 0, 1, 0, 1, 1, 0, 1, 0, 1, 0, 1, 0, 0, 1, 1, 0, 1, 0, 1, 0, 1, 0, 0, 1, 1, 0, 0, 1, 1, 0, 0, 1, 0, 1, 0, 1, 1, 0, 0, 1, 0, 1, 0, 1, 0, 0, 1, 0, 1, 1, 0, 1, 0, 1, 0, 1, 0, 0, 1, 1, 0, 0, 1]; or

[0, 1, 1, 0, 0, 1, 0, 1, 0, 1, 1, 0, 0, 1, 0, 1, 0, 1, 1, 0, 0, 1, 0, 1, 1, 0, 1, 0, 1, 0, 1, 0, 1, 0, 0, 1, 0, 1, 1, 0, 0, 1, 0, 1, 1, 0, 1, 0, 1, 0, 0, 1, 1, 0, 0, 1, 1, 0, 0, 1, 0, 1, 0, 1, 0, 1, 0, 1, 1, 0, 0, 1, 1, 0, 0, 1, 0, 1, 0, 1, 0, 1, 0, 0, 1, 1, 0, 1, 0, 1, 0, 1, 0, 0, 1, 1, 0, 1, 0, 1, 0, 1, 0, 1, 0, 0, 1, 0, 1, 0, 1, 1, 0, 0, 1, 0, 1, 0, 1, 0, 1, 0, 0, 1, 0, 1, 1, 0, 0, 1, 1, 0, 0, 1, 0, 1, 1, 0, 1, 0, 0, 1, 0, 1, 1, 0, 0, 1, 0, 1, 0, 1, 0, 1, 1, 0, 0, 1, 0, 1, 0, 1, 0, 1, 1, 0, 0, 1, 1, 0, 0, 1, 1, 0, 0, 1, 0, 1, 0, 1, 0, 1, 0, 1, 0, 0, 1, 0, 1, 0, 1, 1, 0, 0, 1, 0, 1, 1, 0, 0, 1, 1, 0, 1, 0, 1, 0, 1, 0, 1, 0, 1, 0, 0, 1, 0, 1, 0, 1, 1, 0, 0, 1, 0, 1, 1, 0, 0, 1, 1, 0, 0, 1, 0, 1, 1, 0, 0, 1, 0, 1]; or

[0, 1, 0, 1, 0, 1, 1, 0, 0, 1, 0, 1, 0, 1, 1, 0, 0, 1, 0, 1, 0, 1, 1, 0, 0, 1, 1, 0, 0, 1, 0, 1, 0, 1, 1, 0, 0, 1, 1, 0, 0, 1, 0, 1, 1, 0, 0, 1, 1, 0, 1, 0, 0, 1, 1, 0, 0, 1, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 0, 1, 1, 0, 1, 0, 1, 0, 1, 0, 0, 1, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 1, 0, 0, 1, 0, 1, 1, 0, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 0, 1, 1, 0, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 0, 1, 0, 1, 0, 1, 1, 0, 0, 1, 1, 0, 0, 1, 0, 1, 0, 1, 0, 1, 1, 0, 0, 1, 0, 1, 0, 1, 0, 1, 0, 1, 0, 1, 0, 1, 0, 0, 1, 0]; or

[0, 1, 0, 1, 1, 0, 1, 0, 1, 0, 0, 1, 0, 1, 1, 0, 1, 0, 1, 0, 1, 0, 1, 0, 1, 0, 1, 0, 0, 1, 1, 0, 0, 1, 1, 0, 1, 0, 0, 1, 1, 0, 1, 0, 0, 1, 0, 1, 0, 1, 0, 1, 1, 0, 0, 1, 1, 0, 0, 1, 0, 1, 0, 1, 1, 0, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 1, 0, 0, 1, 0, 1, 0, 1, 0, 1, 0, 1, 0, 1, 0, 1, 0, 1, 0, 1, 1, 0, 0, 1, 0, 1, 1, 0, 0, 1, 1, 0, 0, 1, 0, 1, 0, 1, 0, 1, 0, 1, 0, 1, 0, 1, 0, 1, 0, 0, 1, 0, 1, 0, 1, 1, 0, 0, 1, 0, 1, 0, 1, 0, 1, 1, 0, 0, 1, 1, 0, 0, 1, 0, 1, 0, 1, 1, 0, 1, 0, 0, 1, 0, 1, 0, 1, 0, 1, 1, 0, 1, 0, 0, 1, 0, 1, 0, 1, 0, 1, 0, 1, 0, 1, 0, 0, 1, 0, 1, 0, 1, 0, 0, 1, 1, 0, 0, 1, 1, 0, 0, 1, 0, 1, 1, 0, 0, 1, 0, 1, 0, 1, 1,

0, 1, 0, 0, 1, 1, 0, 1, 0, 0, 1]; or

[0, 1, 1, 0, 0, 1, 0, 1, 0, 1, 1, 0, 0, 1, 0, 1, 1, 0, 0, 1, 1, 0, 1, 0, 0, 1, 1, 0, 0, 1, 0, 1, 0, 1, 1, 0, 1, 0, 1, 0, 1, 0, 0, 1, 0, 1, 0, 1, 1,
0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0,
0, 1, 0, 1, 0, 1, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 0,
1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0, 1, 0, 1, 1, 0, 0, 1, 0, 1, 0, 1, 1, 0, 0, 0, 1,
1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 0, 1, 0, 1, 0, 1, 1, 0, 1, 0, 1, 0, 1, 0, 0, 1, 0,
1, 0, 1, 1, 0, 0, 1, 0, 1, 0, 1]; or

[0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 0,
1, 1, 0, 0, 1, 0, 1, 1, 0, 0, 1, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0,
0, 1, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 1, 0, 0,
1, 0, 1, 0, 1, 1, 0, 0, 1, 0, 1, 0, 1, 0, 1, 1, 0, 0, 1, 0, 1, 0, 1, 1, 0, 0, 1, 0, 1, 0, 1, 1, 0, 0, 1, 0, 1, 1, 0, 0, 1, 1, 0, 1, 0, 0, 1, 1, 0,
1, 0, 1, 0, 1, 0, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1,
0, 1, 0, 0, 1, 1, 0, 0, 1, 0, 1]; or

[0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 0, 1, 1, 0, 1,
0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 1, 0, 1, 0, 1, 0, 0, 1, 0, 1, 0, 1, 0, 1, 1, 0, 0, 1,
0, 1, 1, 0, 0, 1, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 1, 0, 1,
0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 0, 1,
0, 1, 1, 0, 0, 1, 0, 1, 0, 1, 1, 0, 0, 1, 0, 1, 0, 1, 1, 0, 0, 1, 0, 1, 0, 1, 0, 0, 1, 0, 1, 0, 1, 1, 0, 0, 1, 1, 0, 1, 0, 0, 1, 1, 0, 0, 1, 0, 1, 1,
0, 0, 1, 0, 1, 0, 1, 1, 0, 0, 1]; or

[0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 1, 0, 1, 0, 0, 1, 0,
1, 0, 1, 0, 1, 1, 0, 1, 0, 1, 0, 1, 0, 0, 1, 1, 0, 1, 0, 1, 0, 0, 1, 1, 0, 0, 1, 0, 1, 1, 0, 0, 1, 0, 1, 0, 1, 1, 0, 0, 1, 0, 1, 0, 1, 1, 0, 0, 1, 0, 1,
0, 1, 0, 1, 1, 0, 0, 1, 0, 1, 0, 1, 1, 0, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 1, 0, 1,
0, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0, 1, 1, 0, 1, 0, 1, 0, 1, 0, 0, 1, 1, 0, 1, 0,
0, 1, 1, 0, 0, 1, 0, 1, 1, 0, 0, 1, 1, 0, 1, 0, 0, 1, 1, 0, 1, 0, 1, 0, 0, 1, 1, 0, 0, 1, 0, 1, 0, 1, 1, 0, 0, 1, 0, 1, 0, 1, 1, 0, 0, 1, 0, 1, 0,
1, 1, 0, 1, 0, 1, 0, 1, 0, 0, 1]; or

[0, 1, 1, 0, 1, 0, 0, 1, 1, 0, 1, 0, 0, 1, 0, 1, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0, 1, 0, 0, 0,
1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 1, 0,
0, 1, 0, 1, 1, 0, 0, 1, 0, 1, 1, 0, 1, 0, 0, 1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 0, 0,
1, 0, 1, 1, 0, 1, 0, 1, 0, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 0, 1, 0, 1, 1, 0, 0, 1,
1, 0, 0, 1, 0, 1, 0, 1, 0, 1, 0, 1, 0, 1, 1, 0, 1, 0, 0, 1, 0, 1, 0, 1, 1, 0, 1, 0, 0, 1, 1, 0, 0, 1, 1, 0, 1, 0, 1, 0, 1, 0, 1, 0, 1, 0, 0, 1, 0,
1, 1, 0, 1, 0, 1, 0, 0, 1, 0, 1]; or

[0, 1, 0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 0, 1, 0, 1, 0, 1, 1, 0, 1, 0, 0, 0, 1, 0,
1, 0, 1, 0, 1, 0, 1, 1, 0, 0, 1, 1, 0, 0, 1, 0, 1, 1, 0, 1, 0, 1, 0, 0, 1, 0, 1, 1, 0, 1, 0, 1, 0, 1, 0, 1, 0, 0, 1, 1, 0, 0, 1, 0, 1, 1, 0, 0, 1, 0, 1,
0, 1, 1, 0, 1, 0, 1, 0, 0, 1, 0, 1, 1, 0, 1, 0, 1, 0, 1, 0, 1, 0, 1, 0, 0, 1, 1, 0, 0, 1, 0, 1, 0, 1, 0, 1, 0, 1, 1, 0, 0, 1, 1, 0, 0, 1, 1, 0, 1, 0, 1,
0, 0, 1, 0, 1, 1, 0, 0, 1, 0, 1, 1, 0, 0, 1, 0, 1, 0, 1, 0, 1, 0, 1, 1, 0, 0, 1, 0, 1, 0, 1, 1, 0, 0, 1, 0, 1, 1, 0, 0, 1, 0, 1, 0, 1,
0, 1, 0, 1, 1, 0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 0, 1, 0, 1, 1,
0, 1, 0, 0, 1, 1, 0, 1, 0, 0, 1]; or

[0, 1, 1, 0, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 0, 1, 0,
1, 0, 1, 1, 0, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 0, 1,
1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 0, 1, 0, 1, 1, 0, 1,
0, 0, 1, 1, 0, 1, 0, 1, 0, 0, 1, 1, 0, 0, 1, 0, 1, 0, 1, 1, 0, 0, 1, 0, 1, 1, 0, 0, 1, 1, 0, 0, 1, 0, 1, 0, 1, 1, 0, 0, 1, 0, 1, 0, 1, 1, 0, 1, 0,
1, 0, 1, 0, 0, 1, 1, 0, 1, 0, 0, 1, 0, 1, 0, 1, 1, 0, 0, 1, 0, 1, 1, 0, 1, 0, 1, 0, 1, 0, 0, 1, 0, 1, 0, 1, 1, 0, 1, 0, 1, 0, 1, 0, 1, 0, 1, 0, 0,
1, 1, 0, 0, 1, 0, 1, 1, 0, 0, 1]; or

[0, 1, 1, 0, 1, 0, 1, 0, 1, 0, 0, 1, 0, 1, 0, 1, 0, 1, 1, 0, 0, 1, 1, 0, 1, 0, 1, 0, 0, 1, 1, 0, 1, 0, 0, 1, 0, 1, 0, 1, 1, 0, 0, 1, 0, 1, 0, 1, 0, 1, 0,
1, 0, 1, 1, 0, 0, 1, 0, 1, 0, 1, 1, 0, 0, 1, 1, 0, 0, 1, 0, 1, 0, 1, 0, 1, 1, 0, 1, 0, 1, 0, 1, 0, 1, 0, 0, 1, 1, 0, 0, 1, 0, 1, 1, 0, 0, 1, 0, 1,
1, 0, 1, 0, 1, 0, 0, 1, 1, 0, 1, 0, 1, 0, 1, 0, 1, 0, 0, 1, 1, 0, 1, 0, 0, 1, 1, 0, 1, 0, 1, 0, 0, 1, 1, 0, 1, 0, 1, 0, 0, 1, 1, 0, 0, 1, 0, 1, 1, 0, 0, 1,
0, 1, 0, 0, 1, 1, 0, 1, 0, 1, 0, 0, 1, 1, 0, 1, 0, 0, 1, 0, 1, 1, 0, 0, 1, 0, 1, 1, 0, 0, 1, 1, 0, 1, 0, 1, 0, 1, 0, 0, 1, 0, 1, 0, 1, 1, 0, 0, 1,
1, 0, 1, 0, 1, 0, 0, 1, 1, 0, 1, 0, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 1, 0, 0,
1, 1, 0, 0, 1, 0, 1, 1, 0, 0, 1]; or

[0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 1, 0, 1, 0, 0, 0,
1, 0, 1, 0, 1, 1, 0, 0, 1, 0, 1, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 0, 1, 0, 1, 0, 1, 1, 0,
0, 1, 1, 0, 1, 0, 1, 0, 1, 0, 0, 1, 1, 0, 1, 0, 0, 0, 1, 0, 1, 0, 1, 1, 0, 0, 1, 0, 1, 0, 1, 1, 0, 1, 0, 1, 0, 0, 0, 1, 1, 0, 1, 0, 1, 0, 1, 0, 0, 1, 1, 0,
0, 1, 0, 0, 1, 1, 0, 1, 0, 1, 0, 0, 1, 0, 1, 1, 0, 0, 1, 0, 1, 1, 0, 0, 1, 1, 0, 1, 0, 1, 0, 1, 0, 1, 0, 0, 1, 0, 1, 0, 1, 0, 1, 1, 0, 0, 1, 1, 0,
0, 1, 0, 1, 0, 1, 1, 0, 0, 1, 0, 1, 0, 1, 0, 1, 0, 1, 1, 0, 0, 1, 0, 1, 0, 1, 1, 0, 1, 0, 0, 1, 1, 0, 0, 1, 1, 0, 0, 1, 0, 1, 0, 1, 0, 1, 0, 1, 0,
1, 1, 0, 1, 0, 1, 0, 1, 0, 0, 1]; or

[0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1, 1, 0, 1, 0, 1, 0, 0, 1, 1, 0, 1, 0, 0, 1,
0, 1, 0, 1, 0, 0, 1, 1, 0, 1, 0, 1, 0, 0, 1, 1, 0, 0, 1, 1, 0, 0, 1, 0, 1, 0, 1, 1, 0, 0, 1, 1, 0, 0, 1, 0, 1, 1, 0, 0, 1, 1, 0, 1, 0, 1, 0, 1, 0, 1, 1, 0, 1, 0, 1, 0, 1, 0, 0, 1, 0, 1,
1, 0, 0, 1, 0, 1, 0, 1, 1, 0, 0, 1, 0, 1, 0, 1, 0, 1, 0, 1, 1, 0, 0, 1, 0, 1, 0, 1, 1, 0, 0, 1, 0, 1, 0, 1, 0, 0, 1, 1, 0, 1, 0, 1, 0, 0, 1, 1, 0, 1, 0, 0, 0, 1, 1, 0, 1, 0, 1, 0, 0, 1, 0, 1, 0, 1, 1, 0, 0, 1, 0, 1, 0, 1, 1, 0, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 0, 1, 1, 0, 0, 1,
1, 0, 1, 0, 1, 0, 0, 1, 1, 0, 1, 0, 0, 1, 0, 1, 0, 1, 1, 0, 0, 1, 0, 1, 0, 1, 1, 0, 0, 1, 1, 0, 0, 1, 0, 1, 1, 0, 0, 1, 1, 0, 1, 0, 0, 1, 0, 1, 0,
1, 1, 0, 1, 0, 1, 0, 1, 0, 0, 1]; or

[0, 1, 1, 0, 1, 0, 1, 0, 0, 1, 1, 0, 1, 0, 1, 0, 1, 0, 0, 1, 1, 0, 1, 0, 1, 0, 0, 1, 1, 0, 1, 0, 1, 0, 0, 1, 0, 1, 0, 1, 0, 1, 1, 0, 1, 0, 1, 0, 1,
0, 0, 1, 1, 0, 1, 0, 0, 1, 1, 0, 0, 1, 0, 1, 1, 0, 0, 1, 0, 1, 0, 1, 1, 0, 0, 1, 0, 1, 0, 1, 0, 0, 1, 0, 1, 0, 1, 0, 1, 1, 0, 0, 1, 0, 1, 0, 1, 0, 1,
1, 0, 1, 0, 1, 0, 1, 0, 0, 1, 0, 1, 0, 1, 0, 1, 1, 0, 0, 1, 0, 1, 1, 0, 0, 1, 1, 0, 1, 0, 1, 0, 0, 1, 0, 1, 0, 1, 0, 1, 1, 0, 1, 0, 1, 0, 1, 0, 0, 1, 1,
0, 0, 1, 0, 1, 1, 0, 0, 1, 1, 0, 1, 0, 0, 0, 1, 1, 0, 1, 0, 1, 0, 0, 1, 1, 0, 0, 1, 0, 1, 0, 1, 1, 0, 0, 1, 0, 1, 1, 0, 0, 1,
0, 1, 0, 1, 0, 1, 1, 0, 1, 0, 1, 0, 0, 1, 1, 0, 0, 1, 0, 1, 1, 0, 0, 1, 1, 0, 1, 0, 0, 1, 1, 0, 1, 0, 1, 0, 0, 1, 1, 0, 1, 0, 1, 0, 0, 1, 1, 0, 0,
1, 0, 1, 0, 1, 1, 0, 0, 0, 1, 0, 1]; or

[0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 1,
0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0,
1, 0, 0, 1, 1, 0, 0, 1, 0, 1, 1, 0, 0, 1, 1, 0, 1, 0, 1, 0, 1, 0, 0, 1, 0, 1, 0, 1, 0, 1, 1, 0, 1, 0, 1, 0, 1, 0, 0, 1, 1, 0, 0, 1, 0, 1, 1, 0, 0, 1, 0, 1, 0,
1, 0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 0, 1, 1, 0, 0, 1, 0, 1, 0, 1, 1, 0, 0, 1, 0, 1,
1, 0, 0, 1, 1, 0, 1, 0, 0, 1, 1, 0, 1, 0, 1, 0, 1, 0, 0, 1, 0, 1, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 1, 0, 1, 0, 1,
0, 0, 1, 1, 0, 1, 0, 1, 0, 0, 1]; or

[0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 1, 0, 1, 0, 1, 0, 0, 1, 0, 1, 1, 0, 0, 1, 1, 0, 0, 1, 1,
0, 0, 1, 0, 1, 1, 0, 1, 0, 1, 0, 1, 0, 1, 0, 1, 0, 0, 1, 0, 1, 1, 0, 0, 1, 1, 0, 0, 1, 0, 1, 1, 0, 1, 0, 0, 1, 0, 1, 0, 1, 0, 1, 1, 0, 1, 0, 1, 0, 1, 0, 1, 1, 0,
1, 0, 0, 1, 0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 1, 0, 0, 1, 0, 1, 1, 0, 0, 1, 1, 0, 0, 1, 1, 0, 0,
1, 0, 1, 1, 0, 1, 0, 1, 0, 1, 0, 1, 0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1,
1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 1, 0, 1, 0, 0, 1, 0, 1, 1, 0, 0, 1, 1, 0, 0, 1, 0, 1, 1, 0, 1,
0, 0, 1, 0, 1, 0, 1, 0, 1, 0, 1]; or

[0, 1, 1, 0, 1, 0, 0, 1, 0, 1, 0, 1, 0, 1, 0, 1, 0, 1, 1, 0, 1, 0, 0, 1, 1, 0, 0, 1, 1, 0, 1, 0, 0, 1, 0, 1, 1, 0, 1, 0, 1, 0, 1, 0, 1, 0, 1, 0, 1,
0, 1, 0, 0, 1, 0, 1, 1, 0, 0, 1, 1, 0, 0, 1, 1, 0, 0, 1, 0, 1, 1, 0, 1, 0, 1, 0, 1, 0, 1, 0, 0, 1, 0, 1, 1, 0, 1, 0, 0, 1, 1, 0, 0, 1, 1, 0, 1, 0, 1, 0,
0, 1, 0, 1, 1, 0, 1, 0, 1, 0, 1, 0, 1, 0, 0, 1, 0, 1, 1, 0, 1, 0, 1, 0, 0, 1, 1, 0, 0, 1, 1, 0, 0, 1, 1, 0, 1, 0, 1, 0, 0, 1, 0, 1, 0, 1, 0, 1, 0, 1, 0, 1, 0,
1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 0, 1, 0, 1, 1, 0, 1, 0, 1, 0, 0, 1, 1, 0, 0, 1, 1, 0, 1, 0, 0, 0, 1,
0, 1, 1, 0, 1, 0, 1, 0, 1, 0, 1, 0, 0, 1, 0, 1, 1, 0, 1, 0, 0, 1, 1, 0, 0, 1, 1, 0, 0, 1, 1, 0, 1, 0, 0, 1, 0, 1, 0, 1, 0, 1, 0, 1, 0, 1, 1, 0, 1, 0, 0, 0,
1, 0, 1, 1, 0, 0, 0, 1, 1, 0, 0, 1]; or

[0, 1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 0, 0, 1, 0, 1, 0, 1, 0, 1, 0, 1, 0, 1, 0, 1, 1, 0, 0, 1, 0, 1, 0, 1, 1, 0, 0, 1, 1, 0, 0,
1, 1, 0, 1, 0, 0, 1, 1, 0, 1, 0, 1, 0, 1, 0, 1, 0, 1, 0, 1, 0, 0, 1, 0, 1, 0, 1, 0, 1, 1, 0, 0, 1, 1, 0, 1, 0, 0, 1, 1, 0, 1, 0, 0, 1, 0, 1, 1, 0, 0, 1, 0, 1, 0, 1, 0, 1, 0, 1, 1, 0,
1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 1,
0, 1, 0, 0, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 0, 0, 1, 0, 1,
1, 0, 1, 0, 1, 0, 0, 1, 1, 0, 0, 1, 0, 1, 1, 0, 0, 1, 0, 1, 1, 0, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 0, 1, 0,
1, 1, 0, 0, 1, 0, 1, 0, 1, 0, 1]; or

[0, 1, 1, 0, 1, 0, 0, 1, 1, 0, 1, 0, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 0, 1, 0,
1, 0, 1, 1, 0, 1, 0, 1, 0, 0, 1, 1, 0, 0, 1, 1, 0, 0, 1, 0, 1, 1, 0, 0, 1, 0, 1, 0, 1, 0, 1, 1, 0, 1, 0, 0, 1, 0, 1, 0, 1, 1, 0, 0, 1, 1, 0, 1, 0, 1, 0,
0, 1, 0, 1, 1, 0, 0, 1, 0, 1, 0, 1, 0, 1, 1, 0, 1, 0, 1, 0, 0, 1, 0, 1, 0, 1, 0, 1, 1, 0, 0, 1, 1, 0, 0, 1, 1, 0, 1, 0, 1, 0, 0, 1, 1, 0, 1, 0, 1, 0, 1, 0, 1, 0, 1, 0, 0, 1,
0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 1, 0, 1, 0, 1, 0, 0, 1, 0, 1, 0, 1, 1, 0, 0, 1, 1, 0, 1, 0, 1, 0, 0, 1,
0, 1, 1, 0, 0, 1, 0, 1, 0, 1, 0, 1, 1, 0, 1, 0, 0, 1, 0, 1, 0, 1, 1, 0, 0, 1, 1, 0, 0, 1, 1, 0, 1, 0, 0, 1, 1, 0, 1, 0, 1, 0, 1, 0, 1, 0, 0, 1, 0, 1, 1,
0, 1, 0, 1, 0, 0, 1, 1, 0, 0, 1]; or

[0, 1, 0, 1, 0, 1, 0, 1, 0, 1, 1, 0, 1, 0, 1, 0, 0, 1, 0, 1, 1, 0, 0, 1, 1, 0, 1, 0, 1, 0, 1, 0, 1, 0, 1, 0, 1, 0, 1, 0, 0, 1, 1, 0, 1, 0, 1, 0, 1,
0, 0, 1, 1, 0, 0, 1, 1, 0, 1, 0, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 0, 1, 1, 0, 0, 1, 1, 0, 1, 0, 1, 0,
1, 0, 1, 0, 1, 0, 0, 1, 0, 1, 0, 1, 1, 0, 0, 1, 1, 0, 0, 1, 1, 0, 1, 0, 0, 1, 0, 1, 0, 1, 0, 1, 0, 1, 1, 0, 0, 1, 1, 0, 0, 1, 1, 0, 1, 0, 0, 1, 1,
0, 0, 1, 1, 0, 0, 1, 0, 1, 1, 0, 1, 0, 0, 1, 0, 1, 0, 1, 0, 1, 0, 1, 1, 0, 0, 1, 0, 1, 1, 0, 0, 1, 1, 0, 0, 1, 1, 0, 1, 0, 0, 1, 0, 1, 0, 1, 1, 0, 0, 1, 1, 0, 1, 0, 1, 0, 1, 0,
1, 0, 1, 0, 1, 0, 0, 1, 0, 1, 1, 0, 0, 1, 1, 0, 0, 1, 1, 0, 0, 1, 0, 1, 1, 0, 1, 0, 1, 0, 0, 1, 1, 0, 0, 1, 0, 1, 1, 0, 1, 0, 1, 0, 1, 0, 1, 0, 1, 0, 0, 1, 0, 1, 1,
0, 1, 0, 1, 0, 0, 1, 1, 0, 0, 1]; or

[0, 1, 1, 0, 0, 1, 1, 0, 0, 1, 0, 1, 1, 0, 1, 0, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 1,
0, 1, 0, 1, 0, 1, 0, 1, 0, 0, 1, 0, 1, 1, 0, 1, 0, 0, 1, 1, 0, 0, 1, 1, 0, 1, 0, 0, 1, 0, 1, 0, 1, 0, 1, 0, 1, 0, 1, 1, 0, 1, 0, 0, 0, 1, 1, 0,
0, 1, 1, 0, 0, 1, 1, 0, 1, 0, 0, 1, 0, 1, 0, 1, 0, 1, 0, 1, 0, 1, 0, 1, 1, 0, 1, 0, 0, 1, 1, 0, 0, 1, 1, 0, 0, 1, 1, 0, 1, 0, 0, 1, 0, 1, 0, 1, 1, 0, 1,
0, 1, 0, 1, 0, 1, 0, 0, 1, 0, 1, 1, 0, 1, 0, 0, 1, 1, 0, 0, 1, 1, 0, 0, 1, 0, 1, 1, 0, 1, 0, 1, 0, 1, 0, 1, 0, 1, 0, 0, 1, 0, 1, 1, 0, 0, 1, 1, 0,
0, 1, 1, 0, 0, 1, 0, 1, 1, 0, 1, 0, 1, 0, 1, 0, 1, 0, 1, 0, 1, 0, 0, 1, 0, 1, 1, 0, 1, 0, 1, 0, 0, 1, 1, 0, 0, 1, 1, 0, 1, 0, 0, 1, 0, 1, 0, 1, 0, 1, 0,
1, 0, 1, 0, 1, 1, 0, 1, 0, 1, 0, 0, 1]; or

[0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 0, 1, 1, 0, 1, 0, 0, 0, 1, 0,
1, 1, 0, 0, 1, 1, 0, 1, 0, 1, 0, 0, 1, 0, 1, 1, 0, 1, 0, 1, 0, 1, 0, 0, 0, 1, 1, 0, 1, 0, 0, 1, 1, 0, 0, 1, 1, 0, 0, 1, 0, 1, 0, 1, 1, 0, 1, 0, 1, 0, 1, 0,
1, 0, 1, 0, 1, 0, 0, 1, 1, 0, 1, 0, 0, 1, 1, 0, 0, 1, 1, 0, 0, 1, 0, 1, 1, 0, 1, 0, 1, 0, 1, 0, 1, 0, 0, 1, 0, 1, 0, 1, 0, 1, 1, 0, 0, 1, 0, 1, 1, 0, 1, 0, 0, 0,
1, 1, 0, 0, 1, 0, 1, 0, 1, 1, 0, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0,
1, 0, 1, 0, 0, 1, 1, 0, 1, 0, 0, 1, 1, 0, 0, 1, 1, 0, 0, 1, 0, 1, 0, 1, 1, 0, 1, 0, 1, 0, 0, 1, 1, 0, 0, 1, 0, 1, 1, 0, 0, 1, 1, 0, 0, 1, 1, 0, 0,
1, 1, 0, 1, 0, 1, 0, 0, 1, 0, 1]; or

[0, 1, 1, 0, 0, 1, 1, 0, 1, 0, 1, 0, 0, 1, 0, 1, 1, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 1, 0, 0, 1, 1, 0, 0, 1, 0, 1, 0, 1, 1, 0, 1, 0, 1, 0, 1, 0, 1, 0, 1, 0, 1, 0, 0, 1, 1, 0, 1, 0, 0, 1, 1, 0,
0, 1, 1, 0, 0, 1, 0, 1, 0, 1, 1, 0, 1, 0, 1, 0, 1, 0, 1, 0, 1, 0, 0, 1, 1, 0, 1, 0, 0, 1, 1, 0, 0, 1, 1, 0, 0, 1, 0, 1, 0, 1, 1, 0, 1, 0, 0, 1, 0,
1, 0, 1, 0, 1, 1, 0, 0, 1, 0, 1, 1, 0, 1, 0, 0, 1, 1, 0, 0, 1, 0, 1, 0, 1, 1, 0, 1, 0, 0, 1, 0, 1, 0, 1, 0, 1, 1, 0, 0, 1, 0, 1, 1, 0, 0, 1, 1, 0,
0, 1, 1, 0, 1, 0, 1, 0, 0, 1, 0, 1, 0, 1, 0, 1, 0, 1, 1, 0, 0, 1, 0, 1, 1, 0, 1, 0, 0, 0, 1, 1, 0, 0, 1, 0, 1, 0, 1, 0, 1, 0, 1, 1, 0, 1, 0, 1, 0, 1, 0, 1, 0, 1,
0, 1, 0, 0, 1, 1, 0, 1, 0, 0, 1]; or
[0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 0, 1, 1, 0, 1, 0, 0, 1, 1, 0, 0, 1, 1, 0, 0, 1, 1,
0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 1, 1, 0,
0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 1, 0, 0, 1, 0, 1, 0, 1, 0, 1, 0, 1, 0, 1, 0, 1, 1,
0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 0, 1, 0, 1, 0, 1, 0, 1,
1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0,
1, 0, 1, 1, 0, 1, 0, 0, 1, 0, 1]; or
[0, 1, 0, 1, 1, 0, 1, 0, 1, 0, 1, 0, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1, 1, 0, 0,
1, 0, 1, 0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 1, 0, 0, 1, 0, 1, 1, 0, 1, 0, 0, 0, 1, 0, 1,
1, 0, 1, 0, 0, 1, 1, 0, 0, 1, 1, 0, 0, 1, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 1, 0, 1, 0, 0,
1, 1, 0, 0, 1, 0, 1, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 0, 1, 1, 0, 1, 0, 0, 1, 0, 1, 1, 0, 1, 0,
0, 1, 0, 1, 0, 1, 0, 1, 0, 1, 0, 1, 1, 0, 0, 1, 1, 0, 1, 0, 0, 1, 0, 1, 1, 0, 1, 0, 0, 1, 0, 1, 1, 0, 0, 1, 1, 0, 0, 1, 1, 0, 0, 1, 0, 1, 0,
1, 0, 1, 1, 0, 1, 0, 0, 1, 0, 1]; or
[0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1,
0, 1, 0, 1, 0, 1, 0, 1, 0, 0, 1, 0, 1, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 0, 1, 1, 0, 1, 0,
0, 1, 0, 1, 1, 0, 1, 0, 0, 1, 1, 0, 0, 1, 0, 1, 0, 1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 0,
1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0,
0, 1, 0, 1, 1, 0, 1, 0, 1, 0, 1, 0, 0, 1, 1, 0, 0, 1, 1, 0, 0, 1, 1, 0, 1, 0, 0, 1, 0, 1, 1, 0, 1, 0, 0, 1, 0, 1, 1, 0, 0, 1, 1, 0, 1, 0, 1, 0, 1,
0, 1, 0, 1, 0, 1, 0, 0, 1, 0, 1]; or
[0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 1, 0, 0, 1, 0, 1, 1, 0, 1, 0, 0, 1, 1, 0, 0, 1, 0,
1, 0, 1, 0, 1, 0, 1, 0, 1, 1, 0, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 0, 1, 1, 0, 0, 1,
1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 1, 0, 1, 0, 0, 1, 0, 1, 1, 0, 1, 0, 1, 0, 1, 0, 1, 0, 0, 1, 1,
0, 0, 1, 1, 0, 0, 1, 1, 0, 1, 0, 0, 1, 0, 1, 1, 0, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 0, 1,
1, 0, 1, 0, 0, 1, 0, 1, 0, 1, 0, 1, 1, 0, 0, 1, 1, 0, 0, 1, 1, 0, 0, 1, 0, 1, 1, 0, 0, 1, 1, 0, 1, 0, 0, 1, 0, 1, 1, 0, 0, 1, 1, 0, 1, 0, 1, 0, 1,
0, 1, 0, 1, 0, 1, 0, 0, 1, 0, 1]; or
[0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1, 1, 0, 1, 0, 0, 1, 1, 0, 1, 0, 0, 1, 0, 1, 1,
0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 1, 0,
0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 0, 1, 0, 1, 0,
1, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 0, 1, 1, 0,
0, 1, 1, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 0,
1, 0, 1, 1, 0, 0, 1, 1, 0, 0, 1]; or
[0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 1, 0, 0, 1, 0, 1, 1, 0, 0, 1, 0, 1, 1, 0, 0, 1, 0, 1, 1, 0, 1, 0, 0,
1, 0, 1, 0, 1, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 0, 1, 0, 1, 0, 1, 1, 0, 1, 0, 0, 1, 0, 1,
1, 0, 1, 0, 0, 1, 1, 0, 1, 0, 0, 1, 0, 1, 1, 0, 1, 0, 1, 0, 1, 0, 1, 0, 0, 1, 1, 0, 0, 1, 1, 0, 0, 1, 1, 0, 0, 1, 1, 0, 1, 0, 1, 0, 1, 0, 1, 0, 1, 0, 1,
0, 0, 1, 0, 1, 0, 1, 1, 0, 1, 0, 0, 1, 1, 0, 0, 1, 0, 1, 1, 0, 0, 1, 0, 1, 1, 0, 1, 0, 0, 1, 0, 1, 0, 1, 0, 1, 1, 0, 0, 1, 1, 0, 0, 1, 1, 0, 0, 1,
1, 0, 0, 1, 0, 1, 0, 1, 0, 1, 0, 1, 0, 1, 1, 0, 1, 0, 1, 0, 1, 0, 0, 1, 0, 1, 1, 0, 1, 0, 0, 1, 0, 1, 1, 0, 0, 1, 0, 1, 1, 0, 1, 0, 0, 1, 0, 1, 0,
1, 0, 1, 1, 0, 0, 1, 1, 0, 0, 1]; or
[0, 1, 1, 0, 0, 1, 1, 0, 0, 1, 0, 1, 0, 1, 0, 1, 1, 0, 1, 0, 1, 0, 0, 1, 0, 1, 1, 0, 0, 1, 0, 1, 1, 0, 0, 1, 1, 0, 0, 1, 1, 0, 0, 1, 1, 0, 1, 0, 0, 1, 0, 1, 0, 1, 1, 0, 1, 0, 1,
0, 1, 0, 1, 0, 1, 0, 1, 0, 0, 1, 1, 0, 0, 1, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 1, 0,
0, 1, 0, 1, 1, 0, 1, 0, 1, 0, 0, 1, 0, 1, 0, 1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0,
0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1, 0, 1, 0, 1, 0, 1, 0, 1, 0, 0, 1, 1, 0, 0, 1, 1, 0, 0, 1,
1, 0, 0, 1, 1, 0, 1, 0, 1, 0, 1, 1, 0, 1, 0, 1, 0, 1, 0, 0, 1, 0, 1, 1, 0, 1, 0, 0, 1, 0, 1, 1, 0, 1, 0, 0, 1, 0, 1, 1, 0, 1, 0, 1, 0, 1, 0,
0, 1, 0, 1, 0, 0, 1, 1, 0, 0, 1]; or
[0, 1, 1, 0, 0, 1, 1, 0, 0, 1, 0, 1, 0, 1, 0, 1, 1, 0, 1, 0, 1, 0, 0, 1, 0, 1, 1, 0, 0, 1, 0, 1, 1, 0, 1, 0, 0, 1, 0, 1, 0, 1, 1, 0, 1, 0, 1, 0, 0, 1, 0, 1, 0, 1, 0,
1, 0, 1, 0, 1, 0, 1, 1, 0, 0, 1, 1, 0, 0, 1, 1, 0, 0, 1, 1, 0, 0, 1, 0, 1, 0, 1, 0, 1, 1, 0, 1, 0, 0, 1, 0, 1, 1, 0, 0, 1, 0, 1, 1, 0, 0, 1,
1, 0, 1, 0, 0, 1, 0, 1, 0, 1, 1, 0, 1, 0, 1, 0, 1, 0, 1, 0, 1, 0, 1, 0, 0, 1, 1, 0, 0, 1, 1, 0, 0, 1, 1, 0, 1, 0, 1, 0, 1, 0, 1, 0, 1, 0, 0, 1, 0,
1, 1, 0, 1, 0, 0, 1, 1, 0, 1, 0, 0, 1, 0, 1, 1, 0, 1, 0, 0, 1, 0, 1, 0, 1, 1, 0, 1, 0, 0, 1, 0, 1, 0, 1, 0, 1, 1, 0, 1, 0, 1, 0, 1, 0, 0, 1, 1, 0, 0, 1,
0, 1, 1, 0, 0, 1, 0, 1, 0, 1, 0, 1, 1, 0, 1, 0, 0, 1, 0, 1, 1, 0, 0, 1, 0, 1, 1, 0, 0, 1, 1, 0, 1, 0, 0, 1, 0, 1, 0, 1, 1, 0, 1, 0, 1, 0, 1,
0, 1, 0, 1, 0, 0, 1, 1, 0, 0, 1]; or
[0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 1, 0, 1, 0, 0, 1, 1, 0, 1, 0, 0, 0, 1, 0, 1, 0, 0, 1, 0, 1, 0, 1, 1,
0, 1, 0, 0, 1, 1, 0, 0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1,
0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 1,
0, 0, 1, 1, 0, 0, 1, 1, 0, 1, 0, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 0, 0, 1, 0, 1,
1, 0, 0, 1, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 0, 1, 0, 1, 0, 1, 1,

0, 0, 1, 1, 0, 0, 1, 0, 1, 0, 1]; or

[0, 1, 0, 1, 1, 0, 0, 1, 1, 0, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 1, 0, 1, 0, 1, 0, 1,
0, 1, 0, 0, 1, 1, 0, 1, 0, 0, 1, 0, 1, 0, 1, 1, 0, 1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 1, 0,
1, 0, 0, 1, 1, 0, 0, 1, 1, 0, 1, 0, 1, 0, 1, 0, 1, 0, 0, 1, 1, 0, 1, 0, 0, 1, 0, 1, 0, 1, 0, 1, 0, 1, 1, 0, 0, 1, 1, 0, 0, 1, 0, 1, 0, 1, 1, 0, 1,
0, 0, 1, 1, 0, 1, 0, 0, 1, 0, 1, 0, 1, 0, 1, 1, 0, 0, 1, 1, 0, 0, 1, 0, 1, 0, 1, 1, 0, 1, 0, 0, 1, 1, 0, 1, 0, 0, 1, 0, 1, 0, 1, 1, 0, 1, 0,
0, 1, 1, 0, 0, 1, 1, 0, 1, 0, 1, 0, 0, 1, 0, 1, 1, 0, 0, 1, 0, 1, 1, 0, 1, 0, 1, 0, 0, 1, 0, 1, 1, 0, 0, 1, 1, 0, 0, 1, 0, 1, 0, 1, 1, 0, 1, 0, 0,
1, 1, 0, 1, 0, 0, 1, 0, 1, 0, 1]; or

[0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 1,
0, 1, 0, 1, 0, 0, 1, 0, 1, 1, 0, 0, 1, 0, 1, 1, 0, 1, 0, 1, 0, 0, 1, 1, 0, 0, 1, 1, 0, 1, 0, 1, 0, 1, 0, 1, 0, 0, 1, 0, 1, 1, 0, 0, 1, 0, 1, 1, 0,
1, 0, 1, 0, 0, 1, 1, 0, 0, 1, 1, 0, 1, 0, 1, 0, 1, 0, 1, 0, 0, 1, 0, 1, 1, 0, 0, 1, 0, 1, 0, 1, 0, 1, 0, 1, 1, 0, 0, 1, 1, 0, 0, 1, 0, 1, 1, 0, 1,
0, 1, 0, 0, 1, 0, 1, 1, 0, 0, 1, 0, 1, 0, 1, 0, 1, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 1, 0, 1, 0,
1, 0, 0, 1, 1, 0, 0, 1, 1, 0, 1, 0, 0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 1, 0, 1, 0, 1, 0, 1,
0, 0, 1, 0, 1, 1, 0, 0, 1, 0, 1]; or

[0, 1, 0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 1, 0, 1, 0, 1, 0, 1, 0, 0, 1, 0, 1, 1, 0, 0, 1, 0, 1, 1,
0, 1, 0, 1, 0, 0, 1, 1, 0, 0, 1, 1, 0, 1, 0, 0, 1, 0, 1, 0, 1, 1, 0, 1, 0, 1, 0, 0, 1, 1, 0, 1, 0, 0, 1, 0, 1, 0, 1, 1, 0, 0, 1, 1, 0, 0, 1, 0, 1, 0, 1,
0, 1, 0, 1, 1, 0, 1, 0, 0, 1, 1, 0, 1, 0, 0, 1, 0, 1, 0, 1, 1, 0, 0, 1, 1, 0, 0, 1, 0, 1, 0, 1, 0, 1, 0, 1, 1, 0, 1, 0, 0, 1, 1, 0, 1, 0, 1, 0, 1,
0, 1, 0, 0, 1, 1, 0, 0, 1, 1, 0, 1, 0, 0, 1, 0, 1, 0, 1, 1, 0, 1, 0, 0, 1, 1, 0, 1, 0, 1, 0, 1, 0, 1, 0, 0, 1, 1, 0, 0, 1, 1, 0, 1, 0, 1, 0, 0, 1, 0, 1,
0, 1, 1, 0, 1, 0, 0, 1, 1, 0, 1, 0, 1, 0, 1, 0, 1, 0, 0, 1, 1, 0, 0, 1, 1, 0, 1, 0, 1, 0, 1, 0, 1, 0, 0, 1, 0, 1, 1, 0, 0, 1, 0, 1, 0, 1, 0, 1, 0,
1, 1, 0, 0, 1, 1, 0, 0, 1, 0, 1]; or

[0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 0,
1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 0, 1, 1, 0,
0, 1, 0, 1, 0, 1, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 0, 0, 1, 1,
0, 1, 0, 1, 0, 1, 0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 1, 0, 0, 1, 1, 0, 1, 0, 0, 0, 1, 1, 0,
1, 0, 1, 0, 0, 1, 1, 0, 0, 1, 0, 1, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 0, 1, 0,
1, 0, 1, 0, 1, 1, 0, 0, 1, 0, 1]; or

[0, 1, 0, 1, 1, 0, 0, 1, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 1, 0, 1, 0, 1, 0, 0, 1, 0,
1, 0, 1, 1, 0, 0, 1, 1, 0, 1, 0, 1, 0, 0, 1, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 1, 0,
1, 0, 0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 1, 0, 1, 0, 1,
0, 0, 1, 1, 0, 0, 1, 0, 1, 0, 1, 1, 0, 0, 1, 0, 1, 1, 0, 0, 1, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0,
0, 1, 1, 0, 1, 0, 1, 0, 1, 0, 0, 1, 1, 0, 1, 0, 0, 1, 1, 0, 0, 1, 0, 1, 0, 1, 1, 0, 0, 1, 0, 1, 1, 0, 0, 1, 0, 1, 0, 1, 1, 0, 0, 1, 1, 0, 0, 1, 0, 1,
0, 0, 1, 1, 0, 1, 0, 1, 0, 0, 1]; or

[0, 1, 1, 0, 1, 0, 0, 1, 1, 0, 1, 0, 1, 0, 1, 0, 0, 1, 1, 0, 1, 0, 0, 1, 1, 0, 1, 0, 1, 0, 1, 0, 1, 0, 0, 1, 1, 0, 0, 1, 0, 1, 0, 1, 1, 0, 1, 0, 1, 0, 0,
1, 1, 0, 0, 1, 1, 0, 1, 0, 1, 0, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 0, 1, 0, 1,
1, 0, 0, 1, 1, 0, 1, 0, 1, 0, 0, 1, 0, 1, 1, 0, 0, 1, 1, 0, 0, 1, 0, 1, 0, 1, 1, 0, 1, 0, 1, 0, 1, 0, 0, 1, 0, 1, 1, 0, 0, 1, 0, 1, 0, 1, 0, 1, 0, 1, 1,
0, 1, 0, 0, 1, 1, 0, 1, 0, 1, 0, 1, 0, 0, 1, 1, 0, 0, 1, 0, 1, 0, 1, 0, 1, 0, 1, 0, 1, 1, 0, 0, 1, 1, 0, 1, 0, 1, 0, 1, 0, 0, 1, 0, 1, 1, 0, 0, 1,
0, 1, 1, 0, 0, 1, 0, 1, 0, 1, 0, 1, 0, 1, 1, 0, 1, 0, 0, 1, 1, 0, 1, 0, 1, 0, 1, 0, 0, 1, 1, 0, 0, 1, 1, 0, 1, 0, 1, 0, 1, 0, 0, 1, 0, 1, 0, 1, 1, 0, 0,
1, 1, 0, 1, 0, 1, 0, 0, 1, 0, 1]; or

[0, 1, 0, 1, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0, 1, 0, 1, 0, 1, 0, 0, 1, 1, 0, 0, 1, 1, 0, 1, 0, 0, 1, 0,
1, 0, 1, 0, 1, 0, 1, 1, 0, 0, 1, 0, 1, 1, 0, 0, 1, 0, 1, 1, 0, 1, 0, 1, 0, 1, 0, 0, 1, 1, 0, 0, 1, 0, 1, 0, 1, 1, 0, 1, 0, 1, 0, 1, 0, 0, 1, 1, 0, 0, 1, 1, 0,
1, 0, 1, 0, 1, 0, 0, 1, 1, 0, 1, 0, 0, 1, 0, 1, 0, 1, 0, 1, 1, 0, 0, 1, 0, 1, 1, 0, 1, 0, 1, 0, 1, 0, 0, 1, 0, 1, 1, 0, 0, 1, 1, 0, 0, 1, 0, 1, 0, 1,
1, 1, 0, 1, 0, 1, 0, 0, 1, 1, 0, 0, 1, 0, 1, 0, 1, 0, 1, 0, 1, 1, 0, 0, 1, 0, 1, 1, 0, 1, 0, 1, 0, 1, 0, 1, 0, 0, 1, 1, 0, 0, 1, 0, 1, 1, 0, 0, 1, 0, 1,
1, 0, 1, 0, 1, 0, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 1, 0, 0, 1, 1, 0, 1, 0, 0, 1, 1, 0, 1, 0, 1, 0, 1,
0, 1, 0, 0, 1, 1, 0, 1, 0, 0, 1]; or

[0, 1, 1, 0, 0, 1, 1, 0, 1, 0, 1, 0, 1, 0, 1, 0, 0, 1, 0, 1, 1, 0, 1, 0, 1, 0, 1, 0, 0, 1, 0, 1, 1, 0, 0, 1, 0, 1, 1, 0, 0, 1, 0, 1, 1, 0, 1, 0, 1, 0, 0,
1, 1, 0, 0, 1, 1, 0, 0, 1, 0, 1, 0, 1, 0, 1, 0, 1, 1, 0, 0, 1, 1, 0, 1, 0, 1, 0, 1, 0, 1, 0, 1, 0, 0, 1, 0, 1, 1, 0, 1, 0, 1, 0, 1, 0, 0, 1, 0, 1, 0, 1,
1, 0, 1, 0, 0, 1, 1, 0, 1, 0, 0, 1, 0, 1, 1, 0, 0, 1, 1, 0, 0, 1, 0, 1, 0, 1, 1, 0, 0, 1, 1, 0, 1, 0, 1, 0, 1, 0, 1, 0, 0, 1, 1, 0, 0, 1, 1, 0, 1, 0, 1, 0, 0, 0,
1, 0, 1, 1, 0, 1, 0, 1, 0, 0, 1, 0, 1, 1, 0, 0, 1, 0, 1, 1, 0, 0, 1, 0, 1, 1, 0, 1, 0, 0, 1, 1, 0, 0, 1, 1, 0, 0, 1, 0, 1, 0, 1, 1, 0, 0, 1, 1, 0, 0, 1, 0, 1, 0, 1,
1, 0, 0, 1, 0, 1, 0, 1, 0, 1, 0, 1, 1, 0, 1, 0, 0, 1, 0, 1, 0, 1, 1, 0, 1, 0, 1, 0, 1, 0, 0, 1, 1, 0, 0, 1, 0, 1, 1, 0, 1, 0, 1, 0, 1, 0, 0, 1, 1, 0, 0,
1, 1, 0, 0, 1, 0, 1, 0, 1, 0, 1]; or

[0, 1, 0, 1, 0, 1, 0, 1, 1, 0, 0, 1, 1, 0, 0, 1, 1, 0, 1, 0, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 0, 0, 1, 0,
1, 0, 1, 0, 1, 0, 1, 1, 0, 0, 1, 1, 0, 0, 1, 0, 1, 0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 1, 0, 0, 1,
0, 1, 1, 0, 1, 0, 1, 0, 1, 0, 0, 1, 0, 1, 1, 0, 1, 0, 1, 0, 1, 0, 1, 0, 1, 0, 0, 1, 1, 0, 0, 1, 1, 0, 1, 0, 1, 0, 1, 0, 1, 0, 0, 1, 1, 0, 0, 1, 1, 0, 0, 1, 0,
1, 1, 0, 1, 0, 0, 1, 1, 0, 1, 0, 0, 1, 0, 1, 0, 1, 1, 0, 1, 0, 1, 0, 1, 0, 1, 0, 0, 1, 1, 0, 1, 0, 1, 0, 1, 0, 1, 0, 1, 0, 0, 1, 1, 0, 0, 1, 0, 1, 1, 0, 1, 0, 1, 0, 1,
0, 1, 0, 1, 1, 0, 0, 1, 1, 0, 0, 1, 1, 0, 1, 0, 0, 1, 0, 1, 1, 0, 0, 1, 0, 1, 1, 0, 0, 1, 0, 1, 1, 0, 1, 0, 1, 0, 1, 0, 0, 1, 0, 1, 1, 0, 1, 0, 1, 0, 1,
0, 1, 0, 1, 0, 0, 1, 1, 0, 0, 1]; or

[0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 1, 0, 0, 1, 0, 1, 0, 1, 1, 0, 0, 1, 1, 0, 1, 0, 1, 1,
0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 0, 1,
1, 0, 1, 0, 1, 0, 1, 0, 0, 1, 1, 0, 1, 0, 0, 1, 1, 0, 1, 0, 1, 0, 1, 0, 0, 1, 0, 1, 1, 0, 1, 0, 1, 0, 1, 0, 0, 1, 1, 0, 1, 0, 1, 0, 0, 1, 0, 1, 0, 1, 1, 0, 0, 1, 1, 0, 1, 0, 1, 0, 1, 0, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 1, 0, 0, 1, 1, 0, 1, 0, 0, 1, 1, 0, 1, 0, 1, 0, 1, 0, 0, 1, 1, 0, 1, 0, 1, 0, 0, 1, 0, 1, 0, 1, 1, 0, 0, 1, 0, 1]; or

[0, 1, 1, 0, 1, 0, 1, 0, 1, 0, 0, 1, 1, 0, 1, 0, 0, 1, 1, 0, 1, 0, 1, 0, 1, 0, 0, 1, 1, 0, 1, 0, 1, 0, 1, 0, 0, 1, 0, 1, 0, 1, 1, 0, 0, 1, 1, 0, 1, 0, 0, 0, 1, 1, 0, 1, 0, 1, 0, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 0, 1, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 0, 1, 0, 1, 0, 0, 1, 1, 0, 1, 0, 0, 0, 1, 1, 0, 1, 0, 0, 0, 1, 1, 0, 1, 0, 1, 0, 1, 0, 0, 1, 1, 0, 0, 1, 0, 1, 0, 1, 1, 0, 0, 1, 0, 1, 0, 1, 0, 1, 1, 0, 0, 1, 0, 0, 1, 1, 0, 0, 1, 0, 1]; or

[0, 1, 0, 1, 1, 0, 0, 1, 0, 1, 0, 1, 0, 1, 1, 0, 1, 0, 1, 0, 0, 1, 1, 0, 1, 0, 1, 0, 1, 0, 1, 0, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 0, 1, 1, 0, 0, 1, 0, 1, 0, 1, 1, 0, 0, 1, 0, 1, 1, 0, 0, 1, 0, 1, 0, 1, 0, 1, 1, 0, 1, 0, 1, 0, 1, 0, 0, 1, 1, 0, 1, 0, 1, 0, 1, 0, 1, 0, 0, 1, 1, 0, 1, 0, 1, 0, 1, 0, 1, 0, 0, 1, 1, 0, 1, 0, 0, 1, 1, 0, 0, 1, 0, 1, 0, 1, 1, 0, 1, 0, 1, 0, 1, 0, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 0, 1, 1, 0, 0, 1, 0, 1, 1]; or [0, 1, 0, 1, 1, 0, 0, 1, 1, 0, 1, 0, 1, 0, 0, 1, 0, 1, 0, 1, 1, 0, 0, 1, 1, 0, 1, 0, 1, 0, 1, 0, 0, 1, 1, 0, 1, 0, 1, 0, 0, 1, 1, 0, 1, 0, 1, 0, 1, 0, 0, 1, 1, 0, 1, 0, 0, 1, 1, 0, 0, 1, 0, 1, 0, 1, 0, 1, 1, 0, 0, 1, 0, 1, 1, 0, 0, 1, 1, 0, 1, 0, 1, 0, 1, 0, 0, 1, 0, 1, 0, 1, 1, 0, 0, 1, 0, 1, 0, 1, 0, 1, 1, 0, 1, 0, 1, 0, 1, 0, 0, 1, 1, 0, 0, 1, 0, 1, 0, 1, 1, 0, 0, 1, 0, 1, 0, 1, 0, 0, 1, 1, 0, 1, 0, 1, 0, 1, 1, 0, 0, 1, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 1, 0, 1, 0, 1, 0, 1, 0, 0, 1, 1, 0, 1, 0, 1, 0, 1, 0, 0, 1, 1, 0, 1, 0, 0, 0, 1, 1, 0, 1, 0, 1, 0, 1, 0, 0, 1]; 

7. The method according to any one of claims 1 to 5, wherein when N=128, the first sequence is one of the following sequences, or the first sequence comprises an equivalent sequence of one of the following sequences:

[0, 0, 0, 0, 1, 1, 1, 0, 0, 0, 0, 1, 1, 1, 1, 0, 1, 1, 0, 1, 0, 0, 1, 0, 1, 1, 0, 1, 0, 0, 1, 1, 1, 0, 0, 1, 1, 0, 0, 1, 1, 0, 0, 1, 1, 0, 0, 1, 1, 0, 0, 1, 0, 1, 0, 1, 0, 1, 0, 1, 0, 1, 0, 1, 0, 1, 1, 1, 1, 1, 1, 1, 0, 0, 0, 0, 0, 0, 0, 1, 0, 0, 1, 1, 0, 0, 1, 0, 1, 1, 0, 0, 1, 1, 0, 0, 0, 1, 1, 1, 1, 0, 0, 1, 1, 0, 0, 0, 0, 1, 1, 0, 1, 0, 1, 1, 0, 1, 0, 1, 0, 1, 0, 0, 1, 0, 1]; or

[0, 1, 0, 1, 1, 0, 1, 0, 1, 0, 1, 0, 0, 1, 0, 1, 0, 0, 1, 1, 1, 1, 0, 0, 1, 1, 0, 0, 0, 0, 1, 1, 1, 0, 0, 1, 1, 0, 0, 1, 0, 1, 1, 0, 0, 1, 1, 0, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 1, 1, 0, 0, 1, 1, 0, 0, 1, 1, 0, 0, 0, 1, 1, 0, 1, 0, 0, 1, 0, 1, 1, 0, 1, 0, 0, 1, 0, 0, 0, 0, 1, 1, 1, 1, 0, 0, 0, 0, 1, 1, 1, 1]; or

[0, 1, 0, 1, 1, 0, 1, 0, 1, 0, 1, 0, 0, 1, 0, 1, 0, 0, 1, 1, 1, 1, 0, 0, 1, 1, 0, 0, 0, 0, 1, 1, 0, 0, 0, 0, 1, 1, 1, 1, 0, 0, 0, 0, 1, 1, 1, 1, 0, 1, 1, 0, 1, 0, 0, 1, 0, 1, 1, 0, 1, 0, 0, 1, 1, 0, 1, 0, 1, 0, 1, 0, 1, 0, 1, 0, 1, 0, 1, 1, 0, 0, 1, 1, 0, 0, 1, 1, 0, 0, 1, 1, 1, 1, 1, 1, 0, 0, 0, 0, 0, 0, 0, 1, 0, 0, 1, 1, 0, 0, 1, 0, 1, 1, 0, 0, 1, 1, 0]; or

[0, 1, 1, 0, 0, 1, 1, 0, 1, 0, 0, 1, 1, 0, 0, 1, 0, 0, 0, 0, 0, 0, 1, 1, 1, 1, 1, 1, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0, 1, 0, 1, 0, 0, 1, 0, 1, 0, 1, 0, 1, 1, 0, 1, 0]; or

[0, 0, 0, 0, 0, 0, 0, 0, 1, 1, 1, 1, 1, 1, 1, 1, 0, 1, 1, 0, 0, 1, 1, 0, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 0, 0, 1, 1, 0, 0, 1, 1, 0, 0, 1, 1, 0, 0, 1, 1, 1, 1, 0, 0, 0, 0, 1, 1, 1, 1, 0, 0, 0, 0, 1, 0, 0, 1, 0, 1, 1, 0, 1, 0, 0, 1, 0, 1, 1, 0, 0, 0, 1, 1, 0, 1, 0, 1, 0, 1, 0, 1, 0, 0, 1, 1]; or

[0, 0, 1, 1, 1, 1, 0, 0, 1, 1, 0, 0, 0, 0, 1, 1, 0, 1, 0, 0, 1, 1, 0, 1, 0, 1, 0, 1, 0, 1, 0, 1, 0, 0, 1, 0, 1, 1, 0, 0, 1, 0, 1, 1, 0, 1, 0, 0, 1, 0, 1, 1, 0, 1, 0, 1, 1, 1, 0, 0, 0, 0, 1, 1, 1, 1, 0, 0, 0, 0, 1, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 0, 0, 1, 1, 0, 0, 1, 1, 0, 1, 0, 0, 0, 0, 0, 0, 0, 1, 1, 1, 1, 1, 1, 1]; or

[0, 1, 1, 0, 0, 1, 1, 0, 1, 0, 0, 1, 1, 0, 0, 1, 0, 0, 0, 1, 1, 1, 0, 0, 1, 1, 0, 0, 0, 0, 1, 1, 0, 0, 0, 0, 0, 0, 0, 1, 1, 1, 1, 1, 1, 1, 0, 1, 0, 1, 1, 0, 1, 0, 1, 0, 1, 0, 0, 1, 0, 1, 0, 1, 0, 1, 0, 1, 0, 1, 0, 1, 0, 1, 0, 1, 0, 0, 0, 0, 1, 1, 1, 1, 0, 0, 0, 0, 1, 1, 1, 1, 0, 0, 1, 1, 0, 0, 1, 1, 0, 0, 1, 1, 0, 1, 1, 0, 1, 0, 0, 1, 0, 1, 1, 0, 1, 0, 0, 1, 1, 0, 1, 0, 0, 0, 1]; or

[0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1, 0, 0, 0, 0, 1, 1, 1, 1, 0, 0, 0, 0, 1, 1, 1, 1, 0, 1, 0, 1, 0, 1, 0, 1, 0, 1, 0, 1, 0, 1, 0, 1, 0, 1, 0, 1, 1, 0, 1, 0, 1, 0, 1, 0, 1, 0, 0, 1, 0, 1, 0, 0, 0, 0, 0, 0, 0, 1, 1, 1, 1, 1, 1, 1, 1, 0, 0, 1, 1, 0, 1, 1, 0, 0, 1, 1, 0, 1, 0, 0, 1, 1, 0, 0, 1, 1, 0, 0, 1]; or

[0, 0, 0, 0, 0, 0, 0, 0, 1, 1, 1, 1, 1, 1, 1, 1, 0, 1, 0, 1, 1, 0, 1, 0, 1, 0, 1, 0, 1, 0, 0, 1, 0, 1, 1, 0, 0, 1, 1, 0, 0, 1, 0, 1, 1, 0, 0, 1, 1, 0, 0, 0, 0, 1, 1, 0, 0, 1, 1, 1, 1, 0, 0, 1, 1, 0, 0, 1, 1, 0, 0, 1, 1, 0, 0, 1, 0, 0, 0, 1, 0, 1, 1, 0, 1, 0, 0, 1, 0, 1, 1, 0, 0, 1, 0, 1, 1, 0, 0, 1, 0, 1, 0, 1, 0, 1, 0, 1, 0, 1, 0, 1, 0, 0, 0, 0, 1, 1, 1, 1, 0, 0, 0, 0, 1, 1, 1, 1]; or

[0, 0, 0, 0, 1, 1, 1, 1, 0, 0, 0, 0, 1, 1, 1, 1, 0, 1, 0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 1, 0, 0, 0, 0, 1, 1, 0, 0, 1, 1, 1, 1, 0, 0, 1, 0, 0, 0, 1, 1, 0, 0, 1, 1, 0, 0, 1, 0, 1, 1, 0, 0, 1, 1, 0, 0, 1, 0, 1, 1, 0, 1, 0, 1, 0, 1, 0, 0, 1, 0, 1, 0, 1, 0, 0, 0, 0, 0, 0, 0, 1, 1, 1, 1, 1, 1, 1, 1]; or

[0, 1, 1, 0, 0, 1, 1, 0, 1, 0, 0, 1, 1, 0, 0, 1, 0, 0, 1, 1, 1, 1, 0, 0, 1, 1, 0, 0, 0, 0, 1, 0, 0, 0, 0, 0, 0, 1, 1, 1, 1, 1, 1, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 1, 1, 1, 0, 0, 0, 0, 1, 1, 1, 1, 0, 0, 0, 0, 1, 1, 0, 0, 1, 1, 0, 0, 1, 0, 1, 1, 0, 0, 1, 1, 0, 0, 1, 0, 1, 1, 0, 0, 1, 0, 1, 1, 0]; or

[0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1,0,0,0,0, 1, 1, 1, 1, 0, 0, 0, 0, 1, 1, 1, 1, 0,
1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 1, 1, 1, 1, 1, 1, 0, 0, 0, 0, 0, 0, 0, 0, 1, 1,
0, 0, 0, 0, 1, 1, 0, 0, 1, 1, 1, 1, 0, 0, 1, 0, 0, 1, 1, 0, 0, 1, 0, 1, 1, 0, 0, 1, 1, 0]; or

[0, 0, 0, 0, 1, 1, 1, 1, 0, 0, 0, 0, 1, 1, 1, 1, 0, 1, 0, 1, 0, 1, 0, 1, 0, 1, 0, 1, 0, 1, 0, 1, 1, 0, 0, 1, 0, 1, 1, 0, 1, 0, 0, 1, 0, 1, 1, 0, 1,
1, 0, 0, 1, 1, 0, 0, 1, 1, 0, 0, 1, 1, 0, 0, 1, 1, 1, 1, 1, 1, 1, 1, 0, 0, 0, 0, 0, 0, 0, 0, 1, 0, 1, 0, 0, 1, 0, 1, 0, 1, 0, 1, 1, 0, 1, 0, 0, 1,
1, 0, 0, 1, 1, 0, 1, 0, 0, 1, 1, 0, 0, 1, 0, 0, 1, 1, 1, 1, 0, 0, 1, 1, 0, 0, 0, 0, 1, 1]; or

[0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1, 1, 0, 1, 0, 0, 1, 0, 1, 0, 1, 0, 1, 1, 0, 1, 0, 1,
1, 1, 1, 1, 1, 1, 1, 0, 0, 0, 0, 0, 0, 0, 0, 1, 1, 0, 0, 1, 1, 0, 0, 1, 1, 0, 0, 1, 0, 0, 1, 0, 1, 1, 0, 1, 0, 0, 1, 0, 1, 0, 1, 0, 1, 1, 0, 1, 0,
0, 1, 0, 1, 0, 1, 0, 1, 0, 1, 0, 1, 0, 0, 0, 0, 1, 1, 1, 1, 0, 0, 0, 0, 1, 1, 1]; or

[0, 1, 0, 1, 0, 1, 0, 1, 0, 1, 0, 1, 0, 1, 0, 1, 1, 0, 1, 0, 0, 1, 0, 1, 1, 0, 1, 0, 0, 1, 0, 0, 1, 1, 0, 0, 1, 1, 0, 0, 1, 1, 0, 0, 1, 1, 0, 0, 1, 1, 0,
0, 0, 0, 1, 1, 1, 1, 0, 0, 0, 0, 1, 1, 1, 1, 0, 0, 0, 0, 0, 0, 0, 1, 1, 1, 1, 1, 1, 1, 1, 0, 0, 1, 1, 1, 1, 0, 0, 1, 1, 0, 0, 0, 0, 1, 1, 0, 1,
1, 0, 0, 1, 1, 0, 1, 0, 0, 1, 1, 0, 0, 1, 0, 1, 0, 1, 1, 0, 1, 0, 1, 0, 1, 0, 0, 1, 0, 1]; or

[0, 1, 0, 1, 1, 0, 1, 0, 1, 0, 1, 0, 0, 1, 0, 1, 0, 1, 1, 0, 0, 1, 1, 0, 1, 0, 1, 0, 0, 1, 1, 0, 0, 1, 0, 0, 0, 1, 1, 1, 1, 0, 0, 1, 1, 0, 0, 0, 0, 1, 1, 0,
0, 0, 0, 0, 0, 0, 1, 1, 1, 1, 1, 1, 1, 1, 0, 0, 0, 0, 1, 1, 1, 1, 0, 0, 0, 0, 1, 1, 1, 1, 0, 0, 1, 1, 0, 0, 1, 1, 0, 0, 1, 1, 0, 0, 1, 1, 0, 1,
1, 0, 1, 0, 0, 1, 0, 1, 1, 0, 1, 0, 0, 1, 0, 1, 0, 1, 0, 1, 0, 1, 0, 1, 0, 1, 0, 1, 0, 1]; or

[0,0,0,0,0,0, 0, 0, 1, 1, 1, 1, 1, 1, 1, 1, 0, 0, 1, 1, 1, 1, 0, 0, 1, 1, 0, 0, 0, 0, 1, 1, 0, 1, 1, 0, 0, 1, 1, 0, 1, 0, 0, 1, 1, 0, 0, 1, 0, 1,
0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 1, 0, 0, 1, 0, 1, 1, 0, 1, 0, 0, 1, 0, 1, 1, 0, 1, 1, 0,
0, 1, 1, 0, 0, 1, 1, 0, 0, 1, 1, 0, 0, 1, 1, 1, 0, 0, 0, 0, 1, 1, 1, 1,0,0,0,0]; or

[0, 0, 0, 0, 1, 1, 1, 1, 0, 0, 0, 0, 1, 1, 1, 1, 0, 0, 1, 1, 0, 0, 1, 1, 0, 0, 1, 1, 0, 0, 1, 1, 0, 1, 1, 0, 1, 0, 0, 1, 0, 1, 1, 0, 1, 0, 0, 1, 0,
1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 1, 0, 0, 1, 0, 1, 1, 0, 0, 1, 1, 0, 1, 1,
0, 0, 0, 0, 1, 1, 0, 0, 1, 1, 1, 1, 0, 0, 1, 1, 1, 1, 1, 1, 1, 1,0,0,0,0,0,0,0,0]; or

[0, 1, 0, 1, 0, 1, 0, 1, 0, 1, 0, 1, 0, 1, 0, 0, 0, 0, 1, 1, 1, 1, 0, 0, 0, 0, 1, 1, 1, 1, 0, 0, 1, 0, 1, 1, 0, 1, 0, 0, 1, 0, 1, 1, 0, 1, 0, 1,
1, 0, 0, 1, 1, 0, 0, 1, 1, 0, 0, 1, 1, 0, 0, 1, 1, 1, 1, 1, 1, 1, 1, 0, 0, 0, 0, 0, 0, 0, 0, 1, 0, 1, 0, 0, 1, 0, 1, 0, 1, 0, 1, 1, 0, 1, 0, 0, 0,
1, 1, 1, 1, 0, 0, 1, 1,0,0,0,0, 1, 1, 0, 1, 1, 0, 0, 1, 1, 0, 1, 0, 0, 1, 1, 0, 0, 1]; or

[0, 1, 1, 0, 0, 1, 1, 0, 1, 0, 0, 1, 1, 0, 0, 1, 0, 0, 1, 1, 1, 1, 0, 0, 1, 1, 0, 0, 0, 0, 1, 1, 1, 0, 1, 0, 0, 1, 0, 1, 0, 1, 0, 1, 1, 0, 1, 0, 1,
1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 1, 0, 0, 1, 0, 1, 1, 0, 1, 0, 0, 1, 0, 1, 1, 0, 0, 0,
0, 0, 1, 1, 1, 1, 0, 0, 0, 0, 1, 1, 1, 1, 0, 1, 0, 1, 0, 1, 0, 1, 0, 1, 0, 1, 0, 1]; or

[0, 1, 0, 1, 0, 1, 0, 1, 0, 1, 0, 1, 0, 1, 0, 0, 0, 0, 0, 0, 1, 1, 1, 1, 1, 1, 1, 1, 0, 0, 1, 0, 1, 1, 0, 1, 0, 0, 1, 0, 1, 1, 0, 1,
1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 1, 0, 1, 0, 0, 1, 0, 1, 0, 1, 0, 1, 1, 0, 1, 0, 0, 0,
1, 1, 0, 0, 1, 1, 0, 0, 1, 1, 0, 0, 1, 1, 0, 1, 1, 0, 0, 1, 1, 0, 1, 0, 0, 1, 1, 0, 0, 1]; or

[0, 1, 1, 0, 0, 1, 1, 0, 1, 0, 0, 1, 1, 0, 0, 1, 0, 0, 1, 1, 0, 0, 1, 1, 0, 0, 1, 1, 0, 0, 1, 1, 0, 0, 1, 1, 1, 0, 1, 0, 0, 1, 0, 1, 0, 1, 0, 1, 1, 0, 1, 0, 1,
1, 1, 0, 0, 0, 0, 1, 1, 1, 1, 0, 0, 0, 0, 1, 1,0,0,0,0, 1, 1, 0, 0, 1, 1, 1, 1, 0, 0, 1, 0, 0, 1, 0, 1, 1, 0, 1, 0, 0, 1, 0, 1, 1, 0, 0, 0, 0,
0, 0, 0, 0, 1, 1, 1, 1, 1, 1, 1, 1, 0, 1, 0, 1, 0, 1, 0, 1, 0, 1, 0, 1, 0, 1, 0, 1]; or

[0, 0, 0, 0, 0, 0, 0, 0, 1, 1, 1, 1, 1, 1, 1, 1, 0, 0, 1, 1, 0, 0, 1, 1, 0, 0, 1, 1, 0, 0, 1, 1, 0, 0, 1, 1, 0, 1, 0, 1, 1, 0, 1, 0, 1, 0, 1, 0, 1, 0, 0, 1, 0, 1, 0,
1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 1, 0, 1, 0, 1, 0, 1, 0, 1, 0, 1, 0, 1, 0, 1, 0, 1, 1,
0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 0]; or

[0, 0, 0, 0, 1, 1, 1, 1, 0, 0, 0, 0, 1, 1, 1, 1, 0, 0, 1, 1, 1, 1, 0, 0, 1, 1, 0,0,0,0, 1, 1, 0, 1, 0, 1, 0, 1, 0, 1, 0, 1, 0, 1, 0, 1, 0, 1, 0,
1, 1, 0, 0, 1, 1, 0, 1, 0, 0, 1, 1, 0, 0, 1, 1, 0, 0, 1, 0, 1, 1, 0, 1, 0, 0, 1, 0, 1, 1, 0, 1, 0, 1, 0, 0, 1, 0, 1, 1, 0, 1, 0, 1, 0, 1, 1, 0, 1, 0, 1, 1,
0, 0, 1, 1, 0, 0, 1, 1, 0, 0, 1, 1, 0, 0, 1, 1, 1, 1, 1, 1, 1, 1,0,0,0,0,0,0,0,0]; or

[0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 1, 1, 1, 1, 0, 0, 0, 0, 1, 1, 1, 1, 0, 0, 0, 0, 1,
1, 0, 0, 0, 0, 1, 1, 0, 0, 1, 1, 1, 1, 0, 0, 1, 1, 0, 0, 1, 1, 0, 0, 1, 1, 0, 0, 1, 1, 0, 0, 1, 1, 1, 1, 1, 1, 1, 1, 0, 0, 0, 0, 0, 0, 0, 0, 1,
1, 0, 1, 0, 0, 1, 0, 1, 1, 0, 1, 0, 0, 1, 0, 1, 0, 1, 1, 0, 1, 0, 1, 0, 1, 0, 0, 1, 0, 1]; or

[0, 1, 0, 1, 1, 0, 1, 0, 1, 0, 0, 1, 0, 1, 0, 1, 1, 0, 1, 0, 0, 1, 0, 1, 1, 0, 1, 0, 0, 1, 1, 1, 1, 1, 1, 1, 1, 0, 0, 0, 0, 0, 0, 0, 0, 1,
1, 0, 0, 1, 1, 0, 0, 1, 1, 0, 0, 1, 1, 0, 0, 1, 1,0,0,0, 1, 1, 0, 0, 1, 1, 1, 1, 0, 0, 1, 0, 0, 1, 0, 1, 1, 0, 1, 0, 0, 1, 0, 1, 1, 0, 0, 0, 0, 1,
1, 0, 0, 1, 1, 0, 1, 0, 0, 1, 1, 0, 0, 1, 0, 1, 0, 1, 1, 0, 1, 0, 0, 1, 1, 0, 1, 0, 0, 1]; or

[0, 0, 1, 1, 0, 0, 1, 1, 0, 0, 1, 1, 0, 0, 1, 1, 0, 0, 0, 0, 0, 0, 1, 1, 1, 1, 1, 1, 1, 0, 1, 1, 0, 1, 0, 0, 1, 0, 1, 1, 0, 1, 0, 0, 0, 1, 0,
1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 0, 1, 0, 0, 1, 1, 0, 0, 1, 0, 1, 1, 0, 0, 1, 1, 0, 1, 1,
1, 1, 0, 0, 0, 0, 1, 1, 1, 1, 0, 0, 0, 0, 1, 1, 0, 0, 0, 0, 1, 1, 0, 0, 1, 1, 1, 1, 0, 0]; or

[0, 0, 1, 1, 1, 1, 0, 0, 1, 1, 0, 0, 0, 0, 1, 1, 0, 0, 0, 0, 1, 1, 1, 1, 0, 0, 0, 0, 1, 1, 1, 1, 0, 1, 1, 0, 0, 1, 1, 0, 1, 0, 0, 1, 1, 0, 0, 1, 0,
1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 0, 0, 1, 0, 1, 1, 0, 1, 0, 0, 1, 0, 1, 1, 0, 1, 1,
1, 1, 1, 1, 1, 1, 0, 0, 0, 0, 0, 0, 0, 0, 1, 1, 0, 0, 1, 1, 0, 0, 1, 1, 0, 0, 1, 1, 0, 0]; or

[0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 0, 1, 1, 1, 0, 0, 0, 0, 1, 1, 0, 0, 0, 1, 1, 1, 1, 0, 0, 0, 1,
1, 1, 1, 0, 0, 0, 0, 1, 1, 1, 1, 0, 0, 0, 0, 1, 1, 1, 1, 1, 1, 1, 1, 0, 0, 0, 0, 0, 0, 0, 0, 1, 1, 0, 0, 1, 1, 0, 0, 1, 1, 0, 0, 1, 1, 0, 0, 0, 1,
0, 1, 1, 0, 1, 0, 1, 0, 1, 0, 0, 1, 0, 1, 0, 1, 1, 0, 1, 0, 0, 1, 0, 1, 1, 0, 1, 0, 0, 1]; or

[0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 0, 1, 0, 1, 1, 1, 0, 0, 1, 1, 0, 0, 1, 1, 0, 0, 1, 1, 0, 0, 1,
1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 1, 0, 0, 0, 1,
0, 1, 0, 1, 0, 1, 0, 1, 0, 1, 0, 1, 0, 1, 0, 1, 1, 0, 0, 1, 1, 0, 1, 0, 0, 1, 1, 0, 0, 1]; or

[0, 0, 1, 1, 0, 0, 1, 1, 0, 0, 1, 1, 0, 0, 1, 1, 0, 1, 1, 0, 0, 1, 1, 0, 1, 0, 0, 1, 1, 0, 0, 1, 0, 0, 0, 0, 1, 1, 1, 1, 0, 0, 0, 0, 1, 1, 1, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 0, 0, 1, 0, 1, 1, 0, 1, 0, 0, 1, 0, 1, 1, 0, 1, 1, 0, 0, 0, 0, 1, 1, 0, 0, 1, 1, 1, 1, 0, 0]; or

[0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1, 0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 1, 0, 1, 0, 0, 1, 0, 1, 0, 1, 0, 1, 1, 0, 1, 0, 1, 1, 1, 1, 0, 0, 0, 0, 1, 1, 1, 1, 0, 0, 0, 0, 1, 0, 0, 1, 1, 0, 0, 1, 0, 1, 1, 0, 0, 1, 1, 0, 1, 1, 0, 0, 1, 1, 0, 0, 1, 1, 0, 0, 1, 1, 0, 0]; or

[0, 1, 0, 1, 0, 1, 0, 1, 0, 1, 0, 1, 0, 1, 0, 0, 0, 0, 0, 0, 0, 1, 1, 1, 1, 1, 1, 1, 1, 0, 1, 1, 0, 1, 0, 0, 1, 0, 1, 1, 0, 1, 0, 0, 0, 1, 0, 0, 1, 1, 1, 0, 0, 1, 1, 0, 0, 0, 0, 1, 1, 0, 0, 1, 1, 0, 0, 1, 1, 0, 0, 1, 1, 0, 0, 1, 1, 0, 1, 1, 0, 0, 1, 1, 0, 1, 0, 0, 1, 1, 0, 0, 1, 0, 0, 0, 0, 1, 1, 1, 1, 0, 0, 0, 0, 1, 1, 1, 1, 0, 1, 0, 1, 1, 0, 1, 0, 1, 0, 1, 0, 0, 1, 0, 1]; or

[0, 1, 0, 1, 1, 0, 1, 0, 1, 0, 1, 0, 0, 1, 0, 1, 0, 0, 0, 0, 1, 1, 1, 1, 0, 0, 0, 0, 1, 1, 1, 1, 0, 1, 1, 0, 0, 1, 1, 0, 1, 0, 0, 1, 1, 0, 0, 1, 0, 0, 0, 1, 0, 1, 0, 0, 1, 1, 0, 0, 1, 1, 0, 0, 1, 1, 0, 0, 1, 1, 1, 0, 0, 1, 1, 0, 0, 0, 0, 1, 1, 0, 1, 1, 0, 1, 0, 0, 1, 0, 1, 1, 0, 1, 0, 0, 1, 0, 0, 0, 0, 0, 0, 0, 1, 1, 1, 1, 1, 1, 1, 0, 1, 0, 1, 0, 1, 0, 1, 0, 1, 0, 1, 0, 0, 1]; or

[0, 1, 1, 0, 0, 1, 1, 0, 1, 0, 0, 1, 1, 0, 0, 1, 0, 0, 1, 1, 0, 0, 1, 1, 0, 0, 1, 1, 0, 0, 1, 1, 1, 0, 1, 0, 0, 1, 0, 1, 0, 1, 0, 1, 1, 0, 1, 0, 1, 1, 1, 0, 0, 0, 0, 1, 1, 1, 1, 0, 0, 0, 0, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 1, 0, 0, 0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1]; or

[0, 1, 1, 0, 1, 0, 0, 1, 0, 1, 1, 0, 1, 0, 0, 1, 0, 0, 1, 1, 1, 0, 0, 1, 1, 0, 0, 0, 1, 1, 1, 0, 1, 0, 1, 0, 1, 0, 1, 0, 1, 0, 1, 0, 1, 0, 1, 0, 1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 0, 1, 0, 1, 0, 0, 1, 0, 1, 0, 1, 0, 1, 1, 0, 1, 0, 0, 0, 0, 1, 1, 0, 0, 1, 1, 0, 0, 1, 1, 0, 0, 1, 1, 0, 0, 1, 1, 0, 0, 1, 1, 0, 0, 1]; or

[0, 1, 0, 1, 0, 1, 0, 1, 0, 1, 0, 1, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 0, 1, 1, 0, 0, 0, 0, 1, 1, 0, 0, 1, 1, 1, 0, 0, 0, 1, 1, 0, 1, 0, 0, 1, 0, 0, 1, 1, 0, 1, 0, 0, 1, 0, 1, 0, 1, 0, 1, 0, 0, 1, 0, 1]; or

[0, 1, 0, 1, 1, 0, 1, 0, 1, 0, 1, 0, 0, 1, 0, 1, 0, 1, 1, 0, 1, 0, 1, 0, 0, 1, 0, 1, 1, 0, 1, 0, 1, 0, 0, 1, 1, 1, 0, 0, 0, 0, 1, 1, 0, 0, 1, 1, 1, 1, 0, 0, 0, 1, 1, 1, 1, 0, 0, 0, 0, 1, 1, 1, 1, 1, 1, 1, 1, 0, 0, 0, 0, 0, 0, 0, 0, 1, 1, 0, 0, 0, 1, 1, 0, 0, 1, 1, 1, 1, 0, 0, 0, 1, 0, 1, 0, 0, 1, 0, 1, 0, 1, 0, 1, 0, 1, 0, 1, 0, 1, 0, 1, 0, 1, 0, 1, 0, 1, 0, 1, 0, 0, 1]; or

[0, 1, 1, 0, 0, 1, 1, 0, 1, 0, 0, 1, 1, 0, 0, 1, 0, 1, 0, 1, 0, 1, 0, 1, 0, 1, 0, 1, 0, 1, 0, 1, 0, 1, 0, 1, 0, 1, 0, 1, 0, 1, 0, 1, 1, 1, 1, 1, 1, 1, 1, 1, 0, 0, 0, 0, 0, 0, 0, 0, 1, 1, 0, 0, 0, 1, 1, 0, 0, 1, 1, 0, 0, 1, 1, 0, 0, 0, 0, 1, 1, 0, 0, 1, 1, 1, 1, 0, 0, 1, 1, 1, 1, 0, 0, 0, 0, 1, 1, 1, 1, 0, 0, 0, 0, 0, 1, 0, 1, 1, 0, 1, 0, 1, 0, 0, 1, 0, 1, 1, 0, 1, 0, 0, 1]; or

[0, 1, 1, 0, 1, 0, 0, 1, 0, 1, 1, 0, 1, 0, 0, 1, 0, 1, 0, 1, 1, 0, 1, 0, 1, 0, 1, 0, 1, 0, 1, 0, 0, 1, 0, 1, 1, 1, 1, 1, 0, 0, 0, 0, 1, 1, 1, 1, 0, 0, 0, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 1, 0, 0, 1, 1, 1, 1, 1, 1, 1, 1, 1, 0, 0, 0, 0, 0, 0, 0, 0, 0, 1, 1, 0, 1, 0, 0, 1, 0, 1, 1, 0, 1, 0, 0, 0, 0, 1, 1]; or

[0, 0, 0, 0, 1, 1, 1, 1, 0, 0, 0, 0, 1, 1, 1, 1, 0, 1, 0, 1, 1, 0, 1, 0, 1, 0, 1, 0, 0, 1, 0, 1, 1, 0, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 0, 1, 1, 0, 0, 1, 1, 0, 0, 1, 1, 0, 0, 1, 1, 0, 0, 1, 0, 0, 1, 1, 0, 0, 1, 0, 1, 1, 0, 0, 1, 1, 0, 0, 1, 1, 0, 0, 1, 0, 1, 0, 0, 1, 0, 1, 1, 0, 1, 0, 0, 0, 1, 1, 1, 1, 0, 0, 1, 1, 0, 0, 0, 0, 1, 1]; or

[0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1, 1, 0, 0, 1, 1, 0, 0, 1, 0, 1, 1, 0, 0, 1, 1, 0, 0, 1, 1, 0, 0, 1, 1, 0, 0, 1, 0, 0, 0, 1, 1, 0, 0, 1, 1, 0, 0, 1, 1, 1, 1, 1, 1, 1, 1, 0, 0, 0, 0, 0, 0, 0, 0, 1, 0, 1, 0, 1, 0, 1, 0, 1, 0, 1, 0, 1, 0, 1, 0, 0, 0, 1, 1, 0, 1, 0, 1, 0, 1, 0, 0, 1, 0, 1, 0, 0, 0, 0, 1, 1, 1, 1, 0, 0, 0, 0, 1, 1, 1, 1]; or

[0, 1, 0, 1, 1, 0, 1, 0, 1, 0, 1, 0, 0, 1, 0, 1, 0, 0, 0, 0, 1, 1, 1, 1, 0, 0, 0, 0, 1, 1, 1, 1, 0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 1, 0, 0, 1, 1, 0, 0, 1, 0, 1, 1, 0, 0, 1, 1, 0, 1, 1, 0, 0, 1, 1, 0, 1, 0, 0, 1, 1, 0, 0, 1, 0, 1, 1, 0, 1, 0, 0, 1, 1, 0, 0, 1, 1, 0, 1, 1, 1, 0, 0, 1, 0, 0, 1, 0, 1, 1, 0, 1, 0, 0, 1, 0, 1, 1, 0]; or

[0, 1, 1, 0, 1, 0, 0, 1, 0, 1, 1, 0, 1, 0, 0, 1, 0, 0, 1, 1, 1, 0, 0, 1, 1, 0, 0, 0, 0, 1, 1, 0, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 0, 1, 0, 1, 0, 1, 1, 1, 1, 1, 1, 1, 1, 0, 0, 0, 0, 0, 0, 0, 0, 1, 1, 1, 0, 0, 0, 0, 1, 1, 1, 1, 0, 0, 0, 0, 1, 0, 1, 0, 0, 0, 1, 0, 1, 0, 0, 1, 0, 1, 0, 1, 0, 1, 1, 0, 1, 0, 0]; or [0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1, 0, 1, 1, 0, 0, 1, 0, 1, 1, 0, 0, 1, 0, 1, 1, 0, 0, 1, 0, 1, 1, 0, 0, 1, 0, 1, 1, 0, 0, 1, 1, 0, 0, 1, 1, 0, 0, 1, 1, 0, 0, 0, 0, 1, 1, 0, 0, 1, 1, 1, 1, 0, 0, 1, 0, 0, 1, 0, 1, 1, 0, 1, 0, 0, 1, 0, 1, 1, 0, 1, 0, 0, 1, 0, 1, 1, 0, 0, 1, 0, 1, 1, 0, 1, 0, 1, 0, 1, 0, 0, 1, 0, 1, 0, 0, 0, 0, 1, 1, 1, 1, 0, 0, 0, 0, 1, 1, 1, 1]; or

[0, 0, 0, 0, 1, 1, 1, 1, 0, 0, 0, 0, 1, 1, 1, 1, 0, 1, 0, 1, 1, 0, 1, 0, 1, 0, 1, 0, 1, 0, 1, 0, 1, 0, 0, 1, 0, 1, 1, 0, 0, 1, 0, 1, 1, 0, 0, 1, 0, 1, 1, 0, 0, 1, 1, 0, 0, 1, 1, 0, 0, 1, 1, 0, 0, 1, 0, 0, 1, 1, 0, 1, 0, 0, 1, 0, 0, 0, 1, 1, 1, 1, 0, 0, 0, 1, 1, 0, 0, 1, 1, 0, 0, 1, 1, 0, 0, 1, 1, 0, 0, 1, 0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1]; or

[0, 0, 1, 1, 0, 0, 1, 1, 0, 0, 1, 1, 0, 0, 1, 1, 0, 0, 1, 1, 0, 1, 0, 0, 1, 1, 0, 0, 1, 1, 0, 1, 0, 0, 1, 0, 1, 0, 1, 0, 1, 0, 1, 0, 1, 0, 1, 0, 1, 0, 1, 0, 1, 0, 0, 1, 1, 1, 1, 1, 1, 1, 1, 0, 0, 0, 0, 0, 0, 0, 0, 1, 1, 1, 1, 0, 0, 0, 0, 1, 1, 1, 1, 0, 0, 0, 0, 1, 0, 1, 0, 0, 1, 0, 1, 1, 0, 1, 0, 0, 1, 0, 1, 0, 1, 0, 1, 0, 1, 0, 0, 1, 1]; or

[0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1, 1, 0, 1, 0, 0, 1, 1, 0, 1, 0, 0, 1, 1, 0, 1, 0, 0, 1, 0, 1, 0, 1, 0, 1, 0, 1, 1, 1, 0, 0, 0, 0, 1, 1, 1, 1, 0, 0, 0, 0, 0, 0, 0, 0, 1, 0, 1, 0, 1, 0, 1, 0, 1, 0, 1, 0, 1, 0, 1, 0, 0, 1, 1, 0, 0, 1, 0, 0, 1, 1, 0, 0, 1, 0, 0, 0, 1, 1, 0, 0, 1, 1, 0, 0, 1, 1, 0, 0, 1, 1, 0, 0, 1, 1]; or

[0, 0, 0, 0, 0, 0, 0, 0, 1, 1, 1, 1, 1, 1, 1, 1, 0, 1, 0, 1, 0, 1, 0, 1, 0, 1, 0, 1, 0, 1, 0, 1, 1, 1, 0, 0, 0, 0, 1, 1, 1, 1, 0, 0, 0, 0, 1, 1, 0, 0, 1, 1, 0, 0, 1, 1, 0, 0, 1, 1, 0, 0, 1, 0, 0, 1, 1, 0, 0, 1, 0, 1, 1, 0, 0, 1, 0, 1, 0, 1, 0, 1, 0, 1, 0, 1, 0, 1, 0, 0, 1, 0, 1, 0, 1, 0, 1, 1, 0, 1, 0, 0, 1]; or

[0, 0, 1, 1, 1, 1, 0, 0, 1, 1, 0, 0, 0, 0, 1, 1, 0, 1, 1, 0, 1, 0, 0, 1, 0, 1, 1, 0, 1, 0, 0, 1, 0, 1, 1, 0, 1, 0, 0, 1, 1, 0, 0, 1, 1, 0, 0, 1, 1, 0, 0, 1, 1, 0, 0, 1, 0, 1, 1, 0, 0, 1, 1, 0, 1, 0, 1,

0, 1, 0, 1, 0, 1, 0, 1, 0, 1, 0, 1, 0, 1, 0, 0, 0, 0, 0, 0, 0, 0, 1, 1, 1, 1, 1, 1, 1, 1].

8. The method according to any one of claims 1 to 5, wherein when $N$=64, the first sequence is one of the following sequences, or the first sequence is an equivalent sequence of one of the following sequences:

[0, 1, 0, 1, 0, 1, 1, 0, 0, 1, 0, 1, 1, 0, 0, 1, 1, 0, 1, 0, 1, 0, 0, 1, 1, 0, 1, 0, 0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0]; or [0, 1, 1, 0, 0, 1, 0, 1, 0, 1, 1, 0, 1, 0, 1, 0, 0, 1, 1, 0, 0, 1, 0, 1, 0, 1, 1, 0, 1, 0, 1, 0, 0, 1, 1, 0, 0, 1, 0, 1, 1, 0, 0, 1, 0, 1, 0, 1, 1, 0, 0, 1, 1, 0, 1, 0, 0, 1, 1, 0, 1, 0, 1, 0]; or [0, 1, 0, 1, 1, 0, 0, 1, 1, 0, 1, 0, 0, 1, 1, 0, 0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 1, 0, 0, 1, 0, 1, 0, 1, 0, 1, 1, 0]; or [0, 1, 1, 0, 1, 0, 1, 0, 1, 0, 0, 1, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 0, 1, 1, 0, 1, 0, 0, 1, 1, 0, 0, 1, 0, 1, 1, 0, 0, 1, 1, 0, 1, 0]; or [0, 1, 0, 1, 1, 0, 0, 1, 0, 1, 0, 1, 1, 0, 0, 1, 1, 0, 1, 0, 1, 0, 0, 1, 1, 0, 1, 0, 1, 0, 0, 1, 1, 0, 1, 0, 0, 1, 1, 0, 0, 1, 0, 1, 1, 0, 0, 1, 1, 0, 1, 0, 1, 0, 0, 1, 0, 1, 0, 1, 0, 1, 1, 0]; or [0, 1, 1, 0, 1, 0, 1, 0, 1, 0, 0, 1, 0, 1, 0, 1, 1, 0, 0, 1, 1, 0, 1, 0, 0, 1, 0, 1, 1, 0, 0, 1, 0, 1, 0, 1, 1, 0, 0, 1, 0, 1, 0, 1, 1, 0, 0, 1, 1, 0, 1, 0, 1, 0, 1, 0, 0, 1, 1, 0, 1, 0, 1, 0]; or [0, 1, 0, 1, 1, 0, 1, 0, 0, 1, 1, 0, 0, 1, 1, 0, 0, 1, 0, 1, 1, 0, 1, 0, 0, 1, 1, 0, 0, 1, 1, 0, 0, 1, 0, 1, 0, 1, 1, 0, 0, 1, 0, 1, 0, 1, 0, 1, 1, 0, 1, 0, 1, 0, 0, 1, 0, 1, 0, 1, 1, 0, 1, 0]; or [0, 1, 1, 0, 1, 0, 0, 1, 0, 1, 0, 1, 0, 1, 0, 1, 1, 0, 0, 1, 0, 1, 1, 0, 1, 0, 1, 0, 1, 0, 0, 1, 1, 0, 0, 1, 1, 0, 0, 1, 0, 1, 0, 1, 1, 0, 0, 1, 1, 0, 0, 1, 1, 0, 0, 1, 0, 1, 1, 0, 1, 0, 1, 0]; or [0, 1, 0, 1, 0, 1, 0, 1, 1, 0, 0, 1, 1, 0, 0, 1, 0, 1, 1, 0, 1, 0, 0, 1, 1, 0, 1, 0, 1, 0, 1, 0, 1, 0, 0, 1, 1, 0, 0, 1, 1, 0, 0, 1, 0, 1, 0, 1, 1, 0, 0, 1, 0, 1, 1, 0, 1, 0, 1, 0, 0, 1, 1, 0]; or [0, 1, 0, 1, 1, 0, 1, 0, 1, 0, 0, 1, 0, 1, 1, 0, 0, 1, 0, 1, 0, 1, 1, 0, 0, 1, 0, 1, 0, 1, 0, 1, 1, 0, 0, 1, 0, 1, 1, 0, 0, 1, 0, 1, 0, 1, 0, 1, 1, 0, 0, 1, 0, 1, 1, 0, 0, 1, 1, 0, 1, 0, 1, 0]; or [0, 1, 0, 1, 1, 0, 1, 0, 1, 0, 0, 1, 0, 1, 1, 0, 0, 1, 0, 1, 1, 0, 0, 1, 0, 1, 0, 1, 1, 0, 0, 1, 1, 0, 0, 1, 1, 0]; or [0, 1, 1, 0, 0, 1, 1, 0, 1, 0, 1, 0, 1, 0, 0, 1, 1, 0, 0, 1, 1, 0, 0, 1, 0, 1, 0, 1, 0, 1, 1, 0, 0, 1, 0, 1, 1, 0, 0, 1, 0, 1, 1, 0, 1, 0, 0, 1, 1, 0, 1, 0, 0, 1, 0, 1, 0]; or [0, 1, 0, 1, 0, 1, 0, 1, 0, 1, 1, 0, 0, 1, 1, 0, 0, 1, 0, 1, 1, 0, 1, 0, 0, 1, 1, 0, 1, 0, 0, 1, 1, 0, 0, 1, 0, 1, 1, 0, 0, 1, 1, 0, 0, 1, 1, 0, 1, 0, 1, 0, 1, 0, 1, 0]; or [0, 1, 0, 1, 0, 1, 0, 1, 1, 0, 0, 1, 1, 0, 0, 1, 1, 0, 0, 1, 0, 1, 0, 1, 0, 1, 1, 0, 0, 1, 1, 0, 0, 1, 1, 0, 1, 0, 1, 0, 1, 0, 1, 0]; or [0, 1, 0, 1, 1, 0, 1, 0, 0, 1, 0, 1, 1, 0, 1, 0, 1, 0, 1, 0, 1, 0, 0, 1, 0, 1, 0, 1, 0, 1, 1, 0, 0, 1, 1, 0, 0, 1, 1, 0, 0, 1, 1, 0, 0, 1, 0, 1, 1, 0, 1, 0, 0, 1, 1]; or [0, 1, 1, 0, 1, 0, 0, 1, 1, 0, 0, 1, 0, 1, 1, 0, 1, 0, 0, 1, 1, 0, 0, 1, 1, 0, 0, 1, 1, 0, 0, 1, 1, 0, 0, 1, 1, 0, 1, 0, 1, 0, 1, 0, 1, 0, 1, 0, 1, 0, 1, 0, 1, 1, 0, 1, 0]; or [0, 1, 1, 0, 1, 0, 0, 1, 0, 0, 0, 0, 1, 1, 1, 1, 0, 0, 1, 1, 0, 0, 1, 1, 0, 1, 0, 1, 0, 1, 0, 1, 1, 0, 0, 1, 1, 0, 0, 1, 1, 1, 1, 0, 0, 0, 0, 1, 1, 0, 0, 1, 1, 0, 0, 1, 0, 1, 0, 1, 0, 1, 0, 1, 0]; or [0, 0, 0, 0, 1, 1, 1, 1, 0, 1, 1, 0, 1, 1, 0, 1, 0, 0, 1, 1, 0, 1, 0, 1, 0, 1, 0, 1, 1, 0, 0, 1, 1, 0, 0, 1, 1, 1, 1, 0, 0, 0, 0, 1, 0, 0, 1, 0, 1, 1, 0, 0, 1, 0, 1, 0, 1, 0, 1, 0, 1, 0, 0, 1, 1, 0, 0, 1, 1]; or [0, 1, 0, 1, 0, 1, 0, 1, 0, 0, 1, 1, 0, 0, 1, 1, 0, 0, 0, 0, 1, 1, 1, 1, 0, 1, 1, 0, 1, 0, 0, 1, 1, 0, 1, 0, 1, 0, 1, 0, 1, 1, 0, 0, 1, 1, 0, 0, 1, 1, 1, 1, 0, 0, 0, 0, 1, 0, 0, 1, 0, 1, 1, 0]; or [0, 0, 1, 1, 0, 0, 1, 1, 0, 1, 0, 1, 0, 1, 0, 1, 0, 1, 1, 0, 0, 1, 0, 1, 1, 1, 1, 0, 0, 0, 0, 1, 1, 0, 0, 1, 1, 0, 0, 1, 0, 1, 0, 1, 0, 1, 0, 1, 0, 0, 1, 1, 0, 1, 0, 0, 0, 1, 0, 0, 0, 0, 1, 1, 1, 1]; or [0, 1, 0, 1, 0, 1, 0, 1, 1, 0, 1, 0, 1, 0, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 0, 1, 1, 0, 1, 0]; or

[0, 1, 0, 1, 1, 0, 1, 0, 0, 1, 0, 1, 1, 0, 1, 0, 1, 0, 0, 1, 0, 1, 1, 0, 0, 1, 1, 0, 1, 0, 0, 1, 1, 0, 0, 1, 1, 0, 0, 1, 1, 0, 0, 1, 1, 0, 0, 1, 1, 0, 0, 1, 0, 1, 0, 1, 1, 0, 1, 0, 1, 0, 1, 0]; or [0, 1, 0, 1, 1, 0, 1, 0, 0, 1, 0, 1, 0, 1, 0, 1, 1, 0, 1, 0, 1, 0, 1, 0, 1, 0, 1, 0, 1, 0, 1, 0, 0, 1, 0, 1]; or [0, 1, 1, 0, 1, 0, 0, 1, 0, 1, 1, 0, 0, 1, 1, 0, 0, 1, 1, 0, 0, 1, 1, 0, 1, 0, 0, 1, 1, 0, 1, 0, 0, 1, 0, 1, 0, 1, 0, 1, 0, 1, 0, 1, 1, 0, 1, 0, 1, 0, 1, 0, 0, 1, 0, 1, 1, 0, 1, 0]; or [0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 1, 0, 1, 0, 1, 0, 1, 0, 1, 0, 1, 0, 0, 1, 0, 1, 1, 0, 0, 1, 1, 0, 0, 1, 0, 1, 1, 0]; or [0, 1, 1, 0, 1, 0, 0, 1, 1, 0, 0, 1, 1, 0, 0, 1, 1, 0, 0, 1, 1, 0, 0, 1, 1, 0, 1, 0, 0, 1, 1, 0, 1, 0, 1, 0, 0, 1, 1, 0, 1, 0, 1, 0]; or [0, 1, 0, 1, 0, 1, 0, 1, 0, 1, 1, 0, 1, 0, 0, 1, 1, 0, 0, 1, 1, 0, 1, 0, 0, 1, 1, 0, 1, 0, 1, 0, 0, 1, 1, 0, 0, 1, 1, 0, 1, 0, 0, 1, 1, 0, 1, 0, 1, 0, 0, 1, 1, 0, 1, 0, 1, 0]; or [0, 1, 0, 1, 0, 1, 0, 1, 1, 0, 1, 0, 0, 1, 0, 1, 1, 0, 0, 1, 1, 0, 0, 1, 0, 1, 1, 0, 1, 0, 0, 1, 1, 0, 0, 1, 0, 1, 1, 0, 1, 0, 0, 1, 1, 0, 0, 1, 0, 1, 1, 0, 0, 1, 1, 0, 0, 1]; or [0, 0, 1, 1, 0, 0, 1, 1, 0, 1, 1, 0, 1, 0, 0, 1, 0, 0, 0, 0, 1, 1, 1, 1, 0, 1, 0, 1, 0, 1, 0, 1, 0, 1, 1, 0, 0, 1, 1, 0, 0, 1, 0, 1, 0, 1, 0, 0, 1, 0, 0, 0, 0, 1, 1, 1, 1, 0, 0, 0, 0]; or [0, 1, 0, 1, 0, 1, 0, 1, 0, 0, 0, 0, 1, 1, 1, 1, 1, 0, 1, 1, 0, 1, 0, 0, 1, 0, 0, 0, 1, 1, 1, 1, 0, 1, 0, 1, 0, 1, 0, 1, 1, 1, 0, 0, 0, 0, 1, 0, 0, 1, 0, 1, 1, 0, 1, 1, 0, 0, 0, 1]; or [0, 0, 0, 0, 1, 1, 1, 1, 0, 1, 0, 1, 0, 1, 1, 1, 1, 0, 0, 0, 0, 1, 0, 1, 0, 1, 0, 1, 0, 0, 1, 1, 0, 1, 0, 0, 1, 0, 0, 1, 1, 1, 0, 0, 1, 0, 1, 1, 0, 1, 1, 0, 1, 0, 0, 1, 1, 0, 1, 0, 1, 0, 1, 1, 0]; or [0, 1, 0, 1, 0, 0, 1, 0, 0, 1, 1, 0, 0, 1, 1, 0, 0, 0, 1, 1, 1, 1, 0, 1, 0, 1, 0, 1, 0, 1, 1, 1, 1, 0, 0, 0, 0, 1, 1, 0, 0, 1, 1, 0, 0, 1, 0]; or [0, 0, 0, 0, 1, 1, 1, 1, 0, 1, 0, 1, 0, 1, 1, 1, 1, 1, 0, 0, 0, 0, 1, 0, 1, 0, 1, 0, 1, 1, 0, 0, 1, 0, 1, 1, 0, 1, 1, 0, 1, 0, 0, 1, 1, 0, 1, 0, 1, 0, 1, 0, 1, 0]; or [0, 1, 0, 1, 0, 1, 0, 1, 0, 0, 0, 0, 1, 1, 1, 1, 0, 0, 1, 1, 0, 0, 1, 1, 0, 1, 1, 0, 1, 0, 0, 0, 1, 1, 0, 1, 0, 1, 0, 1, 0]; or [0, 0, 0, 0, 1, 1, 1, 1, 0, 1, 1, 0, 1, 0, 1, 0, 1, 0, 0, 1, 0, 1, 0, 1, 0, 1, 0, 0, 1, 1, 0, 1, 0, 1, 0, 0, 1, 0, 0, 1, 1, 0, 0, 1]; or [0, 0, 0, 0, 1, 1, 1, 1, 0, 0, 1, 1, 0, 0, 1, 1, 0, 1, 1, 0, 1, 1, 0, 1, 0, 0, 1, 0, 1, 0, 1, 0, 1, 0, 1, 1, 1, 1, 1, 0, 0, 0, 0, 1, 1, 0, 0, 1, 1, 0, 0, 1, 0, 0, 1, 0, 1, 1,

0, 1, 0, 1, 0, 1, 0, 1, 0]; or [0, 1, 0, 1, 0, 1, 0, 1, 0, 1, 1, 0, 1, 0, 0, 1, 0, 0, 1, 1, 0, 0, 1, 1, 0, 0, 0, 0, 1, 1, 1, 1, 1, 0, 1, 0, 1, 0, 1, 0, 1, 0, 0, 1, 0, 1, 1, 0, 1, 1, 0, 0, 1, 1, 0, 0, 1, 1, 1, 1, 0, 0, 0, 0].

9. The method according to any one of claims 1 to 5, wherein when *N*=32, the first sequence is one of the following sequences, or the first sequence is an equivalent sequence of one of the following sequences:

[0, 0, 0, 1, 0, 0, 1, 0, 1, 1, 1, 0, 1, 1, 0, 1, 0, 0, 0, 1, 1, 1, 0, 1, 0, 0, 0, 1, 1, 1, 0, 1]; or [0, 1, 0, 0, 0, 1, 1, 1, 0, 1, 0, 0, 0, 1, 1, 1, 0, 1, 0, 0, 1, 0, 0, 0, 1, 0, 1, 1, 0, 1, 1, 1]; or [0, 0, 0, 1, 0, 1, 0, 0, 1, 1, 1, 0, 1, 0, 1, 1, 0, 0, 1, 0, 0, 1, 1, 1, 0, 0, 1, 0, 0, 1, 1, 1]; or [0, 0, 0, 1, 1, 0, 1, 1, 0, 0, 1, 1, 0, 1, 1, 0, 0, 1, 0, 1, 0, 0, 0, 1, 1, 0, 1, 0, 1, 1, 1]; or [0, 0, 1, 1, 0, 1, 0, 1, 0, 0, 1, 1, 0, 1, 0, 1, 0, 0, 0, 0, 0, 1, 1, 0, 1, 1, 1, 1, 1, 0, 0, 1]; or [0, 1, 1, 0, 0, 0, 0, 0, 1, 0, 0, 1, 1, 1, 1, 1, 0, 1, 0, 1, 0, 0, 1, 1, 0, 1, 0, 1, 0, 0, 1, 1]; or [0, 0, 0, 1, 0, 0, 1, 0, 1, 1, 1, 0, 1, 1, 0, 1, 0, 1, 0, 0, 0, 1, 1, 1, 0, 1, 0, 0, 0, 1, 1, 1]; or [0, 0, 0, 1, 1, 1, 0, 1, 0, 0, 0, 1, 1, 1, 0, 1, 0, 1, 0, 0, 1, 0, 0, 0, 1, 0, 1, 1, 0, 1, 1, 1]; or [0, 1, 0, 0, 0, 1, 1, 1, 0, 1, 0, 0, 0, 1, 1, 1, 0, 0, 0, 1, 0, 0, 1, 0, 1, 1, 1, 0, 1, 1, 1, 0, 1]; or [0, 1, 0, 1, 0, 0, 0, 1, 0, 1, 1, 0, 1, 1, 1, 0, 0, 0, 1, 1, 1, 0, 1, 0, 0, 0, 1, 1, 1, 0, 1]; or [0, 0, 0, 0, 0, 1, 1, 0, 1, 1, 1, 1, 1, 0, 0, 1, 0, 1, 0, 1, 0, 0, 1, 1, 0, 1, 0, 1, 0, 0, 1, 1]; or [0, 0, 1, 1, 0, 1, 0, 1, 0, 0, 1, 1, 0, 1, 0, 1, 0, 1, 1, 0, 0, 0, 0, 0, 1, 0, 0, 1, 1, 1, 1, 1]; or [0, 1, 0, 1, 0, 0, 1, 1, 0, 1, 0, 1, 0, 0, 1, 1, 0, 0, 0, 0, 0, 1, 1, 0, 1, 1, 1, 1, 1, 0, 0, 1]; or [0, 1, 1, 0, 0, 0, 0, 0, 1, 0, 0, 1, 1, 1, 1, 1, 0, 0, 1, 1, 0, 1, 0, 0, 1, 1, 0, 1, 0, 1, 0]; or [0, 1, 0, 0, 0, 1, 0, 1, 1, 0, 0, 0, 1, 1, 1, 1, 0, 1, 0, 1, 1, 1, 0, 1, 1, 0, 0, 0, 1, 0, 0, 0]; or [0, 1, 1, 1, 0, 1, 1, 1, 0, 0, 1, 0, 0, 0, 0, 1, 1, 1, 0, 0, 1, 0, 1, 1, 1, 0, 1]; or [0, 1, 0, 0, 0, 1, 0, 0, 1, 1, 1, 0, 1, 1, 1, 1, 0, 1, 0, 1, 1, 0, 1, 0, 0, 1, 1, 0, 0, 0, 0, 1]; or [0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 1, 0, 1]; or [0, 0, 1, 0, 1, 1, 0, 1, 0, 0, 0, 1, 1, 1, 1, 0, 1, 1, 0, 1, 1, 1, 0, 1, 0, 0, 0, 1, 0, 0, 0]; or [0, 1, 1, 1, 0, 1, 1, 1, 0, 1, 0, 0, 0, 1, 0, 0, 0, 0, 1, 1, 1, 0, 0, 1, 0, 1, 1, 1, 0, 0, 1, 1]; or [0, 0, 1, 0, 0, 0, 1, 0, 1, 1, 1, 0, 1, 1, 1, 0, 1, 1, 0, 1, 0, 0, 1, 0, 1, 1, 0, 0, 0, 0, 1]; or [0, 1, 1, 1, 1, 0, 0, 1, 0, 1, 1, 0, 1, 0, 0, 0, 1, 0, 0, 0, 1, 0, 1, 1, 1, 0, 1, 1, 1, 0]; or [0, 1, 0, 0, 0, 1, 0, 1, 1, 0, 1, 0, 1, 0, 0, 1, 1, 1, 0, 1, 1, 1, 1, 0, 1, 1, 0, 0, 0, 0, 1]; or [0, 1, 1, 1, 1, 0, 0, 0, 1, 0, 0, 0, 1, 0, 0, 0, 1, 0, 1, 1, 1, 0, 1, 1, 0, 1, 0, 0, 1, 0, 1, 1]; or [0, 1, 1, 0, 0, 0, 1, 1, 0, 1, 0, 1, 0, 0, 0, 0, 1, 1, 1, 1, 0, 1, 0, 1, 1, 0, 0, 1, 0, 0, 0]; or [0, 1, 1, 0, 1, 1, 0, 0, 1, 0, 1, 0, 0, 0, 0, 0, 1, 1, 1, 1, 0, 1, 0, 1, 1, 0, 0, 1, 0, 0, 0]; or [0, 1, 0, 0, 0, 1, 0, 0, 1, 0, 1, 1, 0, 1, 0, 0, 1, 1, 1, 0, 1, 1, 1, 0, 1, 1, 1, 0, 1, 1]; or [0, 1, 1, 1, 1, 0, 0, 1, 0, 0, 0, 1, 0, 0, 0, 1, 1, 0, 1, 0, 0, 1, 0, 1, 1, 0, 1, 1, 1, 0, 1]; or [0, 0, 1, 0, 0, 0, 1, 0, 1, 1, 0, 1, 0, 0, 1, 0, 1, 1, 1, 0, 1, 1, 1, 0, 1, 1, 1, 0, 0, 0, 0, 1]; or [0, 1, 1, 1, 1, 0, 0, 0, 1, 0, 0, 0, 1, 0, 0, 0, 1, 0, 0, 0, 1, 0, 1, 1, 0, 1, 0, 0, 1, 0, 1, 1, 0, 1, 0, 0, 1, 0, 1]; or [0, 1, 1, 1, 0, 1, 1, 1, 0, 0, 1, 0, 0, 0, 1, 0, 1, 0, 1, 1, 0, 1, 0, 0, 1, 1, 0, 0, 0, 0, 1]; or [0, 1, 1, 1, 1, 1, 0, 0, 0, 1, 1, 0, 1, 0, 0, 0, 1, 0, 0, 1, 1, 0, 0, 0, 1, 0, 0, 0, 1]; or [0, 1, 1, 0, 0, 1, 0, 1, 0, 0, 1, 1, 0, 0, 0, 0, 0, 1, 1, 1, 1, 1, 0, 1, 0, 1, 1, 0, 0, 1, 0, 0, 0]; or [0, 1, 1, 0, 1, 1, 0, 0, 1, 0, 1, 0, 0, 0, 0, 0, 1, 1, 1, 1, 1, 0, 0, 0, 1, 0, 1, 0, 1, 0, 1, 0, 0, 0]; or [0, 1, 0, 1, 1, 0, 0, 1, 0, 0, 0, 0, 0, 1, 1, 1, 1, 0, 0, 1, 1, 0, 1, 0, 1, 1, 0, 0, 1]; or [0, 1, 0, 1, 1, 0, 0, 1, 0, 0, 0, 0, 0, 1, 1, 1, 1, 0, 0, 1, 1, 0, 1, 0, 1, 1, 0, 0, 1]; or [0, 1, 0, 1, 0, 0, 1, 0, 0, 0, 0, 1, 1, 1, 1, 0, 0, 1, 1, 0, 1, 0, 1, 0, 1, 1, 0, 0, 1]; or [0, 1, 0, 1, 1, 0, 0, 1, 0, 0, 0, 0, 0, 0, 0, 1, 1, 1, 1, 0, 0, 0, 1, 1, 0, 0, 1, 1, 1, 1, 0, 1, 1, 0, 0]; or [0, 1, 0, 1, 0, 0, 1, 0, 0, 0, 0, 0, 0, 1, 1, 1, 1, 0, 0, 1, 1, 0, 0, 1, 0, 1, 0, 1, 1, 0, 0, 1]; or [0, 1, 0, 1, 0, 0, 1, 0, 0, 0, 0, 1, 1, 1, 0, 0, 0, 1, 1, 1, 0, 1, 0, 1, 0, 1, 1, 0, 0, 1]; or [0, 0, 1, 0, 0, 0, 0, 1, 1, 1, 1, 1, 1, 0, 0, 1, 0, 0, 0, 1, 1, 0, 1, 0, 1, 0, 1, 0, 1, 0, 0, 0]; or [0, 1, 1, 0, 1, 0, 1, 0, 1, 0, 1, 0, 0, 0, 1, 1, 0, 1, 1, 0, 0, 0, 0, 0, 0, 1, 1, 1, 1, 0, 0, 1, 1]; or [0, 1, 0, 1, 1, 0, 0, 1, 0, 1, 0, 1, 0, 0, 1, 1, 0, 1, 1, 0, 1, 1, 1, 1, 0, 0, 1, 1, 0, 0, 0, 0, 0, 0, 1]; or [0, 0, 1, 1, 1, 1, 1, 0, 0, 1, 1, 0, 0, 0, 0, 1, 0, 0, 0, 1, 0, 1, 0, 1, 0, 1, 1, 0, 0, 1, 0, 1]; or [0, 1, 0, 0, 0, 1, 1, 0, 0, 0, 1, 1, 0, 1, 1, 0, 1, 1, 0, 0, 1, 1, 1, 0, 1, 1, 0, 0, 0, 0, 1]; or [0, 0, 0, 0, 1, 0, 1, 0, 1, 1, 1, 1, 0, 1, 0, 1, 0, 0, 1, 0, 0, 1, 1, 0, 1, 1, 0, 0, 0, 1, 1]; or [0, 0, 1, 1, 1, 0, 0, 1, 0, 0, 1, 1, 0, 1, 1, 0, 1, 0, 1, 0, 0, 0, 0, 0, 1, 0, 1, 0, 1, 1, 1, 1]; or [0, 1, 0, 0, 1, 1, 0, 0, 1, 0, 0, 1, 1, 1, 0, 1, 0, 1, 0, 0, 0, 0, 1, 0, 1, 0, 0, 0, 1]; or [0, 0, 1, 1, 0, 0, 0, 1, 1, 1, 1, 1, 1, 0, 0, 1, 0, 0, 0, 1, 0, 1, 1, 0, 1, 0, 1, 0, 1, 1, 0, 0, 1]; or [0, 1, 1, 1, 1, 0, 0, 0, 0, 1, 1, 0, 0, 1, 0, 0, 1, 1, 0, 1, 0, 1, 0, 1, 0, 1, 0, 1, 0, 0, 0, 1]; or [0, 1, 1, 0, 1, 0, 0, 1, 0, 0, 0, 1, 1, 0, 0, 1, 1, 0, 0, 0, 0, 1, 1, 1, 1, 0, 1, 0, 1, 0, 1, 0, 1, 0, 1]; or [0, 0, 1, 1, 0, 0, 1, 1, 0, 1, 1, 0, 1, 0, 0, 1, 0, 1, 0, 1, 0, 1, 1, 1, 1, 0, 0, 0, 0]; or [0, 0, 0, 0, 1, 1, 1, 1, 0, 1, 0, 1, 0, 1, 0, 1, 1, 0, 0, 1, 0, 1, 1, 0, 1]; or [0, 0, 0, 0, 1, 1, 1, 1, 0, 1, 0, 1, 0, 1, 0, 0, 1, 0, 1, 1, 0, 0, 0, 0, 1, 1, 1]; or [0, 0, 0, 0, 1, 1, 1, 1, 0, 1, 0, 1, 0, 1, 0, 1, 0, 0, 1, 1, 0, 0, 0, 1, 1, 1, 1]; or [0, 1, 0, 1, 0, 1, 0, 1, 0, 0, 0, 0, 1, 1, 1, 1, 0, 0, 1, 1, 0, 0, 1, 1, 0, 1, 1]; or [0, 1, 1, 0, 1, 0, 0, 1, 0, 0, 1, 1, 0, 0, 1, 1, 0, 0, 0, 0, 1, 1, 1, 1, 0, 1, 0, 1, 0, 1, 0, 1, 0, 1]; or [0, 0, 1, 1, 0, 0, 1, 1, 0, 1, 1, 0, 1, 0, 0, 1, 0, 1, 0, 1, 0, 1, 1, 1, 1, 0, 0, 0, 0]; or [0, 0, 0, 0, 1, 1, 1, 1, 0, 1, 0, 1, 0, 1, 0, 1, 1, 0, 0, 1, 0, 1, 1, 0, 1, 1, 0, 0, 1, 1, 0, 0]; or [0, 0, 0, 0, 1, 1, 1, 1, 0, 1, 0, 1, 0, 1, 0, 1, 0, 0, 0, 0, 1, 1, 1, 1]; or [0, 0, 0, 0, 1, 1, 1, 1, 0, 1, 0, 1, 0, 1, 0, 1, 1, 0, 0, 1, 1, 0, 0, 1, 1, 0, 0, 1, 0, 1, 0]; or [0, 1, 0, 1, 0, 1, 0, 1, 1, 0, 1, 0, 1, 0, 0, 0, 1, 1, 1, 1, 0, 0, 0, 1, 1, 1, 1, 0, 0, 0, 0]; or [0, 0, 1, 1, 0, 0, 1, 1, 0, 0, 0, 0, 0,

1, 1, 1, 1, 1, 0, 1, 0, 1, 0, 1, 0, 1, 0, 0, 1, 0, 1, 1, 0]; or [0, 1, 1, 0, 1, 0, 0, 1, 0, 1, 0, 1, 0, 1, 0, 1, 1, 1, 1, 1, 0, 0, 0, 0, 1, 1, 0, 0, 1, 1, 0, 0]; or [0, 0, 0, 0, 1, 1, 1, 1, 1, 1, 0, 0, 1, 1, 0, 0, 1, 0, 0, 1, 0, 1, 1, 0, 0, 1, 0, 1, 0, 1, 0, 1]; or [0, 1, 0, 1, 0, 1, 0, 1, 1, 0, 0, 1, 0, 1, 1, 0, 1, 1, 0, 0, 1, 1, 0, 0, 0, 0, 0, 1, 1, 1, 1]; or [0, 0, 1, 1, 0, 0, 1, 1, 1, 1, 1, 1, 0, 0, 0, 0, 1, 0, 1, 0, 1, 0, 1, 0, 0, 1, 1, 0, 1, 0, 0, 1]; or [0, 1, 1, 0, 1, 0, 0, 1, 1, 0, 1, 0, 1, 0, 1, 0, 1, 1, 1, 1, 0, 0, 0, 0, 0, 0, 1, 1, 0, 0, 1, 1].

**10.** The method according to any one of claims 1 to 5, wherein when *N*=16, the first sequence is one of the following sequences, or the first sequence is an equivalent sequence of one of the following sequences:
[0, 0, 1, 1, 0, 1, 1, 0, 1, 0, 0, 1, 1, 1, 0, 0], or [0, 0, 1, 1, 1, 0, 0, 1, 0, 1, 1, 0, 1, 1, 0, 0], or [0, 1, 1, 0, 0, 0, 1, 1, 1, 1, 0, 0, 1, 0, 0, 1], or [0, 1, 1, 0, 1, 1, 0, 0, 0, 0, 1, 1, 1, 0, 0, 1].

**11.** The method according to any one of claims 1 to 10, wherein the *n*th element $A_n$ in the generalized Golay sequence is equal to $a_{M+1}(n)$, and $a_{M+1}(n)$ satisfies the following formula:

$$a_{m+1}(n) = a_m(n) + W_{m,1}b_m(n - 2^{P_m})$$

$$b_{m+1}(n) = a_m(n) - W_{m,2}b_m(n - 2^{P_m}),$$

wherein
$a_{M+1}(n)$ is $a_{m+1}(n)$ when $m = M$, $1 \leq m \leq M$, m is an integer, $a_1(n) = \delta(n)$, $b_1(n) = \delta(n)$, when $n = 0$, $\delta(n) = 1$, when $n \neq 0$, $\delta(n) = 0$, $W_{m,1} \in \{1, -1\}$, $W_{m,2} \in \{1, -1\}$, $0 \leq n \leq N - 1$, and *n* is an integer.

**12.** The method according to claim 11, wherein when *N*=256, $P_m$ is the *m*th element in the second sequence [*P*], $W_{m,1}$ is an *m*th element in a third sequence [$W_1$], and $W_{m,2}$ is an *m*th element in a fourth sequence [$W_2$], wherein

the second sequence is [6, 5, 2, 7, 1, 4, 3, 0]; the third sequence is [-1, -1, 1, 1, -1, 1, -1, - 1]; and the fourth sequence is [-1, -1, 1, 1, -1, 1, 1, -1]; or
the second sequence is [6, 5, 2, 7, 1, 4, 3, 0]; the third sequence is [-1, 1, 1, 1, -1, -1, -1, - 1]; and the fourth sequence is [-1, 1, 1, 1, -1, -1, 1, -1]; or
the second sequence is [6, 5, 2, 7, 1, 4, 3, 0]; the third sequence is [1, -1, 1, 1, -1, 1, 1, -1]; and the fourth sequence is [1, -1, 1, 1, -1, 1, -1, -1]; or
the second sequence is [6, 5, 2, 7, 1, 4, 3, 0]; the third sequence is [1, 1, 1, 1, -1, -1, 1, -1]; and the fourth sequence is [1, 1, 1, 1, -1, -1, -1, -1]; or
the second sequence is [3, 7, 6, 4, 5, 2, 1, 0]; the third sequence is [1, 1, -1, 1, -1, -1, -1, - 1]; and the fourth sequence is [1, 1, -1, 1, -1, -1, 1, -1]; or
the second sequence is [3, 7, 6, 4, 5, 2, 1, 0]; the third sequence is [-1, 1, -1, 1, -1, -1, 1, - 1]; and the fourth sequence is [-1, 1, -1, 1, -1, -1, -1, -1]; or
the second sequence is [6, 5, 3, 4, 2, 7, 1, 0]; the third sequence is [1, 1, -1, -1, -1, 1, -1, - 1]; and the fourth sequence is [1, 1, -1, -1, -1, 1, 1, -1]; or
the second sequence is [6, 5, 3, 4, 2, 7, 1, 0]; the third sequence is [-1, 1, -1, -1, -1, 1, 1, - 1]; and the fourth sequence is [-1, 1, -1, -1, -1, 1, -1, -1]; or
the second sequence is [5, 7, 1, 6, 4, 2, 3, 0]; the third sequence is [1, 1, 1, -1, 1, 1, -1, -1]; and the fourth sequence is [1, 1, 1, -1, 1, 1, 1, -1]; or
the second sequence is [5, 7, 1, 6, 4, 2, 3, 0]; the third sequence is [-1, 1, 1, -1, 1, 1, 1, -1]; and the fourth sequence is [-1, 1, 1, -1, 1, 1, -1, -1]; or
the second sequence is [7, 5, 3, 6, 1, 2, 4, 0]; the third sequence is [1, -1, 1, 1, 1, 1, -1, -1]; and the fourth sequence is [1, -1, 1, 1, 1, 1, 1, -1]; or
the second sequence is [7, 5, 3, 6, 1, 2, 4, 0]; the third sequence is [-1, 1, 1, 1, -1, -1, 1, - 1]; and the fourth sequence is [-1, 1, 1, 1, -1, -1, 1, -1]; or
the second sequence is [7, 5, 3, 6, 1, 2, 4, 0]; the third sequence is [-1, -1, 1, 1, 1, 1, 1, -1]; and the fourth sequence is [-1, -1, 1, 1, 1, 1, -1, -1]; or
the second sequence is [7, 5, 3, 6, 1, 2, 4, 0]; the third sequence is [1, 1, 1, 1, -1, -1, 1, -1]; and the fourth sequence is [1, 1, 1, 1, -1, -1, -1, -1]; or
the second sequence is [7, 5, 3, 6, 2, 1, 4, 0]; the third sequence is [1, 1, 1, -1, 1, 1, -1, -1]; and the fourth sequence is [1, 1, 1, -1, 1, 1, 1, -1]; or
the second sequence is [7, 5, 3, 6, 2, 1, 4, 0]; the third sequence is [-1, -1, 1, -1, -1, -1, -1, -1]; and the fourth sequence is [-1, -1, 1, -1, -1, -1, 1, -1]; or

the second sequence is [7, 5, 3, 6, 2, 1, 4, 0]; the third sequence is [-1, 1, 1, -1, 1, 1, 1, -1]; and the fourth sequence is [-1, 1, 1, -1, 1, 1, -1, -1]; or

the second sequence is [7, 5, 3, 6, 2, 1, 4, 0]; the third sequence is [1, -1, 1, -1, -1, -1, 1, -1]; and the fourth sequence is [1, -1, 1, -1, -1, -1, -1, -1]; or

the second sequence is [6, 7, 3, 1, 5, 2, 4, 0]; the third sequence is [1, -1, -1, -1, -1, -1, -1, -1]; and the fourth sequence is [1, -1, -1, -1, -1, -1, 1, -1]; or

the second sequence is [6, 7, 3, 1, 5, 2, 4, 0]; the third sequence is [-1, -1, -1, -1, -1, -1, 1, -1]; and the fourth sequence is [-1, -1, -1, -1, -1, -1, -1, -1]; or

the second sequence is [6, 4, 7, 3, 5, 1, 2, 0]; the third sequence is [1, -1, 1, -1, 1, -1, -1, -1]; and the fourth sequence is [1, -1, 1, -1, 1, -1, 1, -1]; or

the second sequence is [6, 4, 7, 3, 5, 1, 2, 0]; the third sequence is [-1, -1, 1, -1, -1, -1, -1, -1]; and the fourth sequence is [-1, -1, 1, -1, -1, -1, 1, -1]; or

the second sequence is [6, 4, 7, 3, 5, 1, 2, 0]; the third sequence is [-1, -1, 1, -1, 1, -1, 1, -1]; and the fourth sequence is [-1, -1, 1, -1, 1, -1, -1, -1]; or

the second sequence is [6, 4, 7, 3, 5, 1, 2, 0]; the third sequence is [1, -1, 1, -1, -1, -1, 1, -1]; and the fourth sequence is [1, -1, 1, -1, -1, -1, -1, -1]; or

the second sequence is [7, 5, 2, 6, 3, 4, 1, 0]; the third sequence is [1, 1, 1, 1, -1, -1, -1, -1]; and the fourth sequence is [1, 1, 1, 1, 1, -1, 1, -1]; or

the second sequence is [7, 5, 2, 6, 3, 4, 1, 0]; the third sequence is [-1, 1, 1, 1, 1, -1, 1, -1]; and the fourth sequence is [-1, 1, 1, 1, 1, -1, -1, -1]; or

the second sequence is [7, 6, 3, 2, 5, 1, 4, 0]; the third sequence is [-1, 1, 1, 1, -1, -1, -1, -1]; and the fourth sequence is [-1, 1, 1, 1, -1, -1, 1, -1]; or

the second sequence is [7, 6, 3, 2, 5, 1, 4, 0]; the third sequence is **[1,** -1, -1, -1, -1, -1, -1, -1]; and the fourth sequence is [1, -1, -1, -1, -1, -1, 1, -1]; or

the second sequence is [7, 6, 3, 2, 5, 1, 4, 0]; the third sequence is [1, 1, 1, 1, -1, -1, 1, -1]; and the fourth sequence is [1, 1, 1, 1, -1, -1, -1, -1]; or

the second sequence is [7, 6, 3, 2, 5, 1, 4, 0]; the third sequence is [-1, -1, -1, -1, -1, -1, 1, -1]; and the fourth sequence is [-1, -1, -1, -1, -1, -1, -1, -1]; or

the second sequence is [5, 6, 4, 3, 1, 7, 2, 0]; the third sequence is [1, -1, 1, 1, 1, 1, -1, -1]; and the fourth sequence is [1, -1, 1, 1, 1, 1, 1, -1]; or

the second sequence is [5, 6, 4, 3, 1, 7, 2, 0]; the third sequence is [-1, -1, 1, 1, 1, 1, 1, -1]; and the fourth sequence is [-1, -1, 1, 1, 1, 1, -1, -1]; or

the second sequence is [7, 6, 1, 3, 5, 4, 2, 0]; the third sequence is [-1, 1, 1, 1, -1, -1, -1, -1]; and the fourth sequence is [-1, 1, 1, 1, -1, -1, 1, -1]; or

the second sequence is [7, 6, 1, 3, 5, 4, 2, 0]; the third sequence is [1, 1, -1, 1, -1, -1, -1, -1]; and the fourth sequence is [1, 1, -1, 1, -1, -1, 1, -1]; or

the second sequence is [7, 6, 1, 3, 5, 4, 2, 0]; the third sequence is [-1, -1, 1, -1, -1, -1, -1, -1]; and the fourth sequence is [-1, -1, 1, -1, -1, -1, 1, -1]; or

the second sequence is [7, 6, 1, 3, 5, 4, 2, 0]; the third sequence is [1, -1, -1, -1, -1, -1, -1, -1]; and the fourth sequence is [1, -1, -1, -1, -1, -1, 1, -1]; or

the second sequence is [7, 6, 1, 3, 5, 4, 2, 0]; the third sequence is [1, 1, 1, 1, -1, -1, 1, -1]; and the fourth sequence is [1, 1, 1, 1, -1, -1, -1, -1]; or

the second sequence is [7, 6, 1, 3, 5, 4, 2, 0]; the third sequence is [-1, 1, -1, 1, -1, -1, 1, -1]; and the fourth sequence is [-1, 1, -1, 1, -1, -1, -1, -1]; or

the second sequence is [7, 6, 1, 3, 5, 4, 2, 0]; the third sequence is [1, -1, 1, -1, -1, -1, 1, -1]; and the fourth sequence is [1, -1, 1, -1, -1, -1, -1, -1]; or

the second sequence is [7, 6, 1, 3, 5, 4, 2, 0]; the third sequence is [-1, -1, -1, -1, -1, -1, 1, -1]; and the fourth sequence is [-1, -1, -1, -1, -1, -1, -1, -1]; or

the second sequence is [7, 4, 6, 3, 5, 2, 1, 0]; the third sequence is [-1, -1, -1, -1, 1, -1, -1, -1]; and the fourth sequence is [-1, -1, -1, -1, 1, -1, 1, -1]; or

the second sequence is [7, 4, 6, 3, 5, 2, 1, 0]; the third sequence is [1, -1, -1, -1, 1, -1, 1, -1]; and the fourth sequence is [1, -1, -1, -1, 1, -1, -1, -1]; or

the second sequence is [7, 5, 4, 3, 2, 6, 1, 0]; the third sequence is [1, -1, -1, 1, -1, 1, -1, -1]; and the fourth sequence is [1, -1, -1, 1, -1, 1, 1, -1]; or

the second sequence is [7, 5, 4, 3, 2, 6, 1, 0]; the third sequence is [-1, -1, -1, 1, -1, 1, 1, -1]; and the fourth sequence is [-1, -1, -1, 1, -1, 1, -1, -1]; or

the second sequence is [7, 5, 2, 6, 4, 3, 1, 0]; the third sequence is [-1, -1, 1, -1, -1, -1, -1, -1]; and the fourth sequence is [-1, -1, 1, -1, -1, -1, 1, -1]; or

the second sequence is [7, 5, 2, 6, 4, 3, 1, 0]; the third sequence is [1, -1, 1, -1, -1, -1, 1, - 1]; and the fourth sequence is [1, -1, 1, -1, -1, -1, -1, -1]; or

the second sequence is [6, 7, 3, 2, 4, 5, 1, 0]; the third sequence is [1, -1, -1, 1, -1, 1, -1, -1]; and the fourth sequence is [1, -1, -1, 1, -1, 1, 1, -1]; or

the second sequence is [6, 7, 3, 2, 4, 5, 1, 0]; the third sequence is [-1, -1, -1, 1, -1, 1, 1, -1]; and the fourth sequence is [-1, -1, -1, 1, -1, 1, -1, -1]; or

the second sequence is [5, 6, 4, 3, 2, 7, 1, 0]; the third sequence is [1, -1, -1, 1, -1, 1, -1, -1]; and the fourth sequence is [1, -1, -1, 1, -1, 1, 1, -1]; or

the second sequence is [5, 6, 4, 3, 2, 7, 1, 0]; the third sequence is [-1, -1, -1, 1, -1, 1, 1, - 1]; and the fourth sequence is [-1, -1, -1, 1, -1, 1, -1, -1]; or

the second sequence is [5, 4, 7, 6, 3, 2, 1, 0]; the third sequence is [-1, -1, 1, -1, -1, -1, -1, -1]; and the fourth sequence is [-1, -1, 1, -1, -1, -1, 1, -1]; or

the second sequence is [5, 4, 7, 6, 3, 2, 1, 0]; the third sequence is [1, -1, 1, -1, -1, -1, 1, -1]; and the fourth sequence is [1, -1, 1, -1, -1, -1, -1, -1]; or

the second sequence is [5, 4, 6, 7, 3, 2, 1, 0]; the third sequence is [1, 1, -1, 1, -1, -1, -1, - 1]; and the fourth sequence is [1, 1, -1, 1, -1, -1, 1, -1]; or

the second sequence is [5, 4, 6, 7, 3, 2, 1, 0]; the third sequence is [-1, 1, -1, 1, -1, -1, 1, -1]; and the fourth sequence is [-1, 1, -1, 1, -1, -1, -1, -1]; or

the second sequence is [6, 4, 7, 5, 1, 3, 2, 0]; the third sequence is [1, -1, 1, 1, 1, 1, -1, -1]; and the fourth sequence is [1, -1, 1, 1, 1, 1, 1, -1]; or

the second sequence is [6, 4, 7, 5, 1, 3, 2, 0]; the third sequence is [1, -1, 1, -1, 1, -1, -1, - 1]; and the fourth sequence is [1, -1, 1, -1, 1, -1, 1, -1]; or

the second sequence is [6, 4, 7, 5, 1, 3, 2, 0]; the third sequence is [-1, -1, 1, 1, 1, 1, 1, -1]; and the fourth sequence is [-1, -1, 1, 1, 1, 1, -1, -1]; or

the second sequence is [6, 4, 7, 5, 1, 3, 2, 0]; the third sequence is [-1, -1, 1, -1, 1, -1, 1, - 1]; and the fourth sequence is [-1, -1, 1, -1, 1, -1, -1, -1]; or

the second sequence is [7, 4, 6, 5, 2, 1, 3, 0]; the third sequence is [1, 1, 1, -1, 1, 1, -1, -1]; and the fourth sequence is [1, 1, 1, -1, 1, 1, 1, -1]; or

the second sequence is [7, 4, 6, 5, 2, 1, 3, 0]; the third sequence is [-1, 1, 1, 1, -1, -1, -1, - 1]; and the fourth sequence is [-1, 1, 1, 1, -1, -1, 1, -1]; or

the second sequence is [7, 4, 6, 5, 2, 1, 3, 0]; the third sequence is [-1, 1, 1, -1, 1, 1, 1, -1]; and the fourth sequence is [-1, 1, 1, -1, 1, 1, -1, -1]; or

the second sequence is [7, 4, 6, 5, 2, 1, 3, 0]; the third sequence is [1, 1, 1, 1, -1, -1, 1, -1]; and the fourth sequence is [1, 1, 1, 1, -1, -1, -1, -1]; or

the second sequence is [7, 6, 3, 2, 5, 4, 1, 0]; the third sequence is [-1, 1, 1, 1, -1, -1, -1, - 1]; and the fourth sequence is [-1, 1, 1, 1, -1, -1, 1, -1]; or

the second sequence is [7, 6, 3, 2, 5, 4, 1, 0]; the third sequence is [1, 1, 1, 1, -1, -1, 1, -1]; and the fourth sequence is [1, 1, 1, 1, -1, -1, -1, -1]; or

the second sequence is [7, 6, 1, 4, 5, 2, 3, 0]; the third sequence is [-1, -1, -1, -1, 1, -1, -1, -1]; and the fourth sequence is [-1, -1, -1, -1, 1, -1, 1, -1]; or

the second sequence is [7, 6, 1, 4, 5, 2, 3, 0]; the third sequence is [1, 1, -1, 1, -1, -1, -1, - 1]; and the fourth sequence is [1, 1, -1, 1, -1, -1, 1, -1]; or

the second sequence is [7, 6, 1, 4, 5, 2, 3, 0]; the third sequence is [1, -1, -1, -1, 1, -1, 1, - 1]; and the fourth sequence is [1, -1, -1, -1, 1, -1, -1, -1]; or

the second sequence is [7, 6, 1, 4, 5, 2, 3, 0]; the third sequence is [-1, 1, -1, 1, -1, -1, 1, - 1]; and the fourth sequence is [-1, 1, -1, 1, -1, -1, -1, -1]; or

the second sequence is [7, 6, 3, 4, 1, 5, 2, 0]; the third sequence is [-1, 1, -1, -1, 1, 1, -1, - 1]; and the fourth sequence is [-1, 1, -1, -1, 1, 1, 1, -1]; or

the second sequence is [7, 6, 3, 4, 1, 5, 2, 0]; the third sequence is [-1, 1, -1, 1, 1, -1, -1, - 1]; and the fourth sequence is [-1, 1, -1, 1, 1, -1, 1, -1]; or

the second sequence is [7, 6, 3, 4, 1, 5, 2, 0]; the third sequence is [1, 1, -1, -1, 1, 1, 1, -1]; and the fourth sequence is [1, 1, -1, -1, 1, 1, -1, -1]; or

the second sequence is [7, 6, 3, 4, 1, 5, 2, 0]; the third sequence is [1, 1, -1, 1, 1, -1, 1, -1]; and the fourth sequence is [1, 1, -1, 1, 1, -1, -1, -1]; or

the second sequence is [7, 6, 1, 5, 2, 4, 3, 0]; the third sequence is [1, 1, 1, -1, 1, 1, -1, -1]; and the fourth sequence is [1, 1, 1, -1, 1, 1, 1, -1]; or

the second sequence is [7, 6, 1, 5, 2, 4, 3, 0]; the third sequence is [-1, 1, 1, -1, -1, 1, -1, - 1]; and the fourth sequence is [-1, 1, 1, -1, -1, 1, 1, -1]; or

the second sequence is [7, 6, 1, 5, 2, 4, 3, 0]; the third sequence is [1, -1, 1, -1, 1, -1, -1, - 1]; and the fourth sequence is [1, -1, 1, -1, 1, -1, 1, -1]; or

the second sequence is [7, 6, 1, 5, 2, 4, 3, 0]; the third sequence is [-1, -1, 1, -1, -1, -1, -1, -1]; and the fourth sequence is [-1, -1, 1, -1, -1, -1, 1, -1]; or

the second sequence is [7, 6, 1, 5, 2, 4, 3, 0]; the third sequence is [-1, 1, 1, -1, 1, 1, 1, -1]; and the fourth sequence is [-1, 1, 1, -1, 1, 1, -1, -1]; or

the second sequence is [7, 6, 1, 5, 2, 4, 3, 0]; the third sequence is [1, 1, 1, -1, -1, 1, 1, -1]; and the fourth sequence is [1, 1, 1, -1, -1, 1, -1, -1]; or

the second sequence is [7, 6, 1, 5, 2, 4, 3, 0]; the third sequence is [-1, -1, 1, -1, 1, -1, 1, - 1]; and the fourth sequence is [-1, -1, 1, -1, 1, -1, -1, -1]; or

the second sequence is [7, 6, 1, 5, 2, 4, 3, 0]; the third sequence is [1, -1, 1, -1, -1, -1, 1, - 1]; and the fourth sequence is [1, -1, 1, -1, -1, -1, -1, -1]; or

the second sequence is [6, 7, 1, 5, 2, 4, 3, 0]; the third sequence is [-1, -1, 1, -1, -1, -1, -1, -1]; and the fourth sequence is [-1, -1, 1, -1, -1, -1, 1, -1]; or

the second sequence is [6, 7, 1, 5, 2, 4, 3, 0]; the third sequence is [1, -1, 1, -1, -1, -1, 1, - 1]; and the fourth sequence is [1, -1, 1, -1, -1, -1, -1, -1]; or

the second sequence is [7, 6, 2, 5, 3, 1, 4, 0]; the third sequence is [1, 1, -1, -1, -1, 1, -1, - 1]; and the fourth sequence is [1, 1, -1, -1, -1, 1, 1, -1]; or

the second sequence is [7, 6, 2, 5, 3, 1, 4, 0]; the third sequence is [-1, -1, -1, -1, 1, -1, -1, -1]; and the fourth sequence is [-1, -1, -1, -1, 1, -1, 1, -1]; or

the second sequence is [7, 6, 2, 5, 3, 1, 4, 0]; the third sequence is [-1, 1, -1, -1, -1, 1, 1, - 1]; and the fourth sequence is [-1, 1, -1, -1, -1, 1, -1, -1]; or

the second sequence is [7, 6, 2, 5, 3, 1, 4, 0]; the third sequence is [1, -1, -1, -1, 1, -1, 1, - 1]; and the fourth sequence is [1, -1, -1, -1, 1, -1, -1, -1]; or

the second sequence is [6, 5, 7, 1, 2, 3, 4, 0]; the third sequence is [-1, 1, 1, 1, -1, -1, -1, - 1]; and the fourth sequence is [-1, 1, 1, 1, -1, -1, 1, -1]; or

the second sequence is [6, 5, 7, 1, 2, 3, 4, 0]; the third sequence is [1, 1, 1, 1, -1, -1, 1, -1]; and the fourth sequence is [1, 1, 1, 1, -1, -1, -1, -1]; or

the second sequence is [7, 6, 2, 5, 1, 4, 3, 0]; the third sequence is [1, 1, 1, -1, 1, 1, -1, -1]; and the fourth sequence is [1, 1, 1, -1, 1, 1, 1, -1]; or

the second sequence is [7, 6, 2, 5, 1, 4, 3, 0]; the third sequence is [1, 1, -1, -1, -1, 1, -1, - 1]; and the fourth sequence is [1, 1, -1, -1, -1, 1, 1, -1]; or

the second sequence is [7, 6, 2, 5, 1, 4, 3, 0]; the third sequence is [1, -1, 1, -1, 1, -1, -1, - 1]; and the fourth sequence is [1, -1, 1, -1, 1, -1, 1, -1]; or

the second sequence is [7, 6, 2, 5, 1, 4, 3, 0]; the third sequence is [1, -1, -1, -1, -1, -1, -1, -1]; and the fourth sequence is [1, -1, -1, -1, -1, -1, 1, -1]; or

the second sequence is [7, 6, 2, 5, 1, 4, 3, 0]; the third sequence is [-1, 1, 1, -1, 1, 1, 1, -1]; and the fourth sequence is [-1, 1, 1, -1, 1, 1, -1, -1]; or

the second sequence is [7, 6, 2, 5, 1, 4, 3, 0]; the third sequence is [-1, 1, -1, -1, -1, 1, 1, - 1]; and the fourth sequence is [-1, 1, -1, -1, -1, 1, -1, -1]; or

the second sequence is [7, 6, 2, 5, 1, 4, 3, 0]; the third sequence is [-1, -1, 1, -1, 1, -1, 1, - 1]; and the fourth sequence is [-1, -1, 1, -1, 1, -1, -1, -1]; or

the second sequence is [7, 6, 2, 5, 1, 4, 3, 0]; the third sequence is [-1, -1, -1, -1, -1, -1, 1, -1]; and the fourth sequence is [-1, -1, -1, -1, -1, -1, -1, -1]; or

the second sequence is [6, 5, 7, 1, 3, 2, 4, 0]; the third sequence is [-1, -1, 1, 1, -1, 1, -1, - 1]; and the fourth sequence is [-1, -1, 1, 1, -1, 1, 1, -1]; or

the second sequence is [6, 5, 7, 1, 3, 2, 4, 0]; the third sequence is [1, -1, 1, 1, -1, 1, 1, -1]; and the fourth sequence is [1, -1, 1, 1, -1, 1, -1, -1]; or

the second sequence is [7, 6, 1, 5, 4, 2, 3, 0]; the third sequence is [1, 1, 1, -1, 1, 1, -1, -1]; and the fourth sequence is [1, 1, 1, -1, 1, 1, 1, -1]; or

the second sequence is [7, 6, 1, 5, 4, 2, 3, 0]; the third sequence is [-1, -1, 1, 1, -1, 1, -1, - 1]; and the fourth sequence is [-1, -1, 1, 1, -1, 1, 1, -1]; or

the second sequence is [7, 6, 1, 5, 4, 2, 3, 0]; the third sequence is [-1, 1, 1, -1, 1, 1, 1, -1]; and the fourth sequence is [-1, 1, 1, -1, 1, 1, -1, -1]; or

the second sequence is [7, 6, 1, 5, 4, 2, 3, 0]; the third sequence is [1, -1, 1, 1, -1, 1, 1, -1]; and the fourth sequence is [1, -1, 1, 1, -1, 1, -1, -1]; or

the second sequence is [6, 7, 4, 3, 2, 5, 1, 0]; the third sequence is [-1, -1, -1, 1, 1, 1, -1, - 1]; and the fourth sequence is [-1, -1, -1, 1, 1, 1, 1, -1]; or

the second sequence is [6, 7, 4, 3, 2, 5, 1, 0]; the third sequence is [1, -1, -1, 1, -1, 1, -1, - 1]; and the fourth sequence is [1, -1, -1, 1, -1, 1, 1, -1]; or

the second sequence is [6, 7, 4, 3, 2, 5, 1, 0]; the third sequence is [1, -1, -1, 1, 1, 1, 1, -1]; and the fourth sequence is [1, -1, -1, 1, 1, 1, -1, -1]; or

the second sequence is [6, 7, 4, 3, 2, 5, 1, 0]; the third sequence is [-1, -1, -1, 1, -1, 1, 1, -1]; and the fourth sequence is [-1, -1, -1, 1, -1, 1, -1, -1]; or

the second sequence is [7, 6, 2, 5, 4, 1, 3, 0]; the third sequence is [-1, -1, -1, 1, 1, 1, -1, - 1]; and the fourth sequence is [-1, -1, -1, 1, 1, 1, 1, -1]; or

the second sequence is [7, 6, 2, 5, 4, 1, 3, 0]; the third sequence is [1, 1, 1, -1, 1, 1, -1, -1]; and the fourth sequence is [1, 1, 1, -1, 1, 1, -1, -1]; or

the second sequence is [7, 6, 2, 5, 4, 1, 3, 0]; the third sequence is [-1, 1, -1, -1, 1, 1, -1, - 1]; and the fourth sequence is [-1, 1, -1, -1, 1, 1, 1, -1]; or

the second sequence is [7, 6, 2, 5, 4, 1, 3, 0]; the third sequence is [-1, -1, 1, 1, -1, 1, -1, - 1]; and the fourth sequence is [-1, -1, 1, 1, -1, 1, 1, -1]; or

the second sequence is [7, 6, 2, 5, 4, 1, 3, 0]; the third sequence is [1, -1, -1, 1, -1, 1, -1, - 1]; and the fourth sequence is [1, -1, -1, 1, -1, 1, 1, -1]; or

the second sequence is [7, 6, 2, 5, 4, 1, 3, 0]; the third sequence is [1, 1, -1, -1, -1, 1, -1, - 1]; and the fourth sequence is [1, 1, -1, -1, -1, 1, 1, -1]; or

the second sequence is [7, 6, 2, 5, 4, 1, 3, 0]; the third sequence is [1, -1, -1, 1, 1, 1, 1, -1]; and the fourth sequence is [1, -1, -1, 1, 1, 1, -1, -1]; or

the second sequence is [7, 6, 2, 5, 4, 1, 3, 0]; the third sequence is [-1, 1, 1, -1, 1, 1, 1, -1]; and the fourth sequence is [-1, 1, 1, -1, 1, 1, -1, -1]; or

the second sequence is [7, 6, 2, 5, 4, 1, 3, 0]; the third sequence is [1, 1, -1, -1, 1, 1, 1, -1]; and the fourth sequence is [1, 1, -1, -1, 1, 1, -1, -1]; or

the second sequence is [7, 6, 2, 5, 4, 1, 3, 0]; the third sequence is [1, -1, 1, 1, -1, 1, 1, -1]; and the fourth sequence is [1, -1, 1, 1, -1, 1, -1, -1]; or

the second sequence is [7, 6, 2, 5, 4, 1, 3, 0]; the third sequence is [-1, -1, -1, 1, -1, 1, 1, - 1]; and the fourth sequence is [-1, -1, -1, 1, -1, 1, -1, -1]; or

the second sequence is [7, 6, 2, 5, 4, 1, 3, 0]; the third sequence is [-1, 1, -1, -1, -1, 1, 1, - 1]; and the fourth sequence is [-1, 1, -1, -1, -1, 1, -1, -1]; or

the second sequence is [7, 5, 6, 1, 4, 2, 3, 0]; the third sequence is [-1, 1, 1, -1, -1, 1, -1, - 1]; and the fourth sequence is [-1, 1, 1, -1, -1, 1, 1, -1]; or

the second sequence is [7, 5, 6, 1, 4, 2, 3, 0]; the third sequence is [1, 1, -1, -1, -1, 1, -1, - 1]; and the fourth sequence is [1, 1, -1, -1, -1, 1, 1, -1]; or

the second sequence is [7, 5, 6, 1, 4, 2, 3, 0]; the third sequence is [-1, 1, 1, 1, -1, -1, -1, - 1]; and the fourth sequence is [-1, 1, 1, 1, -1, -1, 1, -1]; or

the second sequence is [7, 5, 6, 1, 4, 2, 3, 0]; the third sequence is [1, -1, 1, -1, -1, -1, -1, - 1]; and the fourth sequence is [1, 1, -1, 1, -1, -1, 1, -1]; or

the second sequence is [7, 5, 6, 1, 4, 2, 3, 0]; the third sequence is [1, 1, 1, -1, -1, 1, 1, -1]; and the fourth sequence is [1, 1, 1, -1, -1, 1, -1, -1]; or

the second sequence is [7, 5, 6, 1, 4, 2, 3, 0]; the third sequence is [-1, 1, -1, -1, -1, 1, 1, - 1]; and the fourth sequence is [-1, 1, -1, -1, -1, 1, -1, -1]; or

the second sequence is [7, 5, 6, 1, 4, 2, 3, 0]; the third sequence is [1, 1, 1, 1, -1, -1, 1, -1]; and the fourth sequence is [1, 1, 1, 1, -1, -1, -1, -1]; or

the second sequence is [7, 5, 6, 1, 4, 2, 3, 0]; the third sequence is [-1, 1, -1, 1, -1, -1, 1, - 1]; and the fourth sequence is [-1, 1, -1, 1, -1, -1, -1, -1]; or

the second sequence is [6, 5, 7, 1, 4, 2, 3, 0]; the third sequence is [-1, 1, 1, 1, -1, -1, -1, - 1]; and the fourth sequence is [-1, 1, 1, 1, 1, -1, -1, 1, -1]; or

the second sequence is [6, 5, 7, 1, 4, 2, 3, 0]; the third sequence is [1, 1, 1, 1, -1, -1, 1, -1]; and the fourth sequence is [1, 1, 1, 1, -1, -1, -1, -1]; or

the second sequence is [5, 6, 7, 1, 4, 2, 3, 0]; the third sequence is [-1, -1, 1, -1, -1, -1, -1, -1]; and the fourth sequence is [-1, -1, 1, -1, -1, -1, 1, -1]; or

the second sequence is [5, 6, 7, 1, 4, 2, 3, 0]; the third sequence is [1, -1, 1, -1, -1, -1, 1, - 1]; and the fourth sequence is [1, -1, 1, -1, -1, -1, -1, -1]; or

the second sequence is [7, 6, 4, 3, 5, 2, 1, 0]; the third sequence is [1, -1, 1, 1, 1, 1, -1, -1]; and the fourth sequence is [1, -1, 1, 1, 1, 1, 1, -1]; or

the second sequence is [7, 6, 4, 3, 5, 2, 1, 0]; the third sequence is [-1, -1, 1, 1, 1, 1, -1, -1]; and the fourth sequence is

[-1, -1, 1, 1, 1, 1, -1, -1]; or

the second sequence is [7, 5, 6, 2, 4, 3, 1, 0]; the third sequence is [-1, -1, 1, -1, -1, -1, -1, -1]; and the fourth sequence is [-1, -1, 1, -1, -1, -1, 1, -1]; or

the second sequence is [7, 5, 6, 2, 4, 3, 1, 0]; the third sequence is [1, -1, 1, -1, -1, -1, 1, -1]; and the fourth sequence is [1, -1, 1, -1, -1, -1, -1, -1]; or

the second sequence is [6, 7, 4, 3, 5, 2, 1, 0]; the third sequence is [-1, -1, -1, 1, 1, 1, -1, -1]; and the fourth sequence is [-1, -1, -1, 1, 1, 1, 1, -1]; or

the second sequence is [6, 7, 4, 3, 5, 2, 1, 0]; the third sequence is [1, -1, -1, -1, -1, -1, -1, -1]; and the fourth sequence is [1, -1, -1, -1, -1, -1, 1, -1]; or

the second sequence is [6, 7, 4, 3, 5, 2, 1, 0]; the third sequence is [1, -1, -1, 1, 1, 1, 1, -1]; and the fourth sequence is [1, -1, -1, 1, 1, 1, -1, -1]; or

the second sequence is [6, 7, 4, 3, 5, 2, 1, 0]; the third sequence is [-1, -1, -1, -1, -1, -1, 1, -1]; and the fourth sequence is [-1, -1, -1, -1, -1, -1, -1, -1]; or

the second sequence is [6, 5, 7, 2, 4, 3, 1, 0]; the third sequence is [-1, -1, 1, -1, -1, -1, -1, -1]; and the fourth sequence is [-1, -1, 1, -1, -1, -1, 1, -1]; or

the second sequence is [6, 5, 7, 2, 4, 3, 1, 0]; the third sequence is [1, -1, 1, -1, -1, -1, 1, -1]; and the fourth sequence is [1, -1, 1, -1, -1, -1, -1, -1]; or

the second sequence is [6, 7, 3, 5, 4, 1, 2, 0]; the third sequence is [-1, -1, -1, -1, 1, -1, -1, -1]; and the fourth sequence is [-1, -1, -1, -1, 1, -1, 1, -1]; or

the second sequence is [6, 7, 3, 5, 4, 1, 2, 0]; the third sequence is [1, -1, -1, -1, -1, -1, -1, -1]; and the fourth sequence is [1, -1, -1, -1, -1, -1, 1, -1]; or

the second sequence is [6, 7, 3, 5, 4, 1, 2, 0]; the third sequence is [1, -1, -1, -1, 1, -1, 1, -1]; and the fourth sequence is [1, -1, -1, -1, 1, -1, -1, -1]; or

the second sequence is [6, 7, 3, 5, 4, 1, 2, 0]; the third sequence is [-1, -1, -1, -1, -1, -1, 1, -1]; and the fourth sequence is [-1, -1, -1, -1, -1, -1, -1, -1]; or

the second sequence is [6, 7, 3, 5, 4, 2, 1, 0]; the third sequence is [-1, -1, 1, -1, -1, -1, -1, -1]; and the fourth sequence is [-1, -1, 1, -1, -1, -1, 1, -1]; or

the second sequence is [6, 7, 3, 5, 4, 2, 1, 0]; the third sequence is [1, -1, 1, -1, -1, -1, 1, -1]; and the fourth sequence is [1, -1, 1, -1, -1, -1, -1, -1]; or

the second sequence is [7, 5, 6, 4, 1, 3, 2, 0]; the third sequence is [-1, -1, -1, 1, 1, 1, -1, -1]; and the fourth sequence is [-1, -1, -1, 1, 1, 1, 1, -1]; or

the second sequence is [7, 5, 6, 4, 1, 3, 2, 0]; the third sequence is [1, -1, -1, 1, -1, 1, -1, -1]; and the fourth sequence is [1, -1, -1, 1, -1, 1, 1, -1]; or

the second sequence is [7, 5, 6, 4, 1, 3, 2, 0]; the third sequence is [-1, -1, -1, -1, 1, -1, -1, -1]; and the fourth sequence is [-1, -1, -1, -1, 1, -1, 1, -1]; or

the second sequence is [7, 5, 6, 4, 1, 3, 2, 0]; the third sequence is [1, -1, -1, -1, -1, -1, -1, -1]; and the fourth sequence is [1, -1, -1, -1, -1, -1, 1, -1]; or

the second sequence is [7, 5, 6, 4, 1, 3, 2, 0]; the third sequence is [1, -1, -1, 1, 1, 1, 1, -1]; and the fourth sequence is [1, -1, -1, 1, 1, 1, -1, -1]; or

the second sequence is [7, 5, 6, 4, 1, 3, 2, 0]; the third sequence is [-1, -1, -1, 1, -1, 1, 1, -1]; and the fourth sequence is [-1, -1, -1, 1, -1, 1, -1, -1]; or

the second sequence is [7, 5, 6, 4, 1, 3, 2, 0]; the third sequence is [1, -1, -1, -1, 1, -1, 1, -1]; and the fourth sequence is [1, -1, -1, -1, 1, -1, -1, -1]; or

the second sequence is [7, 5, 6, 4, 1, 3, 2, 0]; the third sequence is [-1, -1, -1, -1, -1, -1, 1, -1]; and the fourth sequence is [-1, -1, -1, -1, -1, -1, -1, -1]; or

the second sequence is [7, 6, 5, 1, 4, 2, 3, 0]; the third sequence is [-1, 1, 1, 1, -1, -1, -1, -1]; and the fourth sequence is [-1, 1, 1, 1, -1, -1, 1, -1]; or

the second sequence is [7, 6, 5, 1, 4, 2, 3, 0]; the third sequence is [1, 1, -1, 1, -1, -1, -1, -1]; and the fourth sequence is [1, 1, -1, 1, -1, -1, 1, -1]; or

the second sequence is [7, 6, 5, 1, 4, 2, 3, 0]; the third sequence is [1, 1, 1, 1, -1, -1, 1, -1]; and the fourth sequence is [1, 1, 1, 1, -1, -1, -1, -1]; or

the second sequence is [7, 6, 5, 1, 4, 2, 3, 0]; the third sequence is [-1, 1, -1, 1, -1, -1, 1, -1]; and the fourth sequence is [-1, 1, -1, 1, -1, -1, -1, -1]; or

the second sequence is [7, 6, 5, 2, 4, 1, 3, 0]; the third sequence is [-1, 1, 1, 1, -1, -1, -1, -1]; and the fourth sequence is [-1, 1, 1, 1, -1, -1, 1, -1]; or

the second sequence is [7, 6, 5, 2, 4, 1, 3, 0]; the third sequence is [1, 1, -1, 1, -1, -1, -1, -1]; and the fourth sequence is [1, 1, -1, 1, -1, -1, 1, -1]; or

the second sequence is [7, 6, 5, 2, 4, 1, 3, 0]; the third sequence is [1, 1, 1, 1, -1, -1, 1, -1]; and the fourth sequence is

[1, 1, 1, 1, -1, -1, -1, -1]; or

the second sequence is [7, 6, 5, 2, 4, 1, 3, 0]; the third sequence is [-1, 1, -1, 1, -1, -1, 1, - 1]; and the fourth sequence is [-1, 1, -1, 1, -1, -1, -1, -1]; or

the second sequence is [6, 5, 7, 4, 3, 1, 2, 0]; the third sequence is [1, -1, 1, 1, 1, 1, -1, -1]; and the fourth sequence is [1, -1, 1, 1, 1, 1, 1, -1]; or

the second sequence is [6, 5, 7, 4, 3, 1, 2, 0]; the third sequence is [-1, -1, 1, 1, -1, 1, -1, - 1]; and the fourth sequence is [-1, -1, 1, 1, -1, 1, 1, -1]; or

the second sequence is [6, 5, 7, 4, 3, 1, 2, 0]; the third sequence is [-1, -1, 1, 1, 1, 1, 1, -1]; and the fourth sequence is [-1, -1, 1, 1, 1, 1, -1, -1]; or

the second sequence is [6, 5, 7, 4, 3, 1, 2, 0]; the third sequence is [1, -1, 1, 1, -1, 1, 1, -1]; and the fourth sequence is [1, -1, 1, 1, -1, 1, -1, -1]; or

the second sequence is [7, 5, 6, 4, 3, 2, 1, 0]; the third sequence is [-1, -1, -1, -1, 1, -1, -1, -1]; and the fourth sequence is [-1, -1, -1, -1, 1, -1, 1, -1]; or

the second sequence is [7, 5, 6, 4, 3, 2, 1, 0]; the third sequence is [1, -1, -1, -1, 1, -1, 1, - 1]; and the fourth sequence is [1, -1, -1, -1, 1, -1, -1, -1]; or

the second sequence is [6, 7, 4, 5, 2, 3, 1, 0]; the third sequence is [-1, -1, 1, -1, -1, -1, -1, -1]; and the fourth sequence is [-1, -1, 1, -1, -1, -1, 1, -1]; or

the second sequence is [6, 7, 4, 5, 2, 3, 1, 0]; the third sequence is [1, -1, 1, -1, -1, -1, 1, - 1]; and the fourth sequence is [1, -1, 1, -1, -1, -1, -1, -1]; or

the second sequence is [7, 6, 5, 2, 4, 3, 1, 0]; the third sequence is [1, 1, -1, 1, -1, -1, -1, - 1]; and the fourth sequence is [1, 1, -1, 1, -1, -1, 1, -1]; or

the second sequence is [7, 6, 5, 2, 4, 3, 1, 0]; the third sequence is [-1, 1, -1, 1, -1, -1, 1, - 1]; and the fourth sequence is [-1, 1, -1, 1, -1, -1, -1, -1]; or

the second sequence is [6, 7, 4, 5, 3, 2, 1, 0]; the third sequence is [-1, -1, -1, -1, 1, -1, -1, -1]; and the fourth sequence is [-1, -1, -1, -1, 1, -1, 1, -1]; or

the second sequence is [6, 7, 4, 5, 3, 2, 1, 0]; the third sequence is [-1, -1, 1, -1, -1, -1, -1, -1]; and the fourth sequence is [-1, -1, 1, -1, -1, -1, 1, -1]; or

the second sequence is [6, 7, 4, 5, 3, 2, 1, 0]; the third sequence is [1, -1, -1, -1, 1, -1, 1, - 1]; and the fourth sequence is [1, -1, -1, -1, 1, -1, -1, -1]; or

the second sequence is [6, 7, 4, 5, 3, 2, 1, 0]; the third sequence is [1, -1, 1, -1, -1, -1, 1, - 1]; and the fourth sequence is [1, -1, 1, -1, -1, -1, -1, -1].

13. The method according to claim 11, wherein when $N$=128, $P_m$ is the $m^{th}$ element in the second sequence $[P]$, $W_{m,1}$ is an $m^{th}$ element in a third sequence $[W_1]$, and $W_{m,2}$ is an $m^{th}$ element in a fourth sequence $[W_2]$, wherein

the second sequence is [3, 6, 2, 5, 1, 4, 0]; the third sequence is [1, -1, -1, -1, 1, 1, 1]; and the fourth sequence is [1, -1, -1, -1, 1, 1, -1]; or

the second sequence is [3, 6, 2, 5, 1, 4, 0]; the third sequence is [-1, -1, -1, -1, 1, 1, -1]; and the fourth sequence is [-1, -1, -1, -1, 1, 1, -1]; or

the second sequence is [2, 6, 3, 5, 0, 4, 1]; the third sequence is [-1, -1, -1, 1, -1, 1, 1]; and the fourth sequence is [-1, -1, -1, 1, -1, 1, -1]; or

the second sequence is [2, 6, 3, 5, 0, 4, 1]; the third sequence is [1, -1, -1, 1, -1, 1, -1]; and the fourth sequence is [1, -1, -1, 1, -1, 1, -1]; or

the second sequence is [2, 6, 3, 5, 0, 4, 1]; the third sequence is [1, -1, -1, -1, 1, 1, 1]; and the fourth sequence is [1, -1, -1, -1, 1, 1, -1]; or

the second sequence is [2, 6, 3, 5, 0, 4, 1]; the third sequence is [-1, -1, -1, -1, 1, 1, -1]; and the fourth sequence is [-1, -1, -1, -1, 1, 1, -1]; or

the second sequence is [3, 6, 1, 5, 0, 4, 2]; the third sequence is [-1, 1, -1, 1, -1, 1, 1]; and the fourth sequence is [-1, 1, -1, 1, -1, 1, -1]; or

the second sequence is [3, 6, 1, 5, 0, 4, 2]; the third sequence is [1, 1, -1, 1, -1, 1, -1]; and the fourth sequence is [1, 1, -1, 1, -1, 1, -1]; or

the second sequence is [3, 6, 1, 5, 0, 4, 2]; the third sequence is [-1, -1, 1, -1, 1, 1, 1]; and the fourth sequence is [-1, -1, 1, -1, 1, 1, -1]; or

the second sequence is [3, 6, 1, 5, 0, 4, 2]; the third sequence is [1, -1, 1, -1, 1, 1, -1]; and the fourth sequence is [1, -1, 1, -1, 1, 1, -1]; or

the second sequence is [3, 6, 1, 5, 0, 4, 2]; the third sequence is [-1, -1, -1, 1, -1, 1, 1]; and the fourth sequence is [-1, -1, -1, 1, -1, 1, -1]; or

the second sequence is [3, 6, 1, 5, 0, 4, 2]; the third sequence is [1, -1, -1, 1, -1, 1, -1]; and the fourth sequence is [1,

-1, -1, 1, -1, 1, -1]; or

the second sequence is [3, 6, 2, 4, 0, 5, 1]; the third sequence is [1, -1, -1, 1, 1, -1, 1]; and the fourth sequence is [1, -1, -1, 1, 1, -1, -1]; or

the second sequence is [3, 6, 2, 4, 0, 5, 1]; the third sequence is [-1, -1, -1, 1, 1, -1, -1]; and the fourth sequence is [-1, -1, -1, 1, 1, -1, -1]; or

the second sequence is [3, 6, 0, 5, 1, 4, 2]; the third sequence is [1, 1, -1, 1, 1, 1, 1]; and the fourth sequence is [1, 1, -1, 1, 1, 1, -1]; or

the second sequence is [3, 6, 0, 5, 1, 4, 2]; the third sequence is [-1, 1, -1, 1, 1, 1, -1]; and the fourth sequence is [-1, 1, -1, 1, 1, 1, -1]; or

the second sequence is [3, 6, 0, 5, 1, 4, 2]; the third sequence is [-1, -1, 1, 1, 1, 1, 1]; and the fourth sequence is [-1, -1, 1, 1, 1, 1, -1]; or

the second sequence is [3, 6, 0, 5, 1, 4, 2]; the third sequence is [1, -1, 1, 1, 1, 1, -1]; and the fourth sequence is [1, -1, 1, 1, 1, 1, -1]; or

the second sequence is [3, 6, 0, 4, 2, 5, 1]; the third sequence is [1, -1, -1, 1, 1, -1, 1]; and the fourth sequence is [1, -1, -1, 1, 1, -1, -1]; or

the second sequence is [3, 6, 0, 4, 2, 5, 1]; the third sequence is [-1, -1, -1, 1, 1, -1, -1]; and the fourth sequence is [-1, -1, -1, 1, 1, -1, -1]; or

the second sequence is [3, 4, 0, 6, 2, 5, 1]; the third sequence is [1, 1, -1, -1, 1, -1, 1]; and the fourth sequence is [1, 1, -1, -1, 1, -1, -1]; or

the second sequence is [3, 4, 0, 6, 2, 5, 1]; the third sequence is [-1, 1, -1, -1, 1, -1, 1]; and the fourth sequence is [-1, 1, -1, -1, 1, -1, -1]; or

the second sequence is [3, 4, 1, 6, 0, 5, 2]; the third sequence is [-1, 1, 1, -1, 1, 1, 1]; and the fourth sequence is [-1, 1, 1, -1, 1, 1, -1]; or

the second sequence is [3, 4, 1, 6, 0, 5, 2]; the third sequence is [1, 1, 1, -1, 1, 1, -1]; and the fourth sequence is [1, 1, 1, -1, 1, 1, -1]; or

the second sequence is [3, 4, 1, 6, 0, 5, 2]; the third sequence is [1, 1, 1, -1, -1, -1, 1]; and the fourth sequence is [1, 1, 1, -1, -1, -1, -1]; or

the second sequence is [3, 4, 1, 6, 0, 5, 2]; the third sequence is [-1, 1, 1, -1, -1, -1, 1]; and the fourth sequence is [-1, 1, 1, -1, -1, -1, -1]; or

the second sequence is [3, 4, 1, 6, 0, 5, 2]; the third sequence is [1, 1, -1, -1, 1, 1, 1]; and the fourth sequence is [1, 1, -1, -1, 1, 1, -1]; or

the second sequence is [3, 4, 1, 6, 0, 5, 2]; the third sequence is [-1, 1, -1, -1, 1, 1, -1]; and the fourth sequence is [-1, 1, -1, -1, 1, 1, -1]; or

the second sequence is [3, 4, 1, 6, 0, 5, 2]; the third sequence is [-1, 1, -1, -1, -1, -1, 1]; and the fourth sequence is [-1, 1, -1, -1, -1, -1, -1]; or

the second sequence is [3, 4, 1, 6, 0, 5, 2]; the third sequence is [1, 1, -1, -1, -1, -1, -1]; and the fourth sequence is [1, 1, -1, -1, -1, -1, -1]; or

the second sequence is [3, 4, 0, 6, 1, 5, 2]; the third sequence is [1, 1, 1, -1, -1, 1, 1]; and the fourth sequence is [1, 1, 1, -1, -1, 1, -1]; or

the second sequence is [3, 4, 0, 6, 1, 5, 2]; the third sequence is [-1, 1, 1, -1, -1, 1, -1]; and the fourth sequence is [-1, 1, 1, -1, -1, 1, -1]; or

the second sequence is [3, 4, 0, 6, 1, 5, 2]; the third sequence is [1, 1, -1, 1, 1, 1, 1]; and the fourth sequence is [1, 1, -1, 1, 1, 1, -1]; or

the second sequence is [3, 4, 0, 6, 1, 5, 2]; the third sequence is [-1, 1, -1, 1, 1, 1, -1]; and the fourth sequence is [-1, 1, -1, 1, 1, 1, -1]; or

the second sequence is [3, 4, 0, 6, 1, 5, 2]; the third sequence is [-1, 1, -1, -1, -1, -1, 1]; and the fourth sequence is [-1, 1, -1, -1, -1, -1, -1]; or

the second sequence is [3, 4, 0, 6, 1, 5, 2]; the third sequence is [1, 1, -1, -1, -1, -1, -1]; and the fourth sequence is [1, 1, -1, -1, -1, -1, -1]; or

the second sequence is [3, 4, 1, 5, 0, 6, 2]; the third sequence is [1, 1, 1, -1, -1, -1, 1]; and the fourth sequence is [1, 1, 1, -1, -1, -1, -1]; or

the second sequence is [3, 4, 1, 5, 0, 6, 2]; the third sequence is [-1, 1, 1, -1, -1, -1, -1]; and the fourth sequence is [-1, 1, 1, -1, -1, -1, -1]; or

the second sequence is [3, 4, 1, 5, 0, 6, 2]; the third sequence is [-1, 1, -1, -1, -1, -1, 1]; and the fourth sequence is [-1, 1, -1, -1, -1, -1, -1]; or

the second sequence is [3, 4, 1, 5, 0, 6, 2]; the third sequence is [1, 1, -1, -1, -1, -1, -1]; and the fourth sequence is [1, 1, -1, -1, -1, -1, -1]; or

the second sequence is [3, 4, 0, 5, 2, 6, 1]; the third sequence is [1, 1, 1, -1, -1, -1, 1]; and the fourth sequence is [1,

1, 1, -1, -1, -1, -1]; or

the second sequence is [3, 4, 0, 5, 2, 6, 1]; the third sequence is [-1, 1, 1, -1, -1, -1, -1]; and the fourth sequence is [-1, 1, 1, -1, -1, -1, -1]; or

the second sequence is [3, 4, 0, 5, 2, 6, 1]; the third sequence is [-1, 1, -1, 1, -1, -1, 1]; and the fourth sequence is [-1, 1, -1, 1, -1, -1, -1]; or

the second sequence is [3, 4, 0, 5, 2, 6, 1]; the third sequence is [1, 1, -1, 1, -1, -1, -1]; and the fourth sequence is [1, 1, -1, 1, -1, -1, -1]; or

the second sequence is [3, 4, 0, 5, 1, 6, 2]; the third sequence is [-1, 1, 1, -1, 1, -1, 1]; and the fourth sequence is [-1, 1, 1, -1, 1, -1, -1]; or

the second sequence is [3, 4, 0, 5, 1, 6, 2]; the third sequence is [1, 1, 1, -1, 1, -1, -1]; and the fourth sequence is [1, 1, 1, -1, 1, -1, -1]; or

the second sequence is [3, 4, 0, 5, 1, 6, 2]; the third sequence is [1, 1, 1, -1, -1, -1, 1]; and the fourth sequence is [1, 1, 1, -1, -1, -1, -1]; or

the second sequence is [3, 4, 0, 5, 1, 6, 2]; the third sequence is [-1, 1, 1, -1, -1, -1, -1]; and the fourth sequence is [-1, 1, 1, -1, -1, -1, -1]; or

the second sequence is [1, 6, 3, 4, 0, 5, 2]; the third sequence is [1, -1, -1, 1, 1, -1, 1]; and the fourth sequence is [1, -1, -1, 1, 1, -1, -1]; or

the second sequence is [1, 6, 3, 4, 0, 5, 2]; the third sequence is [-1, -1, -1, 1, 1, -1, -1]; and the fourth sequence is [-1, -1, -1, 1, 1, -1, -1].

14. The method according to claim 11, wherein when $N=64$, $P_m$ is the $m^{th}$ element in the second sequence $[P]$, $W_{m,1}$ is an $m^{th}$ element in a third sequence $[W_1]$, and $W_{m,2}$ is an $m^{th}$ element in a fourth sequence $[W_2]$, wherein

the second sequence is [4, 5, 3, 2, 1, 0]; the third sequence is [-1, 1, 1, 1, 1, -1]; and the fourth sequence is [-1, 1, 1, 1, -1, -1]; or

the second sequence is [4, 5, 3, 2, 1, 0]; the third sequence is [1, 1, 1, 1, -1, -1]; and the fourth sequence is [1, 1, 1, 1, 1, -1]; or

the second sequence is [4, 3, 5, 2, 1, 0]; the third sequence is [1, -1, -1, -1, 1, -1]; and the fourth sequence is [1, -1, -1, -1, -1, -1]; or

the second sequence is [4, 3, 5, 2, 1, 0]; the third sequence is [-1, -1, -1, -1, -1, -1]; and the fourth sequence is [-1, -1, -1, -1, 1, -1]; or

the second sequence is [3, 5, 4, 2, 1, 0]; the third sequence is [1, -1, -1, -1, 1, -1]; and the fourth sequence is [1, -1, -1, -1, -1, -1]; or

the second sequence is [3, 5, 4, 2, 1, 0]; the third sequence is [-1, -1, -1, -1, -1, -1]; and the fourth sequence is [-1, -1, -1, -1, 1, -1]; or

the second sequence is [4, 5, 2, 3, 1, 0]; the third sequence is [1, 1, -1, 1, 1, -1]; and the fourth sequence is [1, 1, -1, 1, -1, -1]; or

the second sequence is [4, 5, 2, 3, 1, 0]; the third sequence is [-1, 1, -1, 1, -1, -1]; and the fourth sequence is [-1, 1, -1, 1, 1, -1]; or

the second sequence is [2, 4, 5, 3, 1, 0]; the third sequence is [1, -1, -1, -1, 1, -1]; and the fourth sequence is [1, -1, -1, -1, -1, -1]; or

the second sequence is [2, 4, 5, 3, 1, 0]; the third sequence is [-1, -1, -1, -1, -1, -1]; and the fourth sequence is [-1, -1, -1, -1, 1, -1]; or

the second sequence is [2, 5, 4, 3, 1, 0]; the third sequence is [-1, -1, 1, -1, 1, -1]; and the fourth sequence is [-1, -1, 1, -1, -1, -1]; or

the second sequence is [2, 5, 4, 3, 1, 0]; the third sequence is [1, -1, 1, -1, -1, -1]; and the fourth sequence is [1, -1, 1, -1, 1, -1]; or

the second sequence is [4, 2, 5, 1, 3, 0]; the third sequence is [1, 1, -1, 1, 1, -1]; and the fourth sequence is [1, 1, -1, 1, -1, -1]; or

the second sequence is [4, 2, 5, 1, 3, 0]; the third sequence is [-1, 1, -1, 1, -1, -1]; and the fourth sequence is [-1, 1, -1, 1, 1, -1]; or

the second sequence is [3, 4, 2, 5, 1, 0]; the third sequence is [1, -1, -1, -1, 1, -1]; and the fourth sequence is [1, -1, -1, -1, -1, -1]; or

the second sequence is [3, 4, 2, 5, 1, 0]; the third sequence is [-1, -1, -1, -1, -1, -1]; and the fourth sequence is [-1, -1, -1, -1, 1, -1]; or

the second sequence is [5, 2, 4, 0, 3, 1]; the third sequence is [-1, -1, 1, -1, 1, -1]; and the fourth sequence is [1, -1, 1, -1, 1, -1]; or

the second sequence is [5, 2, 4, 0, 3, 1]; the third sequence is [-1, -1, -1, 1, 1, 1]; and the fourth sequence is [1, -1, -1,

1, 1, -1]; or

the second sequence is [5, 2, 4, 0, 3, 1]; the third sequence is [-1, 1, 1, -1, 1, 1]; and the fourth sequence is [1, 1, 1, -1, 1, -1]; or

the second sequence is [5, 2, 4, 0, 3, 1]; the third sequence is [-1, 1, -1, 1, 1, -1]; and the fourth sequence is [1, 1, -1, 1, 1, -1]; or

the second sequence is [3, 4, 1, 5, 2, 0]; the third sequence is [-1, -1, 1, -1, 1, -1]; and the fourth sequence is [-1, -1, 1, -1, -1, -1]; or

the second sequence is [3, 4, 1, 5, 2, 0]; the third sequence is [1, -1, 1, -1, -1, -1]; and the fourth sequence is [1, -1, 1, -1, 1, -1]; or

the second sequence is [4, 2, 3, 5, 1, 0]; the third sequence is [-1, -1, 1, -1, 1, -1]; and the fourth sequence is [-1, -1, 1, -1, -1, -1]; or

the second sequence is [4, 2, 3, 5, 1, 0]; the third sequence is [1, -1, 1, -1, -1, -1]; and the fourth sequence is [1, -1, 1, -1, 1, -1]; or

the second sequence is [1, 4, 5, 3, 2, 0]; the third sequence is [1, -1, -1, -1, 1, -1]; and the fourth sequence is [1, -1, -1, -1, -1, -1]; or

the second sequence is [1, 4, 5, 3, 2, 0]; the third sequence is [-1, -1, -1, -1, -1, -1]; and the fourth sequence is [-1, -1, -1, -1, 1, -1]; or

the second sequence is [4, 1, 5, 2, 3, 0]; the third sequence is [1, 1, -1, 1, 1, -1]; and the fourth sequence is [1, 1, -1, 1, -1, -1]; or

the second sequence is [4, 1, 5, 2, 3, 0]; the third sequence is [-1, 1, -1, 1, -1, -1]; and the fourth sequence is [-1, 1, -1, 1, 1, -1]; or

the second sequence is [5, 1, 4, 2, 3, 0]; the third sequence is [-1, -1, 1, 1, 1, 1]; and the fourth sequence is [1, -1, 1, 1, 1, -1]; or

the second sequence is [5, 1, 4, 2, 3, 0]; the third sequence is [-1, 1, 1, 1, 1, -1]; and the fourth sequence is [1, 1, 1, 1, 1, -1]; or

the second sequence is [4, 2, 3, 0, 5, 1]; the third sequence is [-1, 1, 1, 1, 1, -1]; and the fourth sequence is [1, 1, 1, 1, 1, -1]; or

the second sequence is [4, 2, 3, 0, 5, 1]; the third sequence is [-1, -1, 1, -1, -1, -1]; and the fourth sequence is [1, -1, 1, -1, -1, -1]; or

the second sequence is [4, 2, 3, 0, 5, 1]; the third sequence is [-1, -1, 1, 1, 1, 1]; and the fourth sequence is [1, -1, 1, 1, 1, -1]; or

the second sequence is [4, 2, 3, 0, 5, 1]; the third sequence is [-1, 1, 1, -1, -1, 1]; and the fourth sequence is [1, 1, 1, -1, -1, -1]; or

the second sequence is [5, 2, 3, 0, 4, 1]; the third sequence is [-1, -1, 1, -1, 1, -1]; and the fourth sequence is [1, -1, 1, -1, 1, -1]; or

the second sequence is [5, 2, 3, 0, 4, 1]; the third sequence is [-1, 1, 1, 1, -1, -1]; and the fourth sequence is [1, 1, 1, 1, -1, -1]; or

the second sequence is [5, 2, 3, 0, 4, 1]; the third sequence is [-1, 1, 1, -1, 1, 1]; and the fourth sequence is [1, 1, 1, -1, 1, -1]; or

the second sequence is [5, 2, 3, 0, 4, 1]; the third sequence is [-1, -1, 1, 1, 1, -1]; and the fourth sequence is [1, -1, 1, 1, -1, -1]; or

the second sequence is [5, 2, 3, 1, 4, 0]; the third sequence is [-1, -1, 1, 1, 1, 1]; and the fourth sequence is [1, -1, 1, 1, 1, -1]; or

the second sequence is [5, 2, 3, 1, 4, 0]; the third sequence is [-1, 1, 1, 1, 1, -1]; and the fourth sequence is [1, 1, 1, 1, 1, -1].

15. The method according to claim 11, wherein when $N$=32, $P_m$ is the $m^{th}$ element in the second sequence [$P$], $W_{m,1}$ is an $m^{th}$ element in a third sequence [$W_1$], and $W_{m,2}$ is an $m^{th}$ element in a fourth sequence [$W_2$], wherein

the second sequence is [3, 4, 2, 1, 0]; the third sequence is [-1, 1, 1, 1, 1]; and the fourth sequence is [-1, 1, 1, 1, -1]; or

the second sequence is [3, 4, 2, 1, 0]; the third sequence is [1, 1, 1, 1, -1]; and the fourth sequence is [1, 1, 1, 1, -1]; or

the second sequence is [3, 4, 1, 0, 2]; the third sequence is [-1, 1, 1, 1, 1]; and the fourth sequence is [-1, 1, 1, 1, -1]; or

the second sequence is [3, 4, 1, 0, 2]; the third sequence is [1, 1, 1, 1, -1]; and the fourth sequence is [1, 1, 1, 1, -1]; or

the second sequence is [3, 4, 1, 2, 0]; the third sequence is [1, 1, -1, 1, 1]; and the fourth sequence is [1, 1, -1, 1, -1];

or

the second sequence is [3, 4, 1, 2, 0]; the third sequence is [-1, 1, -1, 1, -1]; and the fourth sequence is [-1, 1, -1, 1, -1]; or

the second sequence is [3, 4, 0, 1, 2]; the third sequence is [-1, 1, 1, 1, 1]; and the fourth sequence is [-1, 1, 1, 1, -1]; or

the second sequence is [3, 4, 0, 1, 2]; the third sequence is [1, 1, 1, 1, -1]; and the fourth sequence is [1, 1, 1, 1, -1]; or

the second sequence is [3, 4, 0, 1, 2]; the third sequence is [1, 1, -1, 1, 1]; and the fourth sequence is [1, 1, -1, 1, 1]; or

the second sequence is [3, 4, 0, 1, 2]; the third sequence is [-1, 1, -1, 1, -1]; and the fourth sequence is [-1, 1, -1, 1, -1]; or

the second sequence is [3, 4, 0, 2, 1]; the third sequence is [-1, 1, 1, 1, 1]; and the fourth sequence is [-1, 1, 1, 1, -1]; or

the second sequence is [3, 4, 0, 2, 1]; the third sequence is [1, 1, 1, 1, -1]; and the fourth sequence is [1, 1, 1, 1, -1]; or

the second sequence is [3, 4, 0, 2, 1]; the third sequence is [1, 1, -1, 1, 1]; and the fourth sequence is [1, 1, -1, 1, 1]; or

the second sequence is [3, 4, 0, 2, 1]; the third sequence is [-1, 1, -1, 1, -1]; and the fourth sequence is [-1, 1, -1, 1, -1]; or

the second sequence is [2, 4, 3, 0, 1]; the third sequence is [-1, -1, 1, -1, 1]; and the fourth sequence is [-1, -1, 1, -1, -1]; or

the second sequence is [2, 4, 3, 0, 1]; the third sequence is [1, -1, 1, -1, -1]; and the fourth sequence is [1, -1, 1, -1, -1]; or

the second sequence is [2, 4, 3, 0, 1]; the third sequence is [1, -1, -1, -1, 1]; and the fourth sequence is [1, -1, -1, -1, -1]; or

the second sequence is [2, 4, 3, 0, 1]; the third sequence is [-1, -1, -1, -1, -1]; and the fourth sequence is [-1, -1, -1, -1, -1]; or

the second sequence is [2, 4, 3, 1, 0]; the third sequence is [-1, -1, 1, -1, 1]; and the fourth sequence is [-1, -1, 1, -1, -1]; or

the second sequence is [2, 4, 3, 1, 0]; the third sequence is [1, -1, 1, -1, -1]; and the fourth sequence is [1, -1, 1, -1, -1]; or

the second sequence is [2, 4, 3, 1, 0]; the third sequence is [1, -1, -1, -1, 1]; and the fourth sequence is [1, -1, -1, -1, -1]; or

the second sequence is [2, 4, 3, 1, 0]; the third sequence is [-1, -1, -1, -1, -1]; and the fourth sequence is [-1, -1, -1, -1, -1]; or

the second sequence is [3, 2, 4, 0, 1]; the third sequence is [1, -1, -1, -1, 1]; and the fourth sequence is [1, -1, -1, -1, -1]; or

the second sequence is [3, 2, 4, 0, 1]; the third sequence is [-1, -1, -1, -1, -1]; and the fourth sequence is [-1, -1, -1, -1, -1]; or

the second sequence is [3, 2, 4, 1, 0]; the third sequence is [1, -1, -1, -1, 1]; and the fourth sequence is [1, -1, -1, -1, -1]; or

the second sequence is [3, 2, 4, 1, 0]; the third sequence is [-1, -1, -1, -1, -1]; and the fourth sequence is [-1, -1, -1, -1, -1]; or

the second sequence is [3, 1, 4, 0, 2]; the third sequence is [1, -1, -1, -1, 1]; and the fourth sequence is [1, -1, -1, -1, -1]; or

the second sequence is [3, 1, 4, 0, 2]; the third sequence is [-1, -1, -1, -1, -1]; and the fourth sequence is [-1, -1, -1, -1, -1]; or

the second sequence is [2, 3, 4, 0, 1]; the third sequence is [1, -1, -1, -1, 1]; and the fourth sequence is [1, -1, -1, -1, -1]; or

the second sequence is [2, 3, 4, 0, 1]; the third sequence is [-1, -1, -1, -1, -1]; and the fourth sequence is [-1, -1, -1, -1, -1]; or

the second sequence is [2, 3, 4, 1, 0]; the third sequence is [1, -1, -1, -1, 1]; and the fourth sequence is [1, -1, -1, -1, -1]; or

the second sequence is [2, 3, 4, 1, 0]; the third sequence is [-1, -1, -1, -1, -1]; and the fourth sequence is [-1, -1, -1, -1, -1]; or

the second sequence is [2, 4, 1, 0, 3]; the third sequence is [1, -1, -1, -1, 1]; and the fourth sequence is [1, -1, -1, -1, -1]; or

the second sequence is [2, 4, 1, 0, 3]; the third sequence is [-1, -1, -1, -1, -1]; and the fourth sequence is [-1, -1, -1,

-1, -1]; or

the second sequence is [3, 0, 4, 1, 2]; the third sequence is [1, -1, -1, -1, 1]; and the fourth sequence is [1, -1, -1, -1, -1]; or

the second sequence is [3, 0, 4, 1, 2]; the third sequence is [-1, -1, -1, -1, -1]; and the fourth sequence is [-1, -1, -1, -1, -1]; or

the second sequence is [3, 0, 4, 2, 1]; the third sequence is [1, -1, -1, -1, 1]; and the fourth sequence is [1, -1, -1, -1, -1]; or

the second sequence is [3, 0, 4, 2, 1]; the third sequence is [-1, -1, -1, -1, -1]; and the fourth sequence is [-1, -1, -1, -1, -1]; or

the second sequence is [2, 4, 0, 1, 3]; the third sequence is [-1, -1, 1, -1, 1]; and the fourth sequence is [-1, -1, 1, -1, -1]; or

the second sequence is [2, 4, 0, 1, 3]; the third sequence is [1, -1, 1, -1, -1]; and the fourth sequence is [1, -1, 1, -1, -1]; or

the second sequence is [2, 4, 0, 1, 3]; the third sequence is [1, -1, -1, -1, 1]; and the fourth sequence is [1, -1, -1, -1, -1]; or

the second sequence is [2, 4, 0, 1, 3]; the third sequence is [-1, -1, -1, -1, -1]; and the fourth sequence is [-1, -1, -1, -1, -1]; or

the second sequence is [1, 3, 4, 0, 2]; the third sequence is [1, -1, -1, -1, 1]; and the fourth sequence is [1, -1, -1, -1, -1]; or

the second sequence is [1, 3, 4, 0, 2]; the third sequence is [-1, -1, -1, -1, -1]; and the fourth sequence is [-1, -1, -1, -1, -1]; or

the second sequence is [1, 3, 4, 0, 2]; the third sequence is [1, -1, -1, -1, 1]; and the fourth sequence is [1, -1, -1, -1, -1]; or

the second sequence is [1, 3, 4, 0, 2]; the third sequence is [-1, -1, -1, -1, -1]; and the fourth sequence is [-1, -1, -1, -1, -1]; or

the second sequence is [0, 4, 3, 2, 1]; the third sequence is [-1, -1, 1, -1, 1]; and the fourth sequence is [-1, -1, 1, -1, -1]; or

the second sequence is [0, 4, 3, 2, 1]; the third sequence is [1, -1, 1, -1, -1]; and the fourth sequence is [1, -1, 1, -1, -1]; or

the second sequence is [1, 4, 2, 0, 3]; the third sequence is [-1, -1, 1, -1, 1]; and the fourth sequence is [-1, -1, 1, -1, -1]; or

the second sequence is [1, 4, 2, 0, 3]; the third sequence is [1, -1, 1, -1, -1]; and the fourth sequence is [1, -1, 1, -1, -1]; or

the second sequence is [1, 4, 2, 0, 3]; the third sequence is [1, -1, -1, -1, 1]; and the fourth sequence is [1, -1, -1, -1, -1]; or

the second sequence is [1, 4, 2, 0, 3]; the third sequence is [-1, -1, -1, -1, -1]; and the fourth sequence is [-1, -1, -1, -1, -1]; or

the second sequence is [0, 3, 4, 1, 2]; the third sequence is [1, -1, -1, -1, 1]; and the fourth sequence is [1, -1, -1, -1, -1]; or

the second sequence is [0, 3, 4, 1, 2]; the third sequence is [-1, -1, -1, -1, -1]; and the fourth sequence is [-1, -1, -1, -1, -1]; or

the second sequence is [3, 2, 1, 4, 0]; the third sequence is [1, -1, -1, -1, 1]; and the fourth sequence is [1, -1, -1, -1, -1]; or

the second sequence is [3, 2, 1, 4, 0]; the third sequence is [-1, -1, -1, -1, -1]; and the fourth sequence is [-1, -1, -1, -1, -1]; or

the second sequence is [3, 2, 0, 4, 1]; the third sequence is [-1, -1, 1, -1, 1]; and the fourth sequence is [-1, -1, 1, -1, -1]; or

the second sequence is [3, 2, 0, 4, 1]; the third sequence is [1, -1, 1, -1, -1]; and the fourth sequence is [1, -1, 1, -1, -1]; or

the second sequence is [3, 2, 0, 4, 1]; the third sequence is [1, -1, -1, -1, 1]; and the fourth sequence is [1, -1, -1, -1, -1]; or

the second sequence is [3, 2, 0, 4, 1]; the third sequence is [-1, -1, -1, -1, -1]; and the fourth sequence is [-1, -1, -1, -1, -1]; or

the second sequence is [3, 1, 2, 4, 0]; the third sequence is [-1, -1, 1, -1, 1]; and the fourth sequence is [-1, -1, 1, -1, -1]; or

the second sequence is [3, 1, 2, 4, 0]; the third sequence is [1, -1, 1, -1, -1]; and the fourth sequence is [1, -1, 1, -1, -1]; or

the second sequence is [3, 1, 2, 4, 0]; the third sequence is [1, -1, -1, -1, 1]; and the fourth sequence is [1, -1, -1, -1, -1]; or

the second sequence is [3, 1, 2, 4, 0]; the third sequence is [-1, -1, -1, -1, -1]; and the fourth sequence is [-1, -1, -1, -1, -1]; or

the second sequence is [1, 4, 0, 3, 2]; the third sequence is [-1, 1, 1, 1, 1]; and the fourth sequence is [-1, 1, 1, 1, -1]; or

the second sequence is [1, 4, 0, 3, 2]; the third sequence is [1, 1, 1, 1, -1]; and the fourth sequence is [1, 1, 1, 1, -1]; or

the second sequence is [1, 4, 0, 3, 2]; the third sequence is [1, 1, -1, 1, 1]; and the fourth sequence is [1, 1, -1, 1, -1]; or

the second sequence is [1, 4, 0, 3, 2]; the third sequence is [-1, 1, -1, 1, -1]; and the fourth sequence is [-1, 1, -1, 1, -1]; or

the second sequence is [1, 4, 0, 3, 2]; the third sequence is [-1, -1, 1, 1, 1]; and the fourth sequence is [-1, -1, 1, 1, -1]; or

the second sequence is [1, 4, 0, 3, 2]; the third sequence is [1, -1, 1, 1, -1]; and the fourth sequence is [1, -1, 1, 1, -1]; or

the second sequence is [1, 4, 0, 3, 2]; the third sequence is [-1, -1, 1, -1, 1]; and the fourth sequence is [-1, -1, 1, -1, -1]; or

the second sequence is [1, 4, 0, 3, 2]; the third sequence is [1, -1, 1, -1, -1]; and the fourth sequence is [1, -1, 1, -1, -1]; or

the second sequence is [1, 4, 0, 3, 2]; the third sequence is [1, -1, -1, 1, 1]; and the fourth sequence is [1, -1, -1, 1, -1]; or

the second sequence is [1, 4, 0, 3, 2]; the third sequence is [-1, -1, -1, 1, 1]; and the fourth sequence is [-1, -1, -1, 1, -1]; or

the second sequence is [1, 4, 0, 3, 2]; the third sequence is [1, -1, -1, -1, 1]; and the fourth sequence is [1, -1, -1, -1, -1]; or

the second sequence is [1, 4, 0, 3, 2]; the third sequence is [-1, -1, -1, -1, -1]; and the fourth sequence is [-1, -1, -1, -1, -1]; or

the second sequence is [2, 3, 1, 4, 0]; the third sequence is [-1, 1, 1, 1, 1]; and the fourth sequence is [-1, 1, 1, 1, -1]; or

the second sequence is [2, 3, 1, 4, 0]; the third sequence is [1, 1, 1, 1, -1]; and the fourth sequence is [1, 1, 1, 1, -1]; or

the second sequence is [2, 3, 1, 4, 0]; the third sequence is [-1, 1, 1, -1, 1]; and the fourth sequence is [-1, 1, 1, -1, -1]; or

the second sequence is [2, 3, 1, 4, 0]; the third sequence is [1, 1, 1, -1, -1]; and the fourth sequence is [1, 1, 1, -1, -1]; or

the second sequence is [2, 3, 1, 4, 0]; the third sequence is [1, 1, -1, -1, 1]; and the fourth sequence is [1, 1, -1, -1, -1]; or

the second sequence is [2, 3, 1, 4, 0]; the third sequence is [-1, 1, -1, -1, -1]; and the fourth sequence is [-1, 1, -1, -1, -1]; or

the second sequence is [2, 3, 1, 4, 0]; the third sequence is [-1, -1, 1, -1, 1]; and the fourth sequence is [-1, -1, 1, -1, -1]; or

the second sequence is [2, 3, 1, 4, 0]; the third sequence is [1, -1, 1, -1, -1]; and the fourth sequence is [1, -1, 1, -1, -1]; or

the second sequence is [2, 3, 1, 4, 0]; the third sequence is [1, -1, -1, -1, 1]; and the fourth sequence is [1, -1, -1, -1, -1]; or

the second sequence is [2, 3, 1, 4, 0]; the third sequence is [-1, -1, -1, -1, -1]; and the fourth sequence is [-1, -1, -1, -1, -1].

16. The method according to claim 11, wherein when $N=16$, $P_m$ is the $m^{th}$ element in the second sequence $[P]$, $W_{m,1}$ is an $m^{th}$ element in a third sequence $[W_1]$, and $W_{m,2}$ is an $m^{th}$ element in a fourth sequence $[W_2]$, wherein

the second sequence is [3, 0, 2, 1]; the third sequence is [-1, 1, 1, -1]; and the fourth sequence is [-1, 1, -1, -1]; or
the second sequence is [3, 0, 2, 1]; the third sequence is [1, 1, -1, -1]; and the fourth sequence is [1, 1, 1, -1]; or
the second sequence is [3, 0, 2, 1]; the third sequence is [-1, -1, 1, -1]; and the fourth sequence is [-1, -1, -1, -1]; or
the second sequence is [3, 0, 2, 1]; the third sequence is [1, -1, -1, -1]; and the fourth sequence is [1, -1, 1, -1].

17. A communication apparatus, comprising a processor, wherein the processor is coupled to a memory, and the processor is configured to implement the method according to any one of claims 1 and 4 to 16.

**18.** The apparatus according to claim 17, wherein the communication apparatus further comprises the memory.

**19.** A communication apparatus, comprising a processor, wherein the processor is coupled to a memory, and the processor is configured to implement the method according to any one of claims 2 and 4 to 16.

**20.** The apparatus according to claim 19, wherein the communication apparatus further comprises the memory.

**21.** A computer-readable storage medium, wherein the storage medium stores a computer program or instructions, and when the computer program or the instructions are executed by a communication apparatus, the method according to any one of claims 1 and 4 to 16 is implemented, or the method according to any one of claims 2 and 4 to 16 is implemented.

**22.** A communication system, wherein the system comprises a first apparatus and a second apparatus, the first apparatus is configured to implement the method according to any one of claims 1 and 4 to 16, and the second apparatus is configured to implement the method according to any one of claims 2 and 4 to 16.

100

110

120

130

140

FIG. 1

200

| First apparatus | | Second apparatus |

S201: Determine a first signal, where the first signal includes a synchronization signal, and the synchronization signal is obtained based on a first sequence

S202: Send the first signal

S203: Process the first signal based on the first sequence, to determine a start location and/or an end location of the synchronization signal in the first signal

FIG. 2

FIG. 3

FIG. 4

A length of a sliding window is 32

FIG. 5

Sequence length: 32

FIG. 6

A length of a sliding window is 16

FIG. 7

Sequence length: 16

FIG. 8

Communication apparatus 900

Processing unit 910

Transceiver unit 920

FIG. 9

Communication apparatus 1000

Processor 1010

Interface circuit 1020

Memory 1030

FIG. 10

## INTERNATIONAL SEARCH REPORT

| International application No. |
| --- |
| **PCT/CN2024/116048** |

| A. | CLASSIFICATION OF SUBJECT MATTER |
| --- | --- |

H04W56/00(2009.01)i

According to International Patent Classification (IPC) or to both national classification and IPC

| B. | FIELDS SEARCHED |
| --- | --- |

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS, CNTXT, ENTXTC, 3GPP, VEN: 同步信号, 同步序列, 元素, 物联网, synchronization signal, synchronization sequence, PSS, SSS, golay, element?, IOT, NB-IOT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023273816 A1 (HUAWEI TECHNOLOGIES CO., LTD.) 05 January 2023 (2023-01-05)<br>description, pages 1-6 | 1-22 |
| A | WO 2023109773 A1 (HUAWEI TECHNOLOGIES CO., LTD.) 22 June 2023 (2023-06-22)<br>entire document | 1-22 |
| A | LG ELECTRONICS. "R1-157496-Synchronization signal design_final"<br>*3GPP TSG RAN RAN1 #83 Meeting R1-157496*, 24 November 2015 (2015-11-24),<br>entire document | 1-22 |
| A | LG ELECTRONICS. "R1-161120 Synchronization signal design for NB IoT"<br>*3GPP TSG RAN RAN1 #84 Meeting R1-161120*, 12 February 2016 (2016-02-12),<br>entire document | 1-22 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2024** | **27 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116048**

| Patent document cited in search report | | | Publication date (day/month/year) | Patent family member(s) | | | Publication date (day/month/year) |
|---|---|---|---|---|---|---|---|
| WO | 2023273816 | A1 | 05 January 2023 | US | 2024137111 | A1 | 25 April 2024 |
|  |  |  |  | US | 2024235662 | A9 | 11 July 2024 |
|  |  |  |  | CN | 115549749 | A | 30 December 2022 |
| WO | 2023109773 | A1 | 22 June 2023 | AU | 2022416217 | A1 | 27 June 2024 |
|  |  |  |  | KR | 20240118153 | A | 02 August 2024 |
|  |  |  |  | CA | 3241052 | A1 | 22 June 2023 |
|  |  |  |  | CN | 116264591 | A | 16 June 2023 |
|  |  |  |  | IN | 202437047045 | A | 19 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311270293